(19) Europäisches Patentamt
European Patent Office
Office européen des brevets

(11) **EP 2 466 453 A1**

(12) **EUROPEAN PATENT APPLICATION**
published in accordance with Art. 153(4) EPC

(43) Date of publication:
**20.06.2012 Bulletin 2012/25**

(51) Int Cl.:
***G06F 9/38*** *(2006.01)*   ***G06F 9/40*** *(2006.01)*

(21) Application number: **10808157.1**

(22) Date of filing: **05.08.2010**

(86) International application number:
**PCT/JP2010/063246**

(87) International publication number:
**WO 2011/018974 (17.02.2011 Gazette 2011/07)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **13.08.2009   JP 2009187622**
**13.08.2009   JP 2009187623**
**13.08.2009   JP 2009187624**
**13.08.2009   JP 2009187625**
**02.11.2009   JP 2009251586**

(71) Applicant: **Sony Corporation**
**Tokyo 108-0075 (JP)**

(72) Inventors:
• **KASHIWAYA Motofumi**
**Tokyo 108-0075 (JP)**
• **OHMORI Mutsuhiro**
**Tokyo 108-0075 (JP)**
• **WARIH Kurniawan**
**Tokyo 108-0075 (JP)**

(74) Representative: **Jackson, Jonathan Andrew**
**D Young & Co LLP**
**120 Holborn**
**London EC1N 2DY (GB)**

(54) **DATA PROCESSING DEVICE, DATA PROCESSING METHOD, PROGRAM CONVERSION PROCESSING DEVICE, AND PROGRAM CONVERSION PROCESSING METHOD, PROGRAM CONVERSION PROCESSING DEVICE, DATA PROCESSING DEVICE, PROGRAM CONVERSION PROCESSING METHOD, AND DATA PROCESSING METHOD, DATA PROCESSING DEVICE, DATA PROCESSING METHOD, PROGRAM ANALYSIS PROCESSING DEVICE, AND PROGRAM ANALYSIS PROCESSING METHOD, DATA PROCESSING DEVICE, HISTORY STORING DEVICE, DATA PROCESSING METHOD, AND PROGRAM, AND COMPILE PROCESSING DEVICE, DATA PROCESSING DEVICE, COMPILE PROCESSING METHOD, AND PROGRAM**

(57)   History memory 430 correlates the input values and execution result of a function for each piece of function identification information, and holds as an execution history. A command decoder 320 supplies function identification information included in a previous notice command for predicting the function from a fetch unit 310 to an execution history search unit 410. Also, the command decoder 320 causes the execution history search unit 410 to obtain the input value output from an input selecting unit 332 based on, of commands to be read out after the previous notice command, an input value setting command for setting a function input value. The execution history search unit 410 searches an execution history agreeing with the obtained identification information and input values thereof before a function call-up command. An execution result output unit 420 outputs the execution result detected by the execution history search unit 410 to an executing unit 330. The fetch unit 310 reads out a command to be read out following the function.

FIG. 2

**Description**

Technical Field

The present invention relates to a data processing device, and specifically relates to a data processing device reusing the execution result of a command section to be executed multiple times, and a processing method thereof, and also relates to a data conversion processing for converting into a program corresponding to this data processing device, and a processing method thereof. Also, the present invention relates to a program conversion processing device, and specifically relates to a program conversion processing device and data processing device which convert a call-up command of a command section where the execution result will be reused into a reusing command, and a processing method according to these. Further, the present invention relates to a data processing device, and specifically relates to a data processing device reusing the execution result of a command section to be executed multiple times, and a processing method thereof, and relates to a data conversion processing device for converting into a program corresponding to this data processing device, and a processing method thereof. Also, the present invention relates to a data processing device, and specifically relates to a data processing device and history saving device which execute a command section where the execution result will be reused, and a processing method according to these and a program causing a computer to execute this method. Further, the present invention relates to a compile processing device, and specifically relates to a compile processing device and data processing device which identify a command section where the execution result will be reused using a hash value generated by a hash function, and a compile processing method and program according to these.

Background Art

Heretofore, with microprocessors such as CPUs (Central Processing Units), research and development relating to high-speed technology of computation has eagerly been done. As this high-speed technology of computation, a technique called value reuse technology has been devised. For example, a data processing device has been proposed wherein this value reuse technology has been applied to a loop command section (e.g., see PTL 1).
With this value reuse technology, of command sections that are a portion of a program, if input values in the command sections thereof match, the execution results thereof also match, and with such command sections, input values are correlated with output values that are execution results thereof, and registered in a reuse table. When the same command section is executed again, if the same input value is registered in the reuse table, the output value corresponding to the input value thereof is output from the reuse table, and accordingly, the execution result of a command section executed in the past is reused. In this way, of command sections to be executed multiple times, a command section whereby the execution result of the command section executed in the past can be reused will be referred to as a reused section.

Also, various techniques have been developed to increase the processing speed of a program. In recent years, as one of devices using the techniques thereof, a section reuse device employing a technique for reusing the execution result of a command section, called as value reuse (memorization), has been proposed (e.g., see PTL 1). This section reuse device is a device wherein input values and an execution result in a predetermined command section of the program are saved, and accordingly, at the time of executing the same command section again, in the event that the input values match, an output value that is the saved execution result is output.

With this section reuse device, as one of devices for increasing the search speed of an execution result, there has been proposed a device which generates a cache index used as index at the time of search using a hash function (e.g., see NPL 1). This section reuse device which generates a cache index using a hash function calculates a hash value that is a cache index by taking two input values of an Ackermann's function as the input of a hash function. This section reuse device saves the execution result of the Ackermann's function based on the generated cache index, and in the event of searching an execution result, an execution result is searched using the generated cache index thereof as an index.

Citation List

Patent Literature

PTL 1: Japanese Patent No. 3855076 (Fig. 1)
PTL 2: Japanese Unexamined Patent Application Publication No. 2004-258905 (Fig. 1)

Non Patent Literature

NPL 1: written by Stephen E. Richardson, "Caching Function Results Faster or Arithmetic by Avoiding Unnecessary Computation", Sun Microsystems Laboratories, Inc., 1992

Disclosure of Invention

Technical Problem

With the above conventional art, when processing in a reused section is executed again, if the input value of the command section thereof is registered in the reuse table, the processing in the reused section can be omitted, and accordingly, time necessary for execution of the command section can be reduced. However, in this case, until the input value is used in the processing of the reused section, determination cannot be made whether or not the input value of the reused section thereof is registered in the reuse table. Accordingly, search of the reuse table cannot be used until the input value is used, and accordingly, a period that can be reduced by reuse of an execution result is restricted.

With the above conventional art, the saved execution result is output before the same command section is executed again and the execution result is output, whereby the execution time of the command section thereof can be reduced. However, such a section reuse device also saves the execution result in a command section that will not be executed again, and accordingly, it can be conceived that waste of memory for saving execution results, and wasteful search of an execution result increase, which deteriorates efficiency in value reuse.

However, with such a section reuse device, an older execution result is eliminated to register a new execution history in the event that memory for saving execution results is full, which causes a problem wherein the eliminated execution result cannot be reused. That is to say, with such a section reuse device, a case can be conceived where deterioration in efficiency in value reuse is caused due to an execution result being eliminated from the memory for saving execution results.

With the above conventional art, an execution result is searched using the cache index generated from the two input values of the Ackermann's function, whereby time necessary for search of the execution result can be reduced. However, with such a section reuse device, a single hash function agreeing with the size of memory for saving execution results is employed, which causes a problem wherein a hash function cannot be selected according to the number of necessary cache indexes.

With such a section reuse device, for example, search may take time since the bit length of a hash value (cache index) is unnecessarily long as to the number of execution results to be held. This search takes time, and accordingly, with such a section reuse device, deterioration in efficiency in value reuse is caused.

The present invention has been made in the light of such a situation, and its object is to further reduce the processing time of a reused section owing to ruse of an execution result.

Also, the present invention has been made in the light of such a situation, and its object is to improved efficiency in value reuse.

Further, the present invention has been made in the light of such a situation, and at the time of performing value reuse (memorization), its object is to improve efficiency in value reuse by saving an execution result from the memory for saving execution results.

Also, the present invention has been made in the light of such a situation, and at the time of performing value reuse (memorization), its object is to improve efficiency in value reuse by reducing the bit length of data to be held in the memory for saving execution results. Technical Solution

A first present invention has been made to solve the above problems, and a first aspect thereof is a data processing device and a processing method thereof, and the data processing device includes: an executing unit configured to execute processing based on a command string where a reused section that is a command section to be executed multiple times is included; history memory configured to correlate an input value and an execution result in the reused section for each piece of identification information for identifying the reused section, and to hold as an execution history; an execution history search unit configured to obtain an input value in the reused section based on a previous notice command for predicting execution of processing in the reused section, and to search the execution result in the execution history based on the obtained input value, and the identification information determined by the previous notice command; and an execution result output unit configured to output, in the event that the execution result has been extracted by the execution history search unit when processing in the reused section identified by the previous notice command is executed, the extracted execution result to the executing unit. This yields an effect wherein an input value in the reused section is obtained based on a previous notice command before execution of the reused section, an execution result in the history memory is searched based on the obtained input value thereof, and identification information determined by the previous notice command, and when the processing in the reused section identified by the previous notice command is executed, in the event that an execution result has been extracted, the extracted execution result thereof is output through the executing unit.

Also, with this first aspect, the execution history search unit may obtain an input value based on an input value setting command for setting an input value in the reused section of a command group from the previous notice command up to a command immediately before a call-up command for calling up the head address of the reused section. This yields an effect wherein the data set by an input value setting command following the previous notice command is obtained by the execution history search unit as an input value of the reused section.

Also, with this first aspect, the execution history search unit may search the execution result in the execution history based on the obtained input value and the identification information included in the previous notice command. This yields an effect wherein the execution result in the history memory is searched by the execution history search unit using identification information included in a previous notice command, and the input value obtained based on the previous notice command.

Also, with this first aspect, an arrangement may be made wherein the history memory correlates an input value and an execution result in the reused section for each head address of the reused section that is the identification information, and holds as the execution history, the executing unit outputs the head address to the execution history search unit based on the previous notice command including reference information for referencing the head address, and the execution history search unit searches the execution result in the execution history based on the head address output from the executing unit as the identification information, and an input value in the reused section. This yields an effect wherein the head address in a reused section is output from the executing unit based on reference information included in a previous notice command, and the execution result in the history memory is searched using the head address in the reused section output from the execution unit thereof, and the input value obtained based on the previous notice command.

Also, with this first aspect, an arrangement may be made wherein the previous notice command is a previous notice setting command for setting the head address in the reused section that is the identification information, the history memory correlates an input value and an execution result in the reused section for each head address of the reused section, and holds as the execution history, the executing unit sets, based on the previous notice setting command including setting information indicating the setting destination of the head address, the head address as the setting destination, and the execution history search unit obtains an input value in the reused section based on the previous notice setting command, and searches the execution result in the execution history based on the obtained input value, and the head address set by the executing unit. This yields an effect wherein the execution result in the history memory is searched by the execution history search unit based on the head address set by a previous notice setting command for setting the head address in a reused section, and the input value obtained based on the previous notice setting command.

Also, with this first aspect, an arrangement may be made wherein the history memory correlates priority at the time of eliminating the execution history, and an input value and an execution result in the reused section corresponding to the priority, and holds for each piece of the identification information as the execution history, and the execution history search unit eliminates the execution history in the history memory based on the priority included in the previous notice command. This yields an effect wherein the execution history in the history memory is eliminated by the execution history search unit based on the priority appended for each execution history.

Also, with this first aspect, an arrangement may be made wherein the executing unit executes processing in the reused section identified by the previous notice command in the event that the execution result in the execution history has not been extracted from the history memory by the execution history search unit, and the execution history search unit holds the input value obtained based on the previous notice command, an execution result executed by the executing unit, and the identification information in the history memory. This yields an effect wherein in the event that the execution result has not been extracted from the history memory, the input value obtained based on a previous notice command, the execution result executed based on the input value thereof, and the identification information are held in the history memory by the execution history search unit.

Also, with this first aspect, an arrangement may be made wherein the history memory correlates, for each piece of the identification information for identifying a function that is the reused section, an input value and an execution result in the function, and holds as the execution history, the execution history search unit obtains an input value of the function based on a previous notice command for predicting execution of the function, and searches the execution result in the execution history based on the obtained input value and the identification information determined by the previous notice command, and the execution result output unit outputs, in the event that the execution result has been extracted by the execution history search unit when the function identified by the previous notice command is executed, the extracted execution result to the executing unit. This yields an effect wherein according to the execution history search unit, the input value of a function is obtained based on a previous notice command for predicting execution of the function, the obtained input value and the identification information determined by the previous notice command thereof are used to extract the execution result correlated with these parameters from the history memory, and when the function is executed, the extracted execution result is output to the executing unit by the execution result unit.

Also, a second aspect of the present invention is a program conversion processing device and a processing method thereof, and the program conversion processing device includes: a reutilization generating unit configured to generate reutilization indicating a degree where the execution results in a command section to be executed multiple times of a program mutually match, for each of the command sections based on the usage patterns of the command sections; and a previous notice command generating unit configured to generate a previous notice command for predicting the setting of an input value in the reused section immediately before an input value setting command for setting an input value in a reused section selected based on the reutilization of the plurality of command sections. This yields an effect wherein reutilization for each command section is generated at the reutilization generating unit based on the usage patterns of command sections, and a previous notice command for predicting execution of a reused section is generated by the previous notice generating unit immediately before an input value setting command in the reused section selected based on the generated reutilization thereof.

Also, with this second aspect, the previous notice command generating unit may generate the previous notice command including identification information for identifying a plurality of the reused sections selected based on the reutilization. This yields an effect wherein a previous notice command including identification information for mutually identifying multiple reused sections selected based on reutilization is generated by the previous notice command generating unit.

Also, with this second aspect, the previous notice command generating unit may generate the previous notice command including reference information for referencing the head address after an address setting command for setting the head address of the reused section. This yields an effect wherein after an address setting command, a previous notice command including reference information for referencing the head address of a reused section set by the address setting command thereof is generated by the previous notice command generating unit.

Also, with this second aspect, the previous notice command generating unit may generate the previous notice command as an address setting command including setting information indicating the setting destination of the head address for setting the head address of the reused section. This yields an effect wherein a previous notice command for setting the head address of a reused section is generated.

Also, with this second aspect, the previous notice command generating unit may generate the previous notice command including priority appended according to the reutilization generated by the reutilization generating unit. This yields an effect wherein a previous notice command including priority for eliminating an execution history in the history memory is generated by the previous notice command generating unit.

A second present invention has been made to solve the above problems, and a first aspect thereof is a program conversion processing device and a program conversion processing method, and the program conversion processing device includes: an analyzing unit configured to analyze the usage pattern of a command section in a program; a reutilization generating unit configured to generate reutilization indicating a degree where the execution result in the command section will be used again, based on the analysis result; and a command conversion unit configured to convert a call-up command in the command section into a reusing command based on the reutilization. This yields an effect wherein a command section call-up command is converted into a reusing command based on reutilization indicating a degree where an execution result will be used again.

Also, with this first aspect, an arrangement may be made wherein the analyzing unit analyzes the number of input values in the command section as the usage pattern, and the reutilization generating unit generates the reutilization based on the analysis result. This yields an effect wherein reutilization is generated based on the number of input values in a command section.

Also, with this first aspect, an arrangement may be made wherein the analyzing unit analyzes a combination of values that an input value in the command section can take as the usage pattern, and the reutilization generating unit generates the reutilization based on the analysis result. This yields an effect wherein reutilization is generated based on a combination of values that an input value in a command section can take.

Also, with this first aspect, an arrangement may be made wherein the analyzing unit analyzes the number of times of call-ups of the command section as the usage pattern, and the reutilization generating unit generates the reutilization based on the analysis result. This yields an effect wherein reutilization is generated based on the number of times of call-ups of a command section.

Also, with this first aspect, an arrangement may be made wherein the command section is a function, the analyzing unit analyzes the input value and number of times of call-ups of the function as the usage pattern, and the reutilization generating unit generates the reutilization based on the analysis results. This yields an effect wherein reutilization is generated based on the input value and number of times of call-ups of a function.

Also, with this first aspect, an arrangement may be made wherein the command section is a loop, the analyzing unit analyzes an input value and the number of times of call-ups of the loop as the usage pattern, and the reutilization generating unit generates the reutilization based on the analysis results. This yields an effect wherein reutilization is generated based on the input value and number of times of call-ups of a loop.

Also, with this first aspect, an arrangement may be made wherein the analyzing unit analyzes whether or not the input value in the command section is accompanied with memory access as the usage pattern, and the reutilization generating unit generates, in the event that the input value in the command section is accompanied with memory access, the reutilization indicating the degree lower than the degree in a case where the input value not accompanied with this memory access is used. This yields an effect wherein an input value accompanied with memory access generates low reutilization as to a certain command section.

Also, with this first aspect, the command conversion unit may convert the call-up command into the reusing command in order from the command section of which the reutilization is the highest, based on the reutilization, the data amount of an execution history that is data for holding the execution result in the command section, and the capacity of history memory where the execution history is held, so that the summation of the data amount in the command section is equal to or smaller than the capacity of the history memory. This yields an effect wherein a call-up command is converted into a reusing command in order from a command section having the highest reutilization so that the summation of the data amount of execution histories becomes equal to or smaller than the capacity of the history memory.

Also, with this first aspect, the program conversion processing device may further include a priority generating unit configured to generate priority at the time of the execution history being held in the history memory based on the reutilization, with the command conversion unit converting a call-up command in the command section into the reusing command including the priority. This yields an effect wherein a command section call-up command reusing an execution result is converted into a reusing command including priority.

Also, a second aspect of the present invention is a data processing device and a data processing method, and the data processing device includes: an executing unit configured to execute processing in the reused section called up by a reusing command for specifying a reused section where an execution result will be used again of a plurality of command sections, and to output section identification information in the reused section, an input value in the reused section, and an execution result in the reused section as an execution history; and history memory configured to hold the execution history. This yields an effect wherein the execution history of the reused section called up by a reusing command is held.

Also, with this second aspect, the executing unit may execute processing in the reused section called up by the reusing command for specifying a command section extracted based on a degree to be reused of the plurality of command sections, and output the execution history. This yields an effect wherein the execution history of the reused section determined based on a degree where the execution result will be reused is output. In this case, an arrangement may be made wherein the reused section is a function, and the executing unit outputs the start address of the function, and the input value of the function, and the execution result of the function as the section information, the input value in the reused section, and the execution result in the reused section. This yields an effect wherein the start address, input value, and execution result of a function are output. In this case, an arrangement may be made wherein the reused section is a loop, and the executing unit outputs the start address of the loop, and the input value of the loop, and the execution result of the loop as the section information, the input value in the reused section, and the execution result in the reused section. This yields an effect wherein the start address, input, and execution result of a loop are output.

Also, with this second aspect, the data processing device may further include a history search unit configured to output the execution result in the event that the execution result has been detected from the history memory using the section identification information and the input value in the reused section. This yields an effect wherein in the event that the execution result has been searched in the history memory, the execution result is output.

Also, with this second aspect, the data processing device may further include: a priority table configured to hold priority indicating the rank of a degree where the execution result is reused, and the address of the execution history in the history memory as priority information; a lowest-priority history search unit configured to search the priority information of which the priority is the lowest from the priority table as elimination candidate information; a priority comparing unit configured to compare, in the event that the executing unit attempts to hold a new execution history in the history memory, the priority of the elimination candidate information, and the priority of the new execution history; and an eliminating unit configured to eliminate the execution history from the history memory based on the address of the elimination candidate information in the event that the priority of the elimination candidate information is lower than the priority of the new execution history. This yields an effect wherein in the event that the priority of the elimination candidate information is lower than the priority of the new execution history, the execution history that the elimination candidate information specifies is eliminated from the history memory. In this case, the data processing device may further include a history memory managing unit configured to manage the free space of the history memory, with the priority comparing unit comparing the priority of the elimination candidate information, and the priority of the new execution history in the event that the data amount of the new execution history is greater than the free space of the history memory. This yields an effect wherein in the event that the data amount of a new execution history is greater than the free space of the history memory, the priorities are compared.

A third present invention has been made to solve the above problems, and a first aspect thereof is a data processing device and a processing method thereof, and the data processing device includes: an executing unit configured to execute processing based on a command string including a plurality of command sections; an input value setting command address table configured to hold an input value setting command address that is the address of an input value setting command for setting an input value in the command section before execution of a call-up command for calling up the command section, for each piece of section identification information in the command section; history memory configured to correlate an input value and an execution result in the command section for each piece of the section identification information, and to hold as an execution history; an execution history search unit configured to search the execution result in the execution history using an input value output from the executing unit based on the input setting command of a command group from the input value setting command up to the call-up command determined by the input value setting command address, and the section identification information corresponding to the input value setting command address; and an execution result output unit configured to output, in the event that the execution result has been extracted by the execution history search unit when the call-up command determined by the input value setting command address is executed, the extracted execution result to the executing unit. This yields an effect wherein up to before execution of the command section, the execution result in the history memory is searched using the input value based on the input value setting command determined by the input value setting command address in the input value setting command address table, and section identification information correlated with the input value setting command address thereof, and when the call-up command determined by the input value setting command address is executed, in the event that the execution result has been extracted by the execution history search unit, the execution result thereof is output.

Also, with this first aspect, an arrangement may be made wherein the input value setting command address table holds the input value setting command address of the input vale setting command for setting an input value in a reused section that is a command section to be executed multiple times of the plurality of command sections, for each piece of the section identification information in the reused section, an execution history search unit searches the execution result in the reused section using the input value output from the executing unit based on the input value setting command of the command group in the reused section, and the section identification information corresponding to the input value setting command address, and an execution result output unit outputs, in the event that the execution result in the reused section has been extracted in the execution history by the execution history search unit when the call-up command in the reused section determined by the input value setting command address is executed, the extracted execution result to the executing unit. This yields an effect wherein up to before execution of a call-up command of a reused section that is a command section to be executed multiple times, the execution result in the history memory is searched using the input value obtained by the input value setting command determined by the input value setting command address, and section identification information corresponding to the input value setting command address thereof, and when the call-up command of the reused section determined by the input value setting command address is executed, in the event that execution result has been extracted by the execution history search unit, the execution result thereof is output to the executing unit.

Also, with this first aspect, the data processing device may further include an input value setting command address output unit configured to output the input value setting command address corresponding to an input value referenced in the command section called up by the call-up command of input values set based on the input value setting command, and the section identification information to the input value setting command address table. This yields an effect wherein of the input values set by an input value setting command up to a call-up command, the input value setting command address of the input value setting command to which the input value referenced in the command section of the call-up command thereof is set, and section identification information are output by the input value setting command address output unit. In this case, the input value setting command address output unit may output the input value setting command address of the input value setting command that is the earliest of the input value setting commands corresponding to a plurality of input values referenced in the command section, and the head address in the command section that is the section identification information. This yields an effect wherein of the input value setting commands for setting multiple input values referenced in command sections of a function, the input value setting command address of the earliest input value setting command, and the head address of the command section thereof are output by the input value setting command address output unit.

Also, with this first aspect, the input value setting command address table may hold the input value setting command address of the input value setting command that is the earliest,of input value setting commands for setting a plurality of input values in the command section, for each piece of the section identification information. This yields an effect wherein of the multiple input value setting commands in command sections, the input value setting command address of the input value setting command earliest executed is held by the input value setting command address table for each piece of the section identification information.

Also, with this first aspect, an arrangement may be made wherein the executing unit executes processing in the command section determined by the input value setting command address in the event that the execution result in the execution history has not been extracted from the history memory by the execution history search unit, and the execution history search unit holds the input value output from the executing unit based on the input value setting command, the execution result executed by the executing unit, the section identification information corresponding to the input value setting command address in the history memory. This yields an effect wherein in the event that the execution result has not been extracted from the history memory at the execution history search unit, the processing in the command section determined by the input value setting command address is executed by the executing unit, and the input value obtained based on the input value setting command, the execution result of the processing in the command section executed by the executing unit, and the section identification information corresponding to the input value setting command address in the input value setting command address table are held in the history memory by the executing history search unit.

Also, with this first aspect, an arrangement may be made wherein the input value setting command address table holds the input value setting command address of the input value setting command of a function that is the command section for each head address of the function that is the section identification information, the history memory correlates an input value and an execution result in the function for each head address of the function, and holds as the execution history, the execution history search unit searches the execution result using the input value of the function output from the executing unit based on the input value setting command of the command group, and the head address of the function corresponding to the input value setting command address, and the execution result output unit outputs, in the event that the execution result of the function has been extracted by the execution history search unit when the call-up command of the function determined by the input value setting command address is executed, the extracted execution result to the executing unit. This yields an effect wherein up to before execution of a call-up command of a function, the execution result of the function in the history memory is searched using the input value set based on the input value setting command determined by the input value setting command address, and the section identification information correlated with the input value setting command address thereof, and when the call-up command determined by the input value setting command address is executed, in the event that the execution result has been extracted by the execution history search unit, the execution result of the function thereof is output to the executing unit.

Also, a second aspect of the present invention is a program analysis processing device and a processing method thereof, and the program analysis processing device includes: a reutilization generating unit configured to generate reutilization indicating a degree where input values for each execution of processing in a command section to be executed multiple times of a program mutually match, for each of the command sections based on the usage pattern in the command section; and a reused section information generating unit configured to generate reused section information where the input value setting command address of an input value setting command for setting an input value in the reused section extracted based on the reutilization of the plurality of command sections, and section identification information for identifying the reused section are correlated. This yields an effect wherein a reused section of multiple command sections is extracted based on reutilization indicating a degree where the execution results of a command section to be executed multiple times mutually match, and reused section information where the input value setting command address of an input value setting command in the reused section thereof, and the section identification information of the reused section are correlated is generated by the reused section information generating unit.

A fourth present invention has been made to solve the above problems, and a first aspect thereof is a data processing device and a processing method thereof and a program causing a computer to execute this method, and the data processing device includes: an executing unit configured to execute a command section to output the execution result; history memory configured to hold section identification information, an input value, and an execution result in a reused section where an execution result will be used again of the command section, as an execution history, and from which the execution history is searched based on the section identification information and the input value in the event that the held execution result will be used again; a saved history holding unit configured to hold saved history for saving the execution result of each time of a repeated reused section where execution is repeated of the reused section, from the history memory; and a history control unit configured to supply the saved history to the saved history holding unit based on the execution history of the repeated reused section, to eliminate the execution history serving as basis of the saved history at the time of supply of the saved history from the history memory, and to hold a representative history including information specifying the saved history in the history memory. This yields an effect wherein the execution results of a repeated reused section where execution of a reused section is repeated are saved from the history memory to the saved history holding unit.

Also, with this first aspect, the history control unit may supply the saved history to the saved history holding unit in the event that the data amount of the execution history newly held in the history memory is greater than the free space of the history memory. This yields an effect wherein in the event that the data amount of the execution history is greater than the free space of the history memory, the execution results of s repeated reused section are saved from the history memory to the saved history holding unit.

Also, with this first aspect, the data processing device may further include: a history restoring unit configured to restore the execution history to the history memory based on the saved history and the representative history; and a history search unit configured to output the execution result based on the restored execution history in the event that the restored execution history has been searched from the history memory based on the section identification information and the input value. This yields an effect wherein the execution result is reused using the execution history restored based on the saved history and representative history. In this case, the history search unit may cause the restoring unit to start restoration of the execution history in the event that the execution history searched based on the section identification information and the input value is the representative history. This yields an effect wherein in the event that the representative history has been searched at the history search unit, the history search unit causes the restoring unit to restore the execution history of repeated reused section. In this case, an arrangement may be made wherein the history control unit generates the representative history further including a saving count indicating the number of the saved histories, and the history restoring unit extracts the saved history from the saved history holding unit based on information specifying the saved history in the representative history, and the saving count, and restores the execution history. This yields an effect wherein a saved history is extracted from the saved history holding unit based on information specifying the saved history in the representative history and the saving count.

Also, with this first aspect, an arrangement may be made wherein the executing unit further outputs an identifier for identifying the execution history in the repeated reused section, the execution history other than the repeated reused section, and the representative history in the event of supplying the execution result in the reused section, the history memory further holds the identifier as the execution history, and the history control unit supplies the saved history based on the execution history identified using the identifier, and generates the representative history further including the identifier. This yields an effect wherein an execution history is identified using an identifier.

Also, with this first aspect, an arrangement may be made wherein the repeated reused section is a subroutine, and the executing unit outputs the start address of the subroutine as the section identification information. This yields an effect wherein the start address of a subroutine is output as section identification information.

Also, with this first aspect, an arrangement may be made wherein the repeated reused section is a loop, and the executing unit outputs the start address of the loop as the section identification information. This yields an effect wherein the start address of a loop is output as the section identification information. In this case, an arrangement may be made wherein the executing unit further outputs, in the event of outputting the execution result in the repeated reused section, a counter value indicating the execution result according to how many times of executions, the history memory further holds the counter value as the execution history, and the history control unit outputs the saved history including the counter value. This yields an effect wherein an execution history and saved history that include a counter value are held.

Also, a second aspect of the present invention is a history saving device including: history memory configured to hold, as execution history, section identification information, an input value, and an execution result in a reused section where an execution result will be used again, and from which the execution result is searched based on the section identification information and the input value in the event that the held execution result will be used again; and a history control unit configured to save the execution result of each time in a repeated reused section where execution is repeated of the reused section from the history memory to an external storage unit as a saved history, to eliminate the execution history serving as basis of the saved history at the time of the saving from the history memory, and to hold a representative history including information specifying the saved history in the history memory. This yields an effect wherein the execution results of a repeated reused section of which the execution is repeated are saved from the history memory to an external storage unit.

A fifth present invention has been made to solve the above problems, and a first aspect thereof is a compile processing device and a processing method thereof and a program causing a computer to execute this method, and the compile processing device includes: an analyzing unit configured to analyze the usage patterns of a plurality of command sections in a program, and to distinguish a reused section where an execution result will be used again of the command sections; a candidate value generating unit configured to generate a candidate value that is a candidate of the section identification value from the start address in a manner correlated with the candidate function by using a candidate function that is a candidate of a section identification value generating function for generating a section identification value for identifying the reused section by the value of bit width narrower than the bit width of the start address of the reused section; a candidate value table configured to hold the candidate value generated by the candidate value generating unit for each of the correlated candidate functions as a candidate value list; a section identification value generating function output unit configured to extract the candidate value list where all of the candidate values mutually differ, and to output the correlated candidate function of a candidate value list selected based on the bit widths of the candidate values of the extracted candidate value lists, as the section identification value generating function; and a machine language program generating unit configured to generate a machine language program in which the section identification value generating function is embedded, based on the analyzed program and the section identification value generating function. This yields an effect wherein the section identification value generating function selected from candidate functions is embedded in a program.

Also, with this first aspect, an arrangement may be made wherein the candidate function is a hash function, and the section identification value generating function output unit outputs the correlated hash function of a candidate value list selected based on the bit widths of the candidate values of the extracted candidate value list as the section identification value generating function. This yields an effect wherein a hash function is embedded in a program. In this case, an arrangement may be made wherein the hash function is a hash function with a value in a predetermined number of bits from the least significant bit of the start address as the candidate value, and the section identification value generating function output unit outputs the correlated hash function of a candidate value list selected based on the bit widths of the candidate values of the extracted candidate value list as the section identification value generating function. This yields an effect wherein a hash function for calculating a value in a predetermined number of bits from the least significant bit as a hash value is embedded in a program.

Also, with this first aspect, the section identification value generating function output unit may output the correlated candidate function of a candidate value list of the candidate value of which the bit width is the narrowest of the extracted candidate value list as the section identification value generating function. This yields an effect wherein a candidate function that generates a candidate value having the narrowest bit width of candidate functions for generating all of the candidate values that mutually differ is output as a section identification value generating function.

Also, with this first aspect, an arrangement may be made wherein the section identification value generating function output unit outputs an identifier for identifying the section identification value generating function as the section identification value generating function, and the machine language program generating unit generates a machine language program in which the identifier is embedded. This yields an effect wherein a program in which an identifier for identifying a section identification value generating function is embedded is generated.

Also, a second aspect of the present invention is a data processing device including: an executing unit configured to execute a plurality of command sections and to output the execution results; history memory configured to hold a section identification value for identifying the reused section by the value of a bit width narrower than the bit width of the start address of a reused section where an execution result will be used again of the command sections, an input value in the reused section, and an execution result in the reused section as an execution history; and a history search unit configured to search the execution history from the history memory based on the section identification value and the input value, and to output the execution result in the event that the execution history has been searched. This yields an effect wherein a section identification value, an input value, and an execution result are held in the history memory as an execution history.

Also, with this second aspect, an arrangement may be made wherein the data processing device further includes a section identification value generating unit configured to generate the section identification value from the start address using a section identification value generating function for generating the section identification value in the event of having output the start address at the time of the executing unit executing the reused section, the executing unit supplies the section identification value generating function to the section identification value generating unit, the history memory holds the section identification value, the input value, and the execution result generated by the section identification value generating unit as the execution history, and the history search unit searches the execution history from the history memory based on the section identification value and the input value, and in the event that the execution history has been searched, outputs the execution result. This yields an effect wherein a section identification value generated from the start address by the section identification value generating unit, and the input value and execution result supplied from the executing unit are held in the history memory as an execution history. In this case, an arrangement may be made wherein the executing unit supplies the section identification value generating function to the section identification value generating unit, and the section identification value generating unit generates, in the event that the start address has been output at the time the executing unit executing the reused section, the section identification value from the start address using the section identification value generating function supplied from the executing unit. This yields an effect wherein a section identification value is generated from the start address using the section identification value generating function supplied from the executing unit. In this case, an arrangement may be made wherein the executing unit supplies an identifier for identifying the section identification value generating function to the section identification value generating unit, and the section identification value generating unit selects the section identification value generating function from candidate functions that are candidates of the section identification value generating function based on the identifier, and generates, in the event that the start address has been output at the time of the executing unit executing the reused section, the section identification value from the start address using the selected section identification value generating function. This yields an effect wherein a section identification value generating function is selected from candidate functions based on the identification value supplied from the executing unit, and a section identification value is generated from the start address using the selected section identification value thereof.

Also, with this second aspect, an arrangement may be made wherein the executing unit supplies, in the event of having executed the reused section using a command including the section identification value, the section identification value to the history memory, the history memory holds the section identification value, the input value, and the execution result as the execution history, and the history search unit searches the execution history from the history memory based on the section identification value and the input value, and in the event that the execution history has been searched, outputs the execution result. This yields an effect wherein the section identification value, input value, and execution result supplied from the executing unit are held in the history memory as an execution history.

Also, a third aspect of the present invention is a compile processing device including: an analyzing unit configured to analyze the usage patterns of a plurality of command sections in a program, and to distinguish a reused section where an execution result will be used again of the command sections; a candidate value generating unit configured to generate a candidate value that is a candidate of the section identification value in a manner correlated with the candidate function by using a candidate function that is a candidate of a section identification value generating function for generating a section identification value for identifying the reused section by the value of bit width narrower than the bit width of the start address of the reused section; a candidate value table configured to hold the candidate value generated by the candidate value generating unit for each of the correlated candidate functions as a candidate value list; a section identification value output unit configured to extract the candidate value list where all of the candidate values mutually differ, and to output the candidate value of a candidate value list selected based on the bit widths of the candidate values of this extracted candidate value list, as the section identification value; a command conversion unit configured to covert a command for calling up the reused section into a section identification value appended command including the section identification value; and a machine language program generating unit configured to generate a machine language program where the reused section is called up by the section identification value appended command based on a source program including the section identification value appended command. This yields an effect wherein a program in which a section identification value appended command is included is generated.

Also, with this third aspect, the candidate value generating unit may generate the candidate value by using the candidate function with a number appended in accordance with a predetermined sequence of the start address as an input value. This yields an effect wherein a candidate value is generated from a number appended in accordance with a predetermined order of start addresses.

Also, with this third aspect, the candidate value generating unit may generate the candidate value by using the candidate function with the start address as an input value. This yields an effect wherein a candidate value is generated from the start address.

Also, a fourth aspect of the present invention is a data processing device including: an executing unit configured to execute a plurality of command sections and to output the execution results; a candidate value generating unit configured to generate a candidate value that is a candidate of the section identification value from the start address in a manner correlated with the candidate function by using a candidate function that is a candidate of a section identification value generating function for generating a section identification value for identifying the reused section by the value of bit width narrower than the bit width of the start address of the reused section; a candidate value table configured to hold the candidate value generated by the candidate value generating unit for each of the correlated candidate functions as a candidate value list; a section identification value generating function output unit configured to extract the candidate value list where all of the candidate values mutually differ, and to output the correlated candidate function of a candidate value list selected based on the bit widths of the candidate values of the extracted candidate value lists, as a section identification value generating function; a section identification value generating unit configured to generate the section identification value from the start address using the section identification value generating function in the event that the start address has been output at the time of the executing unit executing the reused section; history memory configured to hold the section identification value, an input value, and an execution result in the reused section as an execution history; and a history search unit configured to search the execution history from the history memory based on the section identification value and the input value, and to output the execution result in the event that the execution history has been searched. This yields an effect wherein a section identification value is generated from the start address using the section identification value generating function output from the section identification value generating function output unit, and this generated section identification value and the input value and execution result supplied from the executing unit are held in the history memory as an execution history.

Advantageous Effects

According to the first present invention, an excellent advantage is obtained whereby the processing time in a reused section can further be reduced owing to reuse of an execution result.

According to the second present invention, an excellent advantage is obtained whereby efficiency in value reuse can be improved.

According to the third present invention, an excellent advantage is obtained whereby the processing time in a reused section can be reduced owing to reuse of an execution result.

According to the fourth present invention, at the time of performing value reuse (memorization), an excellent advantage is obtained whereby efficiency in value reuse can be improved by saving an execution result form the memory for saving execution results.

The fifth present invention has been made in the light of such a situation, and its object is to improve efficiency in value reuse by reducing the bit length of data to be held in the memory for saving execution results at the time of performing value reuse (memorization). Brief Description of Drawings

[Fig. 1] Fig. 1 is a block diagram illustrating a configuration example of a data processing device according to a first embodiment of the present invention.

[Fig. 2] Fig. 2 is a block diagram illustrating a configuration example of a data processing unit 300 and an execution result reuse processing unit 400 according to the first embodiment of the present invention.

[Fig. 3] Fig. 3 is a conceptual diagram illustrating an example of the data structure of history memory 430 according to the first embodiment of the present invention.

[Fig. 4] Fig. 4 is a conceptual diagram illustrating the overview of the operation of a data processing device 100 in the case of having accepted a previous notice command including identification information in the data processing device 100 according to the first embodiment of the present invention.

[Fig. 5] Fig. 5 is a diagram exemplifying a portion of a program to be executed by the data processing device 100 according to the first embodiment of the present invention.

[Fig. 6] Fig. 6 is a conceptual diagram illustrating an example wherein processing time in a function is reduced by execution of a previous notice command.

[Fig. 7] Fig. 7 is a flowchart illustrating an example of the processing procedure of the execution result reuse method of the data processing device 100 according to the first embodiment of the present invention.

[Fig. 8] Fig. 8 is a conceptual diagram illustrating overview of the operation of the data processing device 100 in the case of having accepted a previous notice command including reference information at the data processing device 100 according to a second embodiment of the present invention.

[Fig. 9] Fig. 9 is a diagram exemplifying a portion of a program to be executed by the data processing device 100 according to the second embodiment of the present invention.

[Fig. 10] Fig. 10 is a conceptual diagram illustrating overview of the operation of the data processing device 100 in the case of having accepted a previous notice setting command at the data processing device 100 according to a third embodiment of the present invention.

[Fig. 11] Fig. 11 is a diagram exemplifying a portion of a program to be executed by the data processing device 100 according to the third embodiment of the present invention.

[Fig. 12] Fig. 12 is a block diagram illustrating a functional constitution example of a program conversion processing device according to a fourth embodiment of the present invention.

[Fig. 13] Fig. 13 is a diagram exemplifying the data format of a previous notice command to be generated by a program conversion processing device 500 according to the fourth embodiment of the present invention.

[Fig. 14] Fig. 14 is a flowchart illustrating an example of the processing procedure of a previous notice command generating processing method of the program conversion processing device 500 according to the fourth embodiment of the present invention.

[Fig. 15] Fig. 15 is a flowchart illustrating an example of the processing procedure of the previous notice command processing (step S940) regarding a previous notice command including identification information according to the fourth embodiment of the present invention.

[Fig. 16] Fig. 16 is a flowchart illustrating an example of the processing procedure of the previous notice command processing (step S950) regarding a previous notice command including reference information according to the fourth embodiment of the present invention.

[Fig. 17] Fig. 17 is a flowchart illustrating an example of the processing procedure of the previous notice command processing (step S960) regarding a previous notice setting command according to the fourth embodiment of the present invention.

[Fig. 18] Fig. 18 is a block diagram illustrating a configuration example of a compile processing device 1500 according to the first embodiment of the present invention.

[Fig. 19] Fig. 19 is a schematic diagram illustrating an example of a function to be excluded from reused candidate sections when a reused candidate section extracting unit 1611 extracts a reused candidate section with the first embodiment of the present invention.

[Fig. 20] Fig. 20 is a schematic diagram illustrating an example of generation of reutilization using a reutilization generating unit 1621 in the case of analyzing the number of arguments as a usage pattern using a reused candidate section analyzing unit 1612 according to the first embodiment of the present invention.

[Fig. 21] Fig. 21 is a schematic diagram illustrating an example of generation of reutilization using the reutilization generating unit 1621 in the case of analyzing the type of an argument as a usage pattern using the reutilization candidate section analyzing unit 1612 according to the first embodiment of the present invention.

[Fig. 22] Fig. 22 is a schematic diagram illustrating an example of generation of reutilization using the reutilization generating unit 1621 in the case of analyzing an argument that differs depending on whether the argument is a constant or variable, as a usage pattern using the reused candidate section analyzing unit 1612 according to the first embodiment of the present invention.

[Fig. 23] Fig. 23 is a schematic diagram illustrating an example of generation of reutilization using the reutilization generating unit 1621 in the case of analyzing a combination of values that an argument takes as a usage pattern

EP 2 466 453 A1

using the reused candidate section analyzing unit 1612 according to the first embodiment of the present invention.

[Fig. 24] Fig. 24 is a schematic diagram illustrating an example of generation of reutilization using the reutilization generating unit 1621 in the case of analyzing the number of times of function call-ups as a usage pattern, using the reused candidate section analyzing unit 1612 according to the first embodiment of the present invention.

[Fig. 25] Fig. 25 is a schematic diagram illustrating an example of generation of reutilization using the reutilization generating unit 1621 in the case of analyzing whether or not there is an argument accompanied with memory access as a usage pattern using the reused candidate section analyzing unit 1612 according to the first embodiment of the present invention.

[Fig. 26] Fig. 26 is a schematic diagram of a program illustrating a first operation example of a program conversion processing unit 1600 according to the first embodiment of the present invention.

[Fig. 27] Fig. 27 is a conceptual diagram illustrating an example of a function call-up command and a function reusing command, according to the first embodiment of the present invention.

[Fig. 28] Fig. 28 is a flowchart illustrating the processing procedure of the compile processing using a compile processing device 1500 according to the first embodiment of the present invention.

[Fig. 29] Fig. 29 is a block diagram illustrating a configuration example of a data processing device 1100 according to the second embodiment of the present invention.

[Fig. 30] Fig. 30 is a block diagram illustrating a configuration example of a processor core 1300 and a history managing unit 1400 according to the second embodiment of the present invention.

[Fig. 31] Fig. 31 is a conceptual diagram illustrating an example of the data structure of history memory 1430 according to the second embodiment of the present invention.

[Fig. 32] Fig. 32 is a conceptual diagram illustrating an example of a program to be processed by the processor core 1300 according to the second embodiment of the present invention, and an execution history to be saved by the history managing unit 1400.

[Fig. 33] Fig. 33 is a flowchart illustrating the processing procedure of function execution processing according to the processor core 1300 and history managing unit 1400 according to the second embodiment of the present invention.

[Fig. 34] Fig. 34 is a block diagram illustrating a configuration example of the compile processing device 1500 according to the third embodiment of the present invention.

[Fig. 35] Fig. 35 is a schematic diagram illustrating a conversion example of a program including a function with multiple arguments as input values, according to a program conversion processing unit 1600 according to the third embodiment of the present invention.

[Fig. 36] Fig. 36 is a schematic diagram illustrating a conversion example according to the program conversion processing unit 1600 of a program including functions having the same type but different usage patterns of arguments according to the third embodiment of the present invention.

[Fig. 37] Fig. 37 is a conceptual diagram illustrating an example of a function call-up command and a function reusing command, according to the third embodiment of the present invention.

[Fig. 38] Fig. 38 is a flowchart illustrating the processing procedure of compile processing using the compile processing device 1500 according to the first embodiment of the present invention.

[Fig. 39] Fig. 39 is a block diagram illustrating a configuration example of the processor core 1300 and history managing unit 1400 according to a fourth embodiment of the present invention.

[Fig. 40] Fig. 40 is a conceptual diagram illustrating an example of the data structure of the history memory 1430 according to the fourth embodiment of the present invention.

[Fig. 41] Fig. 41 is a conceptual diagram illustrating an example of the data structure of a priority table 1450 according to the fourth embodiment of the present invention.

[Fig. 42] Fig. 42 is a conceptual diagram illustrating an example of a program to be processed by the processor core 1300, and execution histories to be saved by the history managing unit 1400, according to the fourth embodiment of the present invention.

[Fig. 43] Fig. 43 is a flowchart illustrating the processing procedure of the function execution processing using the processor core 1300 and history managing unit 1400 according to the fourth embodiment of the present invention.

[Fig. 44] Fig. 44 is a flowchart illustrating a processing procedure example of the execution history registration processing (step S1950) using the history managing unit 1400 according to the fourth embodiment of the present invention.

[Fig. 45] Fig. 45 is a block diagram illustrating a configuration example of the data processing device according to the first embodiment of the present invention.

[Fig. 46] Fig. 46 is a block diagram illustrating a configuration example of a data processing unit 2300 and an execution result reuse processing unit 2400 according to the first embodiment of the present invention.

[Fig. 47] Fig. 47 is a conceptual diagram illustrating an example of the data structure of the history memory 2430 according to the first embodiment of the present invention.

13

[Fig. 48] Fig. 48 is a conceptual diagram illustrating a registration method of section identification information and an execution history at the first function execution using a data processing device 2100 according to the first embodiment of the present invention.

[Fig. 49] Fig. 49 is a conceptual diagram illustrating an example of a technique relating to execution result reuse processing using the data processing device 2100 according to the first embodiment of the present invention.

[Fig. 50] Fig. 50 is a conceptual diagram illustrating an example wherein the processing time of a function is reduced by the execution result reuse processing.

[Fig. 51] Fig. 51 is a conceptual diagram illustrating a registration technique of an execution history in the second function execution and thereafter using the data processing device 2100 according to the first embodiment of the present invention.

[Fig. 52] Fig. 52 is a flowchart illustrating an example of the processing procedure of the execution result reuse method using the data processing device 2100 according to the first embodiment of the present invention.

[Fig. 53] Fig. 53 is a block diagram illustrating a function configuration example of a program analysis processing device according to the second embodiment of the present invention.

[Fig. 54] Fig. 54 is a flowchart illustrating an example of the processing procedure of the program analysis processing method of a program analysis processing device 2600 according to the second embodiment of the present invention.

[Fig. 55] Fig. 55 is a block diagram illustrating a configuration example of the data processing device 2100 according to the third embodiment of the present invention.

[Fig. 56] Fig. 56 is a conceptual diagram illustrating a registration example of an input value setting command address and section identification information as to an input value setting command address table 2820 using the data processing device 2100 according to the third embodiment of the present invention.

[Fig. 57] Fig. 57 is a flowchart illustrating an example of the processing procedure of the execution result reuse method using the data processing device 2100 according to the third embodiment of the present invention.

[Fig. 58] Fig. 58 is a flowchart illustrating a processing procedure example of the execution history search processing (step S2960) using the data processing device 2100 according to the third embodiment of the present invention.

[Fig. 59] Fig. 59 is a block diagram illustrating a configuration example of an integrated circuit in the case of providing a history data storage unit outside of the data processing device 2100 according to the fourth embodiment of the present invention.

[Fig. 60] Fig. 60 is a flowchart illustrating the processing procedure of the history data transfer method using the data processing device 2100 according to the fourth embodiment of the present invention.

[Fig. 61] Fig. 61 is a block diagram illustrating a configuration example of a data processing device 3100 according to an embodiment of the present invention.

[Fig. 62] Fig. 62 is a block diagram illustrating a configuration example of a processor core 3300, history managing unit 3400, and history conversion unit 3500 according to an embodiment of the present invention.

[Fig. 63] Fig. 63 is a block diagram illustrating a configuration example of a history control unit 3510 according to an embodiment of the present invention.

[Fig. 64] Fig. 64 is a block diagram illustrating a configuration example of a saved history generating unit 3600 according to an embodiment of the present invention.

[Fig. 65] Fig. 65 is a block diagram illustrating a configuration example of a history restoring unit 3520 according to an embodiment of the present invention.

[Fig. 66] Fig. 66 is a schematic diagram illustrating a data structure example of a function history, a loop individual history, a loop representative history, and a saved history, according to an embodiment of the present invention.

[Fig. 67] Fig. 67 is a conceptual diagram illustrating a data structure example of an input value link and an execution result link according to an embodiment of the present invention.

[Fig. 68] Fig. 68 is a diagram illustrating a specific example of execution histories, loop representative histories, and saved histories in the history memory 3430 and main storage unit 3130 at the time of saving of a loop individual history using the history control unit 3510 according to an embodiment of the present invention.

[Fig. 69] Fig. 69 is a diagram illustrating a specific example of execution histories, loop representative histories, and saved histories in the history memory 3430 and main storage unit 3130 at the time of restoring a loop individual history using the history restoring unit 3520 according to an embodiment of the present invention.

[Fig. 70] Fig. 70 is a diagram illustrating a specific example of history information in the history memory 3430, and saved histories in the main storage unit 3130 at the time of a new execution history according an embodiment of the present invention being registered.

[Fig. 71] Fig. 71 is a flowchart illustrating a processing procedure example of saving processing of loop individual histories using the history control unit 3510 according to an embodiment of the present invention.

[Fig. 72] Fig. 72 is a flowchart illustrating a processing procedure example of the continuous history search saving processing of loop individual histories (step S3930) using the history control unit 3510 according to an embodiment of the present invention.

[Fig. 73] Fig. 73 is a flowchart illustrating a processing procedure example of the restoration processing of loop individual histories using the history restoring unit 3520 according to an embodiment of the present invention.

[Fig. 74] Fig. 74 is a flowchart illustrating a processing procedure example of the execution result registration processing (step S3970) according to an embodiment of the present invention.

[Fig. 75] Fig. 75 is a flowchart illustrating a processing procedure example of the execution result output processing (step S3980) according to an embodiment of the present invention.

[Fig. 76] Fig. 76 is a block diagram illustrating a configuration example of a compile processing device 4100 according to the first embodiment of the present invention.

[Fig. 77] Fig. 77 is a conceptual diagram illustrating an example of a program that a reusing command distinction unit 4120 according to the first embodiment of the present invention analyzes.

[Fig. 78] Fig. 78 is a block diagram illustrating a configuration example of a hash function determining unit 4200 according to the first embodiment of the present invention.

[Fig. 79] Fig. 79 is a conceptual diagram illustrating an example of a hash value that the candidate hash value generating unit 4230 according to the first embodiment of the present invention generates.

[Fig. 80] Fig. 80 is a conceptual diagram illustrating an example of hash values held in the hash value table 4240 according to the first embodiment of the present invention.

[Fig. 81] Fig. 81 is a conceptual diagram illustrating an example of a hash function specifying command according to the first embodiment of the present invention.

[Fig. 82] Fig. 82 is a flowchart illustrating the processing procedure of compile processing using the compile processing device 4100 according to the first embodiment of the present invention.

[Fig. 83] Fig. 83 is a flowchart illustrating the first half of a processing procedure example of hash function determination processing (step S4920) using the hash function determining unit 4200 according to the first embodiment of the present invention.

[Fig. 84] Fig. 84 is a flowchart illustrating the second half of the processing procedure example of the hash function determination processing (step S4920) using the hash function determining unit 4200 according to the first embodiment of the present invention.

[Fig. 85] Fig. 85 is a block diagram illustrating a configuration example of a data processing device 4300 according to the second embodiment of the present invention.

[Fig. 86] Fig. 86 is a block diagram illustrating a configuration example of the processor core 4400 and hash conversion unit 4500 and history managing unit 4600 according to the second embodiment of the present invention.

[Fig. 87] Fig. 87 is a conceptual diagram illustrating an example of the data structure of the history memory 4630 according to the second embodiment of the present invention.

[Fig. 88] Fig. 88 is a flowchart illustrating a processing procedure example of a command processing method using the data processing device 4300 according to the second embodiment of the present invention.

[Fig. 89] Fig. 89 is a block diagram illustrating a configuration example of the compile processing device 4100 according to the third embodiment of the present invention.

[Fig. 90] Fig. 90 is a block diagram illustrating a configuration example of a hash value determining unit 4700 according to the third embodiment of the present invention.

[Fig. 91] Fig. 91 is a conceptual diagram illustrating an example of hash values to be held in a hash value table 4740 according to the third embodiment of the present invention.

[Fig. 92] Fig. 92 is a conceptual diagram illustrating an example of a function call-up command and a function reusing command according to the third embodiment of the present invention.

[Fig. 93] Fig. 93 is a flowchart illustrating the processing procedure of the compile processing using the compile processing device 4100 according to the third embodiment of the present invention.

[Fig. 94] Fig. 94 is a flowchart illustrating the first half of a processing procedure example of hash value determination processing (step S4960) using the hash value determining unit 4700 according to the third embodiment of the present invention.

[Fig. 95] Fig. 95 is a flowchart illustrating the second half of the processing procedure example of the hash value determination processing (step S4960) using the hash value determining unit 4700 according to the third embodiment of the present invention.

[Fig. 96] Fig. 96 is a block diagram illustrating a configuration example of the data processing device 4300 according to the fourth embodiment of the present invention.

[Fig. 97] Fig. 97 is a block diagram illustrating a configuration example of the processor core 4400 and history managing unit 4600 according to the fourth embodiment of the present invention.

[Fig. 98] Fig. 98 is a flowchart illustrating a processing procedure example of a command processing method using the data processing device 4300 according to the fourth embodiment of the present invention.

[Fig. 99] Fig. 99 is a block diagram illustrating a configuration example of the data processing device 4300 according to the fifth embodiment of the present invention.

[Fig. 100] Fig. 100 is a block diagram illustrating a configuration example of the processor core 4400, hash conversion unit 4500, and history managing unit 4600 according to the fifth embodiment of the present invention.
[Fig. 101] Fig. 101 is a flowchart illustrating a processing procedure example of a command processing method using the data processing device 4300 according to the fifth embodiment of the present invention.
[Fig. 102] Fig. 102 is a flowchart illustrating a processing procedure example of the program execution processing (step S4990) according to the fifth embodiment of the present invention. Description of Embodiments

Description will be made below regarding a first present invention embodiment through a fifth present invention embodiment with reference to the drawings.

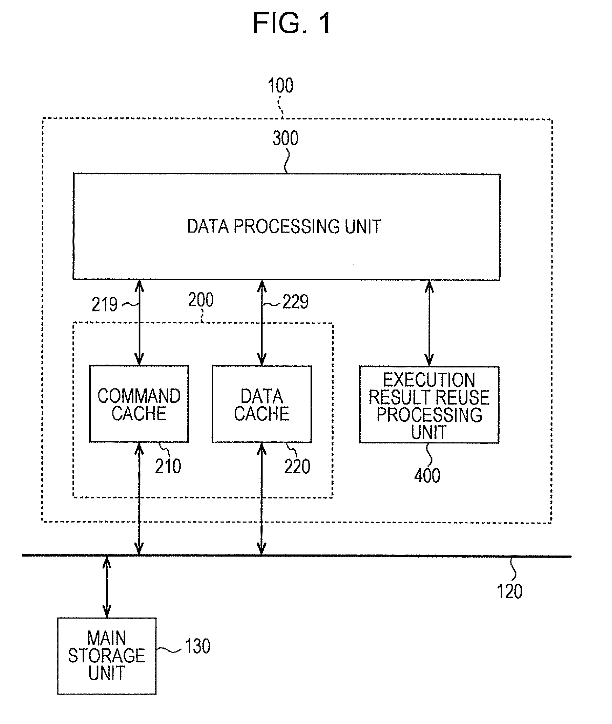

First, description will be made regarding a data processing device, a data processing method, a program conversion processing device, and a program conversion processing method, which are the first present invention, with reference to Fig. 1 through Fig. 17.

A mode for implementing the first present invention (hereafter, referred to as "embodiment") will be described below.

Description will be made in accordance with the following sequence.

1. First Embodiment (Data Processing Control: An example of reuse processing of an execution result according to a previous notice command including identification information)
2. Second Embodiment (Data Processing Control: An example of reuse processing of an execution result according to a previous notice command including reference information)
3. Third Embodiment (Data Processing Control: An example of reuse processing of an execution result according to a previous notice setting command)
4. Fourth Embodiment (Program Conversion Control: A generation example of a program including a previous notice command)

<1. First Embodiment>

[Configuration Example of Data Processing Device]

Fig. 1 is a block diagram illustrating a configuration example of a data processing device according to the first embodiment of the present invention. Here, a data processing device 100, a bus 120, and a main storage unit 130 which make up an integrated circuit are illustrated. This integrated circuit is for executing processing using the data processing device 100 in accordance with a command string that is to be read out from the main storage unit 130 via the bus 120.

The data processing device 100 includes a primary cache 200, a data processing unit 300, and an execution result reuse processing unit 400. Note that the data processing device 100 is an example of the data processing device laid forth in the Claims. The primary cache 200 is memory for reducing delay time caused due to processing at the time of reading out or writing a command and data from the main storage unit 130 via the bus 120. This primary cache 200 is realized by DRAM (Dynamic Random Access Memory), for example.

This primary cache 200 includes a command cache 210 and a data cache 220. The command cache 210 temporarily holds the past command read out from the main storage unit 130. This command cache 210 outputs the held command thereof to the data processing unit 300 via a command line 219 in accordance with a request from the data processing unit 300.

Also, this command cache 210 outputs, in the event of holding a command requested from the data processing unit 300, the requested command thereof of multiple held commands thereof to the data processing unit 300. On the other hand, in the event of holding no command requested from the data processing unit 300, the command cache 210 holds a command read out from the main storage unit 130 by the data processing unit 300, and also outputs to the data processing unit 300.

The data cache 220 is for temporarily holding the past data read out from the main storage unit 130. This data cache 220 outputs the held data thereof to the data processing unit 300 via a data line 220 in accordance with a request from the data processing unit 300. Also, this data cache 220 outputs, in the event of holding data requested from the data processing unit 300, the requested data thereof of a plurality of held data to the data processing unit 300.

On the other hand, in the event of holding no data requested from the data processing unit 300, the data cache 220 holds data read out from the main storage unit 130 by the data processing unit 300. Also, in the event that data to be written back to the main storage unit 130 has been supplied from the data processing unit 300, the data cache 220 holds the data thereof.

The data processing unit 300 is for executing processing based on a command read out from the main storage unit 130. This data processing unit 300 reads out a command from the main storage unit 130 via the command cache 210, and in accordance with the read command thereof, reads out data stored in the main storage unit 130 via the data cache 220, for example. The data processing unit 300 then executes computation based on a computation command using the read data thereof, for example.

Also, for example, in the event of executing processing of a function, the data processing unit 300 uses an input value of an argument in the function read out from the data cache 220 to execute the computation of the function, and outputs an execution result serving as a result of the computation to the data cache 220. At this time, the data processing unit 300 outputs the input value and execution result in the function to an execution result reuse processing unit 400. Also, this data processing unit 300 is realized by a processor core, for example.

The execution result reuse processing unit 400 is, in the event that an input value in a command section executed in the past, and an input value in a command section to be executed again match, for reusing an execution result in the command section executed in the past. Now, of command sections to be executed multiple times, a command section whereby the execution result in the command section executed in the past can be reused will be referred to as a reused section. That is to say, this reused section is a command section wherein of command sections to be executed multiple times, if input values in command sections are the same, execution results thereof are also the same.

This execution result reuse processing unit 400 holds an input value and an execution result in a reused section to be executed multiple times as an execution history. Also, in the even that an input value in the reused section to be executed again, and the input value of the held execution history are the same, this execution result reuse processing unit 400 outputs the execution result in the held execution history thereof to the data processing unit 300. Along therewith, the execution result reuse processing unit 400 informs instructions for skipping processing in the reused section to the data processing unit 300.

For example, in the event that the input value of an argument of a function that is a reused section, and the input value in the held execution history match, the execution result reuse processing unit 400 outputs the execution result in the held execution history to the data processing unit 300. Along therewith, the execution result reuse processing unit 400 informs the instructions for skipping the processing in the function thereof to the data processing unit 300.

The bus 120 is for performing communication between the data processing device 100 and the main storage unit 130. This bus 120 transfers a program stored in the main storage unit 130 to the data processing device 100. Also, this bus 120 transfers data output from the data processing device 100 to the main storage unit 130.

The main storage unit 130 is for storing a program causing the data processing device 100 to execute processing. Now, this program is assumed to be a program generated based on the rule of ABI (Application Binary Interface). This program is generated based on SPARC (Scalable Processor Architecture) ABI, for example. Thus, at the data processing device 100, a location where an input value and an execution result in a function are to be stored can be determined, whereby reuse of the execution result can be realized. Also, before a function serving as a reused section is executed, a previous notice command for predicting execution of processing in a function is inserted in the program stored in this main storage unit 130.

[Configuration Example of Data Processing Unit 300 and Execution Result Reuse Processing Unit 400]

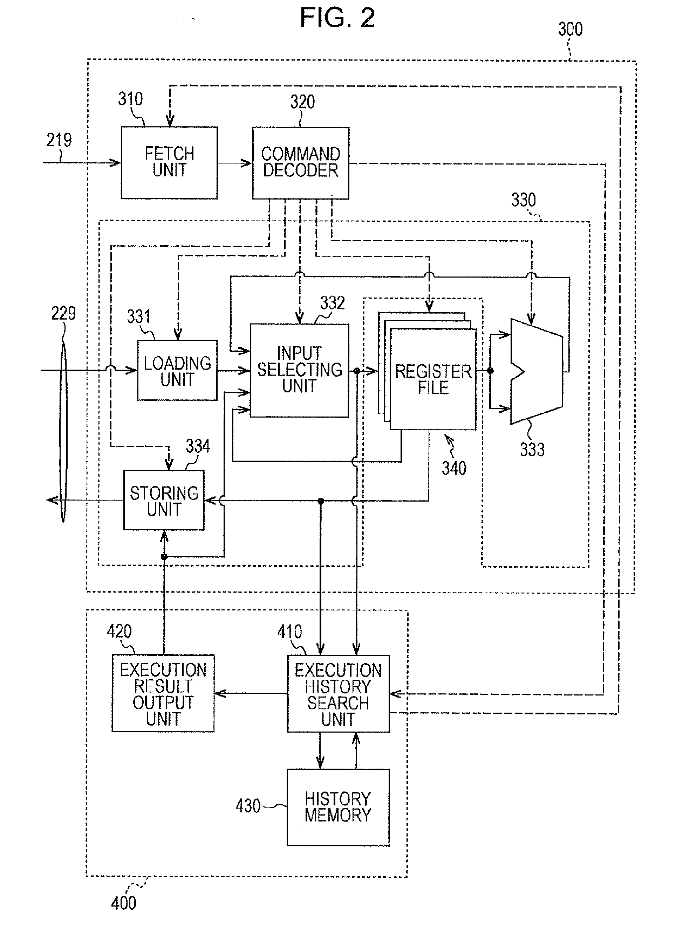

Fig. 2 is a block diagram illustrating a configuration example of the data processing unit 300 and execution result reuse processing unit 400 according to the first embodiment of the present invention. Now, it is assumed that the program in which the previous notice command is inserted is stored in the main storage unit 130.

The data processing unit 300 includes a fetch unit 310, a command decoder 320, an executing unit 330, and a register file 340. This executing unit 330 includes a loading unit 331, an input selecting unit 332, a computing circuit 333, and a storing unit 334. Also, the execution result reuse processing unit 400 includes an execution history search unit 410, an execution result output unit 420, and history memory 430.

The fetch unit 310 is for reading out a command held in the command cache 210, or a command stored in the main storage unit 130 via the command line 219. This fetch unit 310 reads out a command from the command cache 210 in accordance with the instructions from a program counter.

Also, for example, after reading out a previous notice command for predicting execution of a call-up command for a function that is a reused section, the fetch unit 310 reads out an input value setting command for setting an input value of an argument in the function thereof. After the input value setting command thereof, the fetch unit 310 reads out a call-up command for calling up the function thereof. That is to say, before reading out the call-up command for a function that is a reused section, the fetch unit 310 reads out the previous notice command and input value setting command corresponding to the function thereof.

Also, the fetch unit 310 supplies the read command thereof to the command decoder 320. Also, in the event that an execution result has been extracted by the execution history search unit 410, the fetch unit 310 supplies a command for setting the execution result to the command decoder 320 based on notification from the execution history search unit 410, for example.

The command decoder 320 is for interpreting (decoding) the command supplied from the fetch unit 310, and based on the decoded contents thereof, controlling the executing unit 330, register file 340, and execution history search unit 410. In the event of having accepted a previous notice command for predicting execution of a function, this command decoder 320 supplies identification information determined by the previous notice command thereof to the execution history search unit 410. The identification information mentioned here is information for mutually identifying functions that are multiple reused sections, and is used as a search key for searching execution history held in the history memory 430. That is to say, with the command decoder 320, according to the previous notice command, before executing a function that is a reused section determined by a previous notice command, identification information for identifying the function thereof is held in the execution history search unit 410.

For example, in the event of having accepted a previous notice command including the identification information, in order to input the identification information thereof to the history memory 430, the command decoder 320 supplies the identification information thereof to the execution history search unit 410. Also, when employing the head address of a function as the identification information thereof, in the event that the head address of the function has already been stored in the register file 340, the command decoder 320 determines the identification information using a previous notice command including reference information for referencing the head address of the function thereof.

At this time, the command decoder 320 outputs, based on reference information included in the previous notice command thereof, the head address of the function stored in the register file 340 to the execution history search unit 410. Specifically, the command decoder 320 causes the executing unit 330 to output, based on the previous notice command including reference information, the head address of the function that is the identification information to the execution history search unit 410.

Also, when employing the head address of a function as the identification information, in the event that an address setting command for setting the head address of the function to the register file 340 is taken as a previous notice command, the command decoder 320 determines the identification information based on setting information included in the previous notice command.

At this time, the command decoder 320 sets the head address of the function to the setting destination in the register file 340 that setting information specified by the previous notice command thereof indicates via the input selecting unit 332. Along therewith, the command decoder 320 instructs the execution history search unit 410 to obtain the head address of the function output from the input selecting unit 332. Such a previous notice command that is an address setting command will be referred to as a previous notice setting command. Accordingly, based on the previous notice setting command including setting information indicating the setting destination of the head address of the function, the command decoder 320 causes the executing unit 330 to set the head address of the function that is identification information to the setting destination and also to output to the execution history search unit 410.

Also, the command decoder 320 determines whether or not the command accepted after the previous notice command for predicting execution of a function is an input value setting command for setting an input value of an argument in the function. This command decoder 320 determines whether or not the accepted command is an input value setting command based on the rule of ABI, for example.

With this example, a determination example based on the rule of ABI of MIPS (Microprocessor without Interlocked Pipeline Stages) will briefly be described. With the rule of MIPS, in the event that the input values of arguments are all integers, the input values are stored in four registers 4 through 7, and when the number of the arguments is equal to or greater than five, the input values of the fifth or more arguments are stacked in a stack region of the main storage unit 130. Specifically, the input values of the fifth and more arguments are stacked in a stack region corresponding to a value obtained by adding a value of 16 or more to a stack point value stored in a register 29 in the register file 340.

Accordingly, for example, in the event that transfer destination registers indicated in a load word command (lw) are the registers 4 through 7, the command decoder 320 determines that the accepted command is an input value setting command for setting the input values of the arguments in the function. Also, in the event that the number of the arguments is equal to or greater than five, and the input values of all of the arguments are integers, when a transfer destination register indicated in a store word command (sw) is the register 29, and also an offset value is equal to or greater than "16", the command decoder 320 determines that the accepted command is an input value setting command.

Then, in the event that determination is made that the accepted command is an input value setting command, the command decoder 320 supplies an obtaining signal for obtaining data output from the input selecting unit 332 as the input values of the arguments to the execution history search unit 410. Specifically, of a command group from the previous notice command up to a command immediately before a call-up command for calling up a function, based on an input value setting command for setting the input values of the function, the command decoder 320 performs control so as to cause the execution history search unit 410 to obtain the input values of the arguments.

Also, for example, in the event of having accepted an input value setting command for setting an input value of the function read out from the main storage unit 130, this command decoder 320 performs control so as to store an input value read out from the loading unit 331 in the register file 340. Along therewith, the command decoder 320 supplies the obtaining signal to the execution history search unit 410.

Also, for example, in the event of having accepted an input value setting command for setting an input value of the function stored in the register file 340, the command decoder 320 performs control so as to transfer an input value stored in one register of the register file 340 to another register. Along therewith, the command decoder 320 supplies the obtaining signal to the execution history search unit 410.

Then, in the event of having accepted a call-up command for calling up the head address of the function after the input value setting command, the command decoder 320 supplies an input value completion signal to the effect that the settings of all of the input values used for the function has been completed, to the execution history search unit 410. That is to say, in the event of having accepted a call-up command for calling up a function corresponding to the identification information, this command decoder 320 supplies the input value completion signal to the execution history search unit 410. Also, in the event that priority at the time of eliminating execution history is included in the previous notice command, the command decoder 320 supplies the priority thereof to the execution history search unit 410.

The executing unit 330 is for executing processing in accordance with the control from the command decoder 320. That is to say, this executing unit 330 executes processing based on a command string including a reused section that is a command section to be executed multiple times. Also, for example, in the event that a previous notice command including reference information has been supplied to the command decoder 320, the executing unit 330 outputs the head address of a function stored in the register that reference information indicates, to the execution history search unit 410 as the identification information.

Also, for example, in the event that a previous notice setting command has been supplied to the command decoder 320, the executing unit 330 sets, based on setting information indicating the setting destination of the head address of a function included in the previous notice setting command, the head address of the function to the setting destination. That is to say, the executing unit 330 sets the head address of the function to the register file 340 based on the setting information of the previous notice setting command, and also outputs the head address of the function to the execution history search unit 410 as the identification information.

Also, this executing unit 330 outputs an input value and an execution result of a function that is a reused section to the register file 340 or main storage unit 130, and also supplies to the execution history search unit 410. Note that the executing unit 330 is an example of the executing unit laid forth in the Claims.

The loading unit 331 reads out data from the main storage unit 130 or data cache 220 in accordance with the control from the command decoder 320, and supplies the read data thereof to the input selecting unit 332. This loading unit 331 reads out the input value of an argument of in a function from the main storage unit 130 or data cache 220 in accordance with the control from the command decoder 320, and supplies the read input value to the input selecting unit 332, for example.

The input selecting unit 332 is for selecting any one of the data output from the execution result output unit 420, computing circuit 333, register file 340, and execution result output unit 420 in accordance with the control from the command decoder 320. This input selecting unit 332 outputs the selected data thereof to the register file 340 and execution history search unit 410. That is to say, under the control of the command decoder 320, the input selecting unit 332 outputs one of the data output of the execution result output unit 420, computing circuit 333, register file 340, and execution result output unit 420 to the register file 340 and execution history search unit 410.

For example, in the event of a load command having been supplied to the command decoder 320 as an input value setting command, this input selecting unit 332 outputs the data from the load unit 331 to the register file 340 and execution history search unit 410 in accordance with the control of the command decoder 320. Also, in the event of a move command having been supplied to the command decoder 320 as an input value setting command, this input selecting unit 332 outputs the data output from the register file 340 to the register file 340 and execution history search unit 410 in accordance with the control of the command decoder 320.

Also, in the event of a computing command for executing computation having been supplied to the command decoder 320, under the control of the command decoder 320 the input selecting unit 332 outputs the computation result output from the computing circuit 332 to the register file 340 as an execution result. Also, in the event of an execution result having been extracted by the execution history search unit 410, this input selecting unit 332 outputs the execution result output from the execution result output unit 420 to the register file 340 in accordance with the control from the command decoder 320.

The computing circuit 333 is for executing computation in accordance with the control from the command decoder 320. For example, in the event of a computation command for executing computation, for example, such as multiplication, division, or sum of products, having been supplied to the command decoder 320, this computing circuit 333 executes computation using the data stored in the register file 340 in accordance with the control of the command decoder 320. Also, the computing circuit 333 stores a computation result according to computation thereof in the register file 340 via the input selecting unit 332 as an execution result.

The storing unit 334 is for writing the data stored in the register file 340, or the execution result output from the execution result output unit 420 back to the main storage unit 130 in accordance with the control from the command decoder 320. In the event of a store command for writing data back to the main storage unit 130 having been supplied to the command decoder 320, this storing unit 334 outputs data to be written back to the data cache 220 via the data line 229 in accordance with the control from the command decoder 320. Also, in the event of an execution result having been extracted by the execution history search unit 410, this storing unit 334 writes the execution result output from the execution result output unit 420 back to the main storage unit 130 and data cache 220 via the data line 229.

The register file 340 is for holding the data output from the executing unit 330. This register file 340 is configured of multiple registers, e.g., 32 registers 0 through 31. This register file 340 stores the data output from the executing unit 330 in one register of the multiple registers in accordance with the control from the command decoder 320.

Also, this register file 340 outputs the data stored in one register of the multiple registers to the executing unit 330, or the execution history search unit 410 via the executing unit 330, as an execution result in accordance with the control from the command decoder 320, for example. Also, this register file 340 outputs the head address of a function stored in one register of the multiple registers to the execution history search unit 410 via the executing unit 330 as identification information in accordance with the control from the command decoder 320, for example.

The execution history search unit 410 is for searching an execution result in the same execution history as that of identification information and an input value obtained based on a previous notice command, of execution histories that are an input value and an execution result in a reused section held for each identification information in the history memory 430. This execution history search unit 410 holds the identification information and input value determined based on the previous notice command, and outputs the held identification information and input value thereof to the history memory 430, thereby performing search of an execution history.

This execution history search unit 410 obtains identification information determined by a previous notice command in accordance with the instructions of the command decoder 320. For example, in the event of a previous notice command including identification information having been supplied to the command decoder 320, this execution history search unit 410 holds the identification information output from the command decoder 320. Also, for example, in the event of a previous notice command including reference information having been supplied to the command decoder 320, this execution history search unit 410 obtains the head address of a function output from the register file 340 as identification information in accordance with the control from the command decoder 320.

Further, for example, in the event of a previous notice setting command having been supplied to the command decoder 320, this execution history search unit 410 obtains the head address of a function stored in the register file 340 via the input selecting unit 332 in accordance with the control from the command decoder 320 as identification information. After obtaining the identification information thereof, the execution history search unit 410 obtains an input value of the function based on the obtaining signal output from the command decoder 320 each time an input value setting command is supplied to the command decoder 320.

Specifically, based on the head address of a function that is the identification information output from the executing unit 330, and an input value of the function thereof, the execution history search unit 410 searches an execution result in the execution history held in the history memory 430. Then, in the event of a call-up command for calling up the function having been supplied to the command decoder 320, the execution history search unit 410 ends search as to the history memory 430 based on an input value completion signal from the command decoder 320.

In the event of an execution result having been extracted from the history memory 430, the execution history search unit 410 outputs the execution result thereof to the execution result output unit 420. Along therewith, the execution history search unit 410 supplies information relating to a storage location in the extracted execution result thereof to the fetch unit 310 as an omission signal for omitting the processing of the function.

On the other hand, in the event of no execution result having been extracted from the history memory 430, the execution history search unit 410 obtains, after processing in the function identified by a previous notice command at the executing unit 330 is executed, the execution result output from the executing unit 330. The execution history search unit 410 then holds the execution result of the function thereof, the identification information and input value obtained based on the previous notice command in the history memory 430. That is to say, in the event of no execution result having been extracted from the history memory 430, the execution history search unit 410 registers the execution result of the function that is executed after the previous notice command, the identification information and input value of the function held by the previous notice command in the history memory 430.

With this example, in the event of a return command for ending execution of the processing in the function having been supplied to the command decoder 320, the execution history search unit 410 obtains the execution result stored in the register file 340 according to the control of the command decoder 320. Thus, the execution history search unit 410 can correlate the input value and execution result corresponding to the identification information of the function determined by the previous notice command, and hold in the history memory 430.

Also, in the event that priority at the time of eliminating an execution history is included in a previous notice command, the execution history search unit 410 correlates the priority from the command decoder 320, and the input value and execution result of the function corresponding to the priority, and holds in the history memory 430 for each identification information as an execution history. In this case, the execution history search unit 410 eliminates the execution history in the history memory 430 based on the priory held in the history memory 430. Specifically, the execution history search unit 410 eliminates an execution history in the history memory 430 in order from an execution history correlated with identification information having the highest priority. Note that the execution history search unit 410 is an example of the execution history search unit laid forth in the Claims.

In the event of an execution result having been extracted from the history memory 430 by the execution history search unit 410, the execution result output unit 420 outputs the execution result thereof to the register file 340 via the input selecting unit 332, or to the storing unit 334. This execution result output unit 420 outputs the data of the execution result to the storing unit 334 or input selecting unit 332 according to the storage location of the execution result. Note that the execution result output unit 420 is an example of the execution result output unit laid forth in the Claims.

The history memory 430 is for correlating the input value and execution result corresponding to the identification information for each identification information, and holding as an execution history. This history memory 430 is realized by content-addressable memory (CAM: Content Addressable Memory), for example. With this example, identification information that is a search key for searching an execution result is input from the execution history search unit 410, and thus, the history memory 430 starts search of the execution history correlated with the identification information.

Also, in the event that the input values sequentially supplied from the execution history search unit 410, and the input values held in the history memory 430 all match, this history memory 430 outputs the execution results correlated with the held input values to the execution history search unit 410. That is to say, the same execution history as that of the identification information and input value input from the execution history search unit 410 is detected from the history memory 430, and thus, the execution result is extracted from the history memory 430 by the execution history search unit 410. Note that the history memory 430 is an example of the history memory laid forth in the Claims.

Also, the history memory 430 correlates the priority supplied from the execution history search unit 410, and the input value and execution result of the function corresponding to the priority, and holds as an execution history for each identification information, for example. Also, the history memory 430 realized by this content-addressable memory holds the pattern of an input value in the execution history using a tree structure, for example. Now, an example of the data structure in the history memory 430 will be described below with reference to the drawings.

[Data Structure Example of History Memory 430]

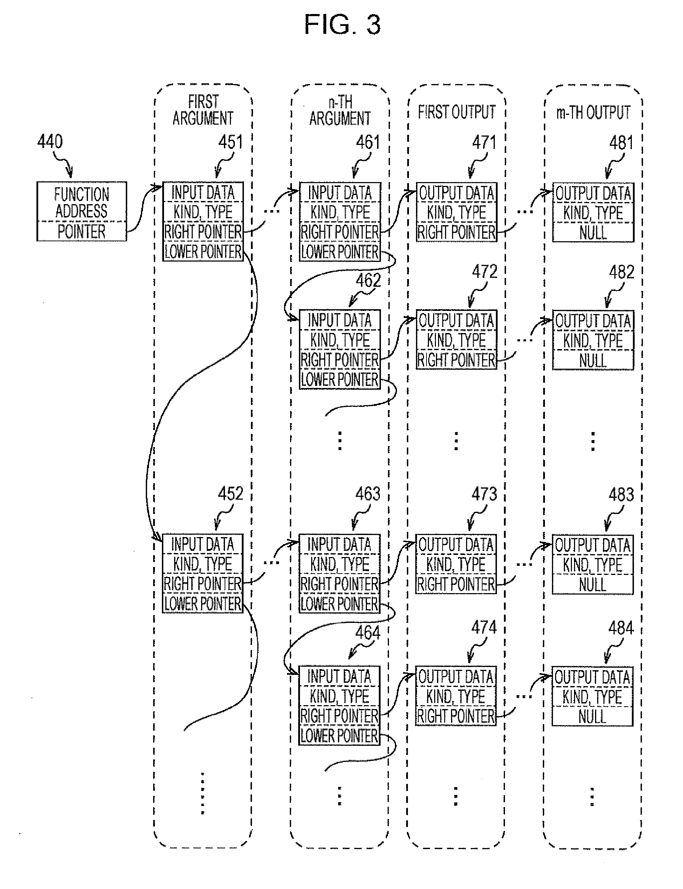

Fig. 3 is a conceptual diagram illustrating an example of the data structure of the history memory 430 according to the first embodiment of the present invention. Here is shown a structure wherein, of execution histories held for each piece of identification information for mutually identifying multiple functions, the execution history in one piece of identification information is held by a tree structure in the history memory 430. This example assumes a function that includes n arguments, and returns an output that is an execution result to m storage destinations. Also, here, let us say that a function address that is the head address of the function is used as identification information.

This example illustrates a function route 440 in a tree structure, first argument nodes 451 and 452, n'th argument nodes 461 through 464, first output nodes 471 through 474, and m'th output nodes 481 through 484.

The function route 440 indicates a function address that is identification information, and a pointer pointing to the first argument node 451.

The first and n'th argument nodes 451, 452, and 461 through 464 indicate, as the input values of an argument in an execution history held in the history memory 430, input data indicating the value of the argument, the type of the argument thereof, and the kind indicating the storage location of the argument thereof. The storage location mentioned here means a register number of the register file 340, or a memory address in the main storage unit 130.

Further, the first and n'th argument nodes 451, 452, and 461 through 464 indicate a right pointer pointing to the argument node in the next argument in the event that input values to be compared mutually match, and a lower pointer pointing to another argument node in the same argument in the event that input values to be compared do not match. Also, the n'th argument nodes 461 through 464 are connected to the first and m'th output nodes 471 through 474 and 481 through 484, respectively.

The first and m'th output nodes 471 through 474 and 481 through 484 indicate, as an execution result in an execution history held in the history memory 430, output data indicating the value of the execution result, the kind indicating the storage location of the execution result thereof, and the type of the execution result thereof. Further, the first output nodes 471 through 474 indicate a right pointer pointing to the next output node. The first and m'th output nodes 471 through 474 and 481 through 484 make up a connection list. Also, null representing the terminal edge of an output node is indicated in the right pointers of the m'th output nodes 481 through 484.

With such a tree structure, upon a function address agreed with the function address shown in the function route 440 being input from the execution history search unit 410, input value comparison processing is executed at the first argument node 451 pointed to by the pointer of the function route 440. The input value comparison processing mentioned here is to compare input values that are input data, kind and type shown in the first argument node 451, and the input values from the execution history search unit 410.

At this time, for example, in the event that the input values shown in the first argument node 451, and the input values from the execution history search unit 410 match, the input value comparison processing is executed at the next argument node pointed to by the right pointer of the first argument node 451. On the other hand, in the event that the input values shown in the first argument node 451, and the input values from the execution history search unit 410 do not match, the input value comparison processing is executed at the first argument node 452 pointed to by the lower pointer of the first argument node 451.

In this way, the argument node pointed to by the right pointer or lower pointer is selected based on the result of the comparison processing at each argument node, and the input value comparison processing is sequentially executed at the selected argument node thereof. For example, in the event that the input values shown in the n'th argument node 461, and the input values from the execution history search unit 410 match each other, the first output node 471 is pointed to by the right pointer of the n'th argument node 461. Then, in order from the execution result indicating the output data, kind, and type held in the first output node 471 up to the execution result held in the m'th output node 481 are sequentially output to the execution history search unit 410.

In this way, the history memory 430 is structured using a tree structure for each piece of the identification information, and accordingly, the input values of the same argument do not have to be held in a redundant manner, whereby the storage region can be conserved. Also, the data structure is divided for each piece of the identification information, whereby deterioration in search speed can be suppressed.

[Example of Operation of Data Processing Device 100 Using Previous Notice Command Including Identification Information]

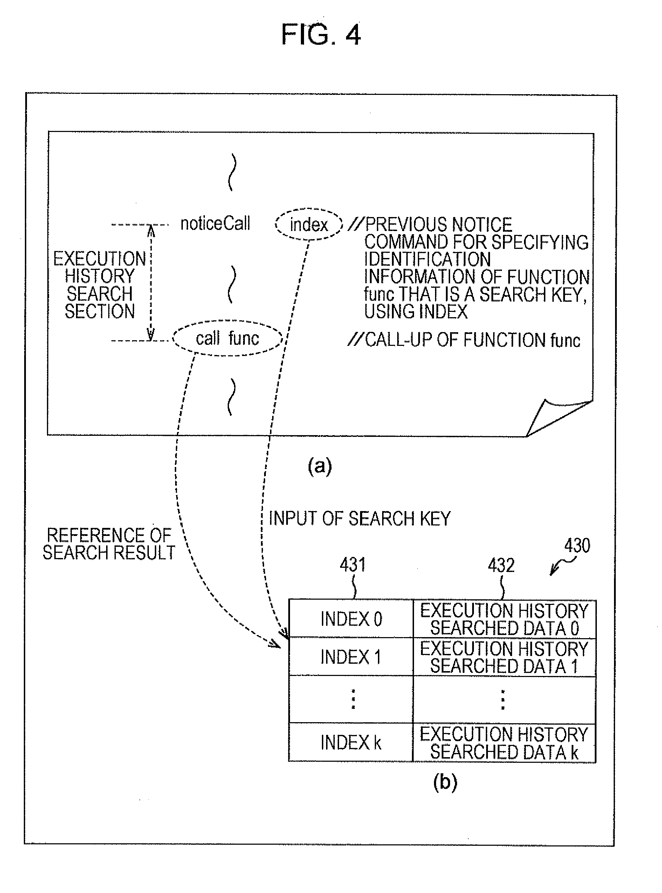

Fig. 4 is a conceptual diagram illustrating the overview of the operation of the data processing device 100 in the case of having accepted a previous notice command including identification information in the data processing device 100 according to the first embodiment of the present invention. (a) in Fig. 4 is a diagram exemplifying a part of a command string described in the assembly language. (a) in Fig. 4 indicates a previous notice command (noticeCall) specifying an index (index), and a call command (Call) for calling up a function (func).

(b) in Fig. 4 is a conceptual diagram illustrating an example of execution history search data for each piece of the identification information in the history memory 430. (b) in Fig. 4 indicates correspondence between the column 431 of identification information (indexes 0 through k) indicated by indexes (index), and the column 432 of execution history search data (execution history search data 0 through k). The execution history search data mentioned here indicates search data made up of a tree structure shown in Fig. 3.

In this case, a previous notice command (noticeCall) is supplied to the command decoder 320, and accordingly, identification information "index k" indicated by an index (index) is supplied to the execution history search unit 410 from the command decoder 320. The identification information "index k" is then input to the history memory 430 by the execution history search unit 410, and accordingly, search of an execution history is started based on "execution history search data k" in the function (func) identified by this identification information (index k).

Then, based on an input value setting command for setting an input value of an argument in a function, the input value of an argument of the function (func) is obtained at the execution history search unit 410, and the obtained input value thereof is sequentially input to the history memory 430. Thus, comparison between the input values held in the execution history search data (execution history search data k) corresponding to the identification information "index k", and the input values from the execution history search unit 410 is sequentially performed.

Then, a call command (call) is supplied to the command decoder 320, and accordingly, it is informed to the execution history search unit 410 from the history memory 430 whether or not there is an execution history agreed with the identification information and input value obtained by the execution history search unit 410. That is to say, according to the execution history search unit 410, whether or not there is an execution result whereby the function (func) can be reused as the search result by the execution history search data k is referenced based on the call command (call).

At this time, in the event that the execution result has been output from the history memory 430, execution of the function (func) is omitted. On the other hand, in the event that no execution result has been output, the function (func) is executed, the executed execution result thereof, the identification information and input value already obtained by the execution history search unit 410 are held in the history memory 430.

In this way, the data processing device 100 obtains the input value of an argument of the function (func) based on the previous notice command (noticeCall) before executing the call command (call) of the function (func), and then ends comparison between the input value of the function (func) thereof, and the input value of the function (func) held in the history memory 430. Next, a specific example of the operation in the data processing device 100 using a previous notice command including identification information will be described with reference to the drawings illustrating command codes according to MIPS.

[Example of Operation Using Previous Notice Command Including Identification Information]

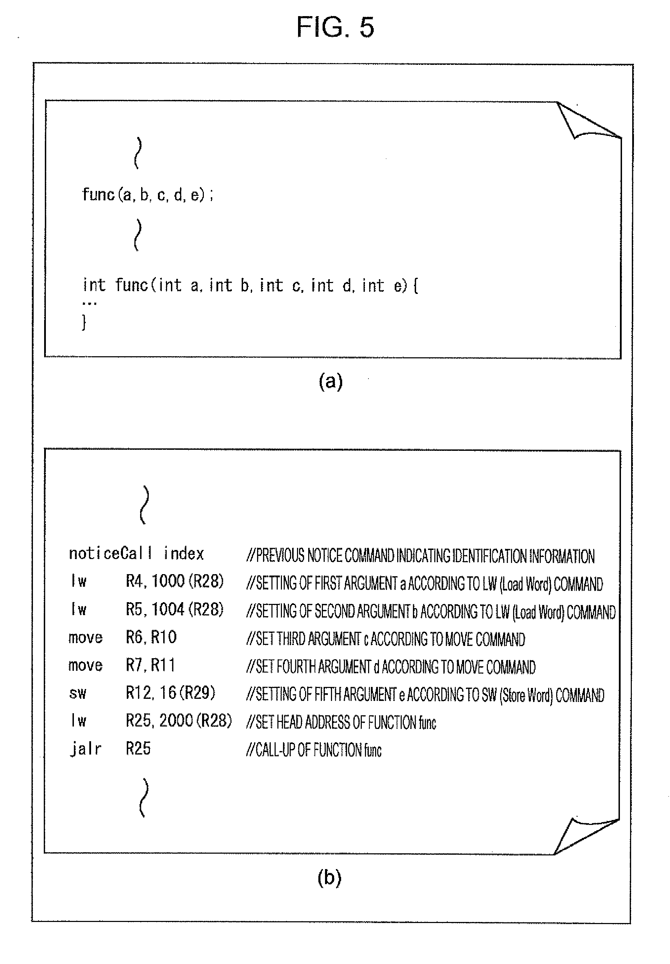

Fig. 5 is a diagram exemplifying a portion of a program to be executed by the data processing device 100 according to the first embodiment of the present invention. (a) in Fig. 5 is a diagram illustrating an example of a portion of the source program of a function selected as a reused section. (b) in Fig. 5 is a diagram exemplifying a portion of a command string converted from the source program shown in (a) in Fig. 5 by the assembly language of MIPS.

Call-up of the function (func) having five arguments (a through e) are described in the upper tier in (a) in Fig. 5. The definition of an int (int)-type function (func) is described in the lower tier. This function (func) has a first argument (a), a second argument (b), a third argument (c), a fourth argument (d), and a fifth argument (e) as int (int)-type arguments. (b) in Fig. 5 indicates a portion of a command string generated by being converted by the assembly language of MIPS, and also by subjecting such a source program to previous notice command insertion processing.

(b) in Fig. 5 indicates a first command string (noticeCall), a second command string (lw), a third command string (lw), a fourth command string (move), a fifth command string (move), a sixth command string (sw), a seventh command string (lw), and an eight command string (jalr). Here, let us assume that the input values A through E of the first through fifth arguments are all integers.

With the first command string, a previous notice command (noticeCall) specifying index (index) is executed. Thus, the identification information indicated by the index (index) supplied from the command decoder 320 is input from the execution history search unit 410 to the history memory 430, and thus, search of an execution history is performed.

With the second command string, a load word command (lw) is executed. Thus, an offset value "1000" is added to a reference address stored in the register 28 (R28), and the data (an input value A of the first argument) stored in the memory address in the main storage unit 130 specified by the added value thereof is transferred to the register 4 (R4).

With this load word command (lw), the transfer destination register number indicated by the load word command (lw) thereof is "R4", and accordingly, this load word command (lw) is determined to be an input value setting command for setting the input value of an argument by the command decoder 320. Therefore, the input value A to be transferred to the register 4 (R4) is also supplied to the execution history search unit 410, and compared with the input values of the first arguments held in the history memory 430. At this time, of the input values of the first arguments held in the history memory 430, when the input value A is held, the processing proceeds to second argument input value comparison processing. On the other hand, when the input value A is not held, the search of an execution history is ended.

With the third command string, a load word command (lw) is executed. Thus, an offset value "1004" is added to the reference address stored in the register 28 (R28), and the data (an input value B of the second argument) stored in the memory address in the main storage unit 130 specified by the added value thereof is transferred to the register 5 (R5).

With this load word command (lw), the transfer destination register number indicated by the load word command (lw) thereof is "R5", and accordingly, this load word command (lw) is determined to be an input value setting command for setting the input value of an argument by the command decoder 320. Therefore, the input value B to be transferred to the register 5 (R5) is also supplied to the execution history search unit 410, and compared with the input values of the second arguments held in the history memory 430. At this time, of the input values of the second arguments held in the history memory 430, when the input value B is held, the processing proceeds to third argument input value comparison processing. On the other hand, when the input value B is not held, the search of an execution history is ended.

With the fourth command string, a move command (move) is executed. Thus, the data (an input value C of the third argument) stored in the register 10 (R10) is transferred to the register 6 (R6). With this move command (move), the transfer destination register number is "R6", and accordingly, this move command (move) is determined to be an input value setting command for setting the input value of an argument by the command decoder 320. Therefore, the input value C stored in the register 6 (R6) is also supplied to the execution history search unit 410, and compared with the input values of the third arguments held in the history memory 430.

At this time, of the input values of the third arguments held in the history memory 430, when the input value C is held, the processing proceeds to fourth argument input value comparison processing. On the other hand, when the input value C is not held, the search of an execution history is ended.

With the fifth command string, a move command (move) is executed. Thus, the data (an input value D of the fourth argument) stored in the register 11 (R11) is transferred to the register 7 (R7). With this move command (move), the transfer destination register number indicated in the move command (move) thereof is "R7", and accordingly, this move command (move) is determined to be an input value setting command for setting the input value of an argument by the command decoder 320. Therefore, the input value D stored in the register 7 (R7) is also supplied to the execution history search unit 410, and compared with the input values of the fourth arguments held in the history memory 430.

At this time, of the input values of the fourth arguments held in the history memory 430, when the input value D is held, the processing proceeds to fifth argument input value comparison processing. On the other hand, when the input value D is not held, the search of an execution history is ended.

With the sixth command string, a store word command (sw) is executed. Thus, "16" is added to the value of a stack pointer stored in the register 29 (R29), and the data (an input value E of the fifth argument) stored in the register 12 (R12) is transferred to the memory address of the added value thereof. With this store word command (sw), the transfer destination register number is "R29", and the offset value is equal to or greater than "16", and accordingly, this store word command (sw) is determined to be an input value setting command for setting the input value of an argument by the command decoder 320.

Thus, the input value E transferred to the main storage unit 130 is also supplied to the execution history search unit 410, and compared with the input values of the fifth argument held in the history memory 430. At this time, of the input values of the fifth arguments held in the history memory 430, when the input value E is held, an execution result in an execution history where the input values A through E of all of the arguments match is output to the execution history search unit 410. On the other hand, when the input value A is not held, the search of an execution history is ended.

With the seventh command string, a load word command (lw) is executed. Thus, an offset value "2000" is added to the reference address stored in the register 28 (R28), and the data (the head address of the function func) stored in the memory address of the added value thereof is transferred to the register 25 (R25).

With this load word command (lw), the transfer destination register number indicated by the load word command (lw) is "R25", and accordingly, determination is made by the command decoder 320 not to be an input value setting command for setting the input value of an argument. Therefore, the data output form the input selecting unit 332 is not obtained by the execution history search unit 410.

With the eighth command string, a jump command (jalr) is executed. Thus, the command of the head address of the function (func) stored in the register 25 (R25) is read out. At this time, an input value end signal indicating that all of the settings of the input values of the first through fifth arguments in the function (func) have been completed is informed to the execution history search unit 410 by the command decoder 320.

At this time, in the event that an execution result has been output from the history memory 430, the execution result thereof is output to the execution result output unit 420, and also an omission signal for omitting the processing of the function (func) is supplied to the fetch unit 310. On the other hand, in the event that no execution result has been output from the history memory 430, the execution result after execution of the function (func), and the identification information and input value obtained based on the previous notice command are registered in the history memory 430 by the execution history search unit 410.

Next, description will be made below regarding an example wherein the processing time of a function is reduced by a previous notice command in the event that the execution history held in the history memory 430, and the identification information and input value obtained by the execution history search unit 410 match, with reference to the drawings.

[Time Reduction Example of Function Processing According to Data Processing Device 100]

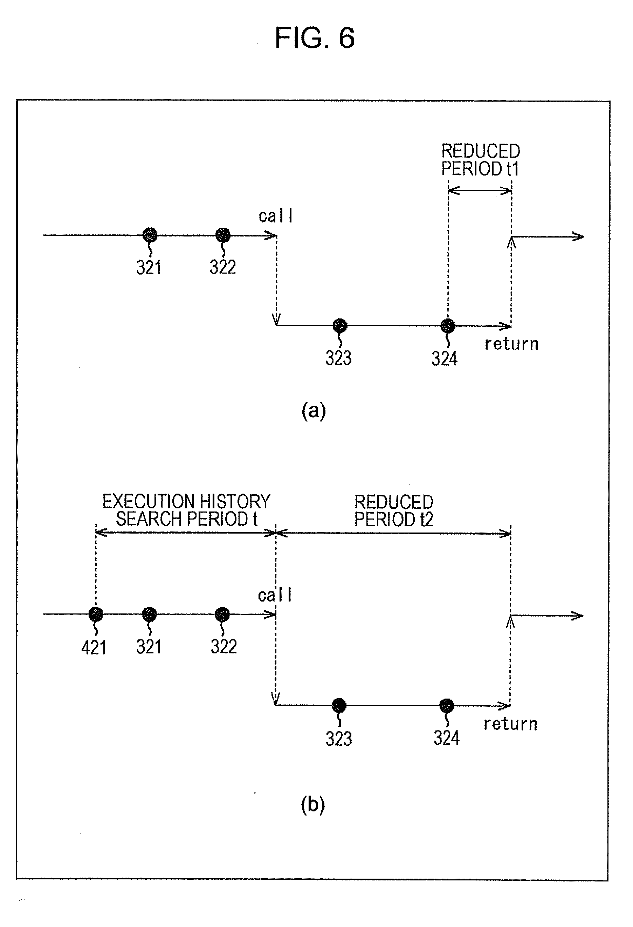

Fig. 6 is a conceptual diagram illustrating an example wherein processing time in a function is reduced by execution of a previous notice command. (a) in Fig. 6 is a conceptual diagram illustrating reduced time owing to reuse of an execution result in a conventional data processing device for executing the processing of a program including no previous notice command. (b) in Fig. 6 is a conceptual diagram illustrating reduced time owing to reuse of an execution result in the data processing device 100 according to the first embodiment of the present invention.

With (a) and (b) in Fig. 6, an example is illustrated wherein a function having two arguments is called up by a call command (call) in an upper routine, and according to a return command (return) accompanied with end of the processing in the function thereof, the program is restored from the lower routine. Also, here, let us say that time elapses from the left to the right.

(a) in Fig. 6 indicates an input value A setting 321 and an input value B setting 322 in the upper routine, and an input value A use 323 and an input value B use 324 in the lower routine.

The input value A setting 321 and input value B setting 322 indicate timing at the time of the input value of an argument in the function being set. This is, as described in Fig. 1, a processing procedure according to a program descried following the rule of ABI. Also, the input value A use 323 and input value B use 324 indicate timing at the time of an input value that is an argument being used in the processing of the function that is the lower routine.

In this case, the input values A and B that are the arguments of the function cannot be determined until all of the two arguments are used (input value B use 324) in the lower routine. Therefore, even when the input values A and B that are the arguments of the function, and the input values held in the history memory 430 all match, the processing time of the function can be reduced only a reduced period t1 from the input value B use 324 up to the return command (return).

(b) in Fig. 6 indicates a previous notice command 421 in addition to the timing shown in (a) in Fig. 6. This previous notice command 421 indicates timing at the time of the previous notice command being decoded by the command decoder 320. Other than the previous notice command 421 indicate the same as with (a) in Fig. 6, and accordingly, the same reference numerals as with (a) in Fig. 6 are appended thereto, and description thereof will be omitted here.

In this case, identification information for identifying a function is determined by the previous command 421, and accordingly, the identification information that is a search key of the history memory 430 is input to the history memory 430, and thus, search of an execution history of the function is started. Then, according to the execution history search unit 410, the input values A and B obtained based on the two input value setting commands for setting the input values A and B of the arguments are supplied to the history memory 430.

Then, based on the call command (call), determination is made whether or not the obtained input values A and B, and the input values held in the history memory 430 all match. Then, in the event of all matching, a period t2 necessary for the processing of the lower routine that is the function (from call to return) is reduced.

As described above, the data processing device 100 obtains the identification information and the input value of an argument included in a previous notice command based on the previous notice command, whereby the search of an execution result as to the history memory 430 can be ended during an execution history search period t. Thus, in the event that an execution result held in the history memory 430 can be reused, the period that can be reduced (reduced period t2) can be prolonged as compared to the conventional reduced period t1.

[Example of Operation of Data Processing Device 100]

Next, the operation of the data processing device 100 according to an embodiment of the present invention will be described with reference to the drawings.

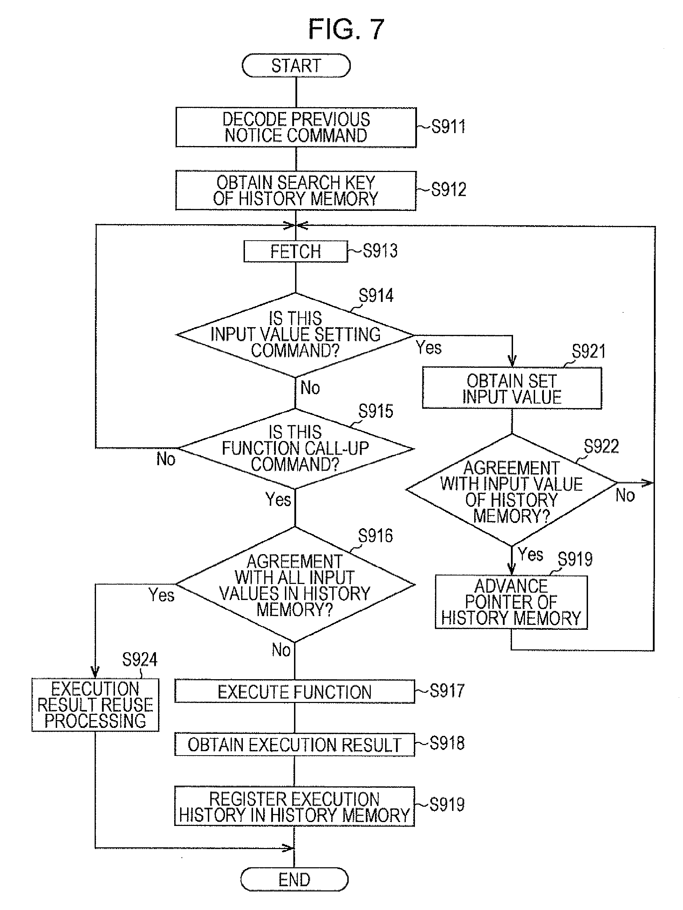

Fig. 7 is a flowchart illustrating an example of the processing procedure of the execution result reuse method of the data processing device 100 according to the first embodiment of the present invention.

First, the previous notice command supplied from the fetch unit 310 is interpreted by the command decoder 320 (step S911). Then, a search key of the history memory 430 that is identification information determined by the previous notice command is supplied to the execution history search unit 410 by the command decoder 320, and thus, the identification information is obtained at the execution history search unit 410. Specifically, the identification information included in the previous notice command is obtained by the execution history search unit 410, and the obtained identification information thereof is input from the execution history search unit 410 to the history memory 430 (step S912). Thus, search of multiple execution histories corresponding to the identification information in the history memory 430 is started. Note that step S912 is an example of the obtaining procedure laid forth in the Claims.

Next, the command to be executed following the previous notice command is read out by the fetch unit 310 (step S913). After this, determination is made by the command decoder 320 whether or not the command read out from the fetch unit 310 is an input value setting command for setting the input value of the first argument of the function (step S914).

Then, in the event that determination is made that the command to be executed next is an input value setting command, the input value of the argument set by the input value setting command is supplied to the execution history search unit 410 by the command decoder 320, and thus, the input value of the argument is obtained at the execution history search unit 410 (step S921). Note that step S921 is an example of the obtaining procedure laid forth in the Claims.

Next, determination is made whether or not the input value of the argument obtained by the execution history search unit 410, and the input value of the argument correlated with the identification information in the history memory 430 match (step S922). Then, in the event that the input values of both do not match, the flow returns to the processing in step S913.

On the other hand, in the event that the input values of both match, with the history memory 430, the pointer is advanced to the next argument node for comparing the input value of the next argument (step S923), and the flow returns to the processing in step S913. Specifically, of the multiple argument nodes, if there is an argument node agreed with the input value from the execution history search unit 410, the next argument node is pointed to by the right pointer of the argument node thereof.

In this way, a series of processing in steps S913, S914, and S921 through S923 are repeatedly executed until the input values of all of the arguments are set. Note that steps S922 and S923 are an example of the execution history search procedure laid forth in the Claims.

On the other hand, in the event that determination is made in the processing in step S914 that the command to be executed next is not an input value setting command, determination is made by that command decoder 320 whether or not the command read out from the fetch unit 310 is a call-up command for calling up a function (step S915). Then, in the event that determination is made that the read command is not a call-up command, the flow returns to the processing in step S913.

On the other hand, in the event that determination is made that the read command is a call-up command, determination is made whether or not the input values set by the input value setting command are all agreed with the input values correlated with the identification information in the history memory 430 (step S916). Then, in the event that all of the input values match, execution result reuse processing is executed (step S924). Specifically, the execution result in the history memory 430 corresponding to the identification information and input values obtained by the execution history search unit 410 is output from the execution result output unit 420. This is then written back to the main storage unit 130 or register file 340, and the processing of the called function is ended. Note that S924 is an example of the execution result output procedure laid forth in the Claims.

On the other hand, in the event that all of the input values do not match, the called function is executed (step S917). The execution result of the executed function is then obtained by the execution history search unit 410 (step S918). Next, the obtained execution result thereof, and the input values obtained by steps S912 and S921 are registered in the history memory 430 by the execution history search unit 410 (step 8919).

In this way, with the first embodiment of the present invention, according to a previous notice command for predicting execution of a function, the identification information of the function, and input values to be set by an input value setting command to be executed after the previous notice command can be determined before execution of the function. Thus, when the function is called up, the execution history in the history memory 430 agreed with the determined identification information and input values thereof can be extracted. Also, in the event that the execution result in the execution history has been extracted from the history memory 430, execution of the function to be called up by a call-up command can be omitted, whereby the processing time of the function owing to the reuse of the execution result can be markedly reduced.

Note that, with the first embodiment of the present invention, description has been made regarding a case where identification information that is a search key of the history memory 430 is included in a previous notice command, but an arrangement may be made wherein identification information is taken as the head address of a function, and reference information for referencing the head address of the function is included in a previous notice command. Therefore, an example wherein an execution result in the history memory 430 is searched based on a previous notice command including reference information will be described below with reference to the drawings as a second embodiment.

<Second Embodiment>

[Example of Operation of Data Processing Device 100 According to Previous Notice Command Including Reference Information]

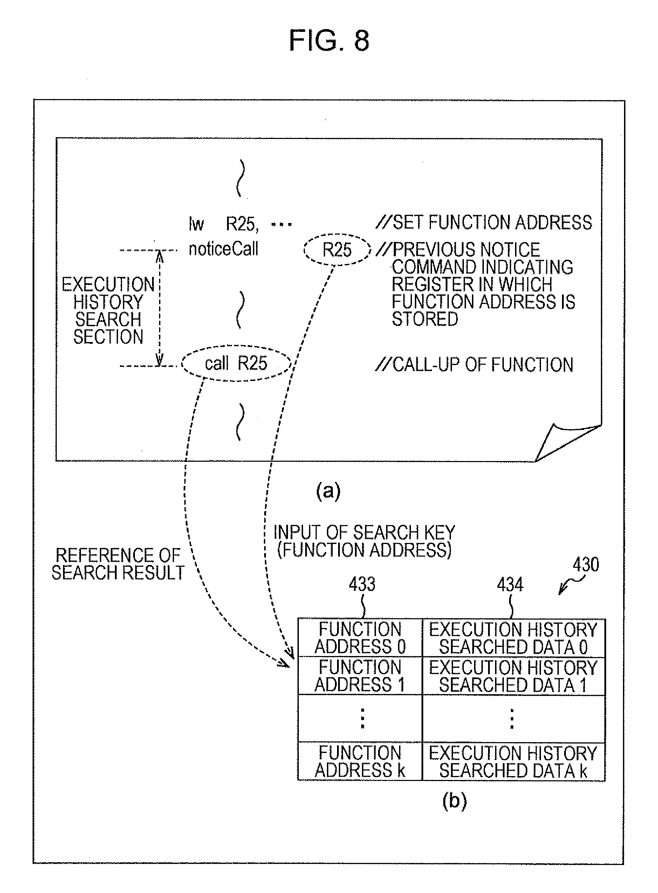

Fig. 8 is a conceptual diagram illustrating overview of the operation of the data processing device 100 in the case of having accepted a previous notice command including reference information at the data processing device 100 according to a second embodiment of the present invention. Here, let us assume that a function address that is the head address of a function is used as identification information that is a search key of the history memory 430.

(a) in Fig. 8 is a diagram exemplifying a portion of a command string described by the assembly language. (a) in Fig. 8 illustrates a load word command (lw) for setting a function address to the register 25 (R25), and a previous notice command (noticeCall) including reference information (R25), Also, a call command (Call) for calling up a function stored in the register 25 (R25) is indicated here.

As described above, the reference information of a previous notice command (noticeCall) indicates the register number (R25) where the function address is stored. Also, in the event of generating such a previous notice command including reference information, it is assumed to generate, with compile processing, a load word command (lw) for setting a function address before the previous notice command.

(b) in Fig. 8 is a conceptual diagram illustrating an example of execution history search data for each function address that is the identification information in the history memory 430. (b) in Fig. 8 indicates a correlation table between a column 433 of function addresses (function addresses 0 through k) stored in the register 25 (R25) that the reference information (R25) indicates, and a column 434 of execution history search data (execution history search data 0 through k). The execution history search data mentioned here indicates search data made up of the tree structure shown in Fig. 3.

In this case, the command decoder 320 outputs "function address 1" stored in the register 25 (R25) to the execution history search unit 410 based on the reference information (R25) included in the previous notice command (noticeCall). That is to say, the executing unit 330 outputs the function address "function address 1" to the execution history search unit 410 based on the previous notice command including reference information. Then, the "function address 1" thereof is input to the history memory 430 by the execution history search unit 410, and thus, search of an execution history is started based on the execution history search data 1 corresponding to the function address 1 thereof.

Thereafter, based on an input value setting command for setting the input value of an argument of the function, the input value of an argument in the function is held at the execution history search unit 410, and the held input value thereof is sequentially input to the history memory 430. Thus, comparison between the input value held in the execution history search data (execution history search data 1) corresponding to the function address (function address 1), and the input value from the execution history search unit 410 is sequentially performed.

Then, a call command (call) is supplied to the command decoder 320, and thus, it is informed from the history memory 430 to the execution history search unit 410 whether or not there is an execution history agreed with the function address and input value obtained by the execution history search unit 410. That is to say, it is referenced by the execution history search unit 410 based on a call command (call) whether or not there is a reusable execution result as a search result according to the execution history search data 1 corresponding to the function address 1.

At this time, in the event that the execution result has been output from the history memory 430, execution of the function is omitted. On the other hand, in the event that no execution result has been output, the processing of the function is executed without change, and the executed execution result thereof, and the identification information and input value already held in the execution history search unit 410 are registered in the history memory 430.

In this way, the data processing device 100 can obtain identification information (function address 1) that is a search key of the history memory 430 based on reference information included in a previous notice command (noticeCall) before execution of a call command (call) of a function (function address 1). Next, a more specific example of the operation in the data processing device 100 using a previous notice command including reference information will be described with reference to the drawing illustrating command codes according to MIPS.

[Specific Example of Operation of Data Processing Device 100 Using Previous Notice Command Including Reference Information]

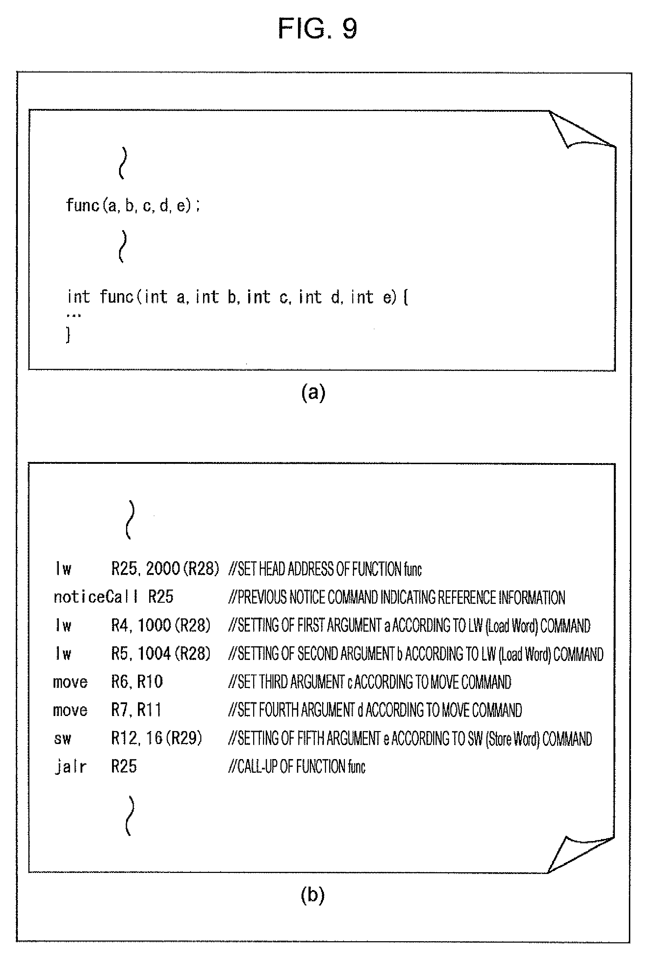

Fig. 9 is a diagram exemplifying a portion of a program to be executed by the data processing device 100 according to the second embodiment of the present invention. (a) in Fig. 9 is a diagram illustrating an example of a portion of the source program of a function selected as a reused section. (b) in Fig. 5 is a diagram exemplifying a portion of a command string converted from the source program shown in (a) in Fig. 5 by the assembly language of MIPS.

Call-up of a function (func) having five arguments (a through e) is described at the upper tier in (a) in Fig. 9. The definition of an int (int) -type function (func) is described in the lower tier. This function (func) has the first argument (a), second argument (b), third argument (c), forth argument (d), and fifth argument (e) as int (int) -type arguments. (b) in Fig. 9 indicates a portion of a command string generated by such a source program being converted using the assembly language of MIPS, and also being subjected to insertion processing of a previous notice command.

(b) in Fig. 9 indicates a first command string (lw), a second command string (noticeCall), a third command string (lw), a fourth command string (lw), a fifth command string (move), a sixth command string (move), a seventh command string (sw), and an eighth command string (jalr). Here, it is assumed that input values A through E of the arguments of the function are all integers.

With the first command string, a load word command (lw) is executed. Thus, an offset value "2000" is added to the reference address stored in the register 28 (R28), and the data (the head address of the function func) stored in the memory address of the added value thereof is transferred to the register 25 (R25). A load word command for setting the head address of the function read out from the main storage unit 130 to the register file 340 in this way will be referred to as address setting command here.

With the second command string, a previous notice command (noticeCall) including reference information (R25) is executed. Thus, a function address that is identification information stored in the register 25 is output to the execution history search unit 410 by the control of the command decoder 320 based on the reference information (R25). Specifically, a function address is output to the execution history search unit 410 by the executing unit 330 based on a previous notice command including reference information. The function address thereof is then input to the history memory 430 by the execution history search unit 410, and thus, search of an execution history is performed.

With the third command string, a load word command (1w) is executed. Thus, an offset value "1000" is added to the reference address stored in the register 28 (R28), and the data (the input value A of the first argument) stored in the memory address in the main storage unit 130 that is the added value thereof is transferred to the register 4 (R4).

With this load word command (lw), the transfer destination register number indicated by the load word command (lw) thereof is "R4", and accordingly, this load word command (lw) is determined to be an input value setting command for setting the input value of an argument by the command decoder 320. Therefore, the input value A to be transferred to the register 4 (R4) is also supplied to the execution history search unit 410, and compared with the input values of the first arguments held in the history memory 430. At this time, of the input values of the first arguments held in the history memory 430, when the input value A is held, the processing proceeds to second argument input value comparison processing. On the other hand, when the input value A is not held, the search of an execution history is ended.

With the fourth command string, a load word command (lw) is executed. Thus, an offset value "1004" is added to the reference address stored in the register 28 (R28), and the data (an input value B of the second argument) stored in the memory address in the main storage unit 130 that is the added value thereof is transferred to the register 5 (R5).

With this load word command (lw), the transfer destination register number indicated by the load word command (lw) thereof is "R5", and accordingly, this load word command (lw) is determined to be an input value setting command for setting the input value of an argument by the command decoder 320. Therefore, the input value B to be stored in the register 5 (R5) is also supplied to the execution history search unit 410, and compared with the input values of the second arguments held in the history memory 430. At this time, of the input values of the second arguments held in the history memory 430, when the input value B is held, the processing proceeds to third argument input value comparison processing. On the other hand, when the input value B is not held, the search of an execution history is ended.

With the fifth command string, a move command (move) is executed. Thus, the data (an input value C of the third argument) stored in the register 10 (R10) is transferred to the register 6 (R6). With this move command (move), the transfer destination register number indicated therein is "R6", and accordingly, this move command (move) is determined to be an input value setting command for setting the input value of an argument by the command decoder 320.

Therefore, the input value C stored in the register 6 (R6) is also supplied to the execution history search unit 410, and compared with the input values of the third arguments held in the history memory 430.

At this time, of the input values of the third arguments held in the history memory 430, when the input value C is held, the processing proceeds to fourth argument input value comparison processing. On the other hand, when the input value C is not held, the search of an execution history is ended.

With the sixth command string, a move command (move) is executed. Thus, the data (an input value D of the fourth argument) stored in the register 11 (R11) is transferred to the register 7 (R7). With this move command (move), the transfer destination register number indicated in the move command (move) thereof is "R7", and accordingly, this move command (move) is determined to be an input value setting command for setting the input value of an argument by the command decoder 320. Therefore, the input value D stored in the register 7 (R7) is also supplied to the execution history search unit 410, and compared with the input values of the fourth arguments held in the history memory 430.

At this time, of the input values of the fourth arguments held in the history memory 430, when the input value D is held, the processing proceeds to fifth argument input value comparison processing. On the other hand, when the input value D is not held, the search of an execution history is ended.

With the seventh command string, a store word command (sw) is executed. Thus, "16" is added to the value of a stack pointer stored in the register 29 (R29), and the data (an input value E of the fifth argument) stored in the register 12 (R12) is transferred to the memory address of the added value thereof. Witch this store word command (sw), the transfer destination register number that the store word command (sw) thereof indicates is "R29", and the offset value is equal to or greater than "16", and accordingly, this store word command (sw) is determined to be an input value setting command for setting the input value of an argument by the command decoder 320.

Thus, the input value E transferred to the main storage unit 130 is also supplied to the execution history search unit 410, and the supplied input value E is compared with the input values of the fifth argument held in the history memory 430. At this time, of the input values of the fifth arguments held in the history memory 430, when the input value E is held, an execution result in an execution history where the input values A through E of all of the arguments match is output to the execution history search unit 410. On the other hand, when the input value A is not held, the search of an execution history is ended.

With the eighth command string, a jump command (jalr) is executed. Thus, the command of the head address of the function (func) stored in the register 25 (R25) is read out. At this time, an input value end signal indicating that all of the settings of the input values of the first through fifth arguments in the function (func) have been completed is informed to the execution history search unit 410 by the command decoder 320.

At this time, in the event that an execution result has been output from the history memory 430, the execution result thereof is output to the execution result output unit 420 by the execution history search unit 410, and also an omission signal for omitting the processing of the function (func) is supplied to the fetch unit 310. On the other hand, in the event that no execution result has been output from the history memory 430, the execution result after execution of the function (func), and the identification information and input value obtained based on the previous notice command are registered in the history memory 430 by the execution history search unit 410.

As described above, with the second embodiment of the present invention, the execution history search unit 410 can obtain, before the function identified by a previous notice command is executed, the head address of the function as identification information based on the reference information included in the previous notice command. Thus, based on the head address of the function that is a reused section output from the executing unit 330 as identification information, and the input values of the function, the execution history search unit 410 can search an execution result in the execution history held in the history memory 430.

That is to say, the execution result reuse processing unit 400 can obtain identification information and input values at the execution history search unit 410 using a previous notice command including reference information, whereby an execution history held in the history memory 430 can be searched before execution of the function.

Note that description has been made here regarding a case where a function address is obtained using a previous notice command including reference information, but a previous notice setting command for taking an address setting command for setting a function address as a previous notice command may be employed. Next, an example for searching the execution histories held in the history memory 430 with a previous notice setting command as a trigger will be described below as a third embodiment with reference to the drawings.

<Third Embodiment>

[Example of Operation of Data Processing Device 100 Using Previous Notice Command Including Reference Information]

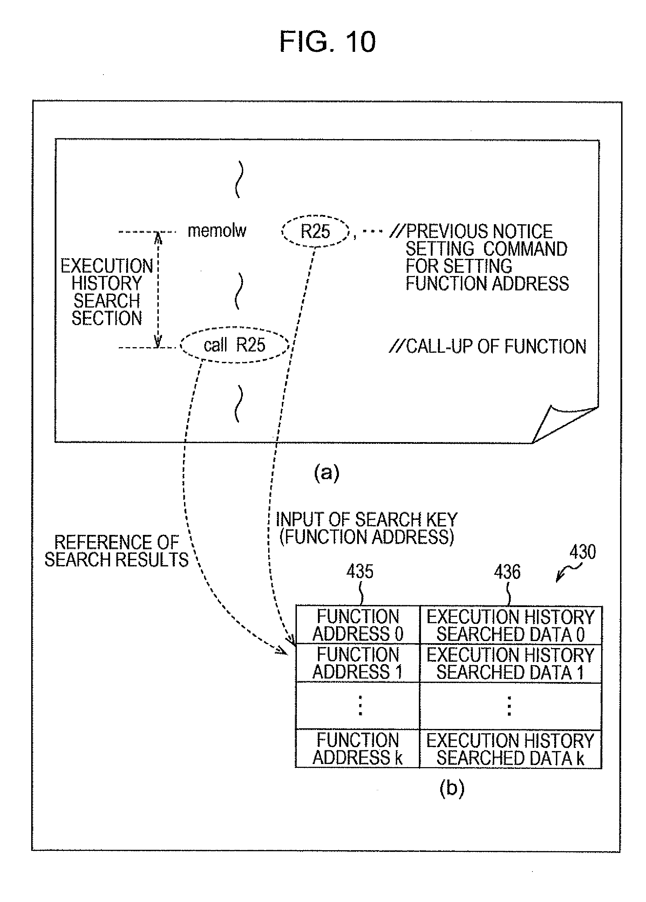

Fig. 10 is a conceptual diagram illustrating overview of the operation of the data processing device 100 in the case of having accepted a previous notice setting command at the data processing device 100 according to a third embodiment of the present invention. Here, let us assume that a function address that is the head address of a function is used as identification information that is a search key of the history memory 430.

(a) in Fig. 10 is a diagram exemplifying a portion of a command string described by the assembly language. (a) in Fig. 10 illustrates a previous notice setting command (memolw) for setting a function address to the register 25 (R25), and a call command (Call) for calling up the function corresponding to the function address stored in the register 25 (R25).

As described above, a previous setting command (memolw) is employed, whereby an address setting command (lw) for setting an function address to the register 25 (R25) can be omitted as compared to the second embodiment.

(b) in Fig. 10 is a conceptual diagram illustrating an example of execution history search data for each function address that is identification information in the history memory 430. (b) in Fig. 10 indicates a correlation table between a column 435 of function addresses (function addresses 0 through k) to be set to the register 25 (R25) by a previous notice setting command (memolw), and the column 436 of execution history search data (execution history search data 0 through k). The execution history search data mentioned here indicates search data made up of the tree structure shown in Fig. 3.

In this case, the command decoder 320 sets "function address 1" to the register 25 (R25) indicted in the setting information specified by the previous notice setting command (memolw), and also causes the execution history search unit 410 to obtain "function address 1". Specifically, the executing unit 330 sets the head address "function address 1" of the function to the setting destination (R25) based on the previous notice setting command (memolw) including setting information indicating the setting destination (R25) of the head address of the function.

The "function address 1" thereof is input to the history memory 430 by the executing history search unit 410, and thus, search of an execution history is started based on "execution history search data 1" corresponding to the function address 1 thereof.

Thereafter, based on an input value setting command for setting the input value of an argument in the function, the input value of an argument is obtained at the execution history search unit 410, and the obtained input value is sequentially input to the history memory 430. Thus, comparison between the input value held in the execution history search data (execution history search data 1) corresponding to a function address (function address 1), and the input value from the execution history search unit 410 is sequentially performed.

Then, a call command (call) is supplied to the command decoder 320, whether or not there is an execution history agreed with the function address (function address 1) and input value obtained by the execution history search unit 410 is informed from the history memory 430 to the execution history search unit 410. That is to say, a search result according to the execution history search data 1 corresponding to the function address 1 is referenced by the execution history search unit 410 based on a call command (call).

At this time, in the event that the execution result has been output from the history memory 430, execution of the function is omitted. On the other hand, in the event that no execution result has been output, the processing of the function is executed, and the executed execution result thereof, and the function address that is identification information and the input value already obtained by the execution history search unit 410 are held in the history memory 430.

As described above, the data processing device 100 can obtain the function address (function address 1) set by the previous notice setting command (memolw) at the execution history search unit 410 before executing the call command (call) of the function (function address 1). Next, a more specific example of the operation in the data processing device 100 using the previous notice setting command will be described with reference to the drawing illustrating command codes according to MIPS.

[Specific Example of Operation of Data Processing Device 100 Using Previous Notice Setting Command]

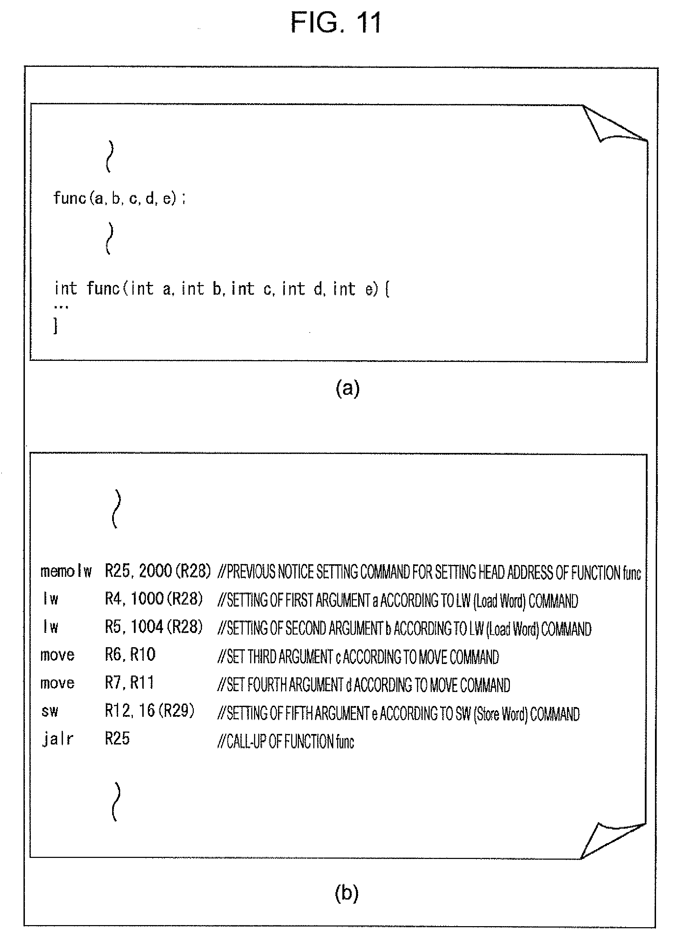

Fig. 11 is a diagram exemplifying a portion of a program to be executed by the data processing device 100 according to the third embodiment of the present invention. With the upper tier in (a) in Fig. 11, call-up of a function (func) having five arguments (a through e) are described. The definition of an int (int) -type function (func) is described in the lower tier. This function (func) has the first argument (a), second argument (b), third argument (c), forth argument (d), and fifth argument (e) as int (int) -type arguments.

(b) in Fig. 11 indicates a portion of a command string generated by such a source program being converted using the assembly language of MIPS, and also being subjected to insertion processing of a previous notice command.

(b) in Fig. 11 indicates a first command string (memolw), a second command string (lw), a third command string (lw), a fourth command string (move), a fifth command string (move), a sixth command string (sw), and a seventh command string (jalr). Here, it is assumed that input values A through E of the arguments of the function are all integers.

With the first command string, a previous notice setting command (memolw) is executed. Thus, an offset value "2000" is added to the reference address stored in the register 28 (R28), and the data (the head address of the function func) stored in the memory address of the added value thereof is transferred to the register 25 (R25). Specifically, the executing unit 330 sets the head address of the function to the setting destination based on the setting information indicating the setting destination of the head address of the function included in the previous notice setting command.

Along therewith, the function address output from the input selecting unit 332 is obtained by the execution history search unit 410 based on the obtaining signal supplied from the command decoder 320. Then, the function address thereof is input to the history memory 430 by the execution history search unit 410, and thus, search of an execution history is performed.

With the second command string, a load word command (lw) is executed. Thus, an offset value "1000" is added to the reference address stored in the register 28 (R28), and the data (the input value A of the first argument) stored in the memory address in the main storage unit 130 that is the added value thereof is transferred to the register 4 (R4).

With this load word command (lw), the transfer destination register number indicated by the load word command (lw) thereof is "R4", and accordingly, this load word command (1w) is determined to be an input value setting command for setting the input value of an argument by the command decoder 320. Therefore, the input value A to be transferred to the register 4 (R4) is also supplied to the execution history search unit 410, and compared with the input values of the first arguments held in the history memory 430.

At this time, of the input values of the first arguments held in the history memory 430, when the input value A is held, the processing proceeds to second argument input value comparison processing. On the other hand, when the input value A is not held, the search of an execution history is ended.

With the third command string, a load word command (lw) is executed. Thus, an offset value "1004" is added to the reference address stored in the register 28 (R28), and the data (an input value B of the second argument) stored in the memory address in the main storage unit 130 that is the added value thereof is transferred to the register 5 (R5).

With this load word command (lw), the transfer destination register number indicated by the load word command (lw) thereof is "R5", and accordingly, this load word command (lw) is determined to be an input value setting command for setting the input value of an argument by the command decoder 320. Therefore, the input value B to be stored in the register 5 (R5) is also supplied to the execution history search unit 410, and compared with the input values of the second arguments held in the history memory 430.

At this time, of the input values of the second arguments held in the history memory 430, when the input value B is held, the processing proceeds to third argument input value comparison processing. On the other hand, when the input value B is not held, the search of an execution history is ended.

With the fourth command string, a move command (move) is executed. Thus, the data (an input value C of the third argument) stored in the register 10 (R10) is transferred to the register 6 (R6). With this move command (move), the transfer destination register number is "R6", and accordingly, this move command (move) is determined to be an input value setting command for setting the input value of an argument by the command decoder 320. Therefore, the input value C stored in the register 6 (R6) is also supplied to the execution history search unit 410, so the input value C supplied to the execution history search unit 410 and the input values of the third arguments held in the history memory 430 are compared.

At this time, of the input values of the third arguments held in the history memory 430, when the input value C is held, the processing proceeds to fourth argument input value comparison processing. On the other hand, when the input value C is not held, the search of an execution history is ended.

With the fifth command string, a move command (move) is executed. Thus, the data (an input value D of the fourth argument) stored in the register 11 (R11) is transferred to the register 7 (R7). With this move command (move), the transfer destination register number indicated in the move command (move) thereof is "R7", and accordingly, this move command (move) is determined to be an input value setting command for setting the input value of an argument by the command decoder 320. Therefore, the input value D stored in the register 7 (R7) is also supplied to the execution history search unit 410, and compared with the input values of the fourth arguments held in the history memory 430.

At this time, of the input values of the fourth arguments held in the history memory 430, when the input value D is held, the processing proceeds to fifth argument input value comparison processing. On the other hand, when the input value D is not held, the search of an execution history is ended.

With the sixth command string, a store word command (sw) is executed. Thus, "16" is added to the value of a stack pointer stored in the register 29 (R29), and the data (an input value E of the fifth argument) stored in the register 12 (R12) is transferred to the memory address of the added value thereof. With this store word command (sw), the transfer destination register number that the store word command (sw) thereof indicates is "R29", and the offset value is equal to or greater than "16", and accordingly, this store word command (sw) is determined to be an input value setting command for setting the input value of an argument by the command decoder 320.

Thus, the input value E transferred to the main storage unit 130 is also supplied to the execution history search unit 410, and the supplied input value E and the input values of the fifth argument held in the history memory 430 are compared. At this time, of the input values of the fifth arguments held in the history memory 430, when the input value E is held, an execution result in an execution history where the input values A through E of all of the arguments match is output to the execution history search unit 410. On the other hand, when the input value A is not held, the search of an execution history is ended.

With the seventh command string, a jump command (jalr) is executed. Thus, the command of the head address of the function (func) stored in the register 25 (R25) is read out. At this time, an input value end signal indicating that all of the settings of the input values of the first through fifth arguments in the function (func) have been completed is informed to the execution history search unit 410 by the command decoder 320.

At this time, in the event that an execution result has been output from the history memory 430, the execution result thereof is output by the execution history search unit 410 to the execution result output unit 420, and also an omission signal for omitting the processing of the function (func) is supplied to the fetch unit 310. On the other hand, in the event that no execution result has been output from the history memory 430, the execution result after execution of the function (func), and the identification information and input value obtained based on the previous notice command are registered in the history memory 430 by the execution history search unit 410.

As described above, with the third embodiment of the present invention, the execution history search unit 410 can obtain, before execution of the function, the function address set based the previous notice setting command corresponding to the function thereof as identification notice. Thus, based on the head address of the function set by the executing unit 330, and the input values of the function obtained by the previous notice setting command, the execution history search unit 410 can search for an execution result in the history memory 430.

That is to say, the execution result reuse processing unit 400 can obtain identification information and input values at the execution history search unit 410 using the previous notice setting command, whereby an execution history held in the history memory 430 can be searched before execution of the function.

As described above, with the first through third embodiments of the present invention, based on a previous notice command included in a program stored in the main storage unit 130, processing time owing to reuse of an execution result of a function can be markedly reduced. Next, a program conversion device for inserting such a previous notice command into a program will be described with reference to the drawings.

<4. Fourth Embodiment>

[Configuration Example of Program Conversion Device]

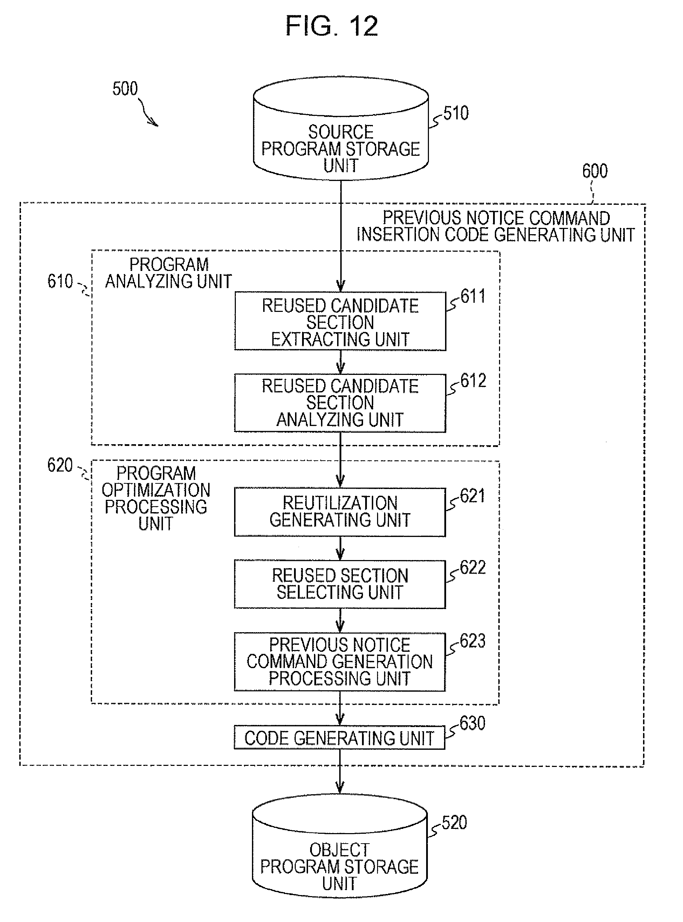

Fig. 12 is a block diagram illustrating a functional constitution example of a program conversion processing device according to a fourth embodiment of the present invention. A program conversion processing device 500 includes a source program storage unit 510, a previous notice command insertion code generating unit 600, and an object program storage unit 520. Note that the program conversion processing device 500 is an example of the program conversion processing device laid forth in the Claims.

The source program storage unit 510 is for storing a source program for compile processing. This source program is a source program including a reused section where an execution result is reused. This source program storage unit 510 supplies the stored source program thereof to the previous notice command insertion code generating unit 600.

The previous notice command insertion code generating unit 600 is for generating an object program that is a machine language program, after subjecting the source program from the source program storage unit 510 to processing for inserting a previous notice command by compiling the source program. This previous notice command insertion code generating unit 600 stores the generated object program in the object program storage unit 520. This previous notice command insertion code generating unit 600 includes a program analyzing unit 610, a program optimization processing unit 620, and a code generating unit 630.

The program analyzing unit 610 is for executing analysis processing such as morphological analysis, syntax analysis, or the like based on the source program read out from the source program storage unit 510. This program analyzing unit 610 generates a program according to intermediate representation represented by intermediate codes in a form suitable for analysis or optimization, and executes analysis processing as to the generated program.

Also, this program analyzing unit 610 includes a reused candidate section extracting unit 611 and a reused candidate section analyzing unit 612. The reused candidate section extracting unit 611 extracts, of multiple command sections, a reused candidate section serving as a candidate of a reused section where an execution result is reused from the program. This reused candidate section extracting unit 611 extracts, of multiple functions that are command sections to be executed multiple times, a function serving as a reused candidate section, for example.

Also, the reused candidate section extracting unit 611 excludes a function that has the same input value in the reused candidate section but has a different execution result, and thus, this execution result cannot be reused, from the reused candidate section. This reused candidate section extracting unit 611 excludes a function including a branch command in a command section from the reused candidate section, for example. This reused candidate section extracting unit 611 supplies the identification information of the extracted reused candidate section to the reused candidate section analyzing unit 612 along with the program.

The reused candidate section analyzing unit 612 is for analyzing the usage pattern of the reused candidate section extracted by the reused candidate section extracting unit 611. This reused candidate section analyzing unit 612 analyzes, for example, the number and types of arguments in a function, and the number of times of the one function thereof being executed for each function as a usage pattern. With this example, the reused candidate section analyzing unit 612 outputs, for example, the number of ranges where an argument can take from the processing contents of a function as the analysis result of the usage pattern. This reused candidate section analyzing unit 612 supplies the analysis result thereof to the program optimization processing unit 620 along with the identification information of the reused candidate section and the program.

The program optimization processing unit 620 is for executing program optimization processing for performing optimization for improving the execution speed of the program, optimization for reducing the code size, and so forth based on the program supplied from the reused candidate section analyzing unit 612. This program optimization processing unit 620 includes a reutilization generating unit 621, a reused section selecting unit 622, and a previous notice command generation processing unit 623.

The reutilization generating unit 621 is for generating reutilization indicating a degree wherein an execution result in a reused candidate section will be used again, based on the analysis results supplied from the reused candidate section analyzing unit 612. That is to say, the reutilization generating unit 621 generates reutilization indicating a degree wherein the execution results in a command section to be executed multiple times will mutually match, based on the usage pattern of the command section.

This utilization generating unit 621 generates reutilization according to the number of times of execution of the reused candidate section, for example. In this case, for example, the greater the number of times of execution, the greater the reutilization generating unit 621 sets the reutilization. Also, this reutilization generating unit 621 generates reutilization according to the number of ranges where an input value in the reused candidate section can take, for example. In this case, the reutilization is calculated by multiplying the inverse number of the number of combinations by a constant, for example. Therefore, this means that the greater the reutilization in the reused candidate section, the higher a degree where the reused candidate section will be reused.

This reutilization generating unit 621 supplies the generated reutilization to the reused section selecting unit 622 along with the program and the identification information of the reused candidate section. Note that the reutilization generating unit 621 is an example of the reutilization generating unit laid forth in the Claims.

The reused section selecting unit 622 is for selecting a reused section of multiple reused candidate sections based on the reutilization of the reused candidate section supplied from the reutilization generating unit 621. This reused section selecting unit 622 selects, for example, a reused candidate section of which the reutilization is equal to or greater than a certain threshold (reused threshold) relating to reutilization, as a reused section.

Also, the reused section selecting unit 622 generates priority at the time of eliminating the execution history for each piece of the identification information in the history memory 430 based on reutilization, for example. With this example, the reused section selecting unit 622 generates priority so that the higher the reutilization is, the lower the priority is. Also, the reused section selecting unit 622 supplies the identification information and priority relating to the selected reused section thereof to the previous notice command generation processing unit 623 along with the program.

The previous notice command generation processing unit 623 is for generating, before a call-up command for calling up the reused section selected by the reused section selecting unit 622, a previous notice command including information for determining the reused section thereof. This previous notice command generation processing unit 623 generates an input vale setting command for setting an input value of a reused section from the previous notice command thereof up to a command immediately before the call-up command.

Specifically, the previous notice command generation processing unit 623 generates, immediately before the input value setting command for setting an input value in the reused section selected based on the reutilization of the multiple command sections, a previous notice command for predicting the setting of an input value in the reused section. This previous notice command generation processing unit 623 inserts the previous notice command before the call-up command of the function that is a reused section, and also generates an input value setting command between the previous notice command thereof and the call-up command, for example.

Also, the previous notice command generation processing unit 623 generates, before the call-up command, a previous notice command including the identification information of a function to be called up by the call-up command thereof, for example. Specifically, the previous notice command generation processing unit 623 generates a previous notice command including identification information for mutually identifying multiple reused sections selected based on the reutilization. This previous notice command generation processing unit 623 generates a previous notice command (noticeCall) including identification information indicated by an index (index) as represented in (b) in Fig. 5, for example.

Also, the previous notice command generation processing unit 623 inserts, before the call-up command, a previous notice command including reference information for referencing the head address of a function beforehand set to the register file 340 for execution of the call-up command thereof, for example. In this case, the previous notice command generation processing unit 623 generates, before the previous notice command including reference information, an address setting command for setting the head address of a function to the register file 340. That is to say, the previous notice command generation processing unit 623 generates, after the address setting command for setting the head address of the reused section, a previous notice command including reference information for referencing the head address thereof. With this example, the previous notice command generation processing unit 623 generates a previous notice command (noti.ceCall) including reference information (R25), for example, as shown in (b) in Fig. 9.

As another example, the previous notice command generation processing unit 623 generates, before the call-up command, a previous notice command including setting information indicating the setting destination of the head address of a function that is a skip destination of the call-up command thereof as a previous notice setting command. That is to say, the previous notice command generation processing unit 623 generates a previous notice command as an address setting command including setting information indicating the setting destination of the head address of a function to set the head address of the reused section. With this example, the previous notice command generation processing unit 623 generates a previous notice setting command (memolw), for example, as shown in (b) in Fig. 11.

Also, for example, at the time of generating a previous notice command including identification information, or a previous notice command including reference information, the previous notice command generation processing unit 623 generates, before the call-up command, a previous notice command further including the priority generated by the reused section selecting unit 622. That is to say, the previous notice command generation processing unit 623 generates a previous notice command including priority appended according the reutilization generated by the reutilization generating unit 621.

Also, this previous notice command generation processing unit 623 supplies an optimized program including the generated previous notice command to the code generating unit 630. Note that the previous notice command generation processing unit 623 is an example of the previous notice command generation processing unit laid forth in the Claims.

The code generating unit 630 is for generating an object program that is the code of a machine language program based on the optimized program supplied from the previous notice command generation processing unit 623. This code generating unit 630 supplies the generated object program thereof to the object program storage unit 520.

The object program storage unit 520 is for storing the object program supplied from the code generating unit 630. The object program stored in this object program storage unit 520 is stored in the main storage unit 130 shown in Fig. 1.

As described above, the previous notice command generation processing unit 623 is provided, whereby a program can be generated wherein before execution of a call-up command of a reused section, a previous notice command for predicting execution of the call-up command thereof is executed. Also, the reutilization generating unit 621 is provided, and thus, reutilization is generated based on the usage pattern of a command section to be executed multiple times, whereby, of the multiple command sections, a command section of which the execution result will be reused with a high probability can be selected as a reused section.

[Example of Data Format of Previous Notice Command]

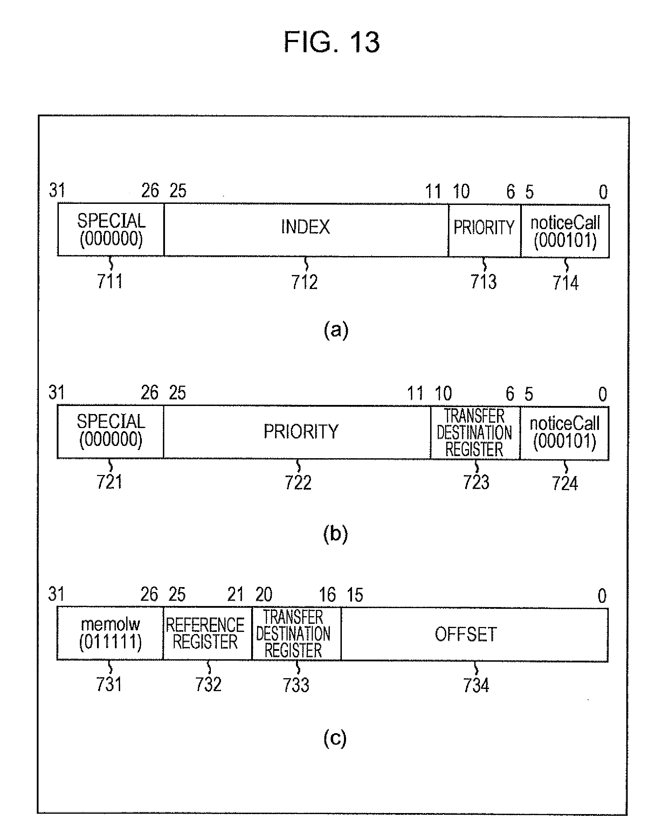

Fig. 13 is a diagram exemplifying the data format of a previous notice command to be generated by the program conversion processing device 500 according to the fourth embodiment of the present invention. An example of a previous notice command based on the data format of a 32-bit command conforming to the rule of MIPS will be shown here.

(a) in Fig. 13 is a diagram illustrating the data format of a previous notice command including identification information. (b) in Fig. 13 is a diagram illustrating the data format of a previous notice including reference information. (c) in Fig. 13 is a diagram illustrating the data format of a previous notice setting command.

In (a) in Fig. 13, fields representing an operation code 711, an index 712, priority 713, and a function code 714 are indicated, respectively. With the operation code 711, "000000" indicating a special command (SPECIAL) is stored in the bits 26 though 31.

With the index 712, identification information for mutually identifying multiple functions selected by the reused section selecting unit 622 is stored in the bits 10 through 25. With the priority 713, priority at the time of eliminating an execution history in the history memory 430 is stored in the bits 6 through 9. With this priority 713, the value of priority generated by the reused section selecting unit 622 is stored. With the function code 714, "000101" is stored in the bits 0 through 5 as a previous notice command (noticeCall).

In (b) in Fig. 13, fields representing an operation code 721, priority 722, a transfer destination register 723, and a function code 724 are indicated, respectively. With the operation code 711, "000000" indicating a special command (SPECIAL) is stored in the bits 26 though 31.

With the priority 722, priority at the time of eliminating an execution history in the history memory 430 is stored in the bits 11 through 25. With this priority 722, the value of priority generated by the reused section selecting unit 622 is stored. With the transfer destination register 723, a register number where the head address of a function is stored is stored in the bits 6 through 10 as reference information. With the function code 724, "000101" is stored in the bits 0 through 5 as a previous notice command (noticeCall).

In (c) in Fig. 13, fields representing an operation code 731, a reference register 732, a transfer destination register 733, and an offset 734 are indicated, respectively. With the operation code 731, "011111" indicating a previous notice setting command (memolw) is stored in the bits 26 though 31.

With the reference register 732, a register number (R25) where a reference address is stored is stored in the bits 21 through 25. With the transfer destination register 733, a register number where the head address of a function for calling up the function is set is stored in the bits 16 through 20 as setting information indicating a setting destination. With the offset 734, an offset value corresponding to a reference address is stored in the bits 0 through 15.

Such a previous notice command or previous notice setting command is generated by the previous notice command generation processing unit 623 before a call-up command for calling a function.

[Example of Operation of Program Conversion Processing Device 500]

Next, the operation of the program conversion processing device 500 according to the fourth embodiment of the present invention will be described with reference to the drawings.

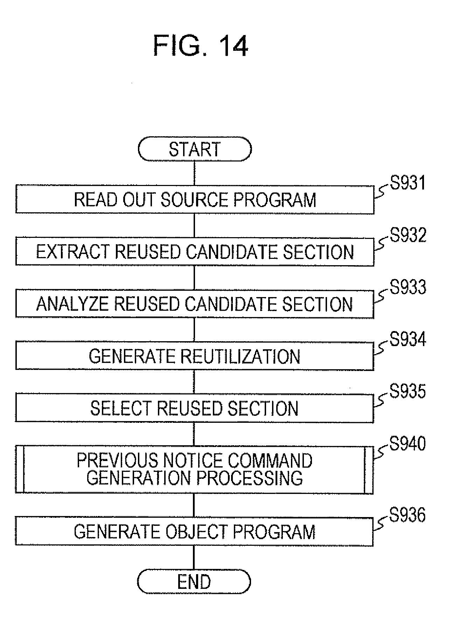

Fig. 14 is a flowchart illustrating an example of the processing procedure of a previous notice command generating processing method of the program conversion processing device 500 according to the fourth embodiment of the present invention.

First, a source program is read out from the source program storage unit 510 by the reused candidate section extracting unit 611 (step S931). Then, of multiple functions that are command sections to be executed multiple times, a function serving as a reused candidate section is extracted by the reused candidate section extracting unit 611 (step S932).

Next, the usage pattern of a reused candidate section extracted at the reused candidate section extracting unit 611 is analyzed by the reused candidate section analyzing unit 612 (step S933). After this, reutilization is generated for each reused candidate section based on the usage pattern of the reused candidate section by the reutilization generating unit 621 (step S934). Note that step S934 is an example of the reutilization generating procedure laid forth in the Claims.

Then, a reused section is selected by the reutilization for each reused candidate section by the reused section selecting unit 622 (step S935). Next, previous notice command generation processing is executed by the previous notice command generation processing unit 623 wherein a previous notice command is generated before a call-up command for calling up a reused section, and an input value setting command is generated between the generated previous notice command and the call-up command (step S940). Note that step S940 is an example of the previous notice command generating procedure laid forth in the Claims.

Thereafter, an object program is generated by the code generating unit 630 based on an optimized program supplied from the previous notice command generation processing unit 623 (step S936). Next, description will be made below regarding a processing procedure example of the previous notice command generation processing for each previous notice command shown in (a) through (c) in Fig. 13, with reference to the drawings.

[Example of Previous Notice Command Generation Processing According to Previous Notice Command Including Identification Information]

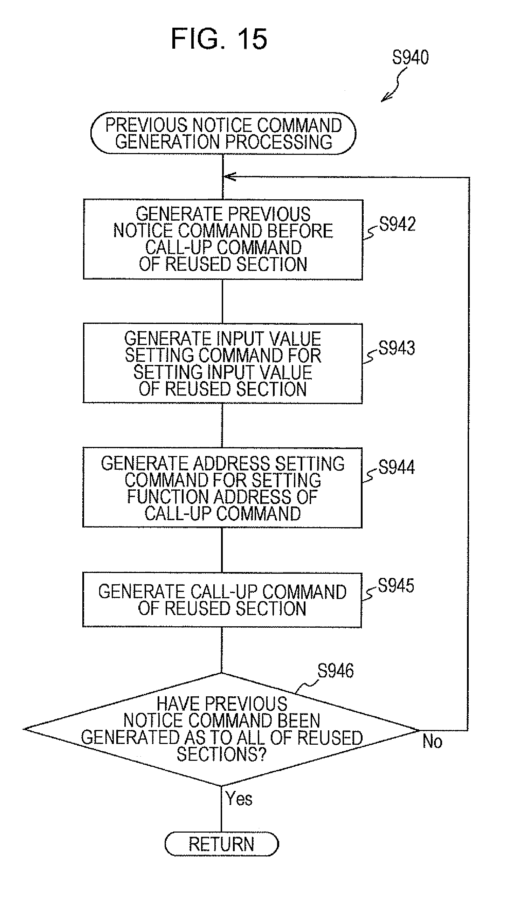

Fig. 15 is a flowchart illustrating an example of the processing procedure of the previous notice command processing (step S940) regarding a previous notice command including identification information according to the fourth embodiment of the present invention.

First, a previous notice command including identification information is generated before a call-up command of a reused section by the previous notice command generation processing unit 623 (step S942). For example, as with the first command string shown in (b) in Fig. 5, a previous notice command (noticeCall) specifying an index (index) is generated.

Next, an input value setting command for setting the input value of a reused section after a previous notice command including identification information is generated by the previous notice command generation processing unit 623 (step S943). For example, as with the second through sixth command string shown in (b) in Fig. 5, input value setting commands (two load word commands, two move commands, and a store word command) are generated.

Then, an address setting command for setting the head address of a reused section is generated after the input value setting commands by the previous notice command generation processing unit 623 (step S944). For example, as with the seventh command string shown in (b) in Fig. 5, an address setting command (load word command) is generated.

Thereafter, a call-up command of a reused section is generated after the address setting command by the previous notice command generation processing unit 623 (step S945). For example, as with the eighth command string shown in (b) in Fig. 5, a call-up command (jump command) is generated.

A series of processing in steps S942 through S945 is repeatedly performed by the previous notice command generation processing unit 623 on all of the reused sections (step 5946), and by the processing as to all of the reused sections being ended, the previous notice command generation processing is ended.

[Example of Previous Notice Command Generation Processing According to Previous Notice Command Including Reference Information]

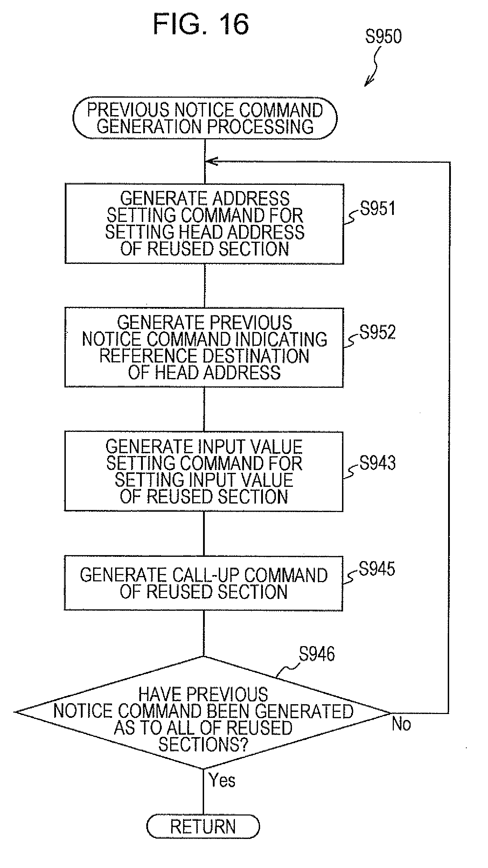

Fig. 16 is a flowchart illustrating an example of the processing procedure of the previous notice command processing (step S950) regarding a previous notice command including reference information according to the fourth embodiment of the present invention.

First, an address setting command for setting the head address of a reused section is generated by the previous notice command generation processing unit 623 (step S951). For example, as with the first command string shown in (b) in Fig. 9, an address setting command (load word command) is generated.

Then, a previous notice command including reference information is generated after the address setting command by the previous notice command generation processing unit 623 (step S952). For example, as with the second command string shown in (b) in Fig. 9, a previous notice command (noticeCall) indicating reference information (R25) is generated.

Next, an input value setting command for setting an input value of a reused section is generated after the previous notice command including reference information by the previous notice command generation processing unit 623 (step S943). For example, as with the third through seventh command strings shown in (b) in Fig. 9, input value setting commands (two load word commands, two move commands, and a store word command) are generated.

Thereafter, a call-up command of a reused section is generated after the input value setting command by the previous notice command generation processing unit 623 (step S945). For example, as with the eighth command string shown in (b) in Fig. 9, a call-up command (jump command) is generated.

A series of processing in steps S951, S952, S943, and S945 is repeatedly performed by the previous notice command generation processing unit 623 until all of the reused sections are subjected to the processing (step S946). Then, the processing as to all of the reused sections is ended, and thus, the previous notice command generation processing is ended.

[Example of Previous Notice Command Generation Processing According to Previous Notice Setting Command]

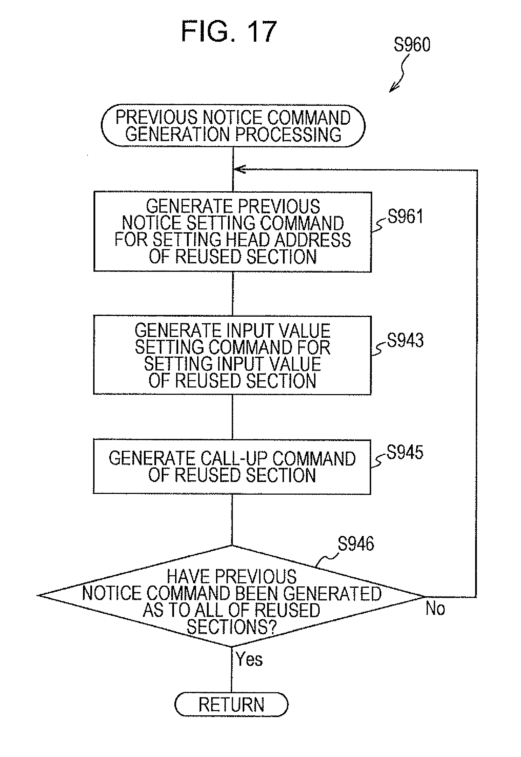

Fig. 17 is a flowchart illustrating an example of the processing procedure of the previous notice command processing (step S960) regarding a previous notice setting command according to the fourth embodiment of the present invention.

First, a previous notice setting command for setting the head address of a reused section is generated by the previous notice command generation processing unit 623 (step S961), For example, as with the first command string shown in (b) in Fig. 11, a previous notice setting command (memolw) is generated.

Next, an input value setting command for setting an input value of a reused section is generated after the previous notice setting command by the previous notice command generation processing unit 623 (step S943). For example, as with the second through sixth command strings shown in (b) in Fig. ll, input value setting commands (two load word commands, two move commands, and a store word command) are generated.

Thereafter, a call-up command of a reused section is generated after the input value setting command by the previous notice command generation processing unit 623 (step S946). For example, as with the seventh command string shown in (b) in Fig. 11, a call-up command (jump command) is generated.

A series of processing in steps S961, 5943, and S945 is repeatedly performed by the previous notice command generation processing unit 623 until all of the reused sections are subjected to the processing (step S946). Then, the processing as to all of the reused sections is ended, and thus, the previous notice command generation processing is ended.

As described above, with the fourth embodiment of the present invention, a previous notice command is generated before a call-up command of a reused section, whereby the processing time of the reused section according to reuse of an execution result by the data processing device 100 can be reduced. Also, the reused section selected based on the reutilization is subjected to the previous notice command generation processing, whereby the reuse ratio of an execution result in the data processing device 100 can be improved.

As described above, according to an embodiment of the present invention, based on a previous notice command for predicting execution of processing in a reused section, the reuse processing of the execution result of the reused section thereof is performed, whereby the processing time in the reused section can be markedly reduced.

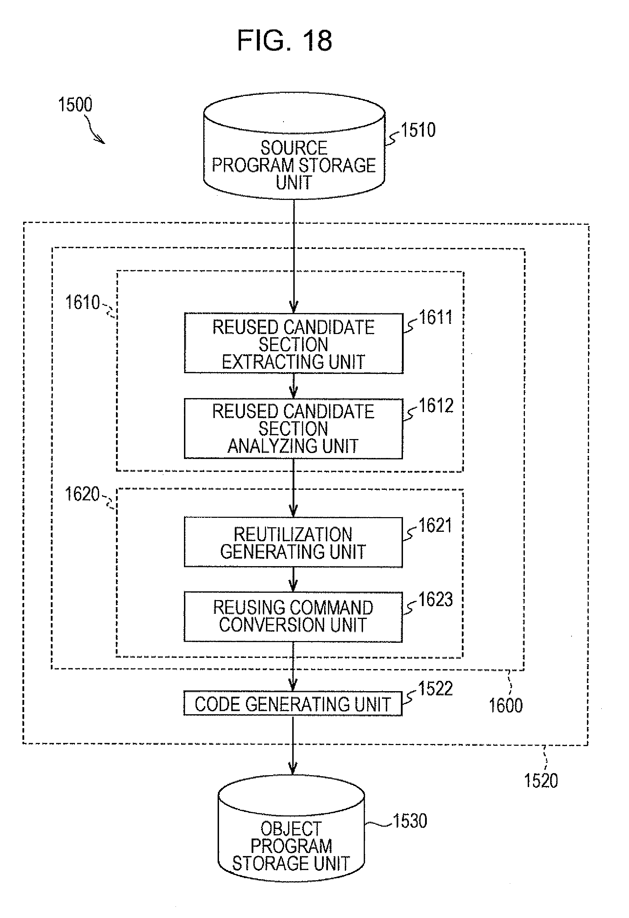

Next, a program conversion processing device, a data processing device, a program conversion processing method, and a data processing method, which are the second present invention, will be described with reference to Fig. 18 through Fig. 44.

A mode for implementing the second present invention (hereafter, referred to as embodiment) will be described below. Description will be made in accordance with the following sequence.

1. First Embodiment (compile processing control: an example for converting a call-up command into a reusing command so that the summation of the data amount of execution histories is equal to or smaller than the capacity of the history memory)

2. Second Embodiment (data processing control: an example for holding an execution history based on a reusing command converted so that the summation of the data amount of execution histories is equal to or smaller than the capacity of the history memory)

3. Third Embodiment (compile processing control: an example for converting into a reusing command including priority)

4. Fourth Embodiment (data processing control: an example for holding an execution history based on a reusing command including priority)

<1. First Embodiment>

[Configuration Example of Compile Processing Device 1500]

Fig. 18 is a block diagram illustrating a configuration example of a compile processing device 1500 according to the first embodiment of the present invention. This compile processing device 1500 includes a source program storage unit 1510, a reuse assist compile processing unit 1520, and an object program storage unit 1530. Also, now, let us say that a command section that the compile processing device 1500 processes is assumed to be a function.

The source program storage unit 1510 is for storing a source program for performing compile. Examples of this source program include a source program including a reused section of which the execution result is used again. This source program storage unit 1510 supplies the stored source program to the reuse assistant compile processing unit 1520.

The reuse assistant compile processing unit 1520 compiles the source program read out from the source program storage unit 1510, and thus, an object program that is a machine language program is generated after appending a reusing command thereto. The reusing command mentioned here means a command causing the data processing device to perform processing for reusing an execution result at the time of a reused section being called up by distinguishing a reused section and a non-reused section based on a degree of reutilization. This reuse assistant compile processing unit 1520 supplies the generated object program thereof to the object program storage unit 1530. This reuse assistant compile processing unit 1520 includes a program conversion processing unit 1600 and a code generating unit 1522.

The program conversion processing unit 1600 is for analyzing the source program read out from the source program storage unit 1510 for optimization, thereby converting the source program into a highly efficient program including a reusing command. This program conversion processing unit 1600 includes a source program analyzing unit 1610 and an optimizing unit 1620. Note that the program conversion processing unit 1600 is an example of the program conversion processing device laid forth in the Claims.

The source program analyzing unit 1610 is for performing morphologic analysis or syntax analysis or the like based on the source program read out from the source program storage unit 1510. Also, this source program analyzing unit 1610 generates a program of intermediate code in a format suitable for analysis or optimization, and then performs analysis of the generated program thereof. This source program analyzing unit 1610 includes a reused candidate section extracting unit 1611 and a reused candidate section analyzing unit 1612.

The reused candidate section extracting unit 1611 is for extracting, of the multiple command sections, a reused candidate section serving as a candidate of a reused section of which the execution result is reused, from the program. This reused candidate section extracting unit 1611 extracts a command section that may be called up multiple times such as a function or loop or the like, as a reused candidate section.

Also, this reused candidate section extracting unit 1611 excludes a function of which the execution result may not be reused such as a function that provides a different execution result from the same input value, from a reused candidate section. Also, the reused candidate section extracting unit 1611 excludes a function including a system call as this function to be excluded, for example. This reused candidate section extracting unit 1611 supplies the identification information of the extracted reused candidate section to the reused candidate section analyzing unit 1612 along with the program.

The reused candidate section analyzing unit 1612 is for analyzing the usage pattern relating to the reused candidate section extracted by the reused candidate section extracting unit 1611. This reused candidate section analyzing unit 1612 analyzes, for example, contents relating to an argument that is an input value of a function and a loop, and contents relating to the number of call-up of a function and a loop as a usage pattern. Also, the reused candidate section analyzing unit 1612 analyzes a combination of values that an argument can take, based on the processing contents of a function and a loop, for example, thereby outputting an estimated combination value as an analysis result.

Also, in the event of predicting the data amount of execution histories that are data for reusing an execution result at the optimizing unit 1620, this reused candidate section analyzing unit 1612 analyzes the contents relating to an execution result that is a result of a reused candidate section being executed. This reused candidate section analyzing unit 1612 supplies this analysis result to the optimizing unit 1620 along with the identification information of the reused candidate section and the program. Note that the reused candidate section analyzing unit 1612 is an example of the analyzing unit laid forth in the Claims. Also, the reused candidate section is an example of the command section laid forth in the Claims.

The optimizing unit 1620 is for performing program optimization processing such as optimization for improving execution speed, optimization for reducing the code size, or the like based on the program supplied from the reused candidate section analyzing unit 1612. This optimizing unit 1620 includes a reutilization generating unit 1621 and a reusing command conversion unit 1623.

The reutilization generating unit 1621 is for generating reutilization indicating a degree of an execution result of a reused candidate section being reused, based on the analysis results supplied from the reused candidate section analyzing unit 1612. This reutilization generating unit 1621 generates reutilization according to a combination of values that an input value of a reused candidate section can take, for example. In this case, the fewer the combination of values that an input value of a reused candidate section can take, the higher the degree for reuse, thereby generating reutilization with a combination of values that an input value can take as a denominator.

This reutilization generating unit 1621 supplies the generated reutilization to the reusing command conversion unit 1623 along with the identification information of a reused candidate section and the program. Note that the reutilization generating unit 1621 is an example of the reutilization generating unit laid forth in the Claims.

The reusing command conversion unit 1623 is for converting a call-up command of a reused candidate section of which the execution result is reused, into a reusing command, based on the reutilization supplied from the reutilization generating unit 1621. This reusing command conversion unit 1623 supplies the optimized program including the converted command thereof to the code generating unit 1522.

Also, the reusing command conversion unit 1623 converts a call-up command of a reused section of which the execution result is reused, into a reusing command based on the reutilization, the predicted value of the data amount of execution histories in a reused candidate section, and the capacity of the history memory where an execution history is registered, for example. With this example, the reusing command conversion unit 1623 generates a predicted value of the data amount of execution histories according to a combination of values that an input value of a reused candidate section can take, the number of input values, the number of execution results, and the number of bits of an input value and an execution result. Then, the reusing command conversion unit 1623 converts a call-up command into a reusing command in order from a reused candidate section of which the reutilization is the highest so that the summation of the predicted values of the data amount of execution histories is equal to or smaller than the capacity of the history managing unit. Note that the reusing command conversion unit 1623 is an example of the command conversion unit laid forth in the Claims.

The code generating unit 1522 generates an object program that is the code of a machine language program based on the optimized program supplied from the reusing command conversion unit 1623. This code generating unit 1522 supplies the generated object program to the object program storage unit 1530.

The object program storage unit 1530 is for storing the object program supplied from the code generating unit 1522.

As described above, the compile processing device 1500 converts a call-up command for a function into a reusing command according to a degree of the execution result of the function being reused, thereby generating a program whereby a function to be reused and a function not to be reused can be distinguished.

Note that description has been made regarding a case where the compile processing device 1500 takes a function is to be reused, but a loop can also be made to be reused in the same way. For example, the reused candidate section analyzing unit 1612 analyzes a loop in the same way as with a function, and the reutilization generating unit 1621 generates reutilization based on the analysis results of the reused candidate section analyzing unit 1612.

Note here that description has been made for convenience regarding an example where the reused candidate section analyzing unit 1612 analyzes the usage pattern of a reused candidate section for each function, but in order to analyze the usage pattern in more detail, the usage pattern may be analyzed for each call-up command for a function. Also, with regard to the reutilization generating unit 1621 as well, description has been made regarding a case where reutilization is generated for each function, but in order to realize more detailed analysis, reutilization may be generated for each call-up command for a function. In this case, the reusing command conversion unit 1623 converts a call-up command into a reusing command for each call-up command for a function based on different reutilization for each call-up command for a function even though this belongs to the same function.

[Example of Function to Be Excluded from Reused Candidate Sections by Reused Candidate Section Extracting Unit 1611]

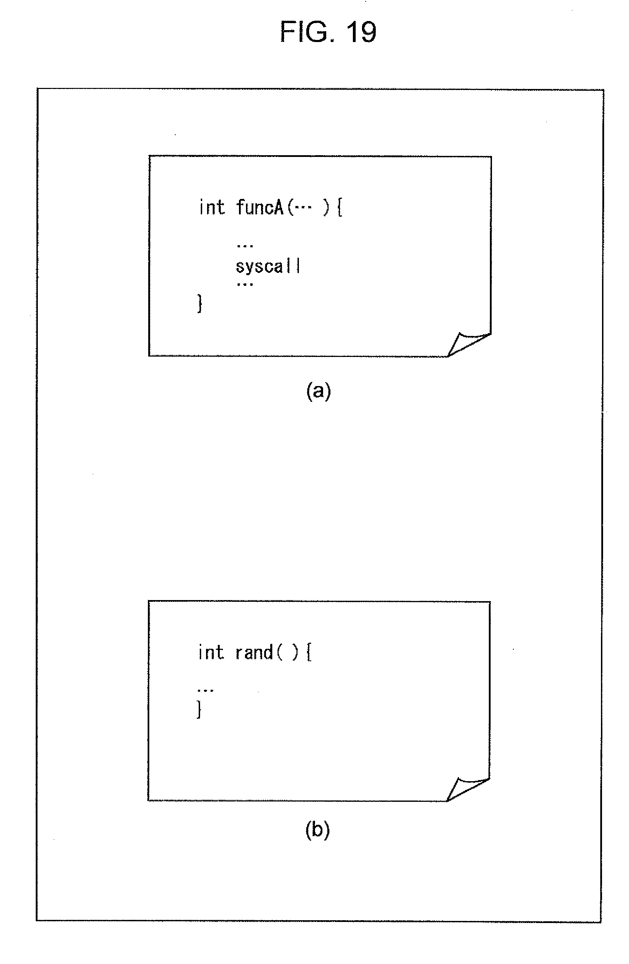

Fig. 19 is a schematic diagram illustrating an example of a function to be excluded from reused candidate sections when the reused candidate section extracting unit 1611 extracts a reused candidate section with the first embodiment of the present invention. Here, a function to be excluded from reused candidate sections by the reused candidate section extracting unit 1611 is indicated with the code of the C language within each frame.

(a) in Fig. 19 indicates a function (funcA) including a system call as a function to be excluded from reused candidate sections. This function (funcA) including a system call may have a high probability that the function will have a different execution result each time the function is executed even when the same input value is used. Therefore, the function (funcA) including a system call cannot be used as a reused section. Accordingly, the reused candidate section extracting unit 1611 excludes a function including a system call from reused candidate sections.

(b) in Fig. 19 indicates a random-number-generation function (rand) as a function to be excluded from reused candidate sections. This random-number-generation function (rand) is a function for outputting a random number as an execution result each time the function is called up. Therefore, the reused candidate section extracting unit 1611 excludes a random-number-generation function from reused candidate sections.

As described above, the reused candidate section extracting unit 1611 excludes a function having a low probability that the execution result will be reused at the stage of analyzing a source program, from reused candidate sections.

[Example of Usage Pattern of Command Section Analyzed by Reused Candidate Section Analyzing Unit 1612, and Reutilization Generated at Reutilization Generating Unit 1621]

Next, description will be made regarding an example of the usage pattern of a command section analyzed by the reused candidate section analyzing unit 1612 according to the first embodiment of the present invention, and a relation example of reutilization generated by the reutilization generating unit 1621, with reference to the next drawing. Here, let us assume that a reused candidate section is a function. Also, let us say that the greater reutilization, the greater a degree for reuse, and a call-up command is preferentially converted into a reusing command at the reusing command conversion unit 1623.

[Example of Generation of Reutilization Based on Number of Arguments]

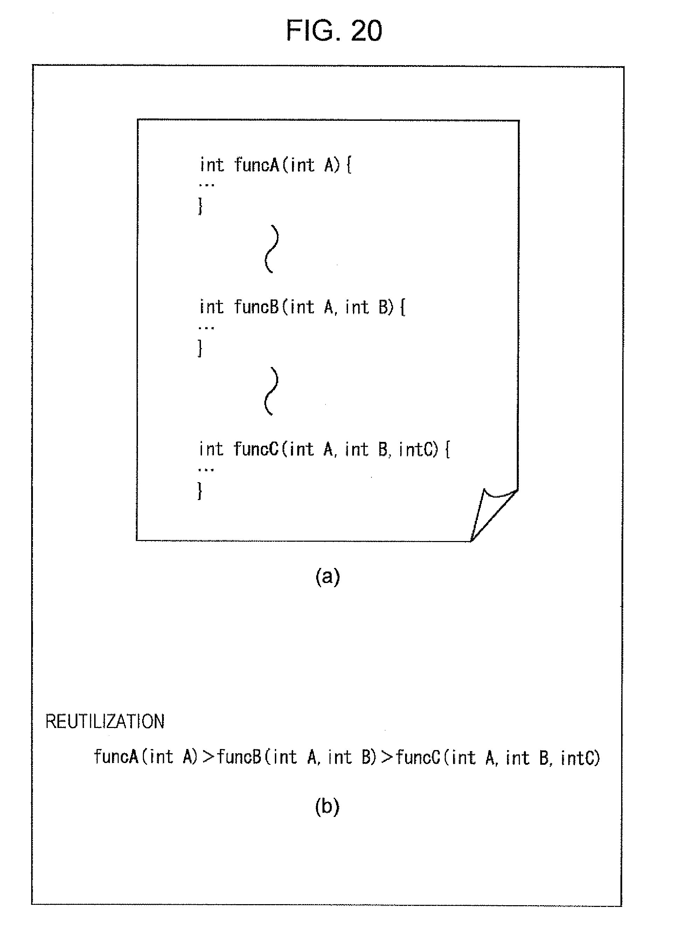

Fig. 20 is a schematic diagram illustrating an example of generation of reutilization using the reutilization generating unit 1621 in the case of analyzing the number of arguments as a usage pattern using the reused candidate section analyzing unit 1612 according to the first embodiment of the present invention.

(a) in Fig. 20 is a schematic diagram illustrating an example of functions having a different number of arguments. Three functions having the same type but a different number of arguments that are input values (funcA through C) are indicated here of reused candidate sections extracted at the reused candidate section extracting unit 1611.

As for these three functions, a function (funcA) with one int (integer) -type variable as an argument, a function (funcB) with two int-type variables as arguments, and a function (funcC) with three int-type variables as arguments are indicated with the code of the C language.

In the event of analyzing these three functions (funcA through C), the reused candidate section analyzing unit 1612 performs analysis for each function regarding the number of arguments in the three functions (funcA through C) thereof. Then, the reutilization generating unit 1621 generates reutilization based on the number of arguments analyzed by the reused candidate section analyzing unit 1612.

(b) in Fig. 20 is a schematic diagram illustrating an example of reutilization generated based on the analysis results of the functions shown in (a) in Fig. 20. The reutilization degree order relation of the three functions (funcA through C) shown in (a) in Fig. 20 is indicated here. Here, it is indicated that the reutilization of the function having one argument (funcA) is the highest, the reutilization of the function having two arguments (funcB) is the second highest, and the reutilization of the function having three arguments (funcC) is the lowest.

As described above, with regard to multiple functions having the same type but a different number of arguments, the fewer the number of arguments of a function, the higher the degree where input values match is, and accordingly, the reutilization generating unit 1621 generates reutilization indicating a higher degree in order from a function of which the number of arguments is the smallest.

Note that description has been made here regarding a case where the reutilization generating unit 1621 generates reutilization according to the number of input values, but the present invention is not restricted to this. For example, a case can be conceived where in the event of generating reutilization regarding a function having multiple arguments as input values, the reutilization generating unit 1621 obtains a combination of the input values based on a combination of values that each of the arguments can take, and generates reutilization according to the number of combinations of the input values.

[Example of Generation of Reutilization Based on Type of Argument]

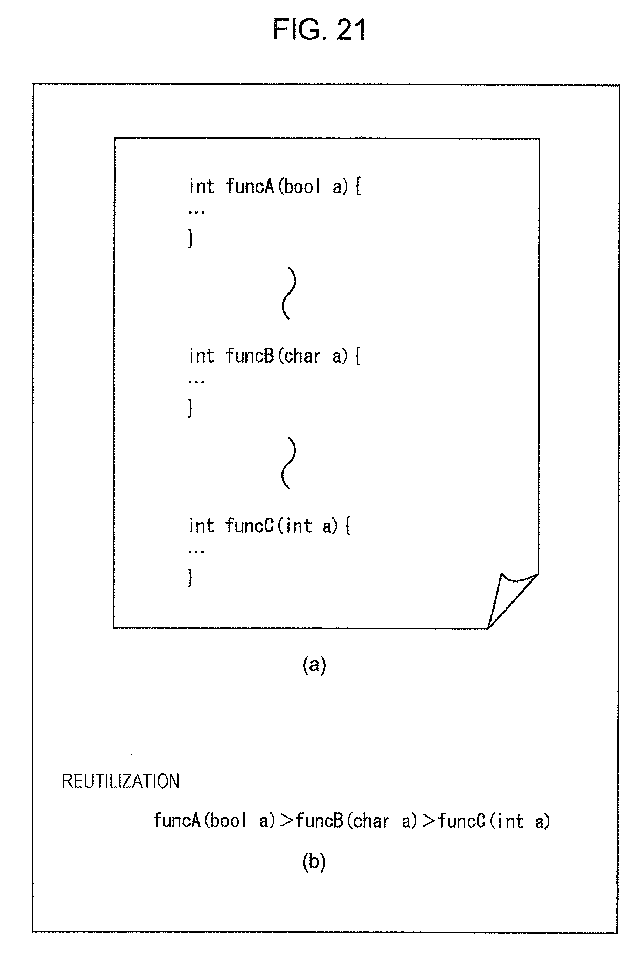

Fig. 21 is a schematic diagram illustrating an example of generation of reutilization using the reutilization generating unit 1621 in the case of analyzing the type of an argument as a usage pattern using the reutilization candidate section analyzing unit 1612 according to the first embodiment of the present invention.

(a) in Fig. 21 is a schematic diagram illustrating an example of functions having a different argument type. Here, of the reused candidate sections extracted at the reused candidate section extracting unit 1611, three functions (funcA through C) having the same number but different types of arguments are indicated here.

For these three functions, a function with one bool (Boolean) - type variable that is 1-bit binary numeric data as an argument (funcA) is shown with the code of the C language. Further, a function with one char-type variable that is 16-bit binary character data as an argument (funcB), and a function with one int-type variable that is 32-bit binary numeric data as an argument (funcC are shown with the code of the C language.

In the case of analyzing these three functions (funcA through C), the reused candidate section analyzing unit 1612 performs analysis for each function regarding the argument types in these three functions. Then, the reutilization generating unit 1621 generates reutilization based on the argument types analyzed by the reused candidate section analyzing unit 1612.

(b) in Fig. 21 is a schematic diagram illustrating an example of reutilization generated based on the analysis results of the functions shown in (a) in Fig. 21. The reutilization degree order relation of the three functions (funcA through C) shown in (a) in Fig. 21 is indicated here. It is indicated here that the reutilization of the funcA with one bool-type variable as an argument is the highest, the reutilization of the funcB with one char-type variable as an argument is the second highest, and the reutilization of the funcC with one int-type variable as an argument is the lowest.

As described above, with regard to multiple functions having the same number of arguments but different types of arguments, the lower the expressiveness of an argument (a combination of values that an argument can take) of a function, the higher a degree where input values match. Therefore, the reutilization generating unit 1621 generates reutilization indicating a higher degree in order from a function of which the argument has the lowest expressiveness. The expressiveness of this argument can be judged from the number of bits of this type of argument. Accordingly, the reutilization generating unit 1621 determines an argument of which the type has the least number of bits to be an argument having the least expressiveness, and sequentially determines the expressiveness of an argument.

[Example of Generation of Reutilization as to Function Including Constant at Argument]

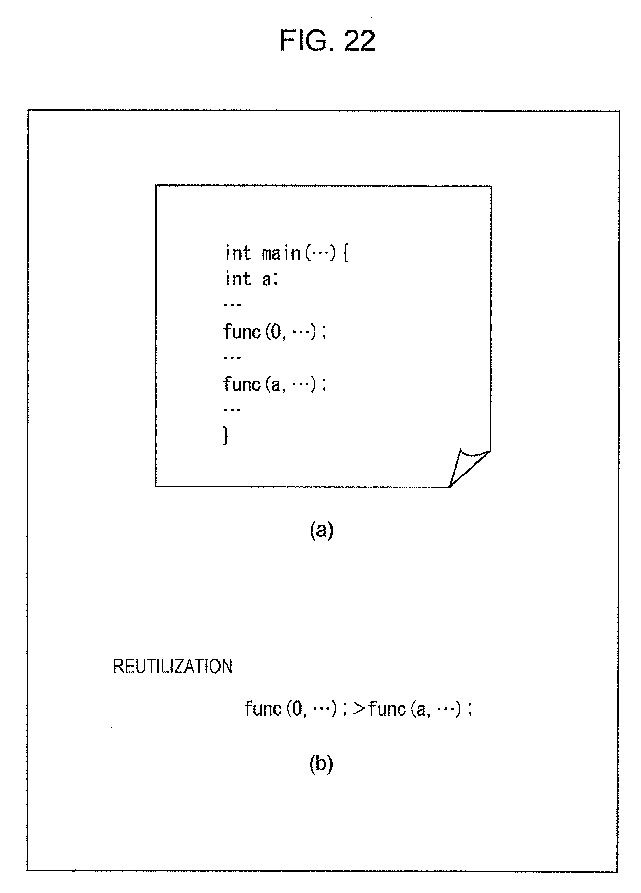

Fig. 22 is a schematic diagram illustrating an example of generation of reutilization using the reutilization generating unit 1621 in the case of analyzing an argument that differs depending on whether the argument is a constant or variable, as a usage pattern using the reused candidate section analyzing unit 1612 according to the first embodiment of the present invention.

(a) in Fig. 22 is a schematic diagram illustrating an example of a function of which the argument is either a constant or a variable. Here is shown a main program (main) including two functions having the same number but different types of arguments as a constant argument and a variable argument. As these two functions, here are shown a function with one constant (0) and multiple variables as arguments (funcA), and a function with one int-type variable (a) and the same multiple variables as with the funcA as arguments (funcB) using the code of the C language.

In the case of analyzing these two functions (funcA and B), the reused candidate section analyzing unit 1612 performs analysis for each function whether the arguments in these two functions are either a constant or a variable. Then, the reutilization generating unit 1621 generates reutilization based on the analysis results performed by the reused candidate section analyzing unit 1612.

(b) in Fig. 22 is a schematic diagram illustrating an example of reutilization generated based on the analysis results of the functions shown in (a) in Fig. 22. The reutilization degree order relation of the two functions (funcA and B) shown in (a) in Fig. 22 is indicated here. It is indicated here that the reutilization of the function (funcA) with one constant (0) and multiple variables as arguments is higher than the reutilization of the function (funcB) with one int-type variable (a) and the same multiple variables as with the first function as arguments.

Here, in the event that a constant is included in arguments of a function, an argument that is a constant has only one input value, and accordingly, this can be excluded from the number of arguments. Therefore, the higher the number of constant arguments, the higher a degree where input values match, the higher a degree where the execution result will be reused. Therefore, the reutilization generating unit 1621 generates reutilization indicating a higher degree in order from a function of which the number of constant arguments is the highest regarding multiple functions having the same number of arguments but including a constant as an argument.

Note here that reutilization has been generated by excluding an argument that is a constant from the number of arguments, but the present invention is not restricted to this. For example, a case can be conceived where, with a constant, the value that an input value can take is taken as "1", and the value that the constant can take is multiplied by a value that each variable can take, thereby generating combinations of values that all of the input values can take, and generating reutilization according to the generated combinations.

[Example of Generation of Reutilization as to Combination of Available Values of Argument]

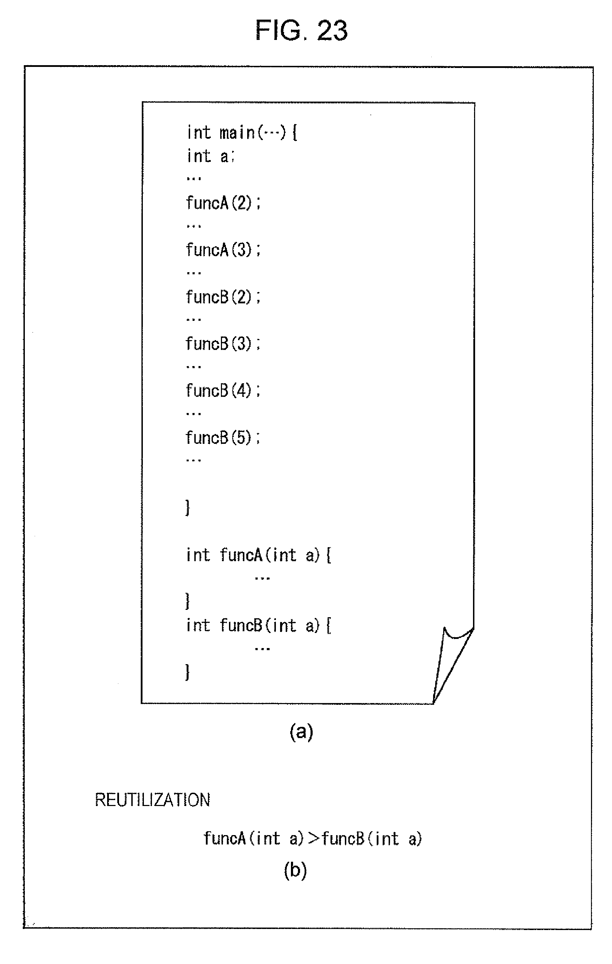

Fig. 23 is a schematic diagram illustrating an example of generation of reutilization using the reutilization generating unit 1621 in the case of analyzing a combination of values that an argument takes as a usage pattern using the reused candidate section analyzing unit 1612 according to the first embodiment of the present invention.

(a) in Fig. 23 is a schematic diagram illustrating an example of a function where combinations of values which arguments assume differ. Here are shown two functions having the same number and same types but restricted available values of arguments, of the reused candidate sections extracted at the reused candidate section extracting unit 1611.

As one of the two functions, though one int-type variable is defined as the argument, here is shown the function (funcA) of which the argument is restricted to two values of "2" and "3" at a stage where the function is called up, using the code of the C language. As the other function, though one int-type variable is defined as the argument, here is shown the function (funcB) of which the argument is restricted to four values of "2", "3", "4", and "5" at a stage where the function is called up, using the code of the C language.

In the case of analyzing these two functions (funcA and B), the reused candidate section analyzing unit 1612 performs analysis for each function regarding combinations of values that the arguments in the two functions can take. Then, the reutilization generating unit 1621 generates reutilization based on the argument types analyzed by the reused candidate section analyzing unit 1612.

(b) in Fig. 23 is a schematic diagram illustrating an example of reutilization generated based on the analysis results of the functions shown in (a) in Fig. 23. The reutilization degree order relation of the two functions (funcA and B) shown in (a) in Fig. 23 is indicated here. It is indicated here that the reutilization of the function (funcA) of which the argument is restricted to the two values of "2" and "3" is higher than the reutilization of the function (funcB) of which the argument is restricted to the four values of "2", "3", "4", and "5".

As described above, in the event that there are multiple functions having the same number and same types but different combinations of values of arguments, the fewer the combinations of values that the argument of a function can take, the higher the probability is that the execution result will be reused. Therefore, in the case of generating reutilization regarding multiple functions having the same number and same types but different combinations of values of arguments, the reutilization generating unit 1621 generates reutilization indicating a higher degree in order from a function having an argument of which the number of combinations of assumable values is the least.

[Example of Generation of Reutilization Based on Number of Times of Function Calls]

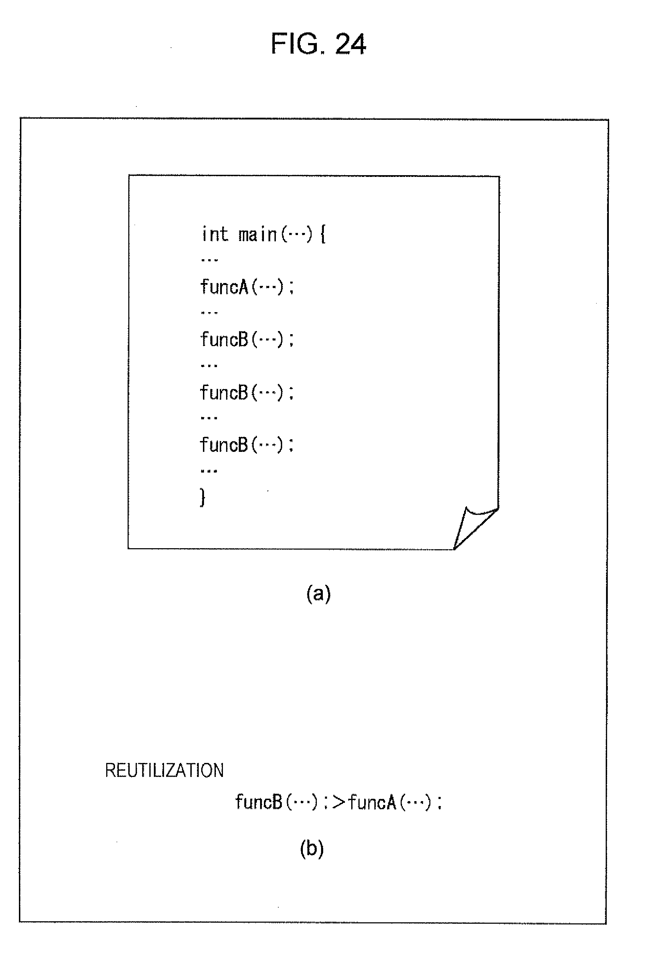

Fig. 24 is a schematic diagram illustrating an example of generation of reutilization using the reutilization generating unit 1621 in the case of analyzing the number of times of function call-ups as a usage pattern, using the reused candidate section analyzing unit 1612 according to the first embodiment of the present invention.

(a) in Fig. 24 is a schematic diagram illustrating an example of functions having a different number of times of function call-ups. Here are shown two functions having a different number of times of function call-ups, of the reused candidate sections extracted at the reused candidate section extracting unit 1611.

As these two functions, here are shown a function to be called up once (funcA), and a function to be called up three times (funcB) using the code of the C language.

In the case of analyzing these two functions (funcA and B), the reused candidate section analyzing unit 1612 performs analysis for each function regarding the number of times of call-ups in the two functions. Then, the reutilization generating unit 1621 generates reutilization based on the number of times of call-ups analyzed by the reused candidate section analyzing unit 1612.

(b) in Fig. 24 is a schematic diagram illustrating an example of reutilization generated based on the analysis results of the functions shown in (a) in Fig. 24. The reutilization degree order relation of the two functions (funcA and B) shown in (a) in Fig. 24 is indicated here. It is indicated here that the reutilization of the function (funcB) to be called up three times is higher than the reutilization of the function (funcA) to be called up once.

As described above, in the event that there are multiple functions having the same number and same types of arguments but a different number of times of function call-ups, the greater the number of times of call-ups, the higher the probability that the execution result will be reused. Therefore, the reutilization generating unit 1621 generates reutilization indicating a higher degree in order from a function of which the number of times of call-ups is the greatest regarding multiple functions having the same argument but a different number of times of function call-ups.

[Example of Generation of Reutilization Depending on Existence/Absence of Argument Accompanied with Memory Access]

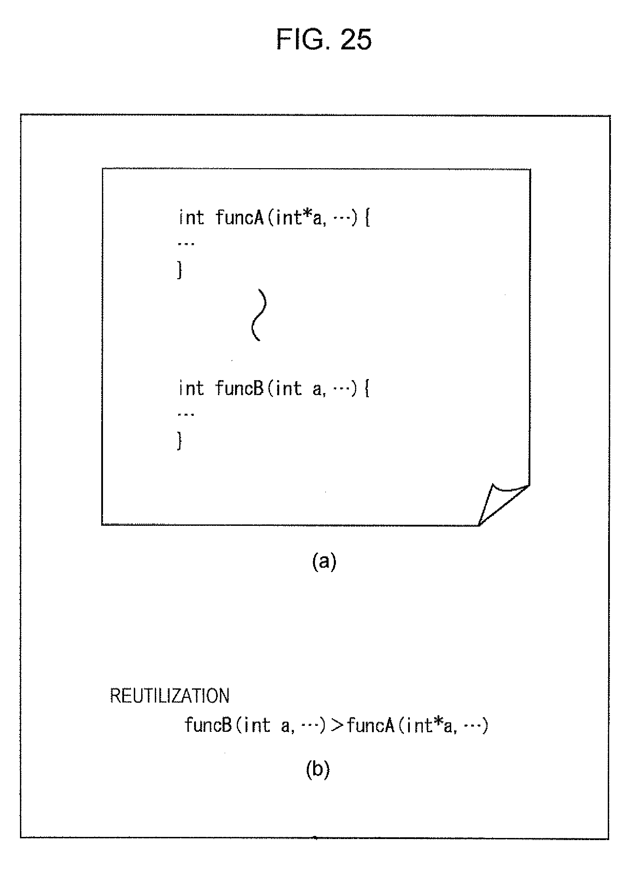

Fig. 25 is a schematic diagram illustrating an example of generation of reutilization using the reutilization generating unit 1621 in the case of analyzing whether or not there is an argument accompanied with memory access as a usage pattern using the reused candidate section analyzing unit 1612 according to the first embodiment of the present invention.

(a) in Fig. 25 is a schematic diagram illustrating an example of functions accompanied with memory access with the setting of an argument. Here are shown two functions that differs whether or not there is an argument accompanied with memory access, of the reused candidate sections extracted at the reused candidate section extracting unit 1611.

As one of the two functions, here is shown the function (funcA) with one variable having a pointer for specifying the address of a memory region, and other multiple variables as arguments using the code of the C language. As the other function, here is shown the function (funcB) with one int-type variable and the same other multiple variables as with the funcA as arguments using the code of the C language.

In the case of analyzing these two functions (funcA and B), the reused candidate section analyzing unit 1612 performs analysis regarding whether or not there is an argument accompanied with memory access in the two functions. Then, the reutilization generating unit 1621 generates reutilization based on the results analyzed by the reused candidate section analyzing unit 1612.

(b) in Fig. 25 is a schematic diagram illustrating an example of reutilization generated based on the analysis results of the functions shown in (a) in Fig. 25. The reutilization degree order relation of the two functions (funcA and B) shown in (a) in Fig. 25 is indicated here. It is indicated here that the reutilization of the funcB with one int-type variable and the same other multiple variables as with the funcA as arguments is higher than the reutilization of the funcA with one variable for specifying the address of a memory region, and other multiple variables as arguments.

As described above, with regard to an argument having a pointer for specifying the address of a memory region, unless two of the specified address thereof and the value of the specified destination address match, no execution result can be reused. That is to say, in the event that multiple functions having the same number and same types of arguments but differing regarding whether or not there is an argument pointer are reused candidate sections, the fewer arguments including a pointer a function has, the higher the probability is that the execution result will be reused.

Therefore, in the event of generating reutilization regarding multiple functions having a different number of arguments including a pointer for specifying the address of the memory region, the reutilization generating unit 1621 generates reutilization indicating a higher degree in order from a function of which the number of arguments including a pointer is the least. That is to say, in the event that the function specifies the memory address using a variable having a pointer, and takes a variable accompanied with memory access as an argument, the reutilization generating unit 1621 generates reutilization indicating a lower degree as compared to the function with the variable having a pointer as an argument.

As shown in Fig. 22 through Fig. 27, the reused candidate section analyzing unit 1612 analyzes the usage pattern of a reused candidate section, and the reutilization generating unit 1621 generates reutilization based on the analysis result thereof.

Note that, in Fig. 22 through Fig. 27, description has been made regarding a case where the reused candidate section analyzing unit 1612 analyzes the usage pattern of a reused candidate section for each function, and the reutilization generating unit 1621 generates reutilization for each function, but the present invention is not restricted to this. For example, a case can be conceived where the reused candidate section analyzing unit 1612 analyzes the usage pattern of a function to be called up for each function call-up command, and the reutilization generating unit 1621 generated reutilization for each function call-up command.

[Example of Operation of Program Conversion Processing Unit 1600 According to First Embodiment of Present Invention]

Next, the operation of the program conversion processing unit 1600 according to the first embodiment of the present invention will be described with reference to the drawings.

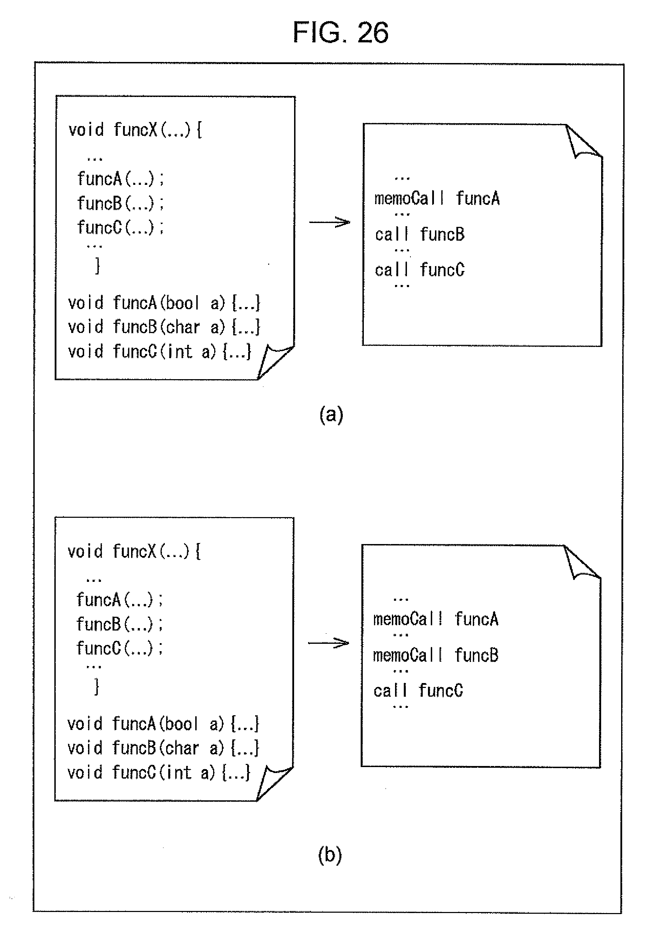

Fig. 26 is a schematic diagram of a program illustrating a first operation example of the program conversion processing unit 1600 according to the first embodiment of the present invention. Here, let us assume that the reused candidate section analyzing unit 1612 analyzes the usage patterns specified in Fig. 20 through Fig. 25. Further, now, let us say that in the event that a combination of values that an argument can take can be estimated by analyzing the processing contents of a reused candidate section, the reused candidate section analyzing unit 1612 outputs the estimated combination values thereof as analysis results.

Also, in Fig. 26, let us say that the reusing command conversion unit 1623 converts a call-up command of a command section into a reusing command based on the reutilization, the capacity of the history memory where the execution history written in the program is registered, and the data amount of the predicted execution history. Further, now, let us assume that a command section is a function, a call-up command is a "call" command in the event of being represented with the assembly language, and a reusing command is represented with "memocall" in the assembly language. Then, here, let us assume that the execution result of each function is one variable having the same type as an input value.

(a) in Fig. 26 indicates an example of the operation of the program conversion processing unit 1600 in the event that the data processing device 1100 includes history memory of which the capacity is small. Here, an example of the source program before being processed by the program conversion processing unit 1600 is shown within a frame positioned in the left side as to a right arrow using the C language. Also, an example of the program processed by the program conversion processing unit 1600 is shown within a frame positioned in the right side as to the right arrow using the assembly language.

Note that, in (a) in Fig. 26, let us say that the history memory has capacity sufficient for holding five execution histories or so of a function for outputting one bool-type execution result by taking one bool-type variable as an argument. Further, let us assume that the history memory has capacity insufficient for holding one execution history of a function for outputting one char-type execution result by taking one char-type variable as an argument.

With the source program, a main function (funcX) of the program, and three functions to be called up by the main function thereof are shown. As these three functions, a function with one bool-type variable as an argument (funcA), a function with one char-type variable as an argument (funcB), and a function with one int-type variable as an argument (funcC) are represented.

First, the reused candidate section extracting unit 1611 of the program conversion processing unit 1600 extracts a reused candidate section from the source program. With this source program, the function having a bool-type argument (funcA)), function having a char-type argument (funcB), and function having an int-type argument (funcC) are extracted as reused candidate sections.

Next, the reused candidate section analyzing unit 1612 analyzes the usage patterns of the extracted three functions (funcA through C). Thus, the argument of the funcA is analyzed as one bool-type variable, the argument of the funcB is analyzed as one char-type variable, and the argument of the funcC is analyzed as one int-type variable.

Also, the reused candidate section analyzing unit 1612 estimates a combination of values that an argument can take based on the processing contents of a function. With this program, let us assume that the reused candidate section analyzing unit 1612 outputs analysis results such that the number of execution results is determined to be 50 regarding the funcB, no execution result can be estimated regarding the funcA and funcC.

In this case, the reutilization generating unit 1621 generates reutilization based on the analysis results from the reused candidate section analyzing unit 1612. For example, with regard to the function having a bool-type argument (funcA), one bool-type variable is the argument, and accordingly, this reutilization generating unit 1621 determines this function to be a function for generating the maximum two execution histories from the analysis results regarding the argument thereof.

Also, with regard to the function having a char-type argument (funcB), one char-type variable is the argument, and accordingly, this reutilization generating unit 1621 determines this function to be a function for generating the maximum $2^{16}$ execution histories from the analysis results regarding the argument thereof. Further, with regard to the function having an int-type argument (funcC), one int-type variable is the argument, and accordingly, this reutilization generating unit 1621 determines this function to be a function for generating the maximum $2^{32}$ execution histories from the analysis results regarding the argument thereof. Along with these determinations, the reutilization generating unit 1621 determines the amount of execution histories using the estimated combined values estimated based on the processing contents of a function.

As a result thereof, this reutilization generating unit 1621 determines that the maximum number of execution histories is two regarding the function having a bool-type argument (funcA), the maximum number of execution histories is 50 regarding the function having a char-type argument (funcB), and the maximum number of execution histories is $2^{32}$ regarding the function having an int-type argument (funcC). Thus, the reutilization generating unit 1621 generates reutilization of a degree so that the reutilization of the function having a bool-type argument (funcA) is the highest, the reutilization of the function having a char-type argument (funcB) is the second highest, and the reutilization of the function having an int-type argument (funcC) is the lowest.

Next, the reusing command conversion unit 1623 converts a call-up command of a command section into a reusing command based on the reutilization. In this case, the reusing command conversion unit 1623 detects the capacity of the history memory from the code written in the program. Also, the reusing command conversion unit 1623 predicts the data amount of the predicted execution histories of the three functions (funcA through C) that are reused candidate sections from the combination of values that an input value can obtain, the number of execution results, and the number of bits of an input value and an execution result for each function.

The reusing command conversion unit 1623 then sets a function to be registered in the history memory in order from a function of which the reutilization is the highest. At this time, the reusing command conversion unit 1623 sets a function to be held in the history memory so that the summation of the data amount of a predicted execution history of a reused candidate section is equal to or smaller than the capacity of the history memory, and converts the call-up command (call) of the function thereof into a reusing command (memocall).

As a result thereof, this reusing command conversion unit 1623 analyzes that all of the execution histories can registered in the history memory regarding the funcA having a bool-type argument, and converts the call-up command (call) the funcA into a reusing command (memocall). Next, in the event of intending to hold the data amount of the execution history of the function (funcA) converted into a reusing command in the history memory, this reusing command conversion unit 1623 determines that the execution history of the funcB having a char-type argument cannot be registered at all. Therefore, the reusing command conversion unit 1623 does not convert the call-up command (call) of the funcB into a reusing command (memocall).

Also, in the same way as with the funcB having a char-type argument, the reusing command conversion unit 1623 determines that, with regard to the funcC having an int-type argument as well, the execution history of the funcC cannot be held at all, and does not convert the call-up command (call) of the funcC as well.

As described above, the program conversion processing unit 1600 generates a program for calling up the funcA having a bool-type argument using a reusing command (memocall), and calling up the other two functions (funcB and C) using a call-up command (call).

(b) in Fig. 26 illustrates an example of the operation of the program conversion processing unit 1600 in the event of the data processing device 1100 including history memory 1430 having large capacity. Here, an example of the source program before being processed by the program conversion processing unit 1600 is shown within a frame positioned in the left side as to a right arrow using the C language, in the same way as with (a) in Fig. 26. Also, an example of the program processed by the program conversion processing unit 1600 is shown within a frame positioned in the right side as to the right arrow using the assembly language.

Now, let us say that the history memory has capacity sufficient for holding 55 execution histories or so of a function for outputting one char-type execution result by taking one char-type variable as an argument.

The operations of the reused candidate section extracting unit 1611, reused candidate section analyzing unit 1612, and reutilization generating unit 1621 serve the same as with the operation shown in (a) in Fig. 26, and accordingly, detailed description thereof will be omitted.

In this case, after reutilization is generated by the reutilization generating unit 1621, the reusing command conversion unit 1623 converts, in the same way as with (a) in Fig. 26, the call-up command (call) of the function into a reusing command (memocall).

As a result thereof, the reusing command conversion unit 1623 first analyzes, regarding the function having a bool-type argument (funcA), that all of the execution histories can be registered in the history memory, and converts the call-up command (call) of the funcA into a reusing command (memocall). Next, this reusing command conversion unit 1623 determines that all of the execution histories of the funcB having a char-type argument can be registered in the history memory from which the data amount of the execution histories of the function (funcA) converted into a reusing command is subtracted. According to this analysis, the reusing command conversion unit 1623 converts the call-up command (call) of the funcB into a reusing command (memocall). Also, this reusing command conversion unit 1623 analyzes that only two execution histories of the funcC having an int-type argument can be registered in the history memory from which the data amount of the execution histories of the functions (funcA and funcB) converted into a reusing command is subtracted. According to this analysis, the reusing command conversion unit 1623 does not convert the call-up command (call) of the funcC.

As described above, the program conversion processing unit 1600 generates a program for calling up the funcA having a bool-type argument and the funcB having a char-type argument using a reusing command (memocall), and calling up the funcC using a call-up command (call).

Note here that we have assumed that a reused section is a function, a call-up command is a "call" command in the event of being expressed by the assembly language, and a reusing command is expressed as "memocall" by the assembly language, but the present invention is not restricted to this. For example, a case can be conceived where a reused section is a loop, a call-up command is a "branch" command in the event of being expressed by the assembly language, and a reusing command is expressed as "memoloop" by the assembly language.

[Example of Reusing Command According to First Embodiment of Present Invention]

Next, description will be made regarding a reusing command that the compile processing device 1500 according to the first embodiment of the present invention generates, with reference to the drawings.

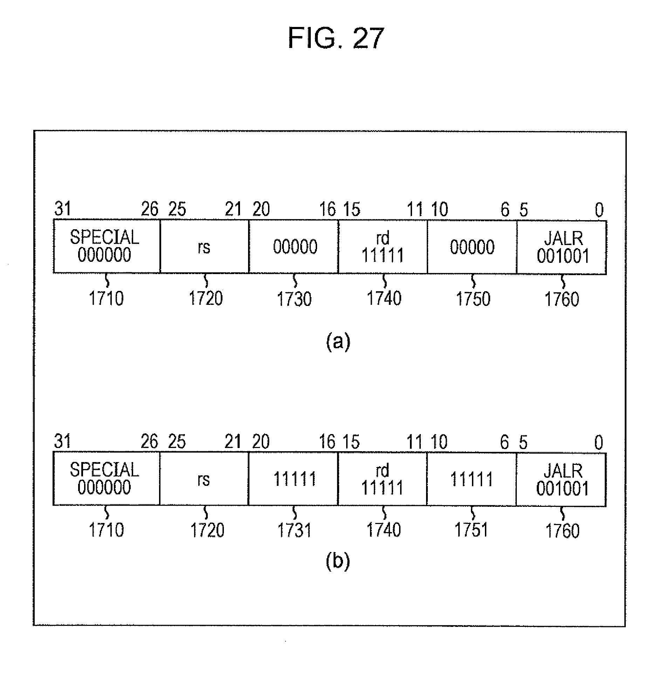

Fig. 27 is a conceptual diagram illustrating an example of a function call-up command and a function reusing command, according to the first embodiment of the present invention. Now, let us assume that the processor core of the data processing device for processing a reusing command is configured of MIPS. Also, here, the left edge indicates the most significant bit (MSB), and the right edge indicates the least significant bit (LSB).

(a) in Fig. 27 illustrates a JALR (Jump And Link Register) command that is a function call-up command (call) in the MIPS command set. The MIPS command set is a 32-bit fixed length command set, and this JALR command is expressed with a bit string of 32 bits (numbers 0 through 31).

This JALR command is made up of an operation code field 1710, a function address field (rs) 1720, a first unused field 1730, a return address field (rd) 1740, a second unused field 1750, and a function specification field 1760.

The operation code field 1710 is a field for specifying a command type. This operation code field 1710 is a bit string made up of the 26'th through 31'st bits. With this operation code field 1710, a bit string of "000000" serving as a SPECIAL command is stored.

The function address field (rs) 1720 is a field for specifying a register for storing the address of a function. This function address field (rs) 1720 is a bit string made up of the 21'st through 25'th bits.

The first unused field 1730 is a field unused in the JALR command. This first unused field 1730 is the 16'th through 20'th bit strings. With this first unused field 1730, a bit string of "00000" in the JALR command is stored.

The return address field (rd) 1740 is a field for specifying a return address from a function. This return address field (rd) 1740 is a bit string made up of the 11'th through 15'th bits. With this return address field (rd) 1740, a bit string "1111111" specifying the 31'st register in the JALR command is stored.

The second unused field 1750 is a field unused in the JALR command. This second unused field 1750 is a bit string made up of the 6'th through 10'th bits. With this second unused field 1750, a bit string of "00000" in the JALR command is stored.

The function specification field 1760 is, in the event that a command specified by the operation code field 1710 includes multiple functions, a field for specifying one function of the multiple functions thereof. This function specification field 1760 is a bit string made up of the 0'th through 5'th bits. With this function specification field 1760, a bit string of "001001" in the JALR command is stored.

(b) in Fig. 27 illustrates an example of a function reusing command. This reusing command is expressed using a bit string of 32 bits (numbers 0 through 31). This reusing command is made up of an operation code field 1710, a function address field (rs) 1720, a first reused field 1731, a return address field (rd) 1740, a second reused field 1751, and a function specification field 1760. Note here that the structures other than the first reused field 1731 and second reused field 1751 are the same as with (a) in Fig. 27, and accordingly denoted with the same reference numerals, and description thereof will be omitted here.

The first reused field 1731 and second reused field 1751 are both fields indicating that this command is a reusing command. The first reused field 1731 and second reused field 1751 are equivalent to the bit strings of the first unused field 1730 and second unused field 1750 being changed to a bit string other than "00000" in the JALR command. However, with the first reused field 1731 and second reused field 1751, in the event that one of the bit strings is other than "00000", this specifies a reusing command, and the other bit string may be "00000".

As described above, in the event that a bit string of "00001 through 11111" is stored in either the 11'st through 15'th or the 6'th through 10'th bit string of a JALR command instead of "00000", the command thereof is a reusing command.

[Example of Operation of Compile Processing Device 1500 According to First Embodiment of Present Invention]

Next, description will be made regarding the processing of the compile processing device 1500 according to the first embodiment of the present invention, with reference to the drawing.

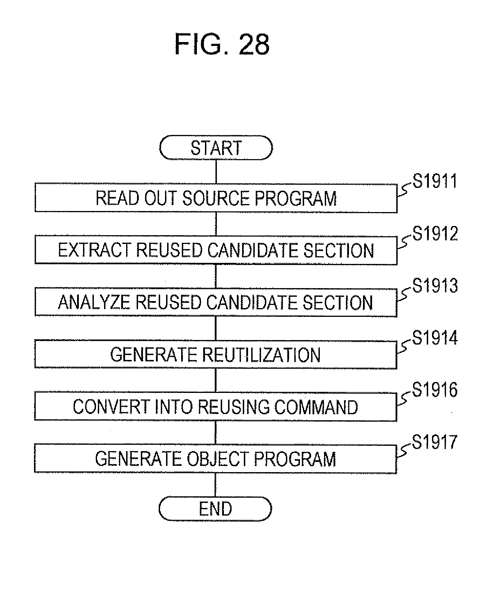

Fig. 28 is a flowchart illustrating the processing procedure of the compile processing using the compile processing device 1500 according to the first embodiment of the present invention.

First, the source program is read out from the source program storage unit 1510 by the compile processing device 1500 (step S1911). Next, a reused candidate section is extracted by the reused candidate section extracting unit 1611 (step S1912).

The usage pattern of the reused candidate section is then analyzed by the reused candidate section analyzing unit 1612 (step S1913). Note that step S1913 is an example of the analyzing procedure laid forth in the Claims.

Next, reutilization is generated based on the analysis results of the reused candidate section by the reutilization generating unit 1621 (step S1914). Note that step S1914 is an example of the reutilization generating procedure laid forth in the Claims.

Subsequently, the call-up command of the reused candidate section is converted into a reusing command based on the reutilization (step S1916). This means, in the event that the function is a reused candidate section, that the function call-up command (call) is converted into a reusing command (memoCall). Note that step S1915 is an example of the command conversion procedure laid forth in the Claims.

An object program that is the code of a machine language program is then generated by the code generating unit 1522 based on the program including the converted command (step S1917).

As described above, according to the first embodiment of the present invention, reutilization is generated, whereby the call-up command of a reused candidate section to be reused can be converted into a reusing command based on a degree where an execution result will be reused.

<2. Second Embodiment>

[Configuration Example of Data Processing Device 1100]

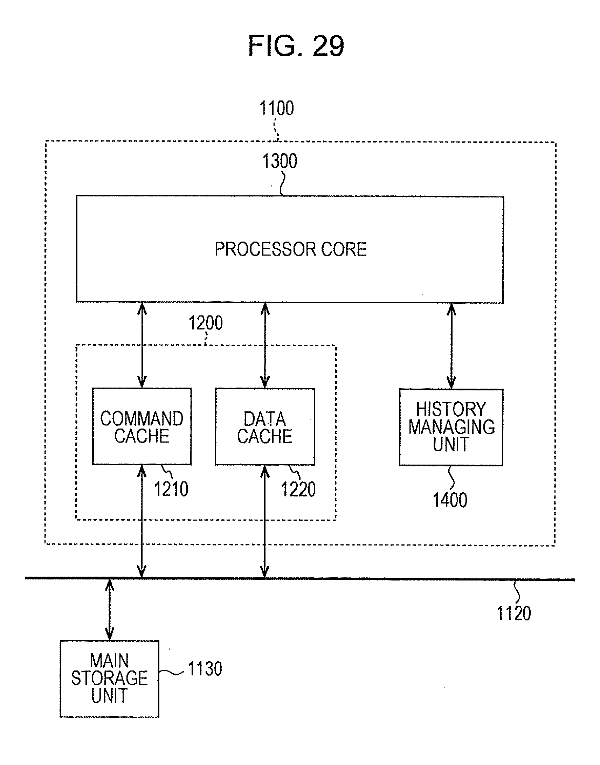

Fig. 29 is a block diagram illustrating a configuration example of the data processing device 1100 according to a second embodiment of the present invention. This data processing device 1100 is mutually connected to a main storage unit 1130 via a bus 1120. Also, now, let us assume that a command section that the data processing device 1100 processes is a function.

The data processing device 1100 executes various types of processing according to program data. This data processing device 1100 is realized by a CPU (Central Processing Unit) in a common computer, for example. This data processing device 1100 includes a primary cache 1200, a processor core 1300, and a history managing unit 1400. Here, let us say that the data processing device 1100 processes a program including the reusing command generated by the compile processing device 1500 according to the first embodiment of the present invention.

The primary cache 1200 is for temporarily holding information that the processor core 1300 inputs/outputs via the bus 1200. This primary cache 1200 includes a command cache 1210 and a data cache 1220.

The command cache 1210 is for temporarily holding a command that is executed at the processor core 1300. This command cache 1210 temporarily holds a command that the processor core 1300 frequently executes, thereby alleviating access from the processor core 1300 to the main storage unit 1130, and alleviating data input waiting time at the processor core 1300. This command cache 1210 supplies the reusing command supplied from the main storage unit 1130 to the processor core 1300.

The data cache 1220 is for temporarily holding the input data and output data of the processor core 1300. This data cache 1220 temporarily holds the input data of the processor core 1300 that is high in frequency of use, thereby alleviating access from the processor core 1300 to the main storage unit 1130, and alleviating data input waiting time at the processor core 1300. This data cache 1220 outputs the input value and start address of a function supplied from the main storage unit 1130 to the processor core 1300.

The processor core 1300 is for executing computation in accordance with a command of the program. This processor core 1300 is realized by an MIPS (Microprocessor without Interlocked Pipeline Stages), for example. Based on the command, the input data, and the start address of a function input from the command cache 1210 and data cache 1220, this processor core 1300 executes the command, and outputs the result thereof that is an execution result. When no execution result is supplied from the history managing unit 1400 in the event that a command to be input is a reusing command for specifying a reused section, this processor core 1300 outputs an execution result that is a result of this command being executed to the data cache 1220 and history managing unit 1400.

Also, when an execution result is supplied from the history managing unit 1400 in the event that a command to be input is a reusing command for specifying a reused section, the processor core 1300 discontinues the processing in the reused section, and returns to the routine that has called this reused section.

The history managing unit 1400 is for holding and managing the execution result in a reused section. This history managing unit 1400 holds the section identification information, input value, and execution result of the reused section supplied from the processor core 1300 as an execution history. The section identification information mentioned here is information for identifying a reused section, and examples of this include the start address of a function or loop. That is to say, this history managing unit 1400 holds the start address, input value, and execution result of a function as the section identification information, input value, and execution result. Also, in the event that the start address and input value of a function have been supplied from the processor core 1300, this history managing unit 1400 searches an execution history including these start address and input value.

The bus 1120 is a bus for exchanging data as to the data processing device 1100 and main storage unit 1130.

The main storage unit 1130 is for holding data necessary for the operation of the data processing device 1100. RAM (Random Access Memory) or the like can be conceived as an example of this main storage unit 1130. This main storage unit 1130 outputs the stored data to the data processing device 1100 via the bus 1120.

As described above, according to the second embodiment of the present invention, the history managing unit 1400 is provided to the data processing device 1100, whereby an execution result in the reused section extracted based on the degree where the execution result will be reused of multiple command sections can be reused.

[Configuration Example of Processor Core 1300 and History Managing Unit 1400]

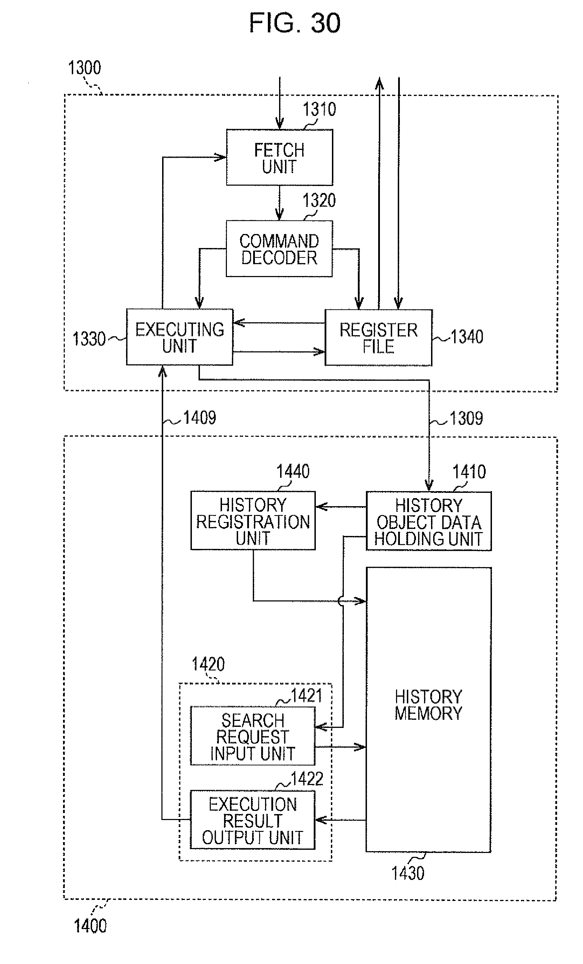

Fig. 30 is a block diagram illustrating a configuration example of the processor core 1300 and history managing unit 1400 according to the second embodiment of the present invention. Here, the functions of the processor core 1300 and history managing unit 1400 are the same as with those in Fig. 29, and accordingly denoted with the same reference numerals, and description thereof will be omitted.

The processor core 1300 includes a fetch unit 1310, a command decoder 1320, an executing unit 1330, and a register file 1340.

The fetch unit 1310 is for reading out a command from the main storage unit 1130 from the command cache 1210. This fetch unit 1310 temporarily holds the read command thereof, and of the held commands thereof, supplies a command causing the executing unit 1330 to execute to the command decoder 1320. This fetch unit 1310 supplies, of the temporarily held commands, a reusing command to be executed at the executing unit 1330 to the command decoder 1320, for example. This fetch unit 1310 supplies, for example, a reusing command stored in the main storage unit 1130 to the command decoder 1320.

The command decoder 1320 is for generating a control signal for controlling a component of the processor core 1300 by analyzing the command supplied from the fetch unit 1310. This command decoder 1320 generates, for example, a control signal for controlling the executing unit 1330 and register file 1340 by an analyzing a command, and supplies the generated control signal thereof to the executing unit 1330 and register file 1340.

In the event that a reusing command has been supplied from the fetch unit 1310, this command decoder 1320 analyzes this reusing command, thereby supplying a control signal for controlling each of the executing unit 1330 and register file 1340 to the executing unit 1330 and register fie 1340.

The executing unit 1330 is for executing the command analyzed at the command decoder 1320 based on the control signal supplied from the command decoder 1320. In the event that the control signal based on the reusing command has been supplied from the command decoder 1320, this executing unit 1330 starts the processing of the reused section that the reusing command specifies. Also, along with start of the processing of this reused section, the executing unit 1330 outputs the section identification information of the reused section obtained from the register file 1340 to the history managing unit 1400 via a signal line 1309. The executing unit 1330 then executes the processing in the reused section based on the input value of the reused section supplied from the register file 1340, and also outputs the input value of the reused section to the history managing unit 1400 via the signal line 1309.

Also, in the event that the execution result of the reused section has been supplied from the history managing unit 1400, the executing unit 1330 discontinues the processing of the reused section, and also supplies a signal to the effect that the execution result has been received from the history managing unit 1400, to the fetch unit 1310. At this time, the executing unit 1330 outputs the execution result to the register file 1340.

On the other hand, in the event that the execution result of the reused section has not been supplied from the history managing unit 1400, the executing unit 1330 performs the processing of the reused section up to the end thereof, and outputs the execution result to the history managing unit 1400 and register file 1340. Note that the executing unit 1330 is an example of the executing unit laid forth in the Claims.

The register file 1340 is for temporarily holding the data supplied from the data cache 1220 and the execution result supplied from the executing unit 1330. For example, in the event that the control signal based on the reusing command has been supplied from the command decoder 1320, this register file 1340 supplies the input value of the reused section to the executing unit 1330.

The history managing unit 1400 includes a history object data holding unit 1410, a history search unit 1420, history memory 1430, and a history registration unit 1440.

The history object data holding unit 1410 is for temporarily holding the data supplied from the executing unit 1330. In the event that the section identification information and input value having been supplied from the executing unit 1330, this history object data holding unit 1410 supplies these to the history search unit 1420 as a search request. For example, in the event that the reused section is a function, the history object data holding unit 1410 supplies the start address and input value of the function supplied from the executing unit 1330 to the history search unit 1420 as a search request.

Also, when a condition for registering an execution result is satisfied by the section identification information, input value, and execution result been supplied from the executing unit 1330, this history object data holding unit 1410 supplies these to the history registration unit 1440 as an execution history.

The history search unit 1420 is for searching an execution history based on the search request supplied from the history object data holding unit 1410, and in the event of an execution history being searched, outputting the execution result. This history search unit 1420 includes a search request input unit 1421 and an execution result output unit 1422. Note that the history search unit 1420 is an example of the history search unit laid forth in the Claims.

The search request input unit 1421 is for searching an execution history from the history memory 1430 based on the search request supplied from the history object data holding unit 1410. For example, in the event that the reusing command of a function has been analyzed at the command decoder 1320, this search request input unit 1421 supplies the start address and input value of this function to the history memory 1430, thereby starting search of an execution history.

In the event that an execution history has been searched at the history memory 1430, the execution result output unit 1422 extracts the execution result from the history memory 1430, and outputs the extracted execution result to the executing unit 1330. This execution result output unit supplies the extracted execution result to the executing unit 1330 via a signal line 1409.

The history memory 1430 is for holding the execution history supplied from the history registration unit 1440. For example, in the event that a search request has been supplied from the history search unit 1420, when holding the execution history agreeing with this search request, this history memory 1430 supplies the execution result of this execution history to the execution result output unit 1422. Also, in the event that the execution history has been supplied from the history registration unit 1440, this history memory 1430 holds this execution history. This history memory 1430 is realized, for example, by content addressable memory (CAM: Content Addressable Memory). Note that the history memory 1430 is an example of the history memory laid forth in the Claims.

The history registration unit 1440 is for converting the execution history supplied from the history object data holding unit 1410 into a data structure to be held in the history memory 1430, and registering this execution history in the history memory 1430. For example, in the event that a reusing command specifying a function has been analyzed at the command decoder 1320, in the case that not execution history has not been searched by the history search unit 1420, this history registration unit 1440 registers the start address and input value and execution result of the function in the history memory 1430 as an execution history.

As described above, the processor core 1300 and history managing unit 1400 can execute a program where a function call-up command has been converted into a reusing command according to a degree where the execution result of the function will be reused. Note that description has been made here regarding an example wherein the processor core 1300 and history managing unit 1400 take a function as an object of reusing, but can also take a loop as an object of reusing in the same way.

[Example of Data Structure of History Memory 1430]

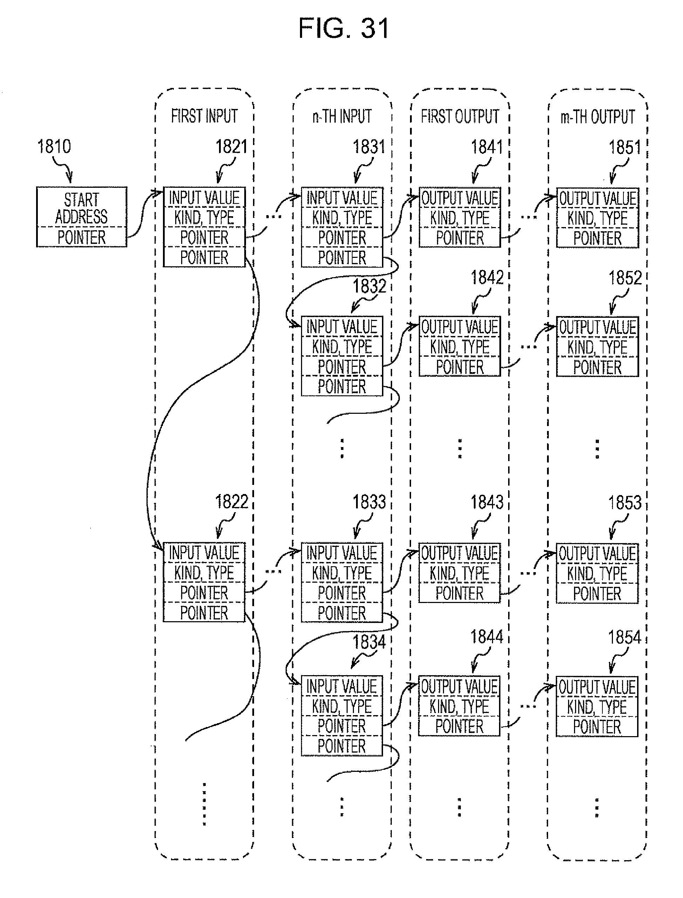

Fig. 31 is a conceptual diagram illustrating an example of the data structure of the history memory 1430 according to the second embodiment of the present invention. Here is shown a structure wherein of execution histories held by the history memory 1430 for each piece of section identification information, the execution history in one piece of section identification information is held by a tree structure. This example assumes a function that includes n arguments, and returns an output that is an execution result to m storage destinations. Also, here, let us say that the start address of a function that is the head address of the function is used as section identification information.

This example illustrates a function route 1810, first argument nodes 1821 and 1822, n'th argument nodes 1831 through 1834, first output nodes 1841 through 1844, and m'th output nodes 1851 through 1854 in the tree structure.

The function route 1810 indicates the start address of a function that is section identification information, and a pointer pointing to the first argument node 1821.

The first and n'th argument nodes 1821, 1822, and 1831 through 1834 indicate, as the input values of an argument in an execution history held in the history memory 1430, an input value indicating a value of an argument, the type of the argument thereof, and the kind indicating the storage location of the argument thereof. The storage location mentioned here means a register number or a memory address in the main storage unit 1130.

Further, the first and n'th argument nodes 1821, 1822, and 1831 through 1834 indicate a right pointer pointing to the argument node in the next argument in the event that input values to be compared mutually match, and a lower pointer pointing to another argument node in the same argument in the event that input values to be compared do not match. Also, the n'th argument nodes 1831 through 1834 are connected to the first and m'th output nodes 1841 through 1844 and 1851 through 1854, respectively.

The first and m'th output nodes 1841 through 1844 and 1851 through 1854 indicate, as an execution result in an execution history held in the history memory 1430, an output value indicating the value of an execution result, the type indicating the storage location of the execution result thereof, and the type of the execution result thereof. Further, the first output nodes 1841 through 1844 indicate a right pointer pointing to the next output node. The first and m'th output nodes 1841 through 1844 and 1851 through 1854 make up a connection list. Also, null representing the terminal end of an output node is indicated in the m'th output nodes 1851 through 1854.

With such a tree structure, upon a function start address agreeing with the function start address shown in the function route 1810 being input, input value comparison processing is executed at the first argument node 1821 pointed to by the pointer of the function route 1810. The input value comparison processing mentioned here is to compare input values that are an input value, kind and type shown in the first argument node 1821, and the input values from the history search unit 1420.

At this time, for example, in the event that the input values shown in the first argument node 1821, and the input values from the history search unit 1420 match, the input value comparison processing is executed at the next argument node pointed to by the right pointer of the first argument node 1821. On the other hand, in the event that the input values shown in the first argument node 1821, and the input values from the history search unit 1420 do not match, the input value comparison processing is executed at the first argument node 1822 pointed to by the lower pointer of the first argument node 1821.

In this way, the argument node pointed to by the right pointer or lower pointer is selected based on the result of the comparison processing at each argument node, and the input value comparison processing is sequentially executed at the selected argument node thereof. For example, in the event that the input values shown in the n'th argument node 1831, and the input values from the history search unit 1420 mutually match, the execution result of the first output node 1841 pointed to by the right pointer of the n'th argument node 1831 is output to the history search unit 1420. Finally then, the execution result of the m'th output node 1851 is output to eh history search unit 1420.

In this way, the history memory 1430 is structured using a tree structure for each piece of the identification information, and accordingly, the input values of the same argument do not have to be held in a redundant manner, whereby the storage region can be conserved. Also, the data structure is divided for each piece of the identification information, whereby deterioration in search speed can be suppressed.

[Example of Execution History Saved by Processor Core 1300 and History Managing Unit 1400 According to Second Embodiment of Present Invention]

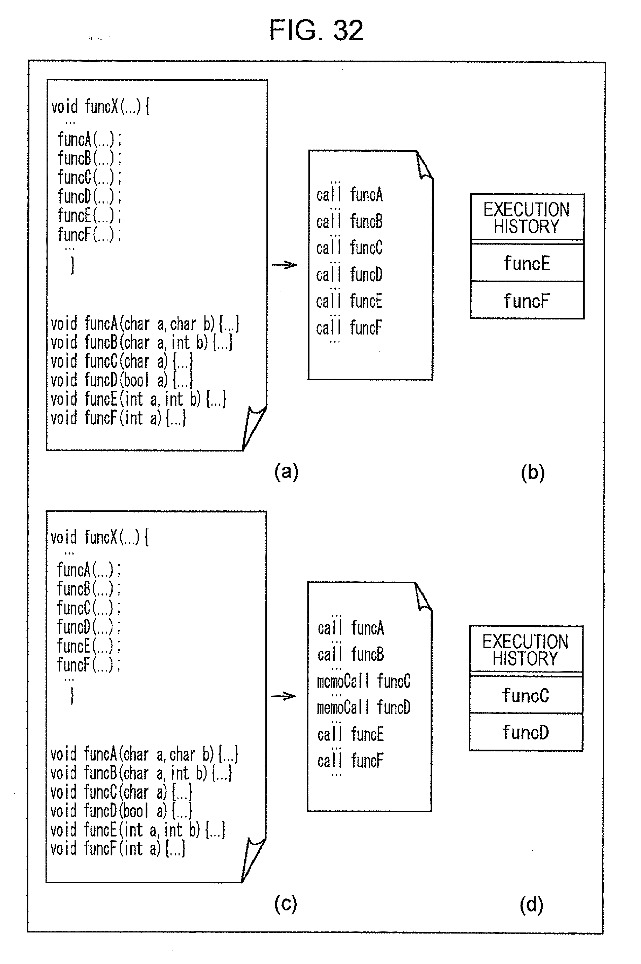

Fig. 32 is a conceptual diagram illustrating an example of a program to be processed by the processor core 1300 according to the second embodiment of the present invention, and an execution history to be saved by the history managing unit 1400. Here are expressed a case where an execution history is saved using a conventional technique, and a case where an execution history is saved using the second embodiment of the present invention. Now, let us assume that execution of a converted program will be executed sequentially from the top of the program shown here.

(a) in Fig. 32 is a schematic diagram illustrating a conversion example of a source program according to a conventional technique. Here is shown a source program within a frame positioned in the left side as to a right arrow using the C language. Also, an example of the program converted by a conventional technique is shown within a frame positioned in the right side as to the right arrow using the assembly language.

With the source program, a main function (funcX) of the program, and six functions to be called up by the main function thereof are shown. As these six functions, a function with two char-type variables as arguments (funcA), a function with one char-type variable and one int-type variable as arguments (funcB), and a function with one char-type variable as an argument (funcC) are shown. Further, a function with one bool-type variable as an argument (funcD), a function with two int-type variables as arguments (funcE), and a function with one int-type variable as an argument (funcF) are shown.

In the event of specifying a function as a reused section, this source program is converted into a program with all of the functions as objects of reusing by a compile processing device according to a conventional technique with all of the functions as objects of reusing. As a result thereof, as shown within the frame positioned in the right side as to the right arrow, the funcA through G are called up by a call-up command (call), and a program that reuses all of the execution results of the funcA through G is generated.

(b) in Fig. 32 is a schematic diagram illustrating an example of an execution history to be saved in the history memory in the case that the programs shown within the frame positioned in the right side of the right arrow in (a) in Fig. 32 have sequentially been executed one time each from the top. Note here that let us say that the history memory where an execution history will be saved can save execution histories relating to two functions regardless of the types or number of input values and output values for convenience. Also, let us say that when saving a new execution history, in the event that there is no free space in the history memory, after an execution history that has been unused for the longest period is eliminated from the history memory, the new execution history is saved in the history memory. Further, here, let us say that call-up commands of the converted program shown in (a) in Fig. 32 will be executed one at a time in order from the top.

In the event of employing a conventional technique, based on the converted program positioned in the right side of the right arrow in (a) in Fig. 32, the six functions (funcA through F) will be called up by a reusing command (cal). First, the funcA with two char-type variables as arguments is called as a reused section, and the execution history of the funcA is saved in the history memory. Next, the funcB with one char-type variable and one int-type variable as arguments is called as a reused section, and then saved the execution history is saved.

Thereafter, the funcC with one char-type variable as an argument is called up as a reused section in a state in which there is no free space in the history memory. At this time, with the data processing device according to a conventional technique, the execution history of the funcA that has been unused for the longest period is eliminated form the history memory, and also the execution history of the funcC is saved.

Then, in the same way as with the funcC, at the time of the funcD with one bool-type variable as an argument, the execution history of the funcD is saved instead of the execution history of the funcB. At the time of the funcE with two int-type variables as arguments, the execution history of the funcE is then saved instead of the execution history of the funcC. Finally, upon the funcF with one int-type variable as an argument being called up as a reused section, the execution history of the function funcD that has been unused for the longest period is eliminated from the history memory, and also the execution history of the funcF is saved.

In this way, upon the call-up commands of the converted program in (a) in Fig. 32 being executed one at a time in order from the top, as shown in (b) in Fig. 32, the execution histories of the two functions (funcE and funcF) are saved in the history memory.

As described above, with the case of employing a conventional technique, an execution history having a high probability to be reused is not always saved in the history memory. Therefore, there may be caused depending on a program to be executed a case where the execution history of a function that will not be reused at all is saved in the history memory, and the advantage of reuse does not work.

(c) in Fig. 32 is a schematic program illustrating a conversion example of the source program according to the first embodiment of the present invention. Now, let us assume that the reutilization generating unit 1621 generates reutilization based on a combination of values that the input value of a function can take. Also, let us say that the history memory 1430 can save execution histories relating to two functions regardless of the types or number of input values and output values for convenience.

Here is shown the same source program as the source program shown in (a) in Fig. 32 within a frame positioned in the left side as to a right arrow using the C language. Also, an example of the program converted by the first embodiment of the present invention is shown within a frame positioned in the right side as to the right arrow using the assembly language.

With this source program, first, the number and types of arguments in the six functions (funcA through F) are analyzed by the reuse candidate section analyzing unit 1612 for each function. Thereafter, the reutilization generating unit 1621 generates reutilization based on the number and types of the arguments analyzed by the reuse candidate section analyzing unit 1612.

At this time, the reutilization generating unit 1621 generates reutilization based on a combination of values that an input value for each function can take. For example, in the event of calculating the total number of bits as a combination of valued that an input value of the function can take, this reutilization generating unit 1621 generates reutilization based on the total number of bits of the calculated input values. In this case, this reutilization generating unit 1621 determines, regarding the function with two char-type variables as arguments (funcA), a combination of input values to be 32 bits according to "16 + 1 + 16 = 32". Further, the reutilization generating unit 1621 determines, regarding the function with one char-type variable and one int-type variable as arguments (funcB), a combination of input values to be 17 bits according to "16 + 1 = 17". Also, the reutilization generating unit 1621 determines, regarding the function with one char-type variable as an argument (funcC), a combination of input values to be 16 bits. The reutilization generating unit 1621 then determines, regarding the function with one bool-type variable as an argument (funcD), a combination of input values to be 1 bit. Further, the reutilization generating unit 1621 determines, regarding the function with two int-type variables as arguments (funcE), a combination of input values to be 64 bits according to "32 + 32 = 64". The reutilization generating unit 1621 determines, regarding the function with one int-type variable as an argument (funcF), a combination of input values to be 32 bits.

As a result thereof, the reutilization generating unit 1621 generates, based on the inverse number of a combination of input values, the highest reutilization as to the funcD with one bool-type variable as an argument, and generates the second highest reutilization as to the funcC with one char-type variable as an argument. Further, the reutilization generating unit 1621 generates the third highest reutilization as to the funcB with one char-type variable and one int-type variable as arguments. Also, the reutilization generating unit 1621 generates the fourth highest utilization as to the funcA with two char-type variables as arguments, and the funcF with one int-type variable as an argument. The reutilization generating unit 1621 then generates the lowest reutilization as to the funcE with two int-type variables as arguments.

The reusing command conversion unit 1623 then sets functions held in the history memory 1430 in order from a function of which the reutilization is the highest. As a result thereof, the reusing command conversion unit 1623 converts the call-up commands (call) of the funcD with one bool-type variable as an argument, and the funcC with one char-type variable as an argument into a reusing command (memocall).

(d) in Fig. 32 indicates an example of an execution history to be saved in the history memory in the case that the program shown within the frame positioned in the right side of the right arrow in (c) in Fig. 32 has sequentially been executed from the top. Note here that let us say that the history memory 1430 can save execution histories relating to two functions regardless of the types or number of input values and output values for convenience.

The processor core 1300 according to the second embodiment of the present invention outputs the execution histories of the funcC and funcD called up by a reusing command (memoCall) to the history managing unit 1400 based on the converted program shown in (c) in Fig. 32. As a result thereof, the execution histories of the funcA and funcB are saved in the history memory 1430.

As described above, according to the second embodiment of the present invention, a function having a high probability that the execution result will be reused can be selected and saved in the history memory 1430.

[Example of Operation of Processor Core 1300 and History Managing Unit 1400 According to Second Embodiment of Present Invention]

Next, description will be made regarding the processing of the processor core 1300 and history managing unit 1400 according to the second embodiment of the present invention, with reference to the drawing.

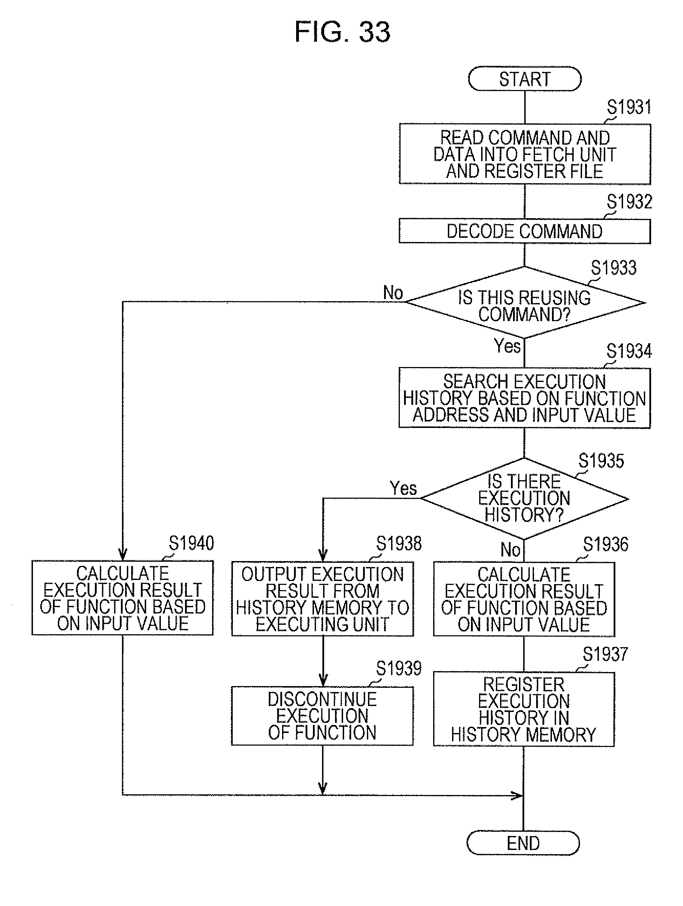

Fig. 33 is a flowchart illustrating the processing procedure of function execution processing according to the processor core 1300 and history managing unit 1400 according to the second embodiment of the present invention.

First, a command referencing a function, and an input value of the function thereof are read out to the fetch unit 1310 and register file 1340 (step S1931). Next, the command referencing the function is decoded by the command decoder 1320 (step S1932). Subsequently, whether or not the decoded command is a reusing command is analyzed (step S1933). As a result of the analysis, in the event that the decoded command is not a reusing command, based on the input value supplied from the register file 1340, the function thereof is executed by the executing unit 1330, and the execution result is output (step S1940). The execution processing of the function is then ended.

On the other hand, in the event that the decoded command is a reusing command, an execution history is searched from the history memory 1430 by the search request input unit 1421 using the start address and input value of the function supplied from the executing unit 1330 (step S1934).

Next, whether or not there is an execution history is determined (step S1935). In the event that there is an execution history in the history memory 1430, the execution result is output by the execution result output unit 1422 (step S1938). Subsequently, the executing unit 1330 discontinues execution of the function of which the execution result has been output (step S1939). Execution of the function is then ended.

On the other hand, in the event that an execution history is not held in the history memory 1430, the function thereof is executed by the executing unit 1330 based on the input value supplied from the register file 1340, and the execution result is output (step S1936). The execution history is then registered in the history memory 1430 by the history registration unit 1440 (step S1937). Note that these step S1936 and step S1937 are an example of the execution means laid forth in the Claims. Execution of the function is then ended.

As described above, according to the second embodiment of the present invention, based on a program where a reused section call-up command is converted into a reusing command in accordance with the reutilization of the reused candidate section, only the execution history of a reused section of which the execution result is high in advantage of reuse can be held in the history memory 1430.

<3. Third Embodiment>

[Configuration Example of Compile Processing Device 1500 According to Third Embodiment of Present Invention]

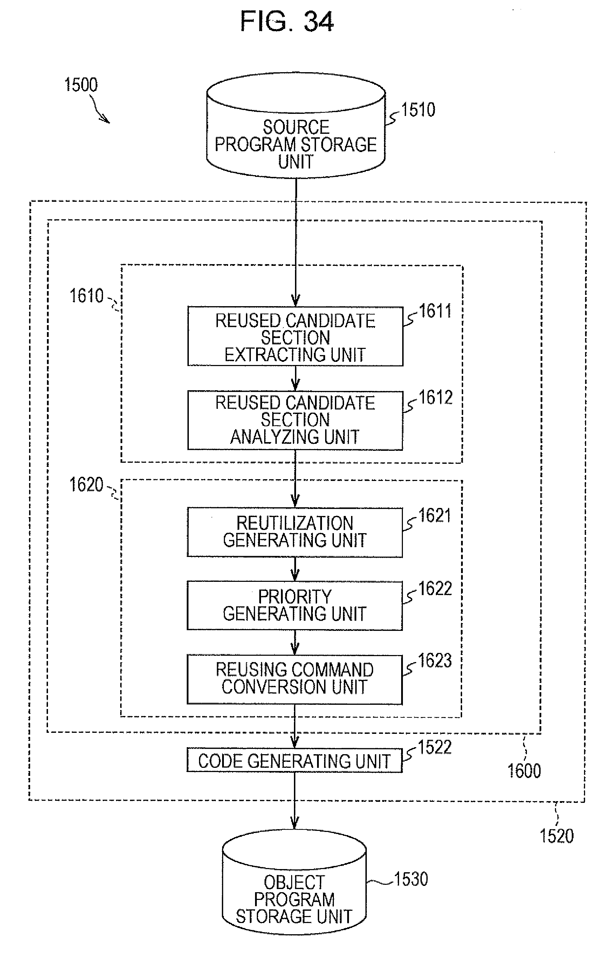

Fig. 34 is a block diagram illustrating a configuration example of the compile processing device 1500 according to the third embodiment of the present invention. This compile processing device 1500 includes a priority generating unit 1622 in addition to the configuration of the compile processing device 1500 shown in Fig. 18. Here, the configurations other than the priority generating unit 1622 are the same as with Fig. 18, and accordingly denoted with the same reference numerals as with Fig. 18, and the detailed description of the configurations of the units will be omitted.

The priority generating unit 1622 is for generating priority for holding an execution history in the history memory 1430 based on the reutilization supplied from the reutilization generating unit 1621. This priority generating unit 1622 generates, for example, priority having a high value in order from a reused candidate section having high reutilization. This priority generating unit 1622 supplies the generated priority to the reusing command conversion unit 1623 along with the reutilization, the identification information of the reused candidate section, and the program. Note that the priority generating unit 1622 is an example of the priority generating unit laid forth in the Claims.

The reusing command conversion unit 1623 is for converting a reused candidate section call-up command into a reusing command including priority based on the reutilization and priority supplied from the priority generating unit 1622. This reusing command conversion unit 1623 converts, for example, the call-up commands of all of the reused candidate sections of which the reutilization and priority have been calculated into reusing commands including priority. This reusing command conversion unit 1623 supplies the optimized program including the converted commands thereof to the code generating unit 1522.

Note that, with the third embodiment, the priority generating unit 1622 is assumed to be a unit for generating priority according to the order of reutilization, but the prevent invention is not restricted to this. For example, the priority generating unit 1622 can be conceived as a unit for generating the priority of a reused candidate section based on reutilization, a prediction value of the data amount of an execution history reused candidate section, and the capacity of the history memory 1430. In this case, the priority generating unit 1622 generates the predicted value of the data amount of execution histories in the same way as with the reusing command conversion unit 1623 shown in Fig. 18. The priority generating unit 1622 then generates priority by taking timing at the time of an execution history being eliminated from the history memory 1430 into consideration so as to effectively perform replacement of an execution history.

Note here that description has been made regarding an example wherein the compile processing device 1500 takes a function as an object of reusing, but a loop can also be taken as an object of reusing in the same way.

Note that, with the third embodiment, the reused candidate section analyzing unit 1612 analyzes the usage pattern of a reused candidate section for each function for convenience, but may analyze for each function call-up command to analyze in more detail. In this case, the reutilization generating unit 1621 generates reutilization for each function call-up command, and the priority generating unit 1622 generates different priority for each function call-up command even when functions to be called up are the same. The reusing command conversion unit 1623 then converts into a reusing command including different priority for each function call-up command even when functions to be called up are the same.

[Example of Operation of Program Conversion Processing Unit 1600 According to Third Embodiment of Present Invention]

Next, description will be made regarding the operation of the program conversion processing unit 1600 according to the third embodiment of the present invention, with reference to the next drawing.

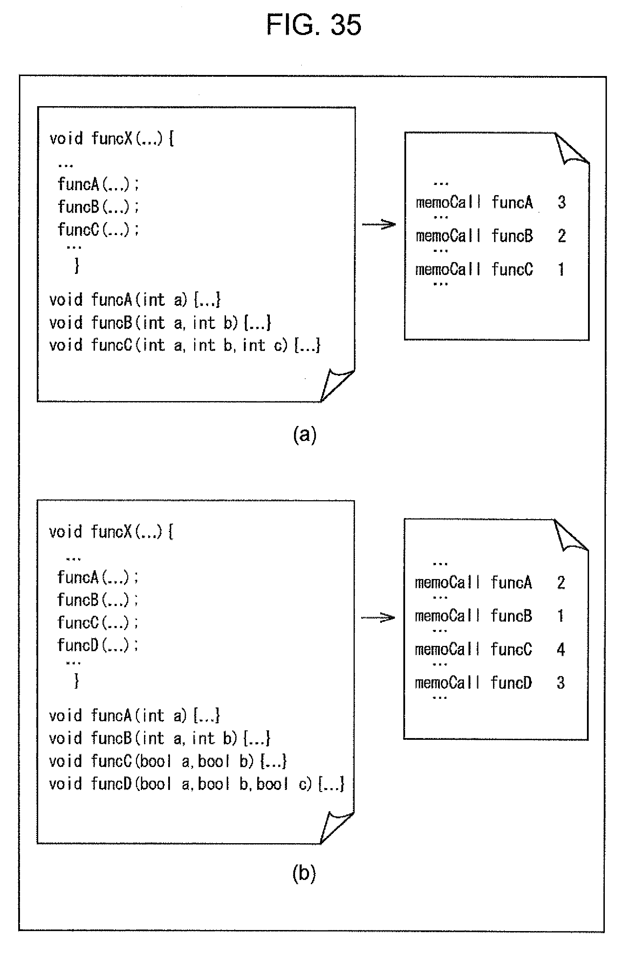

Fig. 35 is a schematic diagram illustrating a conversion example of a program including a function with multiple arguments as input values, according to the program conversion processing unit 1600 according to the third embodiment of the present invention.

(a) in Fig. 35 is a schematic diagram illustrating a conversion example according to the program conversion processing unit 1600 of a program including multiple functions having the same types but different number of arguments. Note that, with regard to the reused candidate section analyzing unit 1612 and reutilization generating unit 1621, let us assume the same operation as with the operation example shown in Fig. 20, and detailed description will be omitted here.

An example of the source program before being processed by the program conversion processing unit 1600 is shown within a frame positioned in the left side as to a right arrow in (a) in Fig. 35 using the C language. Also, an example of the source program processed by the program conversion processing unit 1600 is shown within a frame positioned in the right side as to the right arrow using the assembly language.

With the source program, a main function (funcX) of the program, and three functions to be called up by the main function thereof are shown. As these three functions, a function with one int-type variable as an argument (funcA), a function with two int-type variables as arguments (funcB), and a function with three int-type variables as arguments (funcC) are shown.

This source program is subjected to analysis and generation of reutilization by the reused candidate section analyzing unit 1612 and reutilization generating unit 1621 in the same way as with the operation example shown in Fig. 20. Thus, reutilization is generated such that the reutilization of the function having one argument (funcA) is the highest, the reutilization of the function having two arguments (funcB) is the second highest, and the reutilization of the function having three arguments (funcC) is the lowest.

Next, the priorities of three functions (funcA through funcC) are generated by the priority generating unit 1622. The priority generating unit 1622 generates priority based on reutilization, thereby generating the highest priority (3) as to the function of which the reutilization is the highest (funcA), and generating the second highest priority (2) as to the function of which the reutilization is the second highest (funcB). Also, the priority generating unit 1622 generates the lowest priority (1) as to the function of which the reutilization is the lowest (funcC).

The reusing command conversion unit 1623 then converts a reused section call-up command for reusing an execution result into a reusing command including priority based on the priority. In the case of (a) in Fig. 35, the reusing command conversion unit 1623 does not take the capacity of the history memory into consideration, and accordingly converts all of the function call-up commands where priority has been generated, into reusing commands including priority. As a result thereof, this reusing command conversion unit 1623 converts the call-up commands of the three functions (funcA through C) into reusing commands including priority.

As described above, the program conversion processing unit 1600 generates a program such as shown in the frame positioned in the right side as to the right arrow. According to this program, the funcA with one int-type variable as an argument is called up by the reusing command (memoCall) including the priority (3). The funcB with two int-type variables as arguments is called up by the reusing command (memoCall) including the priority (2), and the funcC with three int-type variables as arguments is called up by the reusing command (memoCall) including the priority (1).

(b) in Fig. 35 is a schematic diagram illustrating a conversion example according to the program conversion processing unit 1600 of a program including multiple functions having the different types and different number of arguments. Now, let us assume that the reused candidate section analyzing unit 1612 analyzes the number of arguments, and the types of arguments as usage patterns. Also, let us say assume that the reutilization generating unit 1621 generates reutilization based on a combination of values that an input value of a function can take.

An example of the source program before being processed by the program conversion processing unit 1600 is shown within a frame positioned in the left side as to a right arrow in (b) in Fig. 35 using the C language. Also, an example of the source program processed by the program conversion processing unit 1600 is shown within a frame positioned in the right side as to the right arrow using the assembly language.

With the source program, a main function (funcX) of the program, and four functions (funcA through D) to be called up by the main function thereof are shown. As these four functions, a function with one int-type variable as an argument (funcA), a function with two int-type variables as arguments (funcB), and a function with two bool-type variables as arguments (funcC) are shown. Further, as these four functions, a function with three bool-type variables as arguments (funcD) is shown.

This source program is first analyzed by the reused candidate section analyzing unit 1612 for each function regarding the number and types of arguments in the four functions (funcA through D). The reutilization generating unit 1621 then generates reutilization based on the number and types of arguments analyzed by the reused candidate section analyzing unit 1612.

At this time, the reutilization generating unit 1621 generates reutilization based on a combination of values that an input value for each function can take. For example, in the event of calculating the total number of bits of input values as a combination of values that an input value of a function can take, this reutilization generating unit 1621 generates reutilization based on the total number of bits of the calculated input values. In this case, this reutilization generating unit 1621 determines the combination of input values to be 32 bits regarding the function (funcA) with one int-type variable as an argument. Further, the reutilization generating unit 1621 determines the combination of input values to be 64 bits according to "32 + 32 = 64" regarding the function (funcB) with two int-type variables as arguments.

Also, the reutilization generating unit 1621 determines the combination of input values to be 2 bits according to "1 + 1 = 2" regarding the function (funcC) with two bool-type variables as arguments. The reutilization generating unit 1621 then determines the combination of input values to be 3 bits according to "1 + 1 + 1 = 3" regarding the function (funcD) with three bool-type variables as arguments.

As a result thereof, the reutilization generating unit 1621 takes the inverse number of the combination of input values as reutilization, and generates reutilization of a degree wherein the reutilization of the funcC with two bool-type variables as arguments is the highest, and the reutilization of the funcD with three bool-type variables as arguments is the second highest. Further, the reutilization generating unit 1621 generates reutilization of a degree wherein the reutilization of the funcA with one int-type variable as an argument is the third highest, and the reutilization of the funcB with two int-type variables as arguments is the lowest.

Next, the priority generating unit 1622 generates the priorities of the four functions (funcA through funcD). This priority generating unit 1622 generates priority based on reutilization, thereby generating priority (4) that is the highest priority as to the function (funcC) of which the reutilization is the highest, and generating priority (3) that is the second highest priority as to the function (funcD) of which the reutilization is the second highest. Also, the priority generating unit 1622 generates priority (2) that is the third highest priority as to the function (funcA) of which the reutilization is the third highest, and generates priority (1) that is the lowest priority as to the function (funcB) of which the reutilization is the lowest.

The reusing command conversion unit 1623 then converts a reused section call-up command for reusing an execution result into a reusing command including priority based on the priority in the same way as with the reusing command conversion unit 1623 shown in (a) in Fig. 35.

In this way, the program conversion processing unit 1600 generates a program such as shown in the frame positioned in the right side as to the right arrow. According to this program, the funcA with one int-type variable as an argument is called up by the reusing command (memoCall) including the priority (2). Further, the funcB with two int-type variables as arguments is called up by the reusing command (memoCall) including the priority (1), and the funcC with two bool-type variables as arguments is called up by the reusing command (memoCall) including the priority (4). Also, the funcC with three bool-type variables as arguments is called up by the reusing command (memoCall) including the priority (3).

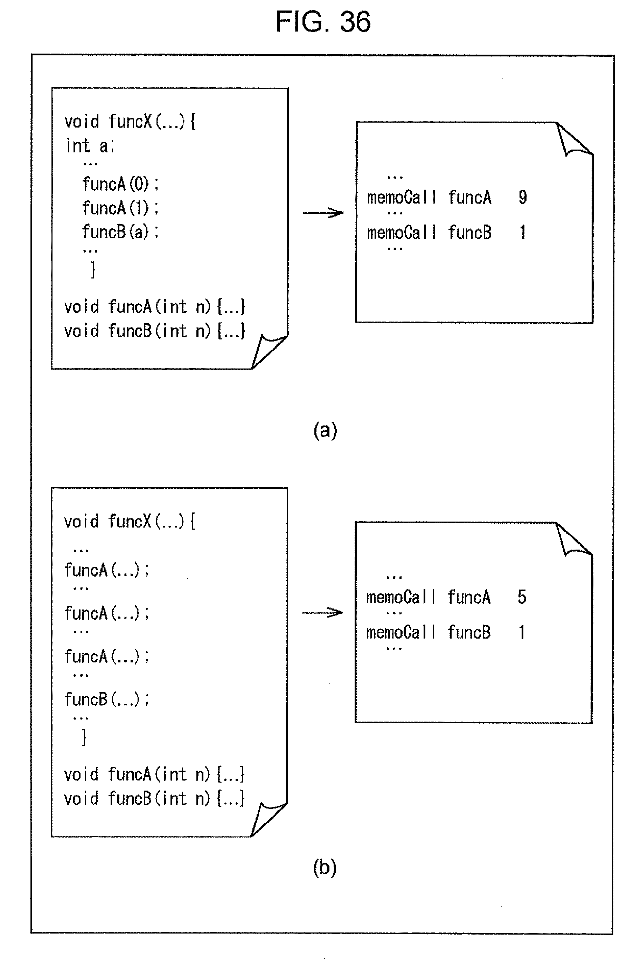

Fig. 36 is a schematic diagram illustrating a conversion example according to the program conversion processing unit 1600 of a program including functions having the same type but different usage patterns of arguments according to the third embodiment of the present invention.

(a) in Fig. 36 is a schematic diagram illustrating a conversion example according to the program conversion processing unit 1600 of a program including multiple functions having the same type but different constant or variable usage patterns of arguments. Now, let us assume that the reused candidate section analyzing unit 1612 analyzes whether an argument is a constant or variable, and restriction of values that an argument can take, as usage patterns. Also, let us assume that the reutilization generating unit 1621 generates reutilization based on a combination of values that an input value of a function can take.

An example of the source program before being processed by the program conversion processing unit 1600 is shown within a frame positioned in the left side as to a right arrow in (a) in Fig. 36 using the C language. Also, an example of the source program processed by the program conversion processing unit 1600 is shown within a frame positioned in the right side as to the right arrow using the assembly language. Now, let us assume that the priority generating unit 1622 generates a value of "1 through 9" as priority.

With the source program, a main function (funcX) of the program, and two functions (funcA and B) to be called up by the main function thereof are shown. As these two functions here are shown the function (funcA) of which the argument is defined as one int-type variable, but restricted to two values of "2" and "3" at a stage where the function is called up, and the function (funcB) with one int-type variable as an argument.

This source program is first analyzed by the reused candidate section analyzing unit 1612 for each function regarding whether the arguments in the two functions (funcA and B) are either constants or variables, and restriction of values that the arguments can take. The reutilization generating unit 1621 then generates reutilization based on the number and types of arguments analyzed by the reused candidate section analyzing unit 1612.

As a result thereof, the reutilization generating unit 1621 generates reutilization of a degree where the reutilization of the funcA of which the argument is defined as one int-type variable, but restricted to two values of "2" and "3" at a stage of the function being called up, is the highest. Further, the reutilization generating unit 1621 generates reutilization of a degree where the reutilization of the funcB with one int-type variable as an argument is the lowest.

Next, the priority generating unit 1622 generates the priorities of the two functions (funcA and B). This priority generating unit 1622 generates priority based on reutilization, thereby generating priority (9) that is the highest priority as to the function (funcA) of which the reutilization is the highest, and generating priority (1) that is the lowest priority as to the function (funcB) of which the reutilization is the lowest.

The reusing command conversion unit 1623 then converts a reused section call-up command for reusing an execution result into a reusing command including priority based on the priority in the same way as with the reusing command conversion unit 1623 shown in Fig. 35.

In this way, the program conversion processing unit 1600 generates a program such as shown in the frame positioned in the right side as to the right arrow. According to this program, the funcA of which the argument is defined as one int-type variable, but restricted to two values of "2" and "3" at a stage of the function being called up is called up by the reusing command (memoCall) including the priority (9). Further, the funcB with one int-type variable as an argument is called up by the reusing command (memoCall) including the priority (1).

(b) in Fig. 36 is a schematic diagram illustrating a conversion example according to the program conversion processing unit 1600 of a program including multiple functions having a different number of times of the function being called up. Now, let us assume that the reused candidate section analyzing unit 1612 and reutilization generating unit 1621 have perform the same operation as the operation example shown in Fig. 24. Also, let us say that the priority generating unit 1622 generates a value of "1 through 5" as priority.

An example of the source program before being processed by the program conversion processing unit 1600 is shown within a frame positioned in the left side as to a right arrow in (b) in Fig. 36 using the C language. Also, an example of the source program processed by the program conversion processing unit 1600 is shown within a frame positioned in the right side as to the right arrow using the assembly language.

With the source program, a main function (funcX) of the program, and two functions (funcA and B) to be called up by the main function thereof are shown. Of these two functions, the funcA is a function with one int-type variable as an argument, and is a function to be called up three times in the main function (funcX). The funcB is a function with one int-type variable as an argument, and is a function to be called up once in the main function (funcX).

This source program is subjected to analysis and generation of reutilization by the reused candidate section analyzing unit 1612 and reutilization generating unit 1621 in the same way as with the operation example shown in Fig. 24. Thus, reutilization of the highest degree is generated regarding the function (funcA), which is a function with one int-type variable as an argument, to be called up three times in the main function (funcX). Also, reutilization of the lowest degree is generated regarding the function (funcB), which is a function with one int-type variable as an argument, to be called up once in the main function (funcX).

Next, the priorities of the two functions (funcA through funcC) are generated by the priority generating unit 1622. The priority generating unit 1622 generates priority based on reutilization, thereby generating priority (5) that is the highest priority as to the function (funcA) of which the reutilization is the highest, and generating priority (1) that is the lowest priority as to the function (funcB) of which the reutilization is the lowest.

The reusing command conversion unit 1623 then converts a reused section call-up command for reusing an execution result into a reusing command including priority in the same way as with (a) in Fig. 36.

In this way, the program conversion processing unit 1600 generates a program such as shown in the frame positioned in the right side as to the right arrow. Specifically, with the funcA, which is a function with one int-type variable as an argument, to be called up three times in the main function (funcX), a program to be called by the reusing command (memoCall) including the priority (5) is generated. Also, with the funcB, which is a function with one int-type variable as an argument, to be called up once in the main function (funcX), a program to be called by the reusing command (memoCall) including the priority (1) is generated.

[Example of Reusing Command According to Third Embodiment of Present Invention]

Next, description will be made regarding a reusing command that the compile processing device 1500 according to the third embodiment of the present invention generates, with reference to the drawing.

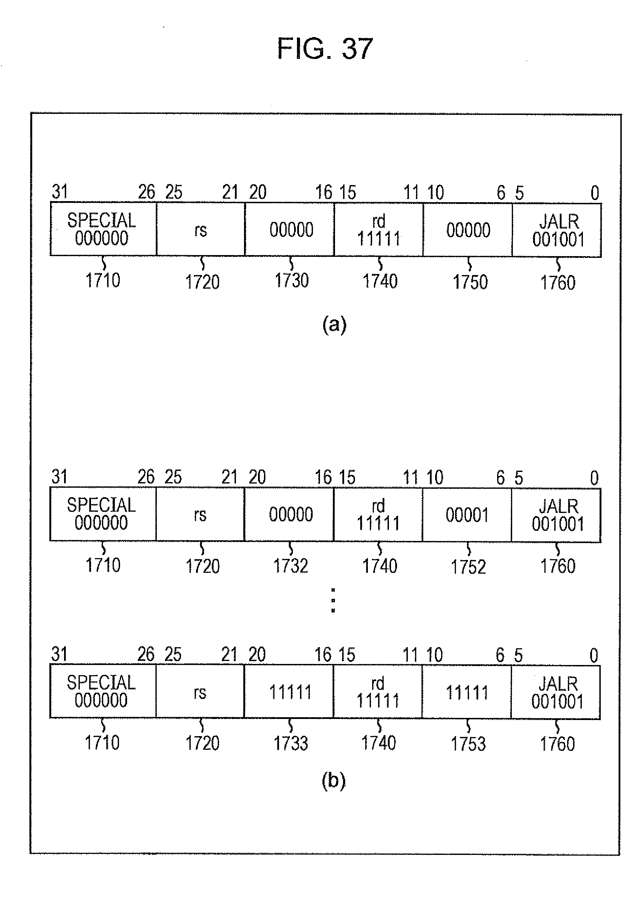

Fig. 37 is a conceptual diagram illustrating an example of a function call-up command and a function reusing command, according to the third embodiment of the present invention. Now, let us assume that the processor core 1300 of the data processing device 1100 is configured of MIPS in the same way as with Fig. 27. Also, here, the left edge indicates the most significant bit (MSB), and the right edge indicates the least significant bit (LSB). In (b) Fig. 37, instead of the first reused field 1731 and second reused field 1751 of a function reusing command in the MIPS shown in (b) in Fig. 27, first reused fields 1732 and 1733, and second reused fields 1752 and 1753 are shown. Note that the functions of the fields other than the first reused fields 1732 and 1733, and second reused fields 1752 and 1753 are the same as with Fig. 27, and accordingly denoted with the same reference numerals, and description regarding the fields will be omitted here.

(a) in Fig. 37 illustrates a JALR command that is a function call-up command (call) in the MIPS command set. As for a function call-up command that will not be reused in the third embodiment of the present invention, in the same way as with the first embodiment of the present invention shown in Fig. 27, the JALR command in the MIPS command set is employed.

(b) in Fig. 37 illustrates an example of a function reusing command according to the third embodiment of the present invention.

The first reused fields 1732 and 1733 are fields indicating that these are reusing commands including priority, along with the second reused fields 1752 and 1753. The first reused fields 1732 and 1733 become a field indicating a 10-bit numeric value indicating priority by being connected to the bit strings of the second reused fields 1752 and 1753.

For example, with the first reused field 1732, along with the second reused field 1752, the value of a bit string in a reusing command having the lowest priority is stored. This first reused field 1732 becomes a 10-bit string (0000000001) by being connected to the second reused field 1752. That is to say, with the data processing device which processes this command, this bit string (0000000001) is determined to indicate priority (1).

Further, with the first reused field 1733, along with the second reused field 1753, the value of a bit string in a reusing command having the highest priority is stored. This first reused field 1733 becomes a 10-bit string (1111111111) by being connected to the second reused field 1753. That is to say, with the data processing device which processes this command, this bit string (1111111111) is determined to indicate priority (1024).

In this way, the reusing command conversion unit 1623 according to the third embodiment can generate a reusing command having different priority by changing the value indicating the bit strings connected between the first reused fields 1732 through 1733 and the second reused fields 1752 through 1753.

[Example of Operation of Compile Processing Device 1500 According to Third Embodiment of Present Invention]

Next, description will be made regarding the processing of the compile processing device 1500 according to the third embodiment of the present invention, with reference to the drawing.

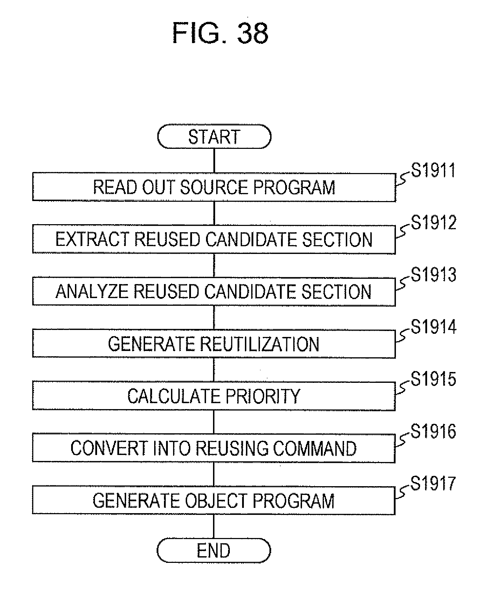

Fig. 38 is a flowchart illustrating the processing procedure of compile processing using the compile processing device 1500 according to the first embodiment of the present invention.

First, the source program is read out from the source program storage unit 1510 by the compile processing device 1500 (step S9111). Next, a reused candidate section is extracted by the reused candidate section extracting unit 1611 (step S1912).

The usage pattern of the reused candidate section is then analyzed by the reused candidate section analyzing unit 1612 (step S1913). Note that step S1913 is an example of the analyzing procedure laid forth in the Claims.

Next, reutilization is generated based on the analysis results of a reused candidate section (step S1914). Note that step S1914 is an example of the reutilization generating procedure laid forth in the Claims.

Subsequently, priority is generated based on the reutilization by the priority generating unit 1622 (step S1915).

A reused candidate section call-up command is converted into a reusing command including priority by the reusing command conversion unit 1623 based on the reutilization and priority (step S1916). This means, in the event that the function is a reused candidate section, that a function call-up command (call) is converted into a reusing command (memoCall) including priority. Note that step S1915 is an example of the command conversion procedure laid forth in the Claims.

Next, an object program that is the code of a machine language program is generated by the code generating unit 1522 based on the program including a converted command (step S1917).

As described above, according to the third embodiment of the present invention, priority is generated, whereby a reused candidate section call-up command to be reused can be converted into a reusing command including priority to be saved in the history memory based on a degree where an execution result will be reused.

<4. Fourth Embodiment>

[Configuration Example of Processor Core 1300 and History Managing Unit 1400]

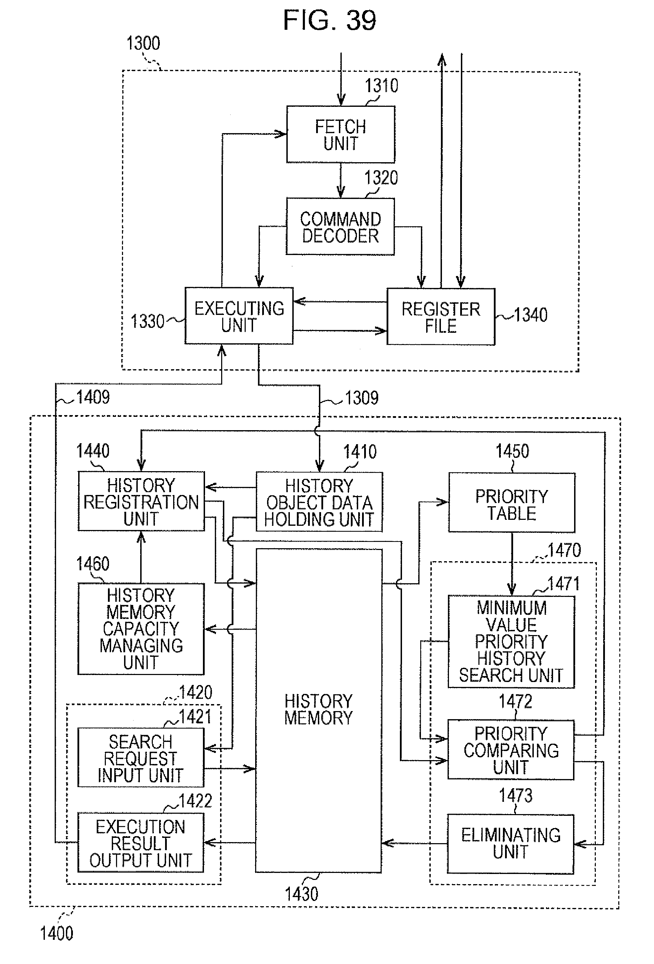

Fig. 39 is a block diagram illustrating a configuration example of the processor core 1300 and history managing unit 1400 according to the fourth embodiment of the present invention. Here, in addition to the configuration shown in Fig. 30, a priority table 1450, a history memory capacity managing unit 1460, and a low priority history eliminating unit 1460 are provided. Here, the functions of the configurations other than the priority table 1450, history memory capacity managing unit 1460, and low priority history eliminating unit 1470 are generally the same as with Fig. 30, and accordingly denoted with the same reference numerals as with Fig. 30, and detailed description thereof will be omitted here.

In the event that a control signal based on a reusing command including priority has been supplied from the command decoder 1320, the executing unit 1330 starts the processing of the reused section that a reusing command including priority specifies. Along with start of this processing, the executing unit 1330 outputs the section identification information and priority of the reused section obtained from the register file 1340 to the history managing unit 1400 via the signal line 1309.

Also, in the event that information for registering an execution history has been prepared, the history object data holding unit 1410 supplies priority to the history registration unit 1440 along with an execution history.

In the event of registering a new execution history in the history memory 1430, the history registration unit 1440 supplies priority to the history memory 1430. Also, at the time of registering a new execution history in the history memory 1430, in the event that the capacity of the new execution history is greater than the space capacity of the history memory informed from the history memory capacity managing unit 1460, this history registration unit 1440 temporarily discontinues the registration. In this case, the history registration unit 1440 then supplies the priority relating to the execution history of which the registration has been temporarily discontinued, to the low priority history eliminating unit 1470.

Also, in the event that information indicating that the priority relating to the new execution history is lower than the priority relating to the already registered execution history has been supplied from the low priority history eliminating unit 1470, this history registration unit 1440 does not register the new execution history.

The priority table 1450 is for holding the priority relating to an execution history registered in the history memory 1430, and the address of an execution history in the history memory 1430 as priority information. For example, in the event that a new execution history has been held in the history memory 1430, this priority table 1450 holds the priority relating to the registered execution history thereof supplied from the history memory 1430, and the address information of the registered execution history thereof as priority information. Then, for example, in the event that an execution history has been eliminated at the history memory 1430, this priority table 1450 eliminates the priority information relating to the eliminated execution history thereof.

Also, this priority table 1450 supplies the priority information of the lowest priority searched by the low priority history eliminating unit 1470 to the low priority history eliminating unit 1470 as elimination candidate information. Note that the priority table 1450 is an example of the priority table laid forth in the Claims.

The history memory capacity managing unit 1460 is for managing the free capacity of the history memory 1430. This history memory capacity managing unit 1460 measures the free capacity of the history memory 1430, for example, each time a new execution history is registered in the history memory 1430. Further, this history memory capacity managing unit 1460 measures the free capacity of the history memory 1430 each time an execution history is eliminated from the history memory 1430. This history memory capacity managing unit 1460 supplies information relating to the free capacity of the history memory 1430 to the history registration unit 1440.

The low priority history eliminating unit 1470 is for eliminating the execution history that the elimination candidate information specifies from the history memory 1430. This low priority history eliminating unit 1470 includes a minimum value priority history search unit 1471, a priority comparing unit 1472, and an eliminating unit 1473.

The minimum priority history search unit 1471 is for searching priority information including the lowest priority from the priority table 1450 as the elimination candidate information. This minimum value priority history search unit 1471 extracts the searched elimination candidate information from the priority table 1450, and supplies the extracted elimination candidate information to the priority comparing unit 1472. Note that the minimum value priority history search unit 1471 is an example of the lowest priority history search unit laid forth in the Claims.

The priority comparing unit 1472 is for comparing priority relating a new execution history, and priority included in the elimination candidate information supplied from the minimum value priority history search unit 1471. In the event that the priority included in the elimination candidate information is lower than the priority relating to a new execution history, this priority comparing unit 1472 then supplies this elimination candidate information to the eliminating unit 1473.

Also, in the event that the priority relating to a new execution history is lower than the priority included in the elimination candidate information, this priority comparing unit 1472 supplies information for discontinuing registration of a new execution history to the history registration unit 1440. Note that the priority comparing unit 1472 is an example of the priority comparing unit laid forth in the Claims.

The eliminating unit 1473 is for eliminating an execution history from the history memory 1430 based on the elimination candidate information supplied from the priority comparing unit 1472. This eliminating unit 1473 eliminates the execution history that an address included in the elimination candidate information supplied from the priority comparing unit 1472 specifies, from the history memory 1430. Note that the eliminating unit 1473 is an example of the eliminating unit laid forth in the Claims.

[Example of Data Structure of History Memory 1430]

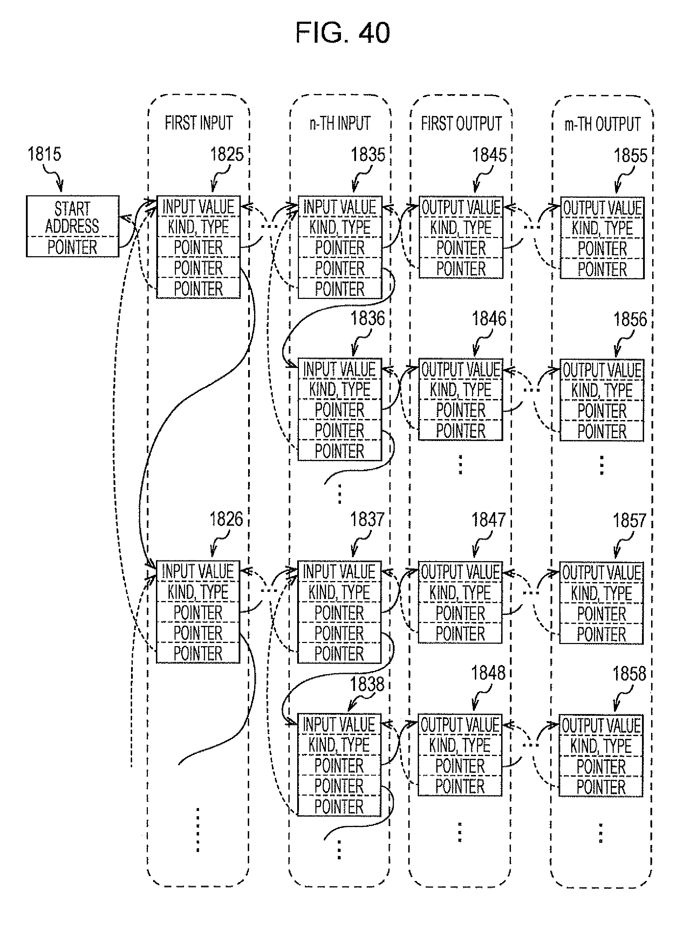

Fig. 40 is a conceptual diagram illustrating an example of the data structure of the history memory 1430 according to the fourth embodiment of the present invention. Here is shown a structure where of execution histories held by the history memory 1430 for each piece of section identification information, execution histories in one piece of section identification information are held by a tree structure. This example assumes a function that includes n arguments, and returns an output that is an execution result to m storage destinations. Also, let us say that the start address of the function is used as section identification information. Further, let us say that m output addresses are taken as the addresses of execution histories in which priority information is registered.

With this example, in a tree structure, a function route 1815, first argument nodes 1825 and 1826, n'th argument nodes 1835 through 1838, first output nodes 1845 through 1848, and m'th output nodes 1855 through 1858 are shown.

With the function route 1815, in the same way as with the function route 1810 according to the first embodiment shown in Fig. 31, the start address of a function that is section identification information, and a pointer pointing to the first argument node 1825 are shown.

With the first and n'th argument nodes 1825, 1826, and 1835 through 1838, in the same way as with the first and n'th argument nodes 1821, 1822, and 1831 through 1834 according to the first embodiment shown in Fig. 31, the input value, type, and kind of an argument are shown.

Also, with the first and n'th argument nodes 1825, 1826, and 1835 through 1838, in the same way as with the argument nodes 1821, 1822, and 1831 through 1834 according to the first embodiment shown in Fig. 31, a right pointer and a lower pointer are shown. Further, with the first and n'th argument nodes 1825, 1826, and 1835 through 1838, in the event that elimination from the history memory 1430 is performed, an elimination pointer pointing to the argument node of the next argument is indicated with an arrow with a dotted line. Also, the n'th argument nodes 1835 through 1838 are connected to the first output nodes 1845 through 1848, respectively.

With the first and m'th output nodes 1845 through 1848, and 1855 through 1858, in the same way as with the output nodes 1841 through 1844, and 1851 through 1854 according to the first embodiment shown in Fig. 31, the output value, kind, and type of a result after execution of an execution history are shown. Also, with the first output nodes 1845 through 1848, in the same way as with the output nodes 1841 through 1844 according to the first embodiment, a right pointer is shown. Further, with the first and m'th output nodes 1845 through 1848, and 1855 through 1858, in the event that elimination from the history memory 1430 is performed, an elimination pointer pointing to the argument node of the next argument is indicated with an arrow with a dotted line.

The input value comparison processing in such a tree structure is the same as the input value comparison processing in the tree structure according to the first embodiment shown in Fig. 31, and accordingly, detailed description thereof will be omitted here.

With such a tree structure, in the event of eliminating an execution history from the history memory 1430, upon the address of the m'th output node relating to the execution history thereof being supplied from the eliminating unit 1473, elimination of the execution history is started from the output node of the address thereof. In this case, output nodes from the specified m'th output node thereof to the first output node are extracted with reference to the corresponding elimination pointer, and the n'th input node that the elimination pointer of the first output node points to is referenced, and also the output nodes are eliminated.

Next, elimination of an input node relating to an execution history to be eliminated from the history memory 1430 is started from the n'th input node. In this case, when the input node pointed to by the elimination pointer holds a right pointer or lower pointer as to other than the node that holds the elimination pointer, the input node thereof is not eliminated.

With the non-eliminated input node thereof, the pointer pointing to the eliminated input node is then eliminated, and thus, elimination of input nodes is ended. Also, with the first input node, in the event that a right pointer or a lower pointer, which points to other than the eliminated input node, are not held, the function route 1815 is also eliminated, and elimination of an execution history is ended.

For example, in the event that the address of the output node 1855 in the m'th output node has been supplied from the eliminating unit 1473, elimination of the execution history relating to this output node is started from the output node 1855 thereof. Thus, from the output node 1855 to the first output node 1845 are extracted by referencing elimination pointers, the n'th input node 1835 that the elimination pointer of the first output node 1845 points to is referenced, and also the output nodes from the output node 1845 through 1855 are eliminated.

Next, whether or not the n'th input node 1835 includes a right pointer or lower pointer as to other than the output node 1845 is detected. In this case, the n'th input node 1835 points to the first output node 1845 using a right pointer, and accordingly, whether or not a lower pointer that points to the n'th input node 1836 is included in the n'th input node 1835 is detected.

In this case, when the n'th input node 1836 is held in the history memory 1430, and a lower pointer is included in the n'th input node 1835, n'th input node 1835 is not eliminated, and the right pointer in the n'th input node 1835 is eliminated. Elimination of an execution history is then ended.

On the other hand, when the n'th input node 1836 is not held in the history memory 1430, and a lower pointer is not included in the n'th input node 1835, the input node that the elimination pointer of the n'th input node 1835 points to is referenced, and also the n'th input node 1835 is eliminated. Elimination of an input node is then repeated until an input node not to be eliminated is detected, or all of the input nodes are eliminated, and the function route 1815 is eliminated.

[Example of Data Structure of Priority Table 1450]

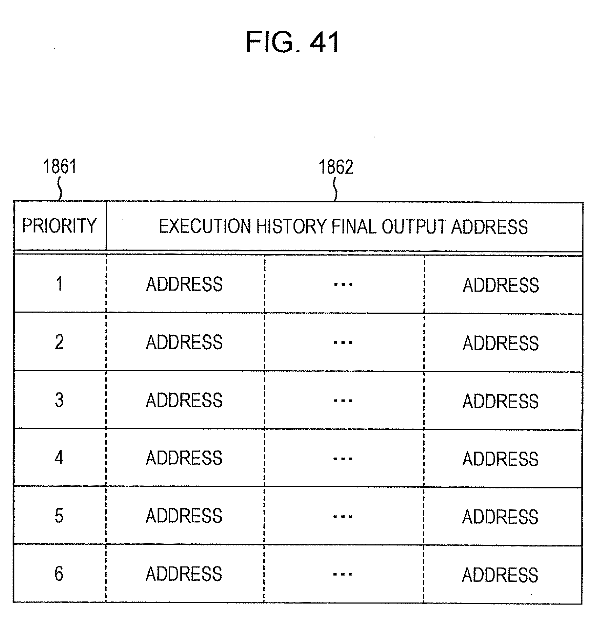

Fig. 41 is a conceptual diagram illustrating an example of the data structure of the priority table 1450 according to the fourth embodiment of the present invention. Here, as an example, a priority of 1 through 6, and an address relating to an execution history generated by a reusing command including this priority are shown.

With a priory column 1861, priorities registered in the priority table 1450 are shown. With this priority column 1861, all of the priorities relating to execution histories registered in the history memory 1430 are stored. For example, in the event that an execution history generated by a reusing command including a priority of 1 through 6 is held in the history memory 1430, the priority of 1 through 6 is stored in the priority column 1861.

With an execution history final output address column 1862, the final output address of an execution history in the history memory 1430 generated by a reusing command including a priority shown in the priority column 1861 is shown. An example of this final output address is an address of the m'th output nodes 1855 through 1858 shown in Fig. 41.

With this example, for example, in the event that an execution history of a reused section of which the priority is "6" has newly been registered in the history memory 1430, the priority (6) and the address of the m'th output node in the history memory 1430 are supplied from the history memory 1430 to the priority table 1450. In this case, when the priority (6) is already registered in the priority column 1861, the priority table 1450 adds the address of the m'th output node of new priority information to the execution history final output address column 1862 as to the priority (6) thereof.

Also, in this case, in the event that the priority (6) has not been registered in the priority column 1861, the priority table 1450 newly registers this, and also generates the execution history final output address column 1862 as to the priority (6) thereof, and registers the address of the m'th output node of the new priority information.

[Example of Execution History to Be Saved in Processor Core 1300 and History Managing Unit 1400 According to Fourth Embodiment of Present Invention]

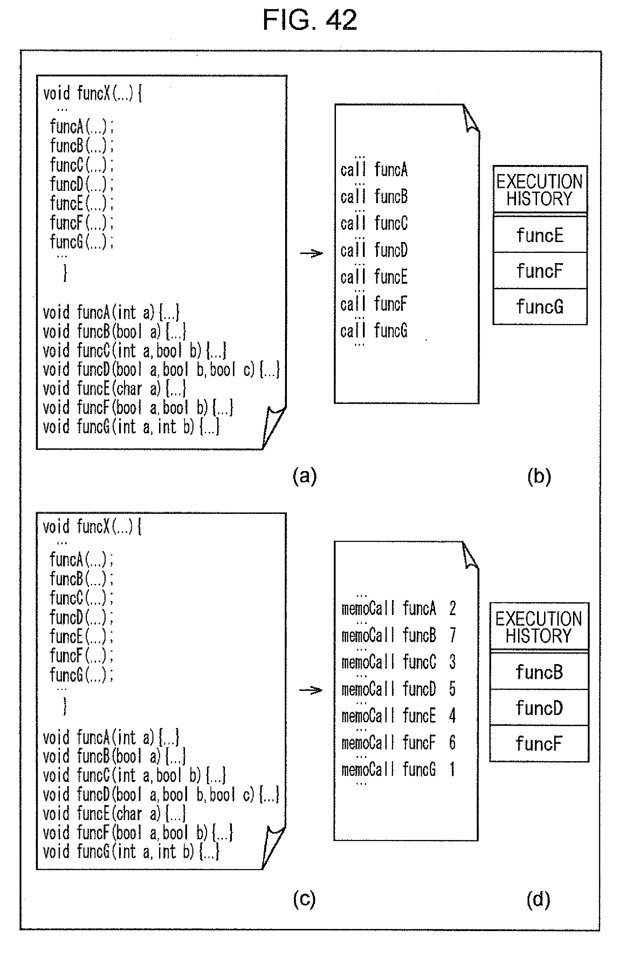

Fig. 42 is a conceptual diagram illustrating an example of a program to be processed by the processor core 1300, and execution histories to be saved by the history managing unit 1400, according to the fourth embodiment of the present invention. Here are represented a case where execution histories are saved using a conventional technique, and a case where execution histories are saved using the fourth embodiment of the present invention. Now, let us assume that execution of the converted program will be performed in order form the top of the program shown here.

(a) in Fig. 42 is a schematic diagram illustrating a conversion example of a source program using a conventional technique. Here is shown a source program to be converted by a conventional technique within a frame positioned in the left side as to a right arrow using the C language. Also, an example of the program converted by a conventional technique is shown within a frame positioned in the right side as to the right arrow using the assembly language.

With the source program, a main function (funcX) of the program, and seven functions to be called up by the main function thereof are shown. As these seven functions, a function with one int-type variable as an argument (funcA), a function with one bool-type variable as an argument (funcB), and a function with one int-type variable and one bool-type variable as arguments (funcC) are shown. Further, a function with three bool-type variables as arguments (funcD), a function with one char-type variable as an argument (funcE), and a function with two bool-type variables as arguments (funcF) are shown. Also, a function with two int-type variables as arguments (funcG) is shown.

In the event of specifying a function as a reused section, this source program is converted into a program with all of the functions as objects of reusing by a compile processing device according to a conventional technique with all of the functions as objects of reusing. As a result thereof, as shown within the frame positioned in the right side as to the right arrow, the funcA through G are called up by a call-up command (call), and a program that reuses all of the execution results of the funcA through G is generated.

(b) in Fig. 42 is a schematic diagram illustrating an example of execution histories to be saved in the history memory 1430 in the case that the program shown within the frame positioned in the right side of the right arrow in (a) in Fig. 42 has sequentially been executed one at a time from the top. Note here that let us say that the history memory where execution histories will be registered can register execution histories relating to three functions regardless of the types or number of input values and output values for convenience. Also, in the same way as with (a) in Fig. 32, let us say that when registering a new execution history, in the event that there is no free space in the history memory, after an execution history that has been unused for the longest period is eliminated from the history memory, the new execution history is registered in the history memory. Further, in the same way as with (a) in Fig. 32, let us say that call-up commands of the converted program shown in (a) in Fig. 42 will be executed one at a time in order from the top.

The registration method of execution histories in the history memory according to a conventional technique is the same as the method shown in (b) in Fig. 32, and accordingly, detailed description thereof will be omitted here. As a result of the call-up commands of the converted program in (a) in Fig. 42 being executed one at a time in order from the top, as shown in (b) in Fig. 42, the execution histories of the three functions of the funcE through G have been registered in the history memory.

As described above, with a conventional technique, an execution history having high a probability to be reused is not always registered in the history memory. Therefore, there may be caused depending on a program to be executed a case where the execution history of a function that will not be reused at all is registered in the history memory, and the advantage of reuse does not work.

(c) in Fig. 42 is a schematic program illustrating a conversion example of the source program according to the first embodiment of the present invention. Now, let us assume that the reutilization generating unit 1621 generates reutilization based on a combination of values that the input value of a function can take.

Here is shown the same source program as the source program shown in (a) in Fig. 42 within a frame positioned in the left side as to a right arrow using the C language. Also, an example of the program converted by the third embodiment of the present invention is shown within a frame positioned in the right side as to the right arrow using the assembly language.

This source program is, in the same way as with the source program shown in (c) in Fig. 32, analyzed by the reused candidate section analyzing unit 1612, and then, reutilization is generated by the reutilization generating unit 1621 in the same way.

As a result thereof, the highest reutilization is generated as to the funcB with one bool-type variable as an argument, and the second highest reutilization is generated as to the funcF with two bool-type variables as arguments. Also, the third highest reutilization is generated as to the funcD with three bool-type variables as arguments, and the fourth highest reutilization is generated as to the funcE with one char-type variable as an argument. Further, the fifth highest reutilization is generated as to the funcC with one int-type variable and one bool-type variable as arguments, and the sixth highest reutilization is generated as to the funcF with one int-type variable as an argument. The lowest reutilization is then generated as to the funcG with two int-type variables as arguments.

Next, the priorities of the seven functions (funcA through G) are generated by the priority generating unit 1622. The priority generating unit 1622 generates priority based on reutilization, thereby generating priority (7) that is the highest priority as to the function (funcB) of which the reutilization is the highest, and generating priority (6) that is the second highest priority as to the function (funcF) of which the reutilization is the second highest. Further, the priority generating unit 1622 generates priority (5) that is the third highest priority as to the function (funcD) of which the reutilization is the third highest, and generates priority (4) that is the fourth priority as to the function (funcE) of which the reutilization is the fourth highest. Also, the priority generating unit 1622 generates priority (3) that is the fifth highest priority as to the function (funcC) of which the reutilization is the fifth highest, and generates priority (2) that is the sixth priority as to the function (funcA) of which the reutilization is the sixth highest. The priority generating unit 1622 then generates priority (1) that is the lowest priority as to the function (funcG) of which the reutilization is the lowest.

The reusing command conversion unit 1623 then converts a reused section call-up command for reusing an execution result into a reusing command including priority based on the priority. In the case of (c) in Fig. 42, the reusing command conversion unit 1623 does not take the capacity of the history memory into consideration, thereby converting all of the function call-up commands having generated priority into reusing commands including priority.

As a result thereof, the reusing command conversion unit 1623 generates a program where the call-up commands (call) of the seven functions (funcA through G) have been converted into reusing command (memoCall) including priority.

(d) in Fig. 42 illustrates an example of execution histories to be registered based on the program shown in the frame positioned in the right side of the right arrow in (c) in Fig. 42. Now, let us say that the history memory 1430 can register an execution history relating to three functions regardless of the types and number of input values and output values. Also, now, let us say that the commands of the converted program shown in (a) in Fig. 42 will be executed one at a time in order from the top.

The processor core 1300 according to the fourth embodiment of the present invention outputs the execution histories of the funcA through G to be called up by a reusing command (memoCall) including priority to the history managing unit 1400 based on the converted program shown in (a) in Fig. 42. First, the funcA is called up as a reused section, and the execution history of the funcA is registered in the history memory 1430. At this time, the address and priority of the m'th output node of the execution history shown in Fig. 40 are supplied from the history memory 1430 to the priority table 1450, and registered in the priority table 1450 as priority information. Then, the two functions (funcB and C) to be called up following the funcA are also, in the same way as with the funcA, called up as a reused section, and then the execution history is registered, and also the priority information is registered in the priority table 1450.

Thereafter, in a state in which there is no free space in the history memory, the funcD is called up as a reused section. At this time, the priority comparing unit 1472 compares the priority (5) relating to the execution history of the funcD, and the priority (2) of the elimination candidate information (the priority information of the funcA) searched by the minimum value priority history search unit 1471 from the priority table 1450. As a result of this, the minimum value priority history search unit 1471 supplies the elimination candidate information (the priority information of the funcA) to the eliminating unit 1473. The eliminating unit 1473 then eliminates the execution history of the funcA based on the supplied elimination candidate information. At this time, the priority table 1450 eliminates the priority information of the funcA in accordance with the elimination information of the execution history of the funcA supplied from the priority table 1450. The history registration unit 1440 then registers the execution history of the funcD in the history memory 1430 after confirming the free space of the history memory 1430 based on the free space information of the history memory 1430 supplied from the history memory capacity managing unit 1460. Also, along with the registration of the execution history of the funcD, the priority information relating to the execution history of the funcD is registered in the priority table 1450.

Next, the funcE is called up as a reused section. At this time, in the same way as with the case of the funcD, the priority comparing unit 1472 compares the priority (4) relating to the execution history of the funcE, and the priority (3) of the elimination candidate information (the priority information of the funcC). As a result of this comparison, determination is made that the priority (3) of the elimination candidate information (the priority information of the funcC) is lower, and in the same way as with the case of the funcD, and the execution history of the funcC is eliminated from the history memory 1430, and the execution history of the funcE is newly registered in the history memory 1430.

The funcF is then called up as a reused section. As a result of the comparison by the priority comparing unit 1472, determination is made that the priority (4) of the elimination candidate information (the priority information of the funcE) is lower than the priority (6) relating to the execution history of the funcF. Then, in the same way as with the cases of the funcD and funcE, the execution history of the funcE is eliminated from the history memory 1430, and the execution history of the funcF is newly registered in the history memory 1430.

Finally, the funcG is called up as a reused section. As a result of the comparison by the priority comparing unit 1472, determination is made that the priority (1) relating to the execution history of the funcG is lower than the priority (5) of the elimination candidate information (the priority information of the funcD). The priority comparing unit 1472 then supplies information for discontinuing the registration of the execution history of the funcG, to the history registration unit 1440. Thus, the history registration unit 1440 discontinues the registration of the execution history of the funcG as to the history memory 1430.

In this way, as a result of the call-up commands of the converted program in (c) in Fig. 42 being executed one at a time in order from the top, as shown in (d) in Fig. 42, the execution histories of the funcB, funcD and funcF have been registered in the history memory.

As described above, according to the fourth embodiment of the present invention, the execution histories are registered in the history memory 1430 in accordance with priority, whereby a function having a high probability to be reused can constantly be registered in the history memory 1430.

[Example of Operation of Processor Core 1300 and History Managing Unit 1400 According to Fourth Embodiment of Present Invention]

Next, description will be made regarding the processing of the processor core 1300 and history managing unit 1400 according to the fourth embodiment of the present invention, with reference to the drawing.

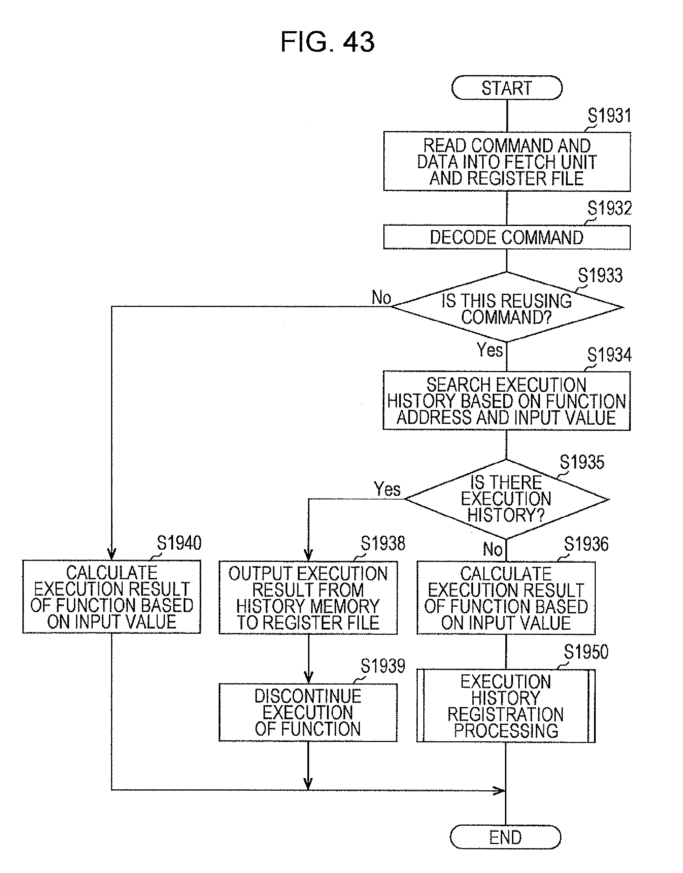

Fig. 43 is a flowchart illustrating the processing procedure of the function execution processing using the processor core 1300 and history managing unit 1400 according to the fourth embodiment of the present invention.

First, a command referencing a function, and an input value of the function thereof are read into the fetch unit 1310 and register file 1340 (step S1931). Next, the command referencing the function is decoded at the command decoder 1320 (step S1932). Subsequently, whether or not the decoded command is a reusing command is analyzed (step S1933). As a result of the analysis, in the event that the decoded command is not a reusing command, the function thereof is executed by the executing unit 1330 based on the input value supplied from the register file 1340, and the execution result is output (step S1940). The function execution processing is then ended.

On the other hand, in the event that the decoded command is a reusing command, an execution history is searched from the history memory 1430 by the search request input unit 1421 using the start address and input value of the function supplied from the executing unit 1330 (step S1934).

Next, determination is made whether or not there is an execution history (step S1935). In the event that there is an execution history in the history memory 1430, the execution result is output by the execution result output unit 1422 (step S1938). Subsequently, the executing unit 1330 discontinues execution of the function of which the execution result has been output (step S1939). Execution of the function is then ended.

On the other hand, in the event that there is no execution history in the history memory 1430, the function thereof is executed by the executing unit 1330 based on the input value supplied from the register file 1340, and the execution result is output (step S1936). The registration processing of the execution history according to the free space of the history memory 1430 is then performed by the history registration unit 1440 (step S1950). Execution of the function is then ended.

Next, the processing in step S1950 according to the fourth embodiment of the present invention will be described with reference to the drawing.

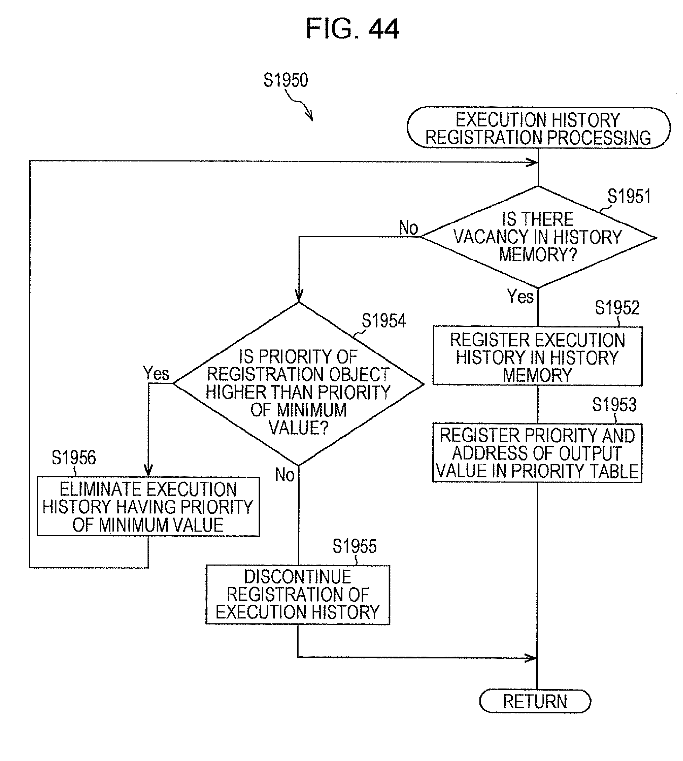

Fig. 44 is a flowchart illustrating a processing procedure example of the execution history registration processing (step S1950) using the history managing unit 1400 according to the fourth embodiment of the present invention.

First, determination is made by the history registration unit 1440 whether or not there is free space for registering a new execution history in the history memory 1430, based on the information of the free space of the history memory 1430 supplied from the history memory capacity managing unit 1460 (step S1951). In the event that there is free space thereof in the history memory 1430, the execution history is registered in the history memory 1430 (step S1952). Next, the priority of the execution history thereof, and the address of the final output node in the history memory 1430 are registered in the priority table 1450 (step S1953). The execution history registration processing is then ended.

On the other hand, in the event that there is no free space for registering a new execution history in the history memory 1430, the priority of a new execution history, and the priority of the priority information of which the priority searched by the minimum value priority history search unit 1471 is the minimum value are compared by the priority comparing unit 1472 (step S1954). Then, in the event that the priority of a new execution history is lower than the priority of the priority information, registration of a new execution history as to the history memory 1430 is discontinued (step S1955). The execution history registration processing is then ended.

Also, in the event that the priority of a new execution history is higher than the priority of the priority information, the execution history that the priority information thereof points to is eliminated from the history memory 1430 by the eliminating unit 1473 (step S1956). The flow then returns to step S1951, and the processing is repeated.

As described above, according to the fourth embodiment of the present invention, an execution history is registered in the history memory 1430 in accordance with priority, whereby a function having a high probability to be reused can constantly be registered in the history memory 1430.

As described above, according to the present embodiment, a command section call-up command is converted into a reusing command based on reutilization, whereby only the execution history of a command section having a high probability to be reused can be held in the history memory 1430. Thus, efficiency wherein an execution history will be reused can be improved.

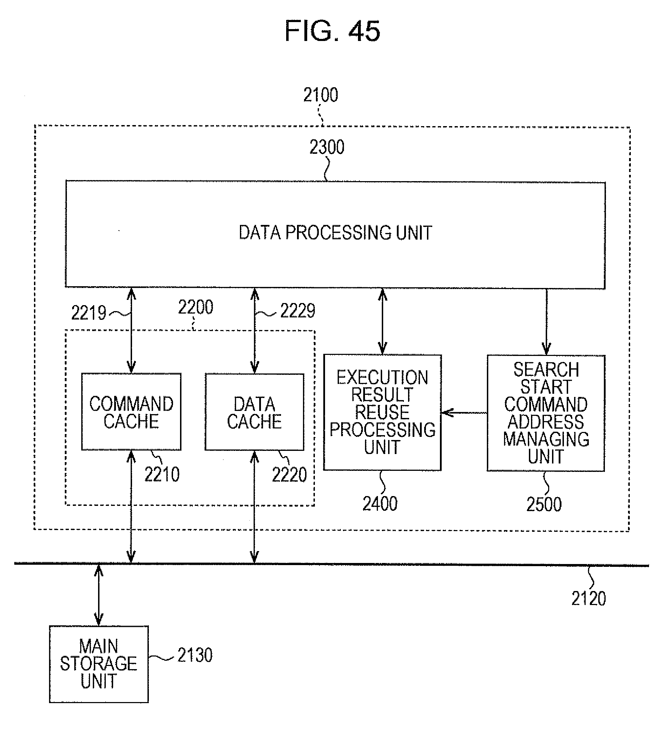

Next, description will be made regarding the data processing device, data processing method, program analysis processing device, and program analysis processing method, which are the third present invention, with reference to Fig. 45 through Fig. 60.

A mode for implementing the third present invention (hereafter, referred to as embodiment) will be described below.

Description will be made in accordance with the following sequence.

1. First Embodiment (Data Processing Control: An example of Pre-registration of an input value setting command address)
2. Second Embodiment (Program Analysis Processing: An extraction example of an input value setting command address)
3. Third Embodiment (Data Processing Control: A registration example of an input value setting command address during execution of a program)
4. Fourth Embodiment (History Data Transfer Control: An example wherein history Data is read into the history memory from the outside of the data processing device for ever program execution)

<1. First Embodiment>

[Configuration Example of Data Processing Device]

Fig. 45 is a block diagram illustrating a configuration example of the data processing device according to the first embodiment of the present invention. Here is shown a data processing device 2100, a bus 2120, and a main storage unit 2130 which make up an integrated circuit. This integrated circuit is for executing processing at the data processing device 2100 in accordance with a command string that is to be read out from the main storage unit 2130 via the bus 2120.

The data processing device 2100 includes a primary cache 2200, a data processing unit 2300, an execution result reuse processing unit 2400, and a search start command address managing unit 2500. Note that the data processing device 2100 is an example of the data processing device laid forth in the Claims.

The primary cache 2200 is memory for reducing delay time caused due to processing at the time of reading out or writing a command and data from the main storage unit 2130 via the bus 2120. This primary cache 2200 is realized by DRAM (Dynamic Random Access Memory), for example.

This primary cache 2200 includes a command cache 2210 and a data cache 2220. The command cache 2210 temporarily holds the past command read out from the main storage unit 2130. This command cache 2210 outputs the held command thereof to the data processing unit 2300 via a command line 2219 in accordance with a request from the data processing unit 2300.

This command cache 2210 outputs, in the event of holding a command requested from the data processing unit 2300, the requested command thereof of multiple held commands thereof to the data processing unit 2300. On the other hand, in the event of holding no command requested from the data processing unit 2300, the command cache 2210 holds a command read out from the main storage unit 2130 by the data processing unit 2300.

The data cache 2220 is for temporarily holding the past data read out from the main storage unit 2130. This data cache 2220 outputs the held data thereof to the data processing unit 2300 via a data line 2229 in accordance with a request from the data processing unit 2300.

This data cache 2220 outputs, in the event of holding data requested from the data processing unit 2300, the requested data thereof of a plurality of held data thereof to the data processing unit 2300. On the other hand, in the event of holding no data requested from the data processing unit 2300, the data cache 2220 holds data read out from the main storage unit 2130 by the data processing unit 2300. Also, in the event that data to be written back to the main storage unit 2130 has been supplied from the data processing unit 2300, the data cache 2220 holds the data thereof.

The data processing unit 2300 is for executing processing based on a command read out from the main storage unit 2130. This data processing unit 2300 reads out a command from the main storage unit 2130 via the command cache 2210, and in accordance with the read command thereof, reads out data stored in the main storage unit 2130 via the data cache 2220, for example. Also, the data processing unit 2300 executes computation based on a computation command using the read data thereof, for example.

Also, for example, in the event of executing processing in a command section of a function, the data processing unit 2300 uses an input value of an argument in the function from the data cache 2220 to execute the computation of the function thereof, and outputs an execution result serving as a result of the computation to the data cache 2220. At this time, the data processing unit 2300 outputs the input value and execution result in the function thereof to the execution result reuse processing unit 2400. This data processing unit 2300 is realized by a processor core, for example.

The execution result reuse processing unit 2400 is, in the event that an input value in a command section executed in the past, and an input value in a command section to be executed again match, for executing execution result reuse processing for reusing an execution result in the command section executed in the past. Now, of command sections to be executed multiple times, a command section whereby the execution result in the command section executed in the past can be reused will be referred to as a reused section. That is to say, this reused section is a command section wherein of command sections to be executed multiple times, if input values in command sections are the same, execution results thereof are also the same.

This execution result reuse processing unit 2400 holds an input value and an execution result in a reused section to be executed multiple times as an execution history. Also, in the even that an input value in the reused section to be executed again, and the input value of the held execution history thereof are the same, this execution result reuse processing unit 2400 outputs the execution result in the held execution history thereof to the data processing unit 2300. Along therewith, the execution result reuse processing unit 2400 informs instructions for skipping processing in the reused section to the data processing unit 2300.

For example, in the event that the input value of an argument of a function that is a reused section, and the input value in the held execution history thereof match, the execution result reuse processing unit 2400 outputs the execution result in the held execution history thereof to the data processing unit 2300. Along therewith, the execution result reuse processing unit 2400 informs the instructions for skipping the processing in the function thereof to the data processing unit 2300.

The search start command address managing unit 2500 is for managing a command address serving as a reference for starting search of an execution history in the execution result reuse processing unit 2400. This search start command address managing unit 2500 manages a command address as a reference indicating timing for starting comparison between an input value in an execution history held in the execution result reuse processing unit 2400, and an input value set for execution of a reused section, for each reused section. Also, the search start command address managing unit 2500 instructs the execution result reuse processing unit 2400 to start search of an execution history based on the managed command address thereof.

The bus 2120 is for performing communication between the data processing device 2100 and the main storage unit 2130. This bus 2120 transfers a program stored in the main storage unit 2130 to the data processing device 2100. Also, this bus 2120 transfers the data output from the data processing device 2100 to the main storage unit 2130.

The main storage unit 2130 is for storing a program causing the data processing device 2100 to execute the processing. Now, let us assume that this program is a program generated based on the rule of the ABI (Application Binary Interface). This program is generated based on SPARC (Scalable Processor Architecture) _ABI, for example. With such a program, an input value in a function, and a place where an execution result is stored can be determined by the data processing device 2100, and accordingly, reuse of an execution result can be realized.

[Configuration Example of Data Processing Unit 2300 and Execution Result Reuse Processing Unit 2400]

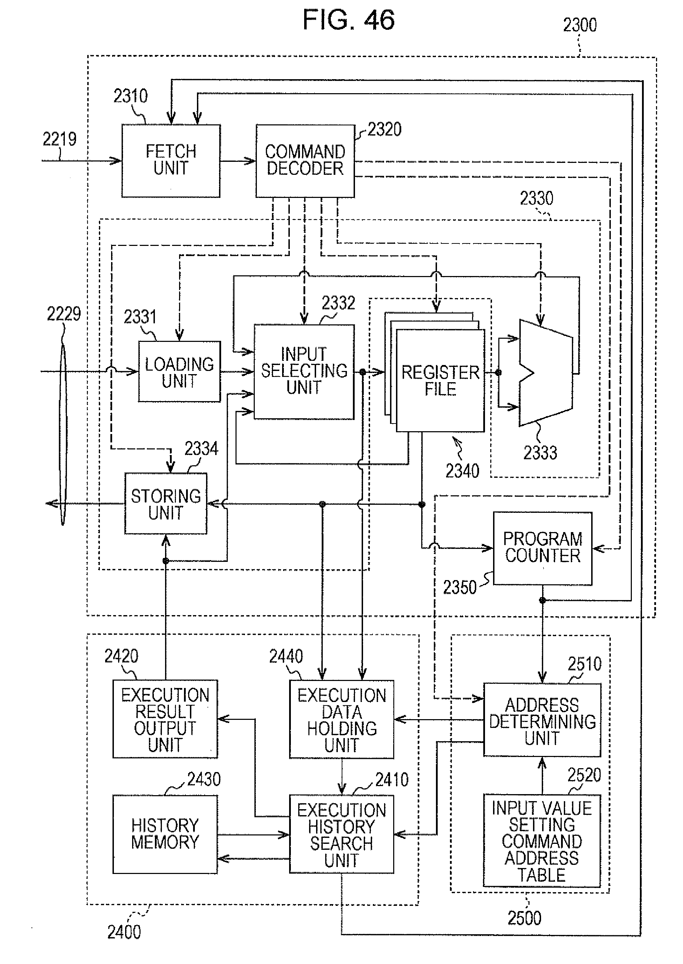

Fig. 46 is a block diagram illustrating a configuration example of the data processing unit 2300 and execution result reuse processing unit 2400 according to the first embodiment of the present invention.

The data processing unit 2300 includes a fetch unit 2310, a command decoder 2320, an executing unit 2330, and a register file 2340. This executing unit 2330 includes a loading unit 2331, an input selecting unit 2332, a computing circuit 2333, a storing unit 2334, and a program counter 2350.

Also, the execution result reuse processing unit 2400 includes an execution history search unit 2410, an execution result output unit 2420, and history memory 2430. Further, the search start command address managing unit 2500 includes an address determining unit 2510, and an input value setting command address table 2520.

The fetch unit 2310 is for reading out a command held in the command cache 2210, or a command stored in the main storage unit 2130 via the command line 2219. This fetch unit 2310 reads out a command from the command cache 2210 in accordance with the command address output from the program counter 2350.

For example, before a call-up command for calling out a function that is a reused section, this fetch unit 2310 reads out an input value setting command for setting an input value of an argument in the function thereof. After the input value setting command thereof is read out, the fetch unit 2310 then reads out the call-up command of the function thereof.

Also, the fetch unit 2310 supplies the read command thereof to the command decoder 2320. Also, in the event that a function omission signal for reusing an execution result in the history memory 2430 has been supplied from the execution history search unit 2410, the fetch unit 2310 supplies a command for setting the execution result thereof to the command decoder 2320, for example.

The command decoder 2320 is for interpreting (decoding) the command supplied from the fetch unit 2310, and based on the decoded contents thereof, controlling the executing unit 2330, register file 2340, and address determining unit 2510.

In the event that an input value setting command have been supplied from the fetch unit 2310, this command decoder 2320 supplies an input value setting signal to the address determining unit 2510 to hold the input value of an argument of the function in the execution data holding unit 2440. In this case, the command decoder 2320 determines whether or not the command supplied from the fetch unit 2310 is an input value setting command for setting the input value of an argument of the function. This command decoder 2320 determines whether or not the command from the fetch unit 2310 is an input value setting command, for example, based on the rule of the ABI. Now, a determination example based on the rule of the ABI of the MIPS (Microprocessor without Interlocked Pipeline Stages) will briefly be described.

With the rule of the MIPS, for example, in the event that all of the input values of arguments are integers, when the number of arguments is four or less, an input value is stored in register numbers 4 through 7 in the register file 2340. Also, when the number of arguments is five or more, the input values of the fifth argument and thereafter are stacked in a stack region in the main storage unit 2130. Specifically, the input values of the fifth argument and thereafter are stacked in the stack region in the main storage unit 2130 corresponding to a value obtained by adding a value of 16 or more to the stack point value stored in the register number 29 of the register file 2340.

Accordingly, for example, in the event that the transfer destination register indicated in a load word command (1w) is the register number 4 through 7, the command decoder 2320 determines this to be an input value setting command. Also, in the event that the number of arguments is five or more, and also all of the arguments are integers, the transfer destination register indicated in a store word command (sw) is the register number 29, and also an offset value thereof is "16" or more, and accordingly, the command decoder 2320 determines the this to be an input value setting command.

In this way, the command decoder 2320 determines, based on the storage destination of dada indicated in the command supplied from the fetch unit 2310, whether or not the command thereof is an input value setting command. In the event that the command supplied from the fetch unit 2310 is determined to be an input value setting command, the command decoder 2320 then supplies an input value setting signal to the address determining unit 2510 to hold the data output from the input selecting unit 2332 in the execution data holding unit 2440 as the input value of an argument.

For example, in the event of having accepted an input value setting command for setting the input value of the function read out from the main storage unit 2130, this command decoder 2320 performs control so as to store the input value read out from the loading unit 2331 in the register file 2340. Along therewith, the command decoder 2320 supplies the input value setting signal to the address determining unit 2510.

Also, for example, in the event of having accepted an input value setting command for setting the data stored in the register file 2340 as the input value of the function, the command decoder 2320 transfers the input value stored in one register of the register file 2340 to another register. Along therewith, the command decoder 2320 supplies the input value setting signal to the address determining unit 2510.

Also, in the event of having accepted a call-up command for calling out a function after the input value setting command, the command decoder 2320 supplies a function call-up signal to the effect that the command decoder 2320 will jump to the head address of the function to the address determining unit 2510. That is to say, in the event of having accepted a function call-up command, this command decoder 2320 supplies a function call-up signal to the address determining unit 2510 to inform timing for executing reuse processing of an execution result in the history memory 2430.

Also, the command decoder 2320 determines from the storage location of data indicated in a command from the fetch unit 2310 whether or not the command thereof is an input value reference command for referencing an input value that is an argument of a function, for example, based on the rule of the MIPS. In the event of having accepted an input value reference command, this command decoder 2320 supplies an input value reference signal to the address determining unit 2510. Also, in the event of having accepted a function return command, the command decoder 2320 supplies a function return signal to the address determining unit 2510.

Also, the command decoder 2320 determines from the storage location of data indicated in a command from the fetch unit 2310 whether or not the command thereof is an execution result setting command for setting the execution result according to execution of a function, based on the rule of the MIPS. In the event of having accepted an execution result setting command, this command decoder 2320 supplies an execution result setting signal to the address determining unit 2510 to be held at the execution data holding unit 2440.

Also, in the event of having accepted a function return command, the command decoder 2320 supplies a function return signal to the address determining unit 2510. Also, the command decoder 2320 sets the value of the program counter 2350 based on the command supplied from the fetch unit 2310.

The executing unit 2330 is for executing processing in accordance with the control from the command decoder 2320. This executing unit 2330 executes processing based on a command string including multiple command sections. That is to say, this executing unit 2330 executes processing based on a command string including a reused section that is a command section to be executed multiple times. This executing unit 2330 outputs the input value and execution result of a function that is a reused section to the register file 2340 or main storage unit 2130, and also supplies to the execution data holding unit 2440.

This executing unit 2330 sets, before a call-up command of a function, the input value of the function thereof to the register file 2340 or main storage unit 2130, for example, by execution of an input value setting command, and also outputs to the execution data holding unit 2440. This executing unit 2330 references the input value set by an input value setting command by execution of an input value reference command, and also outputs the referenced input value thereof to the execution data holding unit 2440, for example. This executing unit 2330 outputs the numeric value of an argument, the type of an argument, and the storage location of an argument in a function to the execution data holding unit 2440 as input values, for example. Note that the executing unit 2330 is an example of the executing unit laid forth in the Claims.

The loading unit 2331 is for reading out, in accordance with the control from the command decoder 2320, data from the main storage unit 2130 or data cache 2220, and supplying the read data thereof to the input selecting unit 2332. This loading unit 2331 reads out, in accordance with the control from the command decoder 2320, the input value of an argument in a function from the main storage unit 2130 or data cache 2220, and supplies the read input value thereof to the input selecting unit 2332.

The input selecting unit 2332 is for selecting, in accordance with the control from the command decoder 2320, any one data of the data output from the execution result output unit 2420, computing circuit 2333, register file 2340, and execution result output unit 2420.

This input selecting unit 2332 outputs the selected data thereof to the register file 2340 and execution data holding unit 2440. That is to say, this input selecting unit 2332 outputs, in accordance with the control of the command decoder 2320, one of the outputs of the execution result output unit 2420, computing circuit 2333, register file 2340, and execution result output unit 2420 to the register file 2340 and execution data holding unit 2440.

For example, in the event that a load word command has been supplied to the command decoder 2320 as an input value setting command, this input selecting unit 2332 outputs the data from the loading unit 2331 to the register file 2340 and execution data holding unit 2440 in accordance with the control of the command decoder 2320.

Also, for example, in the event that a move command has been supplied as an input value setting command, this input selecting unit 2332 outputs the data in the register file 2340 to the register file 2340 and execution data holding unit 2440 in accordance with the control of the command decoder 2320.

Also, in the event that a computing command for executing computation has been supplied to the command decoder 2320, the input selecting unit 2332 outputs the computation result output from the computing circuit 2333 to the register file 2340 as an execution result in accordance with the control of the command decoder 2320. Also, in the event that an execution result has been extracted by the execution history search unit 2410, this input selecting unit 2332 outputs the execution result output from the execution result output unit 2420 to the register file 2340 in accordance with the control of the command decoder 2320.

The computing circuit 2333 is for executing computation in accordance with the control from the command decoder 2320. For example, in the event that a computing command for executing computation, such as multiplication, division, sum of products, or the like, has been supplied to the command decoder 2320, this computing circuit 2333 executes computation using data stored in the register file 2340 in accordance with the control of the command decoder 2320. Also, the computing circuit 2333 stores the computation result according to the computation thereof in the register file 2340 via the input selecting unit 2332 as an execution result.

The storing unit 2334 is for writing data stored in the register file 2340, or the execution result output from the execution result output unit 2420 back to the main storage unit 2130 in accordance with the control from the command decoder 2320. In the event that a store word command for writing data back to the main storage unit 2130 has been supplied to the command decoder 2320, this storing unit 2334 outputs data to be written back to the data cache 2220 via the data line 2229 in accordance with the control from the command decoder 2320.

Also, in the event that an execution result has been extracted from the history memory 2430 by the execution history search unit 2410, this storing unit 2334 writes the execution result output from the execution result output unit 2420 back to the main storage unit 2130 and data cache 2220 via the data line 2229.

The register file 2340 is for storing the data output from the executing unit 2330. This register file 2340 is configured of multiple registers, e.g., 32 registers of register number 0 through 31. This register file 2340 stores the data output from the executing unit 2330 in one register of the multiple registers in accordance with the control from the command decoder 2320.

Also, this register file 2340 outputs the execution result stored in one register of the multiple registers to the executing unit 2330, or the execution history search unit 2410 via the executing unit 2330 in accordance with the control from the command decoder 2320, for example.

With the program counter 2350, a count value is set by the control from the command decoder 2320. This program counter 2350 increments the count value by one each time one command is executed in accordance with the control from the command decoder 2320, for example. Also, with this program counter 2350, in the event that a function call-up command has been executed, the head address of the function stored in the register file 2340 is set by the control from the command decoder 2320. This program counter 2350 outputs the count value thereof to the address determining unit 2510 as a command address indicating a memory address of the main storage unit 2130.

The address determining unit 2510 is for controlling the execution history search unit 2410 and execution data holding unit 2440 to search an execution history in the history memory 2430 based on an input value setting command address registered in the input value setting command address table 2520. Specifically, in the event that the command address output from the program counter 2350, and the input value setting command address held in the input value setting command address table 2520 match, the address determining unit 2510 starts search of an execution history.

This address determining unit 2510 determines whether or not the command address output from the program counter 2350, and the input value setting command address registered in the input value setting command address table 2520 match. In the event that the command addresses of both match, the address determining unit 2510 then holds the input value output from the executing unit 2330 in the execution data holding unit 2440 based on the input value setting command determined by the input value setting command address.

Along therewith, the address determining unit 2510 holds section identification information correlated with the matched input value setting command address thereof of the input value setting command address table 2520 in the execution data holding unit 2440. The section identification information mentioned here is identification information for mutually identifying multiple reused sections. For example, the head address of a function that is a reused section may be employed as this section identification information.

Also, when the command addresses of both match, in the event that an input value setting signal has been supplied from the command decoder 2320 until a function call-up signal is supplied, the address determining unit 2510 holds the input value output from the executing unit 2330 in the execution data holding unit 2440. That is to say, the address determining unit 2510 holds the output from the executing unit 2330 in the execution data holding unit 2440 as the input value of an argument of the function based on the input value setting signal supplied from the command decoder 2320 until a function call-up signal is supplied.

Also, in the event that a function call-up signal has been supplied from the command decoder 2320, the address determining unit 2510 instructs the execution history search unit 2410 to perform reuse processing of an execution result in the history memory 2430. Also, the address determining unit 2510 holds the output from the executing unit 2330 in the execution data holding unit 2440 as an execution result of a function based on the execution result setting signal supplied from the command decoder 2320.

Also, the address determining unit 2510 performs instructions for registration as to the execution history search unit 2410 to newly register the section identification information, input value, and execution result in the execution data holding unit 2440 in the history memory 2430 based on the function return signal supplied from the command decoder 2320.

The input value setting command address table 2520 is, for each piece of section identification information for identifying a function that is a reused section to be executed multiple times, for holding an input value setting command address that is the address of an input value setting command for setting an input value in the function thereof. The address mentioned here indicates a memory address where the input value setting command is stored in the main storage unit 2130.

Now, let us assume that according to pre-execution of a compiler device and a program, data relating to a reused section extracted by analyzing a program stored in the main storage unit 2130 is held in the input value setting command address table 2520, for example. That is to say, with the input value setting command address table 2520, the input setting command address of a function having a high degree where the execution result will be reused, and section identification information for identifying the function thereof are held in a correlated manner.

This input value setting command address table 2520 holds, of input value setting commands for setting an input value in the function, the input value setting command address of an input value setting command for first setting an input value for each piece of section identification information, for example. That is to say, this input value setting command address table 2520 holds, for each piece of section identification information of a reused section, the earliest input value setting command address in the reused section thereof. In this way, only the earliest input value setting command is held, whereby the capacity of the input value setting command address table 2520 can be reduced.

Also, the input value setting command address table 2520 outputs the held data thereof to the address determining unit 2510. Note that, in the event that a function that is a reused section has multiple arguments, multiple input value setting command addresses may be held in the input value setting command address table 2520 for each piece of section identification information. Also, the input value setting command address table 2520 is an example of the input value setting command address table laid forth in the Claims.

Note that priority at the time of eliminating an execution history for each piece of section identification information may further be held in the input value setting command address table 2520. In this case, the execution history search unit 2410 registers the priority from the address determining unit 2510 in the history memory 2430. In the event that the capacity of the history memory 2430 exceeds a certain condition, the execution history search unit 2410 then eliminates an execution history in the history memory 2430 based on the priority held in the history memory 2430.

The execution data holding unit 2440 is for holding the section identification information from the address determining unit 2510, and the input value and execution result in the function from the executing unit 2330 in accordance with the instructions from the address determining unit 2510. This execution data holding unit 2440 outputs the held section identification information and input value and execution result in the function thereof to the execution history search unit 2410.

The execution history search unit 2410 is for searching an execution history in the history memory 2430 based on the identification information and the input value of the function output from the execution data holding unit 2440. This execution history search unit 2410 extracts, of execution histories each of which is the input value and execution result in a reused section held for each piece of section identification information in the history memory 2430, the execution result in the same execution history as with the section identification information and input value held in the execution data holding unit 2440.

In the event that an execution result has been extracted from the history memory 2430, when accepting instructions for reuse processing from the address determining unit 2510, the execution history search unit 2410 outputs the execution result thereof to the execution result output unit 2420. Along therewith, the execution history search unit 2410 supplies information relating to the storage location in the extracted execution result to the fetch unit 2310 as a function omission signal for omitting the processing of the function.

On the other hand, in the event that no execution result has been extracted from the history memory 2430, when accepting instructions for reuse processing from the address determining unit 2510, the execution history search unit 2410 does not output the function omission signal to the fetch unit 2310. According to execution of the function in the executing unit 2330, after a newly generated execution result is held in the execution data holding unit 2440, the execution history search unit 2410 then registers the output from the execution data holding unit 2440 in the history memory 2430.

That is to say, this execution history search unit 2410 holds the section identification information, input value, and execution result held in the execution data holding unit 2440 in the history memory 2430 based on the registration instructions from the address determining unit 2510.

In the event that an execution result has been extracted from the history memory 2430 by the execution history search unit 2410, the execution result output unit 2420 outputs the execution result thereof to the register file 2340 or storing unit 2334 via the input selecting unit 2332. This execution result output unit 2420 outputs the data in the execution result thereof to the storing unit 2334 or input selecting unit 2332 in accordance with the storage location of the data in the execution result from the history memory 2430. Note that the execution result output unit 2420 is an example of the execution result output unit laid forth in the Claims.

The history memory 2430 is for correlating the input value and execution result in the function identified by the section identification information, and holding these as an execution history for each piece of section identification information. This history memory 2430 is realized by content addressable memory (CAM: Content Addressable Memory), for example. With this example, in response to section identification information that is a search key for searching an execution result being input from the execution history search unit 2410, the history memory 2430 starts search of the execution history correlated with the section identification information thereof.

Also, in the event that the input values sequentially supplied from the execution history search unit 2410, and the input values held in the history memory 2430 all match, the history memory 2430 outputs the execution result correlated with the input value in the history memory 2430 thereof to the execution history search unit 2410. That is to say, the same execution history as with the section identification information and input value input from the execution history search unit 2410 is detected from the history memory 2430, and thus, the execution result is extracted from the history memory 2430 by the execution history search unit 2410.

Also, the history memory 2430 realized by this content addressable memory holds the pattern of an input value in the execution history using a tree structure. Note that the history memory 2430 is an example of the history memory laid forth in the Claims.

In this way, the address determining unit 2510 and input value setting command address table 2520 are provided, and accordingly, the earliest input value setting command in a reused section can be determined, whereby search of an execution history in the history memory 2430 can be performed before execution of the reused section. Next, an example of the data structure in the history memory 2430 will be described below with reference to the drawing.

[Example of Data Structure of History Memory 2430]

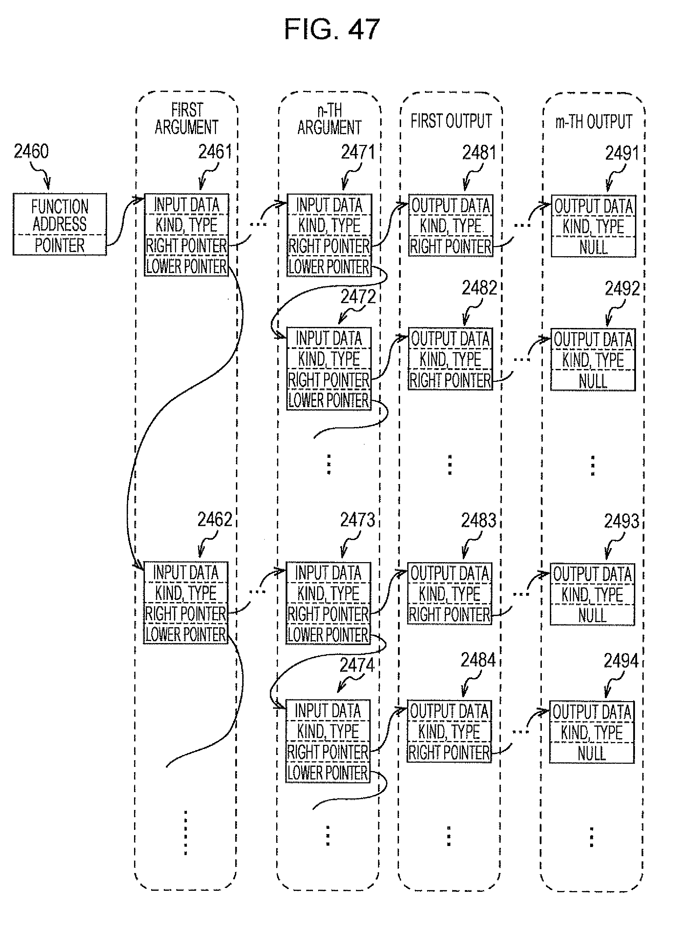

Fig. 47 is a conceptual diagram illustrating an example of the data structure of the history memory 2430 according to the first embodiment of the present invention. Here is shown a structure wherein of execution histories held by the history memory 2430 for each piece of section identification information, multiple execution histories in one piece of section identification information are held by a tree structure. This example assumes a function that includes n arguments, and returns an output that is an execution result to m storage destinations. Also, here, let us say that the function address of a function that is the head address of the function is used as section identification information.

This example illustrates a function route 2460, first argument nodes 2461 and 2462, n'th argument nodes 2471 through 2474, first output nodes 2481 through 2484, and m'th output nodes 2491 through 2494 in the tree structure.

The function route 2460 indicates a function address that is section identification information, and a pointer pointing to the first argument node 2461.

The first and n'th argument nodes 2461, 2462, and 2471 through 2474 indicate, as the input values of an argument in an execution history held in the history memory 2430, input data indicating a value of an argument, the type of the argument thereof, and the kind indicating the storage location of the argument thereof. The storage location mentioned here means the register number of the register file, or a memory address in the main storage unit 2130.

Further, the first and n'th argument nodes 2461, 2462, and 2471 through 2474 indicate a right pointer pointing to the argument node in the next argument in the event that input values to be compared mutually match. On the other hand, the first and n'th argument nodes 2461, 2462, and 2471 through 2474 indicate a lower pointer pointing to another argument node in the same argument in the event that input values to be compared do not match. Also, the n'th argument nodes 2471 through 2474 are connected to the first and m'th output nodes 2481 through 2484 and 2491 through 2494, respectively.

The first and m'th output nodes 2481 through 2484 and 2491 through 2494 indicate, as an execution result in an execution history held in the history memory 2430, output data indicating the value of an execution result, the kind indicating the storage location of the execution result thereof, and the type of the execution result thereof. Further, the first output nodes 2481 through 2484 indicate a right pointer pointing to the output node in the next output. The first and m'th output nodes 2481 through 2484 and 2491 through 2494 make up a connection list. Also, null representing the terminal end of an output node is indicated in the right pointer of the m'th output nodes 2491 through 2494.

With such a tree structure, upon a function address agreeing with the function address shown in the function route 2460 being input from the execution history search unit 2410, input value comparison processing is executed at the first argument node 2461 pointed to by the pointer of the function route 2460. The input value comparison processing mentioned here is to compare input values that are input data, kind and type shown in the first argument node 2461, and the input values from the execution history search unit 2410.

At this time, for example, in the event that the input values shown in the first argument node 2461, and the input values from the execution history search unit 2410 match, the input value comparison processing is executed at the next argument node pointed to by the right pointer of the first argument node 2461. On the other hand, in the event that the input values shown in the first argument node 2461, and the input values from the execution history search unit 2410 do not match, the input value comparison processing is executed at the first argument node 2462 pointed to by the lower pointer of the first argument node 2461.

In this way, the argument node pointed to by the right pointer or lower pointer is selected based on the comparison result of the comparison processing at each argument node, and the input value comparison processing is sequentially executed at the selected argument node thereof. Then, in the event that the input values shown in the n'th argument node 2471, and the input values from the execution history search unit 2410 mutually match, the first output node 2481 is pointed to by the right pointer of the n'th argument node 2471. Thus, from the execution result indicating the output data, kind, and type held in the first output node 2481 in order up to the execution result held in the m'th output node 2491 are sequentially output to the execution history search unit 2410.

In this way, the history memory 2430 is structured using a tree structure for each piece of the identification information, and accordingly, the input values of the same argument do not have to be held in a redundant manner, whereby the storage region of the history memory 2430 can be conserved. Also, the data structure is divided for each piece of the identification information, whereby deterioration in search speed can be suppressed. Next, as a registration method as to this history memory 2430, description will be made below regarding a registration processing example as to the history memory 2430 at the first execution of a function that is a reused section, with reference to the drawing.

[Registration Example as to History Memory 2430 at First Execution of Reused Section]

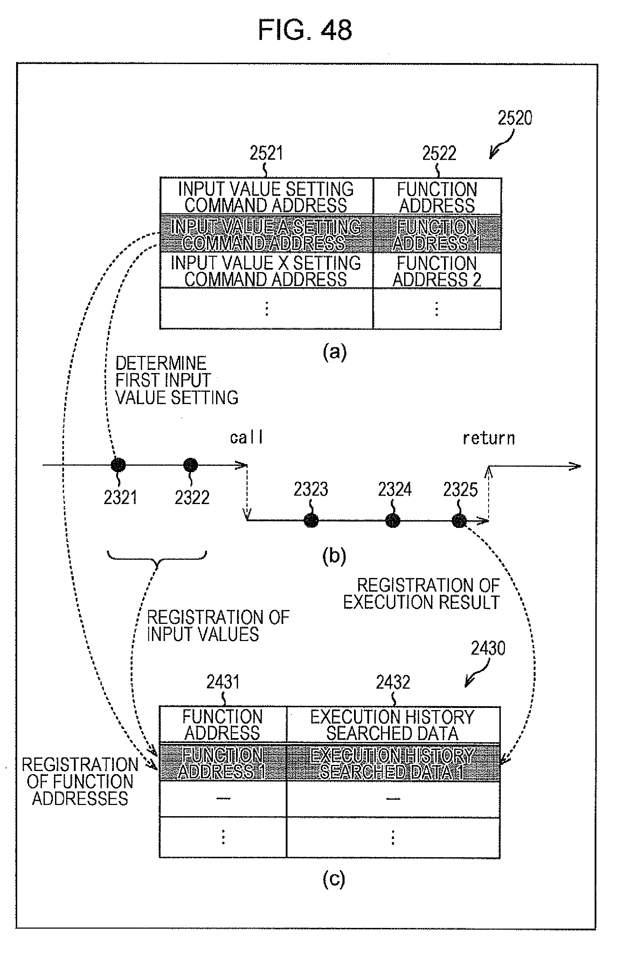

Fig. 48 is a conceptual diagram illustrating a registration method of section identification information and an execution history at the first function execution using the data processing device 2100 according to the first embodiment of the present invention. (a) in Fig. 48 is a diagram illustrating an example of the data format of the input value setting command address table 2520. With the input value setting command address table 2520, a correlation between the earliest input value setting command address 2521 in a function, and a function address 2522 that is section identification information for identifying the function thereof is shown.

(b) in Fig. 48 is a conceptual diagram illustrating a processing example wherein after a function having two arguments is called up by a call-up command (call) in an upper routine, the upper routine is restored by a return command (return) in a lower routine that is the command section of the function thereof. Here are shown an input value A setting 2321 and an input value B setting 2322 in the upper routine, and an input value A reference 2323, an input value B reference 2324, and an execution result C setting 2325 in the lower routine. Also, let us say here that time elapses from the left to the right.

The input value A setting 2321 and input value B setting 2322 indicate timing wherein an input value A and an input value B in a function that is a reused section are set based on two input value setting commands. Here, the input value A is set based on an input value A setting command corresponding to an input value A setting command address. Also, the input value B is set based on an input value B setting command corresponding to an input value B setting command address. In this way, before a function call-up command (call), an input value of an argument of the function thereof is set by an input value setting command, which is because the program stored in the main storage unit 2130 is generated based on the rule of the ABI, as described in Fig. 45.

The input value A reference 2323 and input value B reference 2324 indicate timing wherein, with processing of the function in the lower routine, an input value of the function is referenced by execution of an input value reference command. Here, the input value A and input value B set by the input value A setting command and input value B setting command are referenced based on the two input value reference commands, respectively. That is to say, with the processing of the function, according to execution of an input value reference command, the numeric value of an argument stored in a register in the register file 2340 to which the input value A and input value B are set is used.

The execution result C setting 2325 indicates timing wherein an execution result C generated by the processing of the function is set to the main storage unit 2130 or register file 2340. Here, the execution result C is set based on an execution result setting command.

(C) in Fig. 48 is a conceptual diagram illustrating an example of the data format in the history memory 2430. Here is shown a correlation between a function address 2431 that is the section identification information of the function, and execution history search data 2432. The execution history search data 2432 is search data structured of the tree structure shown in Fig. 47, and is search data including information where the input value and execution result in an execution history are correlated.

In such a case, with the input value A setting 2321, determination is made by the address determining unit 2510 that the command address output from the program counter 2350, and "input value A setting command address" in the input value setting command address table 2520 match.

Thus, the section identification information (function address 1) corresponding to the agreeing input value setting command address (input value A setting command address) thereof is input to the history memory 2430. That is to say, according to the address determining unit 2510, the section identification information (function address 1) is held in the execution data holding unit 2440, and the held "function address 1" is input to the history memory 2430 by the execution history search unit 2410.

At this time, with the history memory 2430, the section identification information agreeing with the section identification information (function address 1) from the address determining unit 2510 is not held, and accordingly, the section identification information (function address 1) thereof is registered in the history memory 2430.

Thereafter, the input value A and input value B set by an input value setting command, and the execution result C set by an execution result setting command are registered in the history memory 2430 in a manner correlated with the section identification information (function address 1). That is to say, based on the input value setting signal from the command decoder 2320 according to execution of an input setting command, the input value A and input value B are held in the execution data holding unit 2440 by the address determining unit 2510. Thereafter, based on the execution result setting signal from the command decoder 2320 according to execution of an execution result setting command, the execution result C is held in the execution data holding unit 2440.

Then, based on the function return signal from the command decoder 2320 according to a return command (return), registration of an execution history is instructed from the address determining unit 2510 to the execution history search unit 2410. Thus, according to the execution history search unit 2410, the data in the execution data holding unit 2440 (input value A, input value B, and execution result C) is registered in the history memory 2430.

In this way, the input value setting command address table 2520 is provided, whereby only the execution history of the function corresponding to the input value setting command address held in the input value setting command address table 2520 can be registered in the history memory 2430. Thus, the input value setting command address of a reused section is registered beforehand, whereby only an execution history of which the execution result will be reused with a high probability can be held in the history memory 2430. Therefore, the capacity of the history memory 2430 can effectively be used. Next, description will briefly be made regarding an example wherein the execution result in an execution history held in the history memory 2430 is reused, with reference to the next drawing.

[Example of Execution Result Reuse Processing]

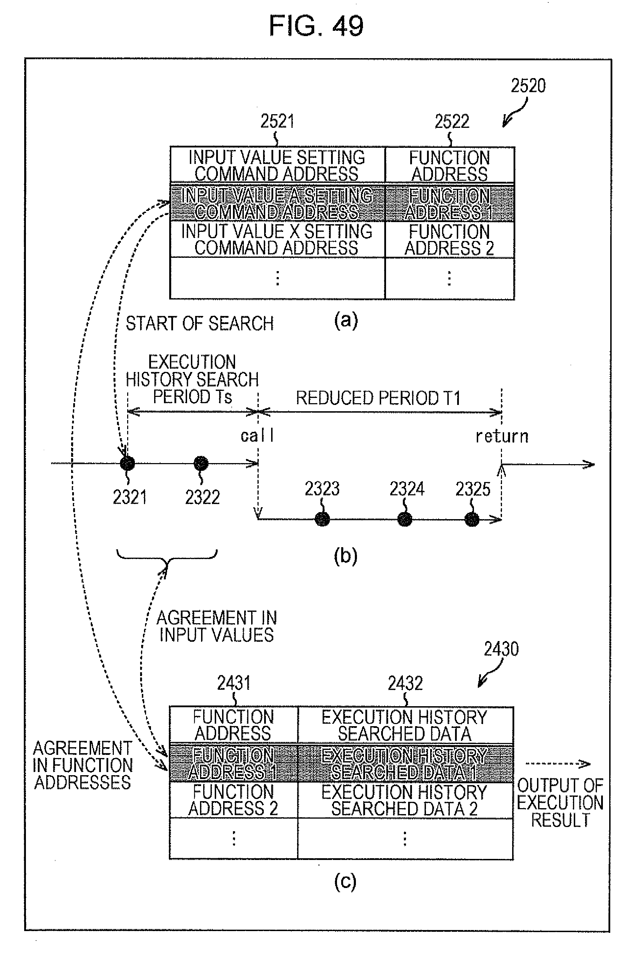

Fig. 49 is a conceptual diagram illustrating an example of a technique relating to execution result reuse processing using the data processing device 2100 according to the first embodiment of the present invention. Here, (a) and (c) in Fig. 49 correspond to (a) and (c) in Fig. 48, and accordingly, description thereof will be omitted here.

(b) in Fig. 49 is a conceptual diagram illustrating a processing example wherein after a function having two arguments is called up by a call-up command (call) in an upper routine, the upper routine is restored by a return command (return) in a lower routine that is a command section of the function thereof.

Here are shown an input value A setting 2321 and an input value B setting 2322 in the upper routine, and an input value A reference 2323, an input value B reference 2324, and an execution result C setting 2325 in the lower routine that is a command section of the function. These are the same as those shown in Fig. 48, and accordingly denoted with the same reference numerals, and description thereof will be omitted here. Also, now, let us say that time elapses from the left to the right.

In such a case, with the input value A setting 2321, determination is made by the address determining unit 2510 that the command address output from the program counter 2350, and "input value A setting command address" in the input value setting command address table 2520 match. Thus, the section identification information (function address 1) corresponding to the agreeing input value setting command address (input value A setting command address) thereof is input to the history memory 2430. That is to say, according to the address determining unit 2510, the section identification information (function address 1) is held in the execution data holding unit 2440, and the held function address 1 thereof is input to the history memory 2430 by the execution history search unit 2410.

At this time, with the history memory 2430, the same "function address 1" as the section identification information (function address 1) from the address determining unit 2510 has already been held, and accordingly, search of an execution result using "execution history search data 1" correlated therewith is performed.

Also, with the input value A setting 2321, the input value A set by the input value A setting command is input to the history memory 2430. With the input value B setting 2322, the input value B set by the input value B setting command is then input to the history memory 2430. That is to say, according to the instructions from the address determining unit 2510, based on the input value setting signal from the command decoder 2320, the input value A and input value B are sequentially held in the execution data holding unit 2440. According to the execution history search unit 2410, the input value A and input value B in the execution data holding unit 2440 are then sequentially input to the execution history search unit 2410.

Thus, comparison between the input value A and input value B from the execution history search unit 2410, and the input values held in "execution history search data 1" corresponding to "function address 1" in the history memory 2430 is sequentially performed. Here, the input values of both (input value A and input value B) match, and accordingly, the execution result (execution result C) correlated with the section identification information (function address 1) and the input values (input value A and input value B) is supplied to the execution history search unit 2410. That is to say, the execution result (execution result C), correlated with the section identification information (function address 1) and the input values (input value A and input value B) input to the history memory 2430, is output from the history memory 2430.

Thereafter, based on the function call-up signal from the command decoder 2320 by a call-up command (call), execution result reuse instructions are informed from the address determining unit 2510 to the execution history search unit 2410, and accordingly, the reuse processing of the execution result C is executed. That is to say, when the call-up command determined by the input value setting command address is executed by the execution result output unit 2420, in the event that the execution result has been extracted by the execution history search unit 2410, the extracted execution result thereof is output to the executing unit 2330.

In this way, the input value setting command address table 2520 is provided, whereby the earliest input value A setting command to be executed first as to the function of the function address 1 can be determined. Thus, of a command group from the input value A setting command up to a call-up command (call), the input values (input value A and input value B) to be set based on the input value A setting command and input value B setting command can be determined. Thus, during an execution history search period Ts up to execution of the call-up command (call) determined by the input value A setting command address, search of the execution history corresponding to the section identification information (function address 1) in the history memory 2430 can be performed.

Also, according to the execution history search data 1 of the function address 1 during the execution history search period Ts, the execution result C correlated with the input value A and input value B from the execution history search unit 2410 is extracted, whereby time necessary for execution of the function (reduction period T1) can be reduced. Now, description will briefly be made below regarding difference between the reduction period T1 according to the first embodiment of the present invention, and a reduction period according to conventional execution result reuse processing, with reference to the drawing.

[Example of Reduction Period to Be Reduced by Execution Result Reuse Processing]

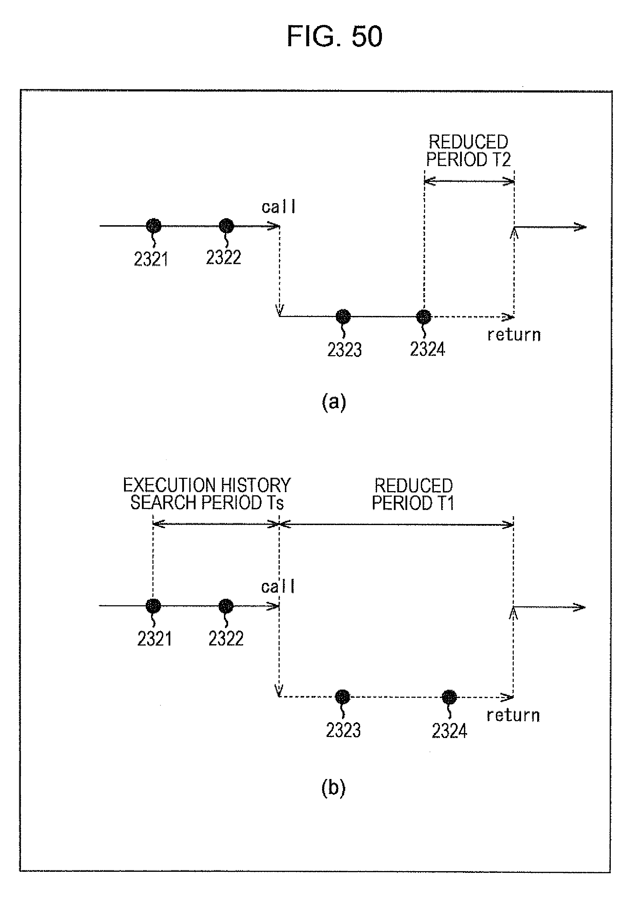

Fig. 50 is a conceptual diagram illustrating an example wherein the execution time of a function is reduced by the execution result reuse processing. (a) in Fig. 50 is a conceptual diagram illustrating a reduction period according to reuse of an execution result in a conventional data processing device to which the input value setting command address table 2520 is not provided. (b) in Fig. 50 is a conceptual diagram illustrating a reduction period owing to reuse of an execution result in the data processing device 2100 according to the first embodiment of the present invention. (a) and (b) in Fig. 50 are the same as with (b) in Fig. 49, and accordingly denoted with the same reference numerals, and description thereof will be omitted here.

In the case of the conventional technique shown in (a) in Fig. 50, input values A and B that are arguments of a function cannot be determined until all of two arguments are referenced in a lower routine that is a command section of the function by execution of input value reference commands (input value A reference 2323 and input value B reference 2324). Therefore, even when the input values A and B of the function, and input values in the history memory 2430 all match, all that can be reduced from the execution period of the function is only a reduction period T2 from the input value B reference 2324 to a return command (return).

On the other hand, with the first embodiment of the present invention shown in (b) in Fig. 50, as described in Fig. 49, the input value A and input value B can be determined by the input value A setting 2321 determined based on the input value setting command address table 2520. That is to say, based on the input value setting command in the execution history search period Ts from the input value A setting command to the call-up command (call), the input value of the argument in the function can be determined.

Thus, search of an execution result in the history memory 2430 in the execution history search period Ts can be ended, and accordingly, in the event that the execution result can be reused, the entire period (reduction period T1) necessary for execution of the function can be reduced. Accordingly, with the first embodiment of the present invention, according to the execution result reuse processing in the data processing device 2100, the reduction period T1 longer than the conventional reduction period T2 can be reduced. Next, description will be made regarding a registration example of an execution history when the input value from the execution history search unit 2410, and the input value in the history memory 2430 do not match in the event that both of the section identification information in the execution history search unit 2410 and history memory 2430 match, with reference to the next drawing.

[Registration Example of Execution History as to History Memory 2430 According to Second Execution and Thereafter of Reused Section]

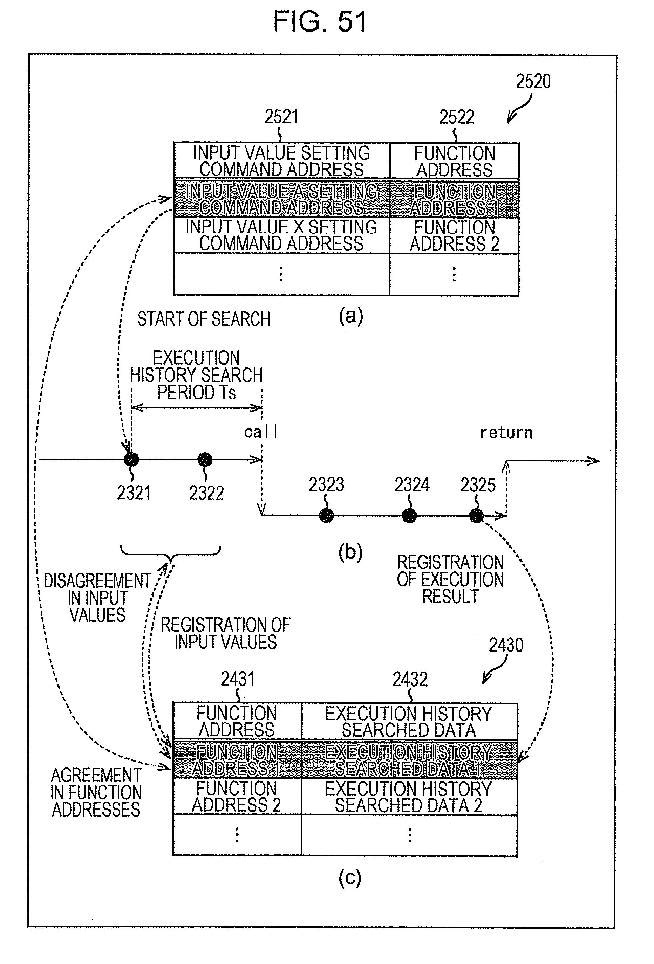

Fig. 51 is a conceptual diagram illustrating a registration technique of an execution history in the second function execution and thereafter using the data processing device 2100 according to the first embodiment of the present invention. Here, (a) through (c) in Fig. 51 correspond to (a) through (c) in Fig. 48, and accordingly, detailed description will be omitted here.

(b) in Fig. 51 is a conceptual diagram illustrating a processing example of the function shown in (b) in Fig. 48. Now, let us assume a case where the input value that is an argument of the function is a variable, and an input value that is not held in the history memory 2430 is set. For example, a case corresponds to this wherein a value indicating the input value A in the history memory 2430 is "3", and a value indicating the input value A set by the execution of the function is "5".

In such a case, with the input value A setting 2321, according to the address determining unit 2510, determination is made that the command address output from the program counter 2350, and "input value A setting command address" in the input value setting command address table 2520 match.

Thus, the section identification information (function address 1) corresponding to the agreeing input value setting command address (input value A setting command address) is input to the history memory 2430. That is to say, according to the address determining unit 2510, the section identification information (function address 1) is held in the execution data holding unit 2440, and the held "function address 1" thereof is input to the history memory 2430 by the execution history search unit 2410.

At this time, with the history memory 2430, section identification information agreeing with the section identification information (function address 1) from the address determining unit 2510 has already been held, and accordingly, search of an execution result according to "execution history search data 1" correlated with this is performed.

Also, with the input value A setting 2321, the input value A set by the input value A setting command is input to the history memory 2430. At this time, the input value A from the execution history search unit 2410, and the input value held in "execution history search data 1" in the history memory 2430 do not match, and accordingly, the input value A from the execution history search unit 2410 is newly registered in "execution history search data 1".

Also, with the input value B setting 2322, the input value B set by the input value B setting command is registered in the history memory 2430 by the execution history search unit 2410. That is to say, "execution history search data 1" correlated with the input value A and input value B is generated.

Thereafter, the processing of the function is executed in the lower routine, and with the execution result C setting 2325, the execution result C set by the execution result setting command is registered in the history memory 2430 by the execution history search unit 2410. That is to say, "execution history search data 1" correlated with the input value A, input value B, and execution result C is generated.

In this way, with the second processing and thereafter as to the same function, in the event that the input value set by the input value setting command, and the input value in the history memory 2430 do not match, the function is executed, and the execution result and input value thereof are newly registered in the history memory 2430. Note that description has been made here regarding a case where the input value determined by the input value setting command is registered, but the input value determined by execution of the input value reference command may be registered in the history memory 2430.

[Example of Operation of Data Processing Device 2100]

Next, description will be made regarding the operation of the data processing device 2100 according to the first embodiment of the present invention, with reference to the drawing.

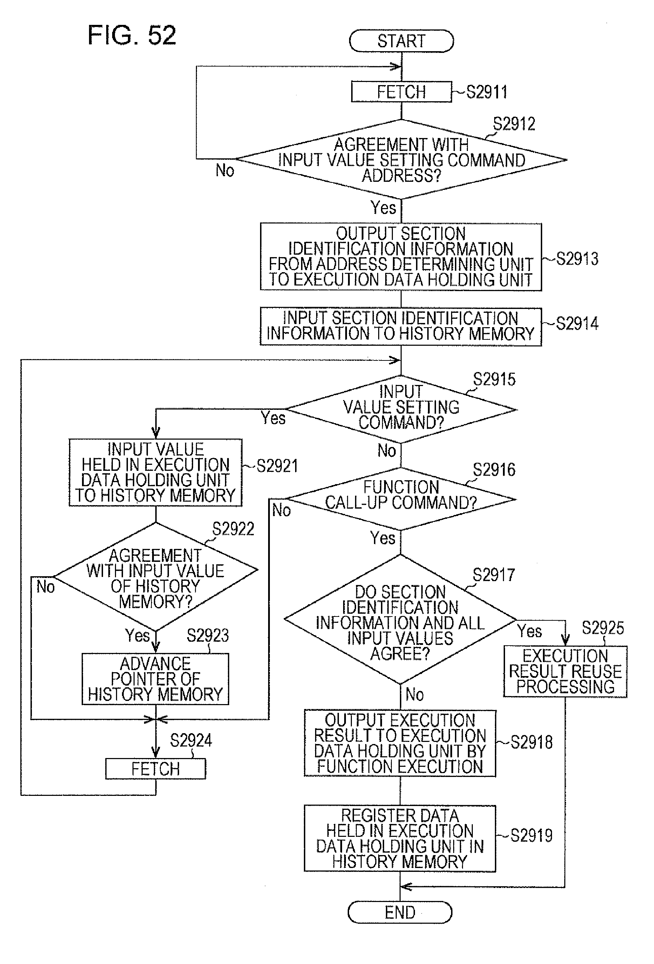

Fig. 52 is a flowchart illustrating an example of the processing procedure of the execution result reuse method using the data processing device 2100 according to the first embodiment of the present invention.

First, a command is read out from the main storage unit 2130 or command cache 2210 by the fetch unit 2310 (step S2911). At this time, determination is made by the address determining unit 2510 whether or not the command address output from the program counter 2350, and the input value setting command address registered in the input value setting command address table 2520 match (step S2912). In the event that the command address does not agree with the input value setting command address, the flow then returns to step S2911, and the processing is repeated until the command address agrees with the input value setting command address.

On the other hand, in the event that the command address agrees with the input value setting command address, section identification information correlated with the agreeing input value setting command address thereof is obtained from the input value setting command address table 2520 by the address determining unit 2510. The obtained section identification information thereof is then held in the execution data holding unit 2440 by the address determining unit 2510 (step S2913).

Subsequently, the section identification information held in the execution data holding unit 2440 is input to the history memory 2430 by the execution history search unit 2410 as the search key of the history memory 2430 (step S2914). Thus, search of multiple execution histories corresponding to the section identification information in the history memory 2430 is started.

Next, determination is made by the command decoder 2320 whether or not the command read out from the fetch unit 2310 is an input value setting command (step S2915). Then, in the event that determination is made that the command is an input value setting command, based on the input value setting signal from the command decoder 2320, the input value set by the input value setting command is held in the execution data holding unit 2440 by the instructions of the address determining unit 2510.

Thereafter, the input value held in the execution data holding unit 2440 is input to the history memory 2430 by the execution history search unit 2410 (step S2921). Note that the first determination in step S2915 is necessarily determined to be an input value setting command, and accordingly, the flow may proceed to step S2921 by omitting this determination.

Subsequently, with regard to the execution history in the history memory 2430 corresponding to the section identification information from the execution history search unit 2410, determination is made by the history memory 2430 whether or not the input value from the execution history search unit 2410, and the input value in the execution history thereof match (step S2922). In the event that the input values of both do not match, the flow then proceeds to processing in step S2924.

On the other hand, in the event that the input values of both match, in order to compare the input value of the next argument in the execution history, the pointer is advanced to the argument node in the next argument in the history memory 2430 (step S2923). That is to say, if there is an argument node agreeing with the input value from the execution history search unit 2410, the next argument node is pointed to by the right pointer of the argument node thereof. Next, a command is read out from the main storage unit 2130 or command cache 2210 by the fetch unit 2310 (step S2924), and the flow returns to the processing in step S2915.

On the other hand, with the processing in step S2915, in the event that determination is made that the command is not an input value setting command, determination is made whether or not the command read out by the fetch unit 2310 is a function call-up command (step S2916). In the event that the command is not a call-up command, the flow then proceeds to step S2924.

In this way, until the input values of all of the arguments in the function are set, a series of processing in steps S2915, S2916, and S2921 through S2924 is repeatedly executed. That is to say, the input value set based on the input value setting command of the function from the input value setting command determined by the input value setting command address table 2520 to the call-up command is held in the execution data holding unit 2440, and the held input value is input to the history memory 2430.

In this way, the section identification information corresponding to the input value setting command address agreeing with the command address output from the program counter 2350 is held in the execution data holding unit 2440. Then, based on the input value setting commands of a command group from the input value setting command determined by the input value setting command address thereof to the call-up command, the input value output from the executing unit is held in the execution data holding unit 2440. Thus, the execution result correlated with the execution history in the history memory 2430 is searched using the section identification information and input value in the execution data holding unit 2440 by the execution history search unit 2410. Note that steps S2911 through S2916, and S2921 through S2924 are an example of the execution history search procedure laid forth in the Claims.

On the other hand, in the event that determination is made in step S2916 that the command is a function call-up command, determination is made whether or not the section identification information and input values from the execution data holding unit 2440, and the input values correlated with the section identification information in the history memory 2430 all match (step S2917).

In the event that the section identification information and input values from the execution history search unit 2410 are all in agreement, execution result reuse processing is then executed (step S2925). That is to say, the execution result in the history memory 2430 corresponding to the section identification information and input values from the execution history search unit 2410 is output from the execution result output unit 2420, and then written back to the main storage unit 2130 and register file 2340, and the processing of the function is skipped. Note that S2925 is an example of the execution result output procedure laid forth in the Claims.

On the other hand, in the event that the section identification information and input values from the execution history search unit 2410 are not all in agreement, the function called up by a call-up command is executed, and the execution result thereof is held in the execution data holding unit 2440 (step S2918). The execution result held in the execution data holding unit 2440, and the section identification information and input values held by the processing in steps S2913 and S2921 are then registered in the history memory 2430 by the execution history search unit 2410 (step S2919).

As described above, with the first embodiment of the present invention, before a function call-up command that is a reused section, the section identification information of the reused section and input values thereof can be held in the execution data holding unit 2440 by the input value setting command address table 2520. Thus, before the function is called up, based on the section identification information and input values held in the execution data holding unit 2440 thereof, an execution history in the history memory 2430 can be searched by the execution history search unit 2410.

Therefore, in the event that the execution result correlated with the execution history in the history memory 2430 agreeing with the section identification information and input values from the execution history search unit 2410 has been extracted, execution of a function to be called up by a call-up command can be omitted. Thus, the processing time of the function can be markedly reduced owing to reuse of the execution result.

<2. Second Embodiment> >

[Configuration Example of Program Analysis Processing Device]

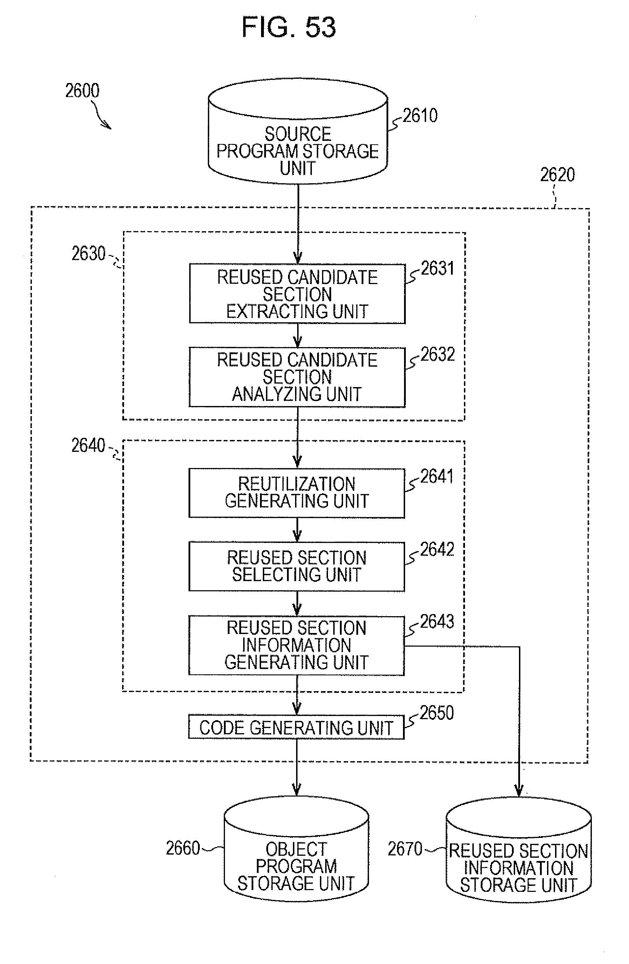

Fig. 53 is a block diagram illustrating a function configuration example of the program analysis processing device according to the second embodiment of the present invention. A program analysis processing device 2600 includes a source program storage unit 2610, a compile processing unit 2620, an object program storage unit 2660, and a reuse section information storage unit 2670. Note that the program analysis processing device 2600 is an example of the program analysis processing device laid forth in the Claims.

The source program storage unit 2610 is for storing a source program to be subjected to compile processing. This source program is a source program including a reuse section where an execution result will be reused. This source program storage unit 2610 supplies the stored source program thereof to the compile processing unit 2620.

The compile processing unit 2620 is for generating an object program that is a machine language program, and reused section information by compiling the source program from the source program storage unit 2610. The reused section information mentioned here is information where for each reused section, the input value setting command address of the first input value setting command in the reused section, and section identification information for identifying the reused section thereof are correlated. This reused section information is stored in the input value setting command address table 2520 in the search start command address managing unit 2500 shown in Fig. 46.

This compile processing unit 2620 stores the generated object program in the object program storage unit 2660, and stores the generated reused section information in the reused section information storage unit 2670. This compile processing unit 2620 includes a program analyzing unit 2630, a program optimization processing unit 2640, and a code generating unit 2650.

The program analyzing unit 2630 executes analysis processing such as morphologic analysis, syntax analysis, or the like based on the source program read out from the source program storage unit 2610. This program analyzing unit 2630 generates a program made up of intermediate expression expressed as intermediate code in a format suitable for analysis or optimization, and executes analysis processing as to the generated program made up of intermediate expression.

This program analyzing unit 2630 includes a reused candidate section extracting unit 2631 and a reused candidate section analyzing unit 2632. The reused candidate section extracting unit 2631 is for extracting, of multiple command sections included in the program, a reused candidate section serving as a candidate of a reused section where the execution result will be reused from the program thereof. This reused candidate section extracting unit 2631 extracts a command section of the function as a reused candidate section.

This reused candidate section extracting unit 2631 excludes a function of which the execution result cannot be reused, from being an object for a reused candidate section. This reused candidate section extracting unit 2631 excludes a function that provides a different execution result even though the input values of command sections are all the same, e.g., a function including a branch command at a command section, from being an object of a reused candidate section. For example, the second function is executed immediately after execution of the first function, and accordingly, this reused candidate section extracting unit 2631 excludes first and section functions such that the second input value setting command is executed before the first function call-up command, from being an object of a reused candidate section. Also, the reused candidate section extracting unit 2631 supplies the section identification information for identifying the extracted reused candidate section to the reused candidate section analyzing unit 2632 along with the program.

The reused candidate section analyzing unit 2632 is for analyzing the usage pattern of the reused candidate section extracted by the reused candidate section extracting unit 2631. This reused candidate section analyzing unit 2632 analyzes, for example, the number and types of arguments in a function, and the number of times of execution of one function for each function as usage patterns.

This reused candidate section analyzing unit 2632 outputs, for example, a range that an argument in a function can take as the analysis result of a usage pattern. This reused candidate section analyzing unit 2632 supplies the analysis result thereof to the program optimization processing unit 2640 along with the section identification information of the reused candidate section, and the program.

The program optimization processing unit 2640 is for executing program optimization processing such as optimization for improving the execution speed of the program, optimization for reducing the code size, or the like, based on the program supplied from the reused candidate section analyzing unit 2632. This program optimization processing unit 2640 includes a reutilization generating unit 2641, a reused section extracting unit 2642, and a reused section information generating unit 2643.

The reutilization generating unit 2641 is for generating reutilization indicating a degree where the execution result of the reused candidate section will be reused, based on the analysis results supplied from the reused candidate section analyzing unit 2632. That is to say, the reutilization generating unit 2641 generates reutilization indicating a degree where input values for each processing execution in the command section to be executed multiple times mutually match, for each command section based on the usage pattern of the command section.

This reutilization generating unit 2641 generates reutilization according to the number of times of executions where one reused candidate section is executed, for example. In this case, the greater the number of times of executions, the greater the reutilization generating unit 2641 sets reutilization, for example. Also, the reutilization generating unit 2641 generates, according to a range that the input value of a reused candidate section can take, reutilization as to the reused candidate section thereof, for example. In this case, the reutilization is calculated by multiplying the inverse number of the number of the range that can be taken thereof by a constant, for example. This indicates that the greater the reutilization of a reused candidate section, the higher a probability that the execution result of the reused candidate section thereof will be reused.

Also, the reutilization generating unit 2641 supplies reutilization regarding the generated reused candidate section to the reused section extracting unit 2642 along with the program and the section identification information of the reused candidate section. Note that the reutilization generating unit 2641 is an example of the reutilization generating unit laid forth in the Claims.

The reused section extracting unit 2642 is for extracting a reused section from the multiple reused candidate sections extracted by the reused candidate section analyzing unit 2632, based on the reutilization regarding each reused candidate section from the reutilization generating unit 2641. This reused section extracting unit 2642 extracts, for example, a reused candidate section equal to or greater than a certain threshold relating to utilization (reuse threshold) as a reused section.

Also, the reused section extracting unit 2642 supplies the section identification information regarding the extracted reused section thereof to the reused section information generating unit 2643 along with the program. Note that the reused section extracting unit 2642 may generate priority at the time of eliminating the execution history for each piece of section identification information in the history memory 2430 shown in Fig. 46 based on the reutilization, for example. In this case, the reused section extracting unit 2642 generates priority so that the higher reutilization, the lower the priority.

The reused section information generating unit 2643 is for correlating the section identification information of the reused section extracted by the reused section extracting unit 2642, and the earliest input value setting command address in the reused section thereof, and generating as reused section information. Of the input value setting commands in the reused section extracted by the reused section extracting unit 2642, this reused section information generating unit 2643 extracts the input value setting command address that is the memory address of the earliest input value setting command to be executed first on the time axis for each reused section.

Also, the reused section information generating unit 2643 generates reused section identification information correlated with the extracted earliest input value setting command address and section identification information for each reused section. Also, the reused section information generating unit 2643 stores the generated reused section identification information in the reused section information storage unit 2670. Note that description has been made here regarding an example wherein the earliest input value setting command address is generated in a correlated manner for each piece of section identification information as reused section information, but all of the input value setting command addresses may be generated in a correlated manner for each piece of section identification information.

Also, the reused section information generating unit 2643 sorts the command codes of the program supplied from the reused section extracting unit 2642 so as to reduce the number of command groups from the earliest input value setting command in a reused section to the call-up command of the reused section thereof so as to be as small as possible. Thus, the search period of an execution history in the history memory 2430 shown in Fig. 46 can be reduced, and accordingly, power consumption according to the history memory 2430 in the data processing device 2100 can be reduced.

Also, the reused section information generating unit 2643 supplies the program of which the command codes have been sorted, to the code generating unit 2650. Note that the reused section information generating unit 2643 is an example of the reused section information generating unit laid forth in the Claims.

Note that the reused section information generating unit 2643 may correlate, based on the reutilization from the reutilization generating unit 2641, the priority at the time of eliminating an execution history in the history memory 2430, section identification information, and the earliest input value setting command address, and generate reused section information.

Thus, in the event that the capacity of the history memory 2430 exceeds a certain condition, an execution history in the history memory 2430 can be eliminated by the execution history search unit 2410 in accordance with the priority thereof. Therefore, an execution history having high utilization can preferentially be held in the history memory 2430.

The code generating unit 2650 is for generating an object program that is the code of a machine language program based on the program supplied from the reused section information generating unit 2643. This code generating unit 2650 stores the generated object program thereof in the object program storage unit 2660.

The object program storage unit 2660 is for storing the object program output from the code generating unit 2650. The object program stored in this object program storage unit 2660 is stored in the main storage unit 2130 shown in Fig. 45.

The reused section information storage unit 2670 is for storing the reused section information output from the reused section information generating unit 2643. The reused section information stored in this reused section information storage unit 2670 is transferred to the input value setting command address table 2520 shown in Fig. 46.

As described above, the reutilization generating unit 2641 is provided, and accordingly, reutilization is generated based on the usage pattern of a command section to be executed multiple times, and accordingly, of the multiple command sections, a command section having a high probability that the execution result will be reused can be extracted as a reused section. Also, the reused section information generating unit 2643 is provided, whereby for each extracted reused section, reused section information correlated with the input value setting command address and section identification information in the reused section can be generated.

[Example of Operation of Program Analysis Processing Device 2500]

Next, description will be made regarding the operation of the program analysis processing device 2600 according to the second embodiment of the present invention, with reference to the drawing.

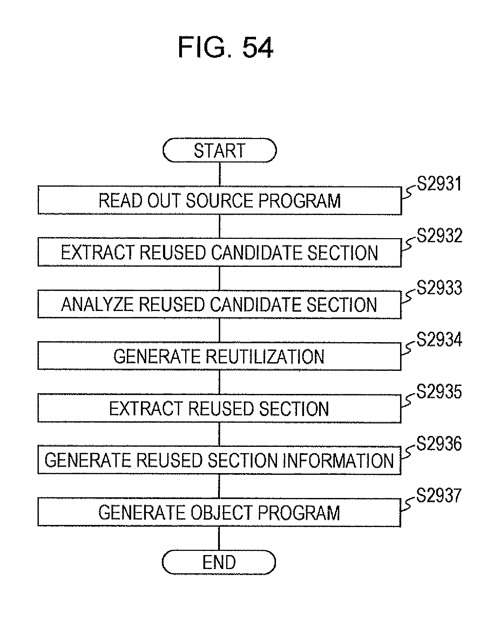

Fig. 54 is a flowchart illustrating an example of the processing procedure of the program analysis processing method of the program analysis processing device 2600 according to the second embodiment of the present invention.

First, a source program is read out from the source program storage unit 2610 by the reused candidate section extracting unit 2631 (step S2931). Then, of command sections that are multiple functions included in the program, a function serving as a reused candidate section is extracted by the reused candidate section extracting unit 2631 (step S2932).

Subsequently, the usage pattern regarding the reused candidate section extracted at the reused candidate section extracting unit 2631 is analyzed by the reused candidate section analyzing unit 2632 (step S2933). After this, reutilization is generated by the reutilization generating unit 2641 for each reused candidate section based on the usage pattern of the reused candidate section analyzed by the reused candidate section analyzing unit 2632 (step S2934). Note that step S2934 is an example of the reutilization generating procedure laid forth in the Claims.

A reused section is then extracted by the reused section extracting unit 2642 based on the reutilization for each reused candidate section (step S2935). Next, reused section information correlated with the earliest input value setting command address in a reused section, and the section identification information in the reused section thereof for each reused section is generated by the reused section information generating unit 2643 (step S2936). The generated reused section information is then stored in the reused section information storage unit 2670 by the reused section information generating unit 2643. Note that step S2936 is an example of the reused section information generating procedure laid forth in the Claims.

Thereafter, an object program is generated by the code generating unit 2650 based on the program supplied from the reused section information generating unit 2643, and the generated object program is stored in the object program storage unit 2660 (step S2937).

As described above, with the second embodiment of the present invention, reused section information correlated with the input value setting command address in a function that is a reused section having high reutilization, and the section identification information thereof can be generated. Thus, the execution history corresponding to a function having a high probability that the execution result will be reused is held in the history memory 2430 shown in Fig. 46, whereby reduction in execution time owing to reused processing of the execution result can be improved.

Note that, with the first and second embodiments of the present invention, description has been made regarding an example wherein the reused section information generated by the program analysis processing device 2600 is registered in the input value setting command address table 2520 in the data processing device 2100, but the present invention is not restricted to this. For example, an arrangement may be made wherein, with the data processing device 2100, when the program stored in the main storage unit 2130 is being executed, reused section information is registered in the input value setting command address table 2520. Therefore, the data processing device 2100 which has been improved such that an input value setting command address and section identification information are registered in the input value setting command address table 2520 during execution of the program, will be described below as the third embodiment.

<3. Third Embodiment>

[Configuration Example of Data Processing Device 2100]

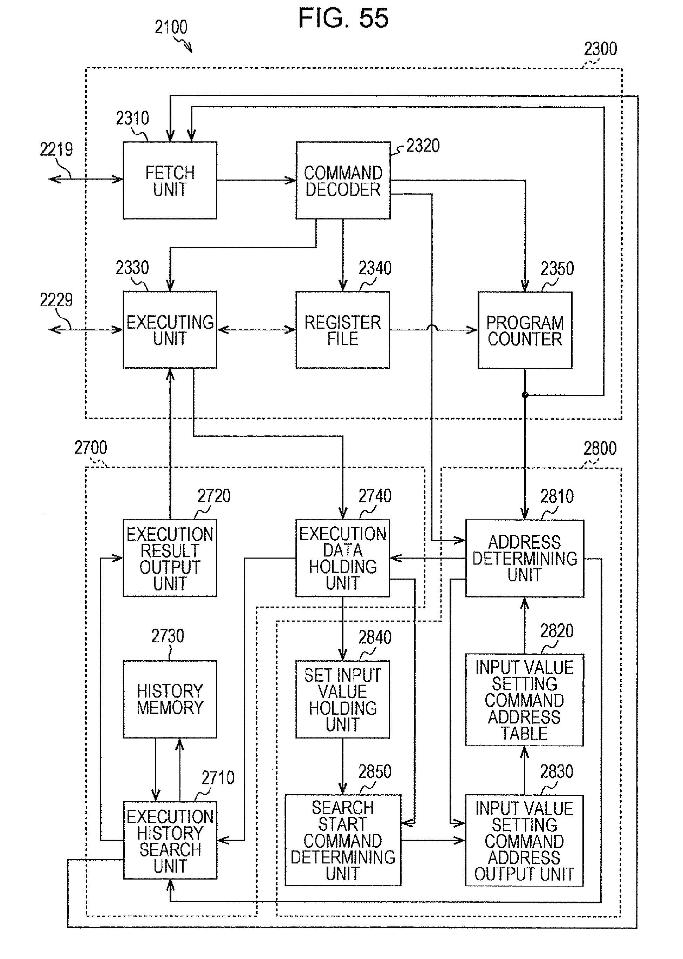

Fig. 55 is a block diagram illustrating a configuration example of the data processing device 2100 according to the third embodiment of the present invention. Here is shown, of the data processing device 2100 shown in Fig. 45, a data processing unit 2300, an execution result reuse processing unit 2700, and a search start command address managing unit 2800. Here, the data processing unit 2300 is the same as with Fig. 46, and accordingly denoted with the same reference numerals as in Fig. 46, and description thereof will be omitted here.

The execution result reuse processing unit 2700 includes an execution history search unit 2710, an execution result output unit 2720, history memory 2730, and an execution data holding unit 2740. The execution history search unit 2710, execution result output unit 2720, history memory 2730, and execution data holding unit 2740 correspond to the execution history search unit 2410, execution result output unit 2420, history memory 2430, and execution data holding unit 2440 shown in Fig. 46. Also, the configurations of the execution result output unit 2720 and history memory 2730 are the same as the execution result output unit 2420 and history memory 2430 shown in Fig. 46, and accordingly, description thereof will be omitted here.

The search start command address managing unit 2800 includes an address determining unit 2810, an input value setting command address table 2820, an input value setting command address output unit 2830, a setting input value holding 2840, and a search start command determining unit 2850. The address determining unit 2810 and input value setting command address table 2820 correspond to the address determining unit 2510 and input value setting command address table 2520 shown in Fig. 46.

Now, description will be made focusing on a function for registering an input value setting command address and section identification information in the input value setting command address table 2820. Also, a technique for searching an execution result in the history memory 2730 based on an input value setting command address registered in the input value setting command address table 2820, is realized by the same arrangement as with Fig. 46, and accordingly, description thereof will be omitted here.

The execution data holding unit 2740 holds, in accordance with the instructions from the address determining unit 2810, data used for the execution result reuse processing, and outputs the held data thereof to the execution history search unit 2710, set input value holding unit 2840, and search start command determining unit 2850. This execution data holding unit 2740 holds, in accordance with the instructions based on the input value setting signal from the address determining unit 2810, the output from the executing unit 2330 as a set input value.

This execution data holding unit 2740 holds an order where the set input value thereof is held on the time axis as a set order where an input value is set by an input value setting command, along with the set input value thereof. This execution data holding unit 2740 holds the first held set input value as the first set input value in accordance with instructions based on the input value setting signal from the address determining unit 2810, for example.

Also, the execution data holding unit 2740 outputs the held set input value thereof and the set order thereof to the set input value holding unit 2840 in accordance with the instructions based on the function call-up signal from the address determining unit 2810. The execution data holding unit 2740 outputs, for example, a storage location included in the set input value, and the set order thereof to the set input value holding unit 2840. The storage location mentioned here means the register number of the register file 2340, or the memory address of the main storage unit 2130.

At this time, in the event that there are multiple set input values indicating the same storage location, the execution data holding unit 2740 outputs, of the multiple set input values thereof, a set input value having the greatest number of (maximum) set order, and the set order thereof alone to the set input value holding unit 2840. That is to say, in the event that there are multiple set input values indicating the same storage location, the execution data holding unit 2740 outputs, of the multiple set input values, the set input value finally set, and the set order thereof. Or, in the event of newly holding a set input value indicating the same storage location in the set input value holding unit 2840, the execution data holding unit 2740 holds (overwrites) the set order of the new set input value thereof in a manner overlaid on the holding region of the set order of the already held set input value.

As described above, of multiple set input values indicating the same storage location, only a set input value having the maximum set order is held in the set input value holding unit 2840, whereby an input value setting command that has not been referenced as an input value of the function can be excluded from an input value set command to be registered. This is determined at the command decoder 2320 whether or not according to the storage destination of data indicated in a command, the command thereof is an input value setting command, but with regard to other than the command section of a function, a register in which an input value of the function is stored is also referenced by other processing. Therefore, of set input values indicating the same storage location, other than a set input value set immediately before a call-up command of the function can be determined to be other than the setting of an input value of the function.

Also, the execution data holding unit 2740 holds, for example, the output from the executing unit 2330 in accordance with the instructions based on the function call-up signal from the address determining unit 2810 as the section identification information of the function. The execution data holding unit 2740 holds, for example, the command address from the program counter 2350 in accordance with the instructions based on the function call-up signal from the address determining unit 2810 as the section identification information of the function.

Also, the execution data holding unit 2740 holds the output from the executing unit 2330 in accordance with the instructions based on the input value reference signal from the address determining unit 2810 as a reference input value. Also, the execution data holding unit 2740 holds the output from the executing unit 2330 in accordance with the instructions based on the execution result setting signal from the address determining unit 2810 as the execution result of the function.

Also, the execution data holding unit 2740 outputs the held section identification information and reference input value thereof to the search start command determining unit 2850 in accordance with the instructions based on the function return signal from the address determining unit 2810. This execution data holding unit 2740 outputs, for example, the storage location indicated by the reference input value to the search start command determining unit 2850 in accordance with the instructions based on the function return signal from the address determining unit 2810.

Also, the execution data holding unit 2740 outputs the held section identification information, reference input value, and execution result thereof to the execution history search unit 2710 in accordance with the instructions based on the function return signal from the address determining unit 2810.

Also, the execution data holding unit 2740 outputs, in accordance with the instructions based on the function return signal from the address determining unit 2810, the held data thereof to the execution history search unit 2710, and then eliminates the data held in the execution data holding unit 2740.

The address determining unit 2810 is for holding the input value setting command addresses of functions that are multiple command sections included in the program in the input value setting command address output unit 2830. This address determining unit 2810 holds the command address output from the program counter 2350 in the input value setting command address output unit 2830 as an input value command address based on the input value setting signal supplied from the command decoder 2320. Along therewith, this address determining unit 2810 holds the input value output from the executing unit 2330 in the execution data holding unit 2740 as a set input value based on the input value setting signal from the command decoder 2320.

Also, the address determining unit 2810 holds, for example, the head address the is that is a function command section in the execution data holding unit 2740 as section identification information based on the function call-up signal supplied from the command decoder 2320. This address determining unit 2810 holds, for example, the command address from the program counter 2350 in the execution data holding unit 2740 as section identification information based on the function call-up signal from the command decoder 2330. Or, this address determining unit 2810 holds, for example, the function head address output from the executing unit 2330 in the execution data holding unit 2440 as section identification information based on the function call-up signal from the command decoder 2320.

Also, the address determining unit 2810 holds the input value output from the executing unit 2330 in the execution data holding unit 2740 as a reference input value based on the input value reference signal supplied from the command decoder 2320. Also, the address determining unit 2810 holds the execution result output from the executing unit 2330 in the execution data holding unit 2740 based on the execution result setting signal supplied from the command decoder 2320.

The input value setting command address table 2820 is for holding, for each piece of section identification information for identifying a function that is a command section, an input value setting command address that is the address of an input value setting command for setting an input value in the function thereof. This input value setting command address table 2820 holds, for example, of input value setting commands for setting an input value in the function, the address of the earliest input value setting command for first setting an input value as an input value setting command address for each piece of section identification information.

Also, the input value outputs the held data thereof to the address determining unit 2810. Note that, in the event that the function has multiple arguments, multiple input value setting command addresses corresponding to the multiple arguments may be held in the input value setting command address table 2820 for each piece of the section identification information of the function thereof. Also, the input value setting command address table 2820 is an example of the input value setting command address table laid forth in the Claims.

The input value setting command address output unit 2830 is for correlating the input value setting command address supplied from the address determining unit 2810, and the section identification information supplied from the search start command determining unit 2850, and outputting to the input value setting command address table 2820. This input value setting command address output unit 2830 holds the input value setting command address supplied from the address determining unit 2810.

This input value setting command address output unit 2830 holds a set order that is an order where the input value setting value setting address thereof has been held on the time axis along with the input value setting command address thereof. This execution data holding unit 2740 holds, for example, the first input value setting command address supplied from the address determining unit 2810 as the first input value setting command address.

Also, the input value setting command address output unit 2830 correlates, of the held input value setting command addresses, the input value setting command address of the set order determined by the search start command determining unit 2850, and the section identification information from the search start command determining unit 2850, and outputs these. That is to say, the input value setting command address output unit 2830 correlates the input value setting command address in a function, and the function head address that is the section identification information of the function thereof, and registers in the input value setting command address table 2820 for each function.

Also, the input value setting command address output unit 2830 registers, in accordance with the instructions based on the function return signal from the address determining unit 2810, the held data thereof, and then eliminates the data held in the input value setting command address output unit 2830.

The set input value holding unit 2840 is for correlating the set input value output from the execution data holding unit 2740, and the set order thereof, and holding these. This set input value holding unit 2840 outputs the held set input value and the set order thereof to the search start command determining unit 2850.

The search start command determining unit 2850 is for determining, based on a storage location included in the reference input value referenced by execution of an input value reference command in execution of a function, the earliest input value setting command in the function thereof as a search start command. This search start command determining unit 2850 determines the set order of the earliest input value setting command based on the a storage location included in the set input value based on the input value setting command before a function call-up command, and a storage location included in the reference input value based on an input value reference command after the call-up command.

With this search start command determining unit 2850, for example, of the set input values in the set input value holding unit 2840, the set order of the set input value referenced in a function command section is extracted based on the storage location of the reference input value from the executing data holding unit 2740. This search start command determining unit 2850 then determines, of the set order of the extracted set input value, the smallest set order.

That is to say, the search start command determining unit 2850 determines, of commands determined to be input value setting commands at the command decoder 2320, an input value setting command that has first set an input value in the storage location of the input value referenced in the function command section, to be the earliest input value setting command.

Also, the search start command determining unit 2850 informs the input value setting command address output unit 2830 of the determined smallest set order thereof. Along therewith, the search start command determining unit 2850 outputs the section identification information output from the execution data holding unit 2740 to the input value setting command address output unit 2830.

Also, in the event that the storage location of the reference input value has been output from the execution data holding unit 2740, the search start command determining unit 2850 inhibits the input value setting command address output unit 2830 from registering an input value setting command address as to the input value setting command address table 2820. Thus, registration of an unnecessary input value setting command address as to the input value setting command address table 2820 can be reduced.

The execution history search unit 2710 is for registering the section identification information, reference input value, and execution result from the execution data holding unit 2740 in the history memory 2730 in accordance with the registration instructions based on the function return signal from the address determining unit 2810. The other functions of this execution history search unit 2710 are the same as with the execution history search unit 2410 shown in Fig. 46, and accordingly, description thereof will be omitted here.

In this way, the input value setting command address output unit 2830 is provided, whereby the input value setting command address and section identification information can be registered in the input value setting command address table 2820 while the program from the main storage unit 2130 is being executed. That is to say, the input value setting command address output unit 2830 is provided, whereby the input value setting command address held by an input value setting command, and the section identification information of the command section determined by the input value setting command thereof can be output to the input value setting command address table 2820.

Also, the input value setting command address output unit 2830 can output, of the input values set by an input setting command using the search start command determining unit 2850, the input value setting command address corresponding to the input value referenced in the command section called up by a call-up command. That is to say, the input value setting command address output unit 2830 can output, of the input value setting commands corresponding to multiple input values referenced in a command section, the input value setting command address of the earliest input value setting command, and the head address of a command section that is section identification information. Next, description will be made below regarding an example wherein an input value setting command address and section identification information are registered in the input value setting command address table 2820, with reference to the drawing.

[Registration Example as to Input Value Setting Command Address Table 2820]

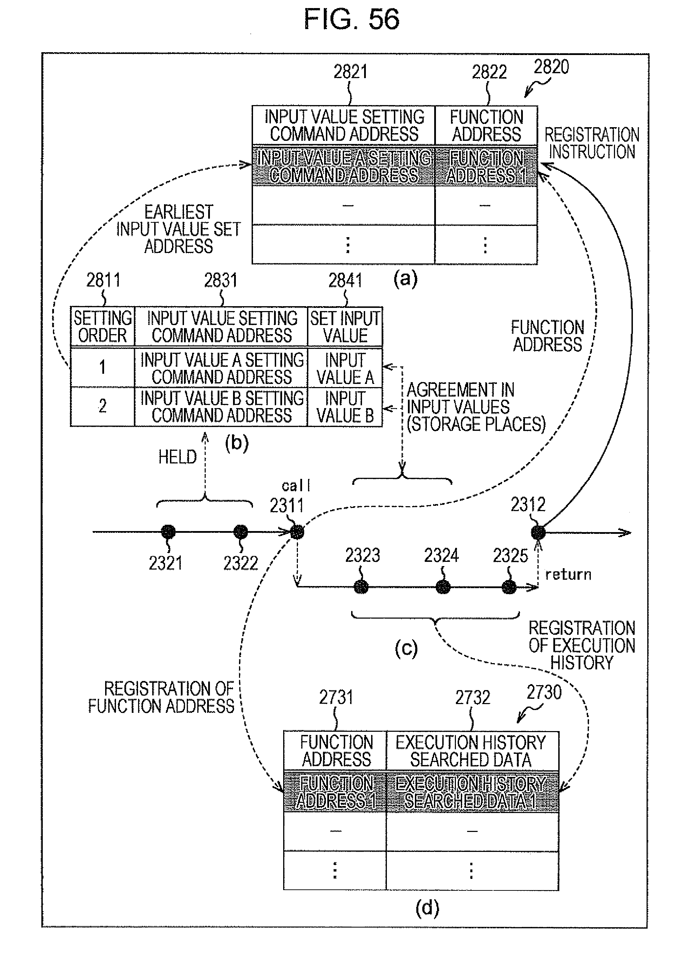

Fig. 56 is a conceptual diagram illustrating a registration example of an input value setting command address and section identification information as to the input value setting command address table 2820 using the data processing device 2100 according to the third embodiment of the present invention. (a) in Fig. 56 is a diagram illustrating an example of the data format of the input value setting command address table 2820. With the input value setting command address table 2820, correspondence relationship between the earliest input value setting command address 2821 in a command section that is a function, and a function address 2822 that is section identification information for identifying the function thereof is shown.

(b) in Fig. 56 is a diagram illustrating correspondence relationship between the input value setting command address and set input value held each time an input value setting command is executed. (b) in Fig. 56 indicates a set order 2811, an input value setting command address 2831, and a set input value 2841.

The set order 2811 indicates an order that an input value setting command has been executed. The input value setting command address 2831 indicates the command address from the program counter 2350 held in the input value setting command address output unit 2830 based on an input value setting command. The set input value 2841 indicates an input value held in the set input value holding unit 2840 based on an input value setting command. Note that this input value may be only information indicating the storage location of an input value. This is because if the storage location of an input value is known, determination can be made whether or not the input value in the function has been referenced.

(c) in Fig. 56 is a conceptual diagram illustrating a series of processing example wherein after a function having two arguments is called up by a call-up command (call) in an upper routine, the upper routine is restored by a return command (return) in a lower routine that is a command section of the function thereof.

Here, a call-up command (call) 311 and a return command (retuen) 312 of the function are indicated. Also, an input value A setting 2321 and an input value B setting 2322 in the upper routine, an input value A reference 2323, an input value B reference 2324, and an execution result C setting 2325 in the lower routine are indicated. These are the same as shown in (b) in Fig. 48, and accordingly, description thereof will be omitted here.

(d) in Fig. 56 is a conceptual diagram illustrating an example of the data format in the history memory 2730. Here, correspondence relationship between a function address 2731 that is the section identification information of the function, and execution history search data 2732 is shown. The execution history search data 2732 is search data structured of the tree structure shown in Fig. 47, and is search data including information correlated with an input value and an execution result in an execution history.

In such a case, with the input value A setting 2321, according to the instructions from the address determining unit 2810, the command address output from the program counter 2350 (input value A setting command address) is held in the input value setting command address output unit 2830. At this time, according to the instructions from the address determining unit 2810, the first set input value held in the execution data holding unit 2740 (input value A) is output to the set input value holding unit 2840.

With the input value B setting 2322, according to the instructions from the address determining unit 2810, the command address output from the program counter 2350 (input value B setting command address) is held in the input value setting command address output unit 2830. At this time, according to the instructions from the address determining unit 2810, the second set input value held in the execution data holding unit 2740 (input value B) is output to the set input value holding unit 2840.

With the call-up command (call) 311, according to the instructions from the address determining unit 2810, section identification information (function address 1) is held in the execution data holding unit 2740. With the input value A reference 2323, input value B reference 2324, and execution result C setting 2325, according to the instructions of the address determining unit 2810, the first reference input value (input value A), the second reference input value (input value B), and execution result (execution result C) are held in the execution data holding unit 2740.

With the return command (return) 312, according to the instructions from the address determining unit 2810, the section identification information (function address 1), and first and second reference input values (input value A and input value B) are output to the search start command determining unit 2850. Thus, according to the search start command determining unit 2850, the first and second set input values (input value A and input value B) in the set input value holding unit 2840 corresponding to the first and second reference input values (input value A and input value B) are extracted.

That is to say, based on the storage location of a reference input value in the execution data holding unit 2740, of the set input values in the set input value holding unit 2840, the input value referenced by execution of a function is determined. This is because even a command determined to be an input value setting command by the command decoder 2320 may not be a command for setting an input value as to a function. For example, a command for storing data in the register number 4 is determined to be an input value setting command by the command decoder 2320, but other than the command section of a function may be used by other processing.

According to the search start command determining unit 2850, of the set orders (1 and 2) of the extracted set input values, the smallest set order (1) is then selected. That is to say, according to the search start command determining unit 2850, the set order (1) corresponding to the set input value set based on the earliest input value setting command in the function is selected.

Thus, the set order (1) and section identification information (function address 1) from the search start command determining unit 2850 are supplied to the input value setting command address output unit 2830. According to the input value setting command address output unit 2830, "input value A setting command address" corresponding to the set order (1) and "function address 1" from the search start command determining unit 2850 are then correlated and output to the input value setting command address table 2820.

Also, according to the instructions from the address determining unit 2810, the section identification information (function address 1), reference input values (input value A and input value B), and execution result (execution result C) in the execution data holding unit 2740 are output to the execution history search unit 2710. The output data thereof is then registered in the history memory 2730 by the execution history search unit 2710.

[Example of Operation of Data Processing Device 2100]

Next, description will be made regarding the operation of the data processing device 2100 according to the third embodiment of the present invention, with reference to the drawing.

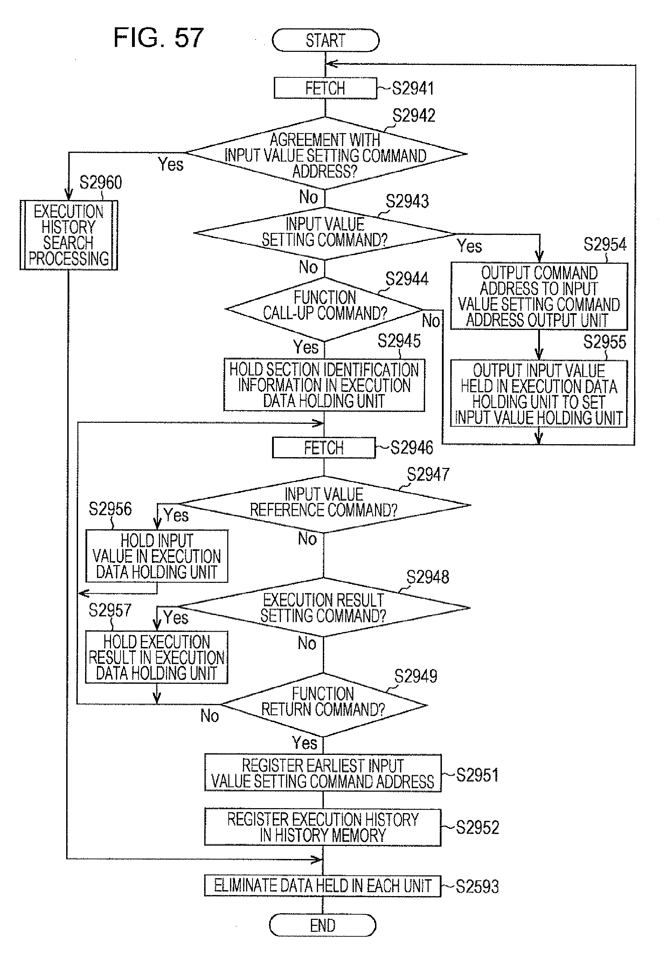

Fig. 57 is a flowchart illustrating an example of the processing procedure of the execution result reuse method using the data processing device 2100 according to the third embodiment of the present invention.

First, a command is read out from the main storage unit 2130 or command cache 2210 by the fetch unit 2310 (step S2941). Subsequently, determination is made by the address determining unit 2810 whether or not the command address output from the program counter 2350, and the input value setting command address in the input value setting command address table 2820 match (step S2942).

In the event that the command address from the program counter 2350 agrees with the input value setting command address, execution history search processing (step S2960) is then executed. On the other hand, in the event that the command address does not agree with the input value setting command address, determination is made by the command decoder 2320 whether or not the command is an input value setting command (step S2943).

In the event that determination is made that the command is an input value setting command, the command address from the program counter 2350 is then held in the input value setting command address output unit 2830 by the instructions from the address determining unit 2810 as an input value setting command address (step S2954). Subsequently, according to the instructions from the address determining unit 2810, the output from the executing unit 2330 is held in the execution data holding unit 2740, and the held set input value is held in the set input value holding unit 2840 (step S2955).

On the other hand, in the event that determination is made that the command is not an input value setting command, determination is made by the command decoder 2320 whether or not the command is a function call-up command (step S2944). In the event that determination is made that the command is not a function call-up command, the flow then returns to step S2941.

In this way, each time an input value setting command is read out until a function call-up command is read out, the command from the program counter 2350 is held in the input value setting command address output unit 2830, and the set input value and set order thereof are held in the set input value holding unit 2840. In this case, when a set input value having the same storage location of that set input value is already held in the set input value holding unit 2840, a new set input value and set order thereof are held in a manner overlaid on the held region of the already held set input value and set order thereof.

On the other hand, in the event that determination is made that the command is not a function call-up command, the head address of the function is held in the execution data holding unit 2740 by the address determining unit 2810 as section identification information (step S2945). Next, with the command section in the function, a command is read out from the main storage unit 2130 or command cache 2210 by the fetch unit 2310 (step S2946). Subsequently, determination is made by the command decoder 2320 whether or not the read command is an input value reference command (step S2947).

In the event that determination is made that the read command is an input value reference command, the output from the executing unit 2330 is then held in the execution data holding unit 2740 by the instructions from the address determining unit 2810 as a reference input value along with the order thereof (step S2956), and the flow returns to the processing in step S2946. On the other hand, in the event that determination is made that the read command is not an input value reference command, determination is made by the command decoder 2320 whether or not the read command is an execution result setting command (step S2948).

In the event that determination is made that the read command is an execution result setting command, the output from the executing unit 2330 is then held in the execution data holding unit 2740 by the instructions from the address determining unit 2810 (step S2957), the flow returns to the processing in step S2946. On the other hand, in the event that determination is made that the read command is not an execution result setting command, determination is made by the command decoder 2320 whether or not the read command is a function return command (step S2949).

In the event that determination is made that the read command is not a function return command, the flow then returns to step S2946, and the reference input value and execution result are held in the execution data holding unit 2740 until a function call-up command is read out.

On the other hand, in the event that determination is made that the read command is a function return command, the set order of the earliest set input value in the function is determined, of the set input values held in the set input value holding unit 2840, by the search start command determining unit 2850 based on the reference input values held in the execution data holding unit 2740. Of the input value setting command addresses in the input value setting command address output unit 2830, the input value setting command address corresponding to the set order determined by the search start command determining unit 2850 is then extracted as the earliest input value setting command address.

Thus, according to the input value setting command address output unit 2830, the earliest input value setting command address, and the section identification information from the execution data holding unit 2740 are correlated and registered in the input value setting command address table 2820 (step S2951). Also, according to the registration instructions from the address determining unit 2810, the section identification information, reference input value, and execution result in the execution data holding unit 2740 are registered in the history memory 2730 by the execution history search unit 2710 (step S2952).

After registration as to the history memory 2730 and input value setting command address table 2820 is completed, the data in the execution data holding unit 2740, set input value holding unit 2840, and input value setting command address output unit 2830 are then eliminated (step S2953). The processing of the execution result reuse method is then ended.

[Example of Execution History Search Processing in Data Processing Device 2100]

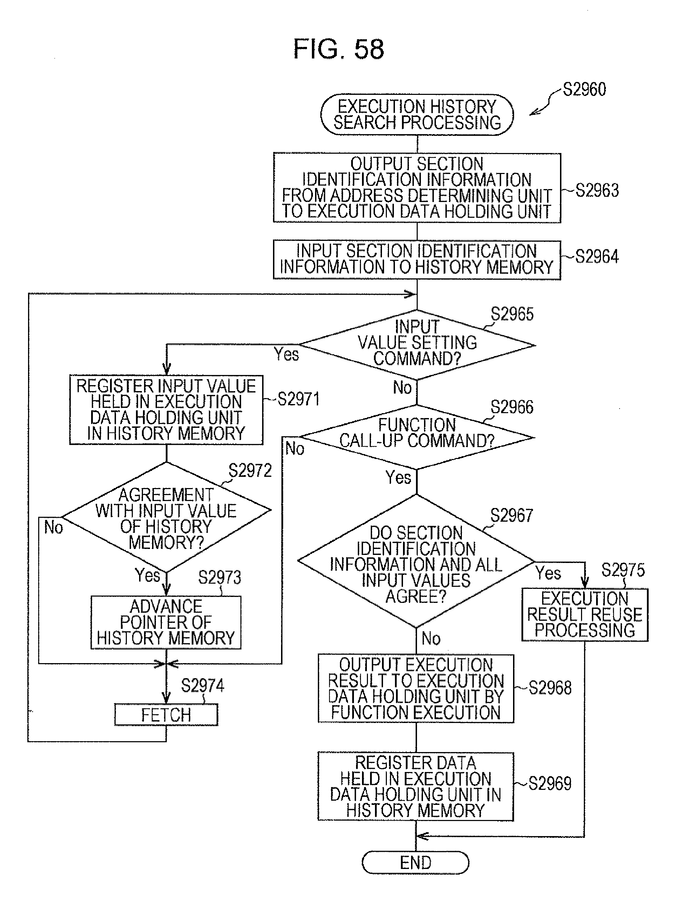

Fig. 58 is a flowchart illustrating a processing procedure example of the execution history search processing (step S2960) using the data processing device 2100 according to the third embodiment of the present invention.

First, according to the address determining unit 2810, the section identification information corresponding to the input value setting command address agreeing with the command address from the program counter 2350 is output from the input value setting command address table 2820 to the execution data holding unit 2740 (step S2963). Subsequently, according to the execution history search unit 2710, the section identification information held in the execution data holding unit 2740 is input to the history memory 2730 as the search key of the history memory 2730 (step S2964). Thus, search of multiple execution histories corresponding to section identification information in the history memory 2730 is started.

Next, determination is made by the command decoder 2320 whether or not the command read out from the fetch unit 2310 is an input value setting command (step S2965). In the event that determination is made that the read command is an input value setting command, the input value set by the input value setting command is then held in the execution data holding unit 2740 by the address determining unit 2810 based on the input value setting signal from the command decoder 2320.

The input value held in the execution data holding unit 2740 is then input to the history memory 2730 by the execution history search unit 2710 (step S2971). Note that, with regard to the first determination in step S2965, the read command is necessarily determined to be an input value setting command here, and accordingly, the determination thereof may be omitted so as to proceed to step S2971.

Subsequently, with regard to the execution history in the history memory 2730 corresponding to the section identification information from the execution history search unit 2710, determination is made by the history memory 2730 whether or not the input value from the execution history search unit 2710, and the input value in the execution history thereof match (step S2972). In the event that the input values of both do not match, the flow then proceeds to step S2974.

On the other hand, in the event that the input values of both match, in order to compare the input value of the next argument in the execution history, the pointer is advanced to the argument node in the next argument in the history memory 2730 (step S2973). That is to say, when there is an argument agreeing with the input value from the execution history search unit 2710, the next argument node is pointed to by the right pointer of the argument node thereof. Next, a command is read out from the main storage unit 2130 or command cache 2210 by the fetch unit 2310 (step S2974), and the flow returns to the processing in step S2915.

On the other hand, with the processing in step S2965, in the event that the read command is not an input value setting command, determination is made whether or not the command read out by the fetch unit 2310 is a function call-up command (step S2966). In the event that the read command is not a function call-up command, the flow then proceeds to step S2974.

In this way, until all of the input values in the function are set, a serried of processing in steps S2965, S2966, and S2971 through S2974 is repeatedly executed. That is to say, the input values set based on the input value setting commands of the function from the input value setting command to the call-up command determined by the input value setting command address table 2820 are held in the execution data holding unit 2740, and the held input values are input to the history memory 2730.

In this way, the section identification information corresponding to the input value setting command address agreeing with the command address output from the program counter 2350 is held in the execution data holding unit 2740. The input values output from the executing unit based on the input value setting commands of a command group from the input value setting command to the call-up command determined by the input value setting command address thereof are then held in the execution data holding unit 2740.

Thus, the execution result correlated with an execution history in the history memory 2730 is searched by the execution history search unit 2710 using the section identification information and input values in the execution data holding unit 2740. Note that steps S2963 through S2966, and S2971 through S2974 are an example of the execution history search procedure laid forth in the Claims.

On the other hand, in the event that determination is made in step S2966 that the read command is a function call-up command, determination is made whether or not the section identification information and input values in the execution data holding unit 2740 all agree with the input values correlated with the section identification information in the history memory 2730 (step S2967).

In the event that the section identification information and input values from the execution history search unit 2710 all agree, the execution result reuse processing is then executed (step S2975). That is to say, the execution result in the history memory 2730 corresponding to the section identification information and input values from the execution history search unit 2710 is output from the execution result output unit 2720. The execution result is then written back to the main storage unit 2130 or register file 2340, and the processing of the function is skipped. Note that S2975 is an example of the execution result output procedure laid forth in the Claims.

On the other hand, in the event that the section identification information and input values from the execution history search unit 2710 do not all agree, the function called up by the call-up command is executed, and the execution result thereof is held in the execution data holding unit 2740 (step S2968). The execution result held in the execution data holding unit 2740, and the section identification information and input values held by the processing in steps S2963 and S2971 are then registered in the history memory 2730 by the execution history search unit 2710 (step S2919).

As described above, with the third embodiment of the present invention, the search start command address managing unit 2800 can register the earliest input value setting command address in the input value setting command in the input value setting command address table 2820 during execution of the program.

As described above, according to an embodiment of the present embodiment, before execution of the call-up command of a command section, an execution history in the history memory 2430 and 2730 can be searched, and accordingly, the processing time of the program can be reduced owing to reuse of an execution result. Also, the input value setting command address tables 2520 and 2720 are provided, whereby an execution history can be searched in the history memory 2430 and 2730 before execution of a function call-up command without embedding a dedicated command in the program itself.

Note that, with an embodiment of the present invention, the history memory 2430 and 2730 may be realized by non-volatile memory such as SRAM (Stati Random Access Memory) or ROM (Read Only Memory). Thus, even in the event that the power of the data processing device 2100 has been turned off, the execution histories held in the history memory 2430 or 2730 is not eliminated, whereby the past execution results can effectively be used even immediately after activation of the data processing device 2100. Therefore, deterioration in execution time reduction effects can be suppressed owing to the execution result reuse processing immediately after activation of the data processing device 2100.

Also, the history data held in the history memory 2430 or 2730 may be transferred to a storage unit provided outside of the data processing device 2100 after execution of the program. Now, a case where a storage unit for storing history data is provided outside of the data processing device 2100 will briefly be described as a fourth embodiment with reference to the next drawing.

<4. Fourth Embodiment>

[Example for Providing History Data Storage Unit outside of Data Processing Device 2100]

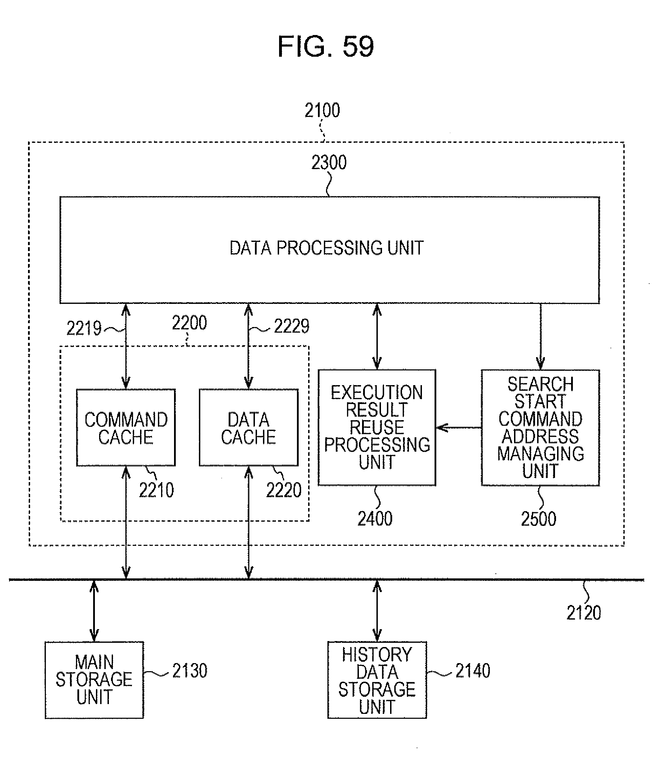

Fig. 59 is a block diagram illustrating a configuration example of an integrated circuit in the case of providing a history data storage unit outside of the data processing device 2100 according to the fourth embodiment of the present invention. Here is shown a history data storage unit 2140 in addition to the configuration of the integrated circuit shown in Fig. 45. The configuration other than this history data storage unit 2140 is the same as shown in Fig. 45, and accordingly, description thereof will be omitted here.

The history data storage unit 2140 is for storing history data in the history memory 2430 or 2730 transferred from the data processing device 2100 after the program stored in the main storage unit 2130 is executed. This history data storage unit 2140 is realized by nonvolatile memory, for example.

In this way, the history data storage unit 2140 realized by nonvolatile memory is provided outside of the data processing device 2100, and the history data of the history memory 2430 or 2730 is transferred, whereby elimination of history data due to power-off can be prevented. Next, a history data transfer method will briefly be described with reference to the next drawing.

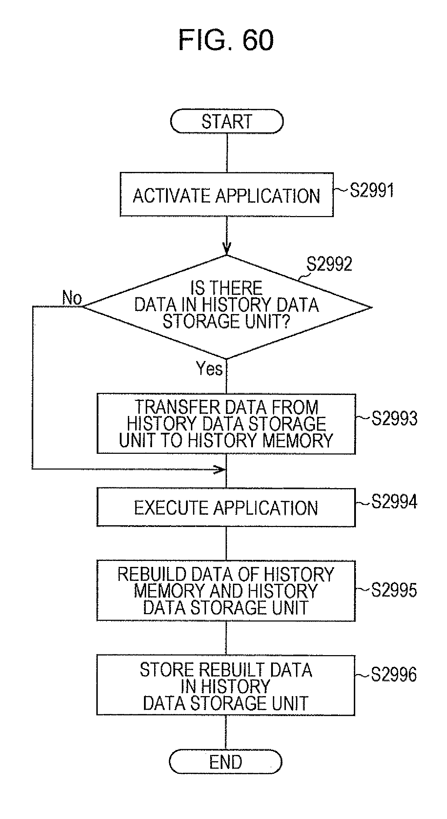

Fig. 60 is a flowchart illustrating the processing procedure of the history data transfer method using the data processing device 2100 according to the fourth embodiment of the present invention.

First, an application is activated (step S2991), and determination is made by the data processing unit 2300 whether or not there is history data in the history data storage unit 2140 (step S2992).

In the event that history data has been stored in the history data storage unit 2140, the stored history data is then transferred to the history memory 2430 or 2730 by the data processing unit 2300 (step S2993). On the other hand, in the event that no history data has been stored, the flow proceeds to step S2994.

An application that is the program stored in the main storage unit 2130 is then executed by the data processing unit 2300 (step S2994). After execution of this application, history data to be stored in the history data storage unit 2140 is newly restructured by the data processing unit 2300 based on the history data of both of the history data storage unit 2140 and history memory 2430 or 2730 (step S2995). The data processing unit 2300 then stores the restructured history data thereof in the history data storage unit 2140.

In this way, before execution of the program, the past history data stored in the history data storage unit 2140 is transferred to the history memory 2430 or 2730, whereby execution time reduction effects can be improved owing to the reuse processing immediately after activation of the program.

Note that, with an embodiment of the present invention, description has been made regarding an example of reuse of the execution result as to the command section of one function, but the present invention may further be applied to a function having a multiple structure such that a function is called up multiple times in the command section of the function.

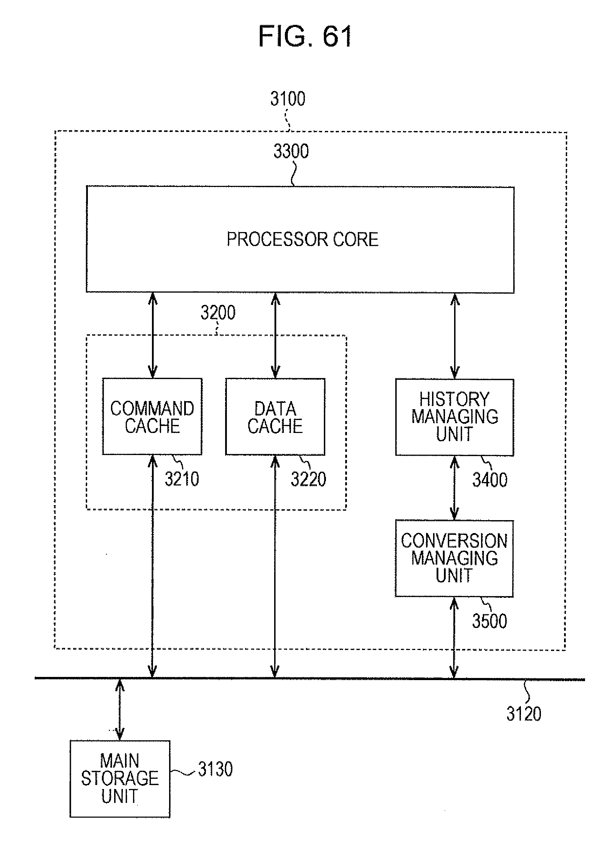

Next, a data processing device, a history storage device, a data processing method, and a program, which are the fourth present invention, will be described with reference to Fig. 61 through Fig. 75.

Modes for implementing the fourth present invention (hereafter, referred to as embodiments) will be described below.

Description will be made in accordance with the following order.

1. Configuration Example of Data Processing Device (value reuse control: an example for saving an execution history in a repeated reuse section)
2. Field Structure Example of History Information (value reuse control: examples of a function history, a loop individual history, a loop representative history, and a saved history)
3. Example of History Information Held in History Memory and Saved History held in Main Storage Unit (value reuse control: an example for saving and restoring a loop individual history example)
4. Processing Procedure Example of Data Processing Device (value reuse control: an example for saving and restoring a loop individual history example)

<1. Configuration Example of Data Processing Device>

[Configuration Example of Data Processing Device 3100]

Fig. 61 is a block diagram illustrating a configuration example of a data processing device 3100 according to an embodiment of the present invention. This data processing device 3100 is mutually connected to a main storage unit 3130 via a bus 3120. Also, now, let us assume that a command section where the data processing device 3100 executes processing is a function or loop.

The data processing device 3100 is for executing various types of processing in a program. This data processing device 3100 is realized by a CPU (Central Processing Unit) in a common computer, for example. This data processing device 3100 includes a primary cache 3200, a processor core 3300, a history managing unit 3400, and a history conversion unit 3500.

The primary cache 3200 is for temporarily holding information that the processor core 3300 handles via the bus 3120. This primary cache 3200 includes a command cache 3210 and a data cache 3220.

The command cache 3210 is for temporarily holding a command to be executed in the processor core 3300. This command cache 3210 temporarily holds a command that the processor core 3300 frequently executes, whereby access from the processor core 3300 to the main storage unit 3130 can be reduced, and data input waiting time in the processor core 3300 can be reduced. This command cache 3210 supplies the reusing command supplied from the main storage unit 3130 to the processor core 3300. The reusing command mentioned here is a command causing the data processing device to perform processing for reusing an execution result at the time of a reused section being called up by distinguishing a reused section where an execution result will be reused from a section not to be reused.

The data cache 3220 is for temporarily holding the input data and output data of the processor core 3300. This data cache 3220 temporarily holds the frequently-used input data of the processor core 3300, thereby reducing access from the processor core 3300 to the main storage unit 3130, and reducing the data input waiting time in the processor core 3300. This data cache 3220 outputs the input values and start address of a function or loop supplied from the main storage unit 3130 to the processor core 3300. Note that the input values mentioned here are values made up of an argument having a value supplied as a value necessary for execution of a function or loop, and examples of this include, in the event of a function with three variables as arguments, the values of these three variables, and the addresses of the variables thereof.

The processor core 3300 is for executing computation in accordance with a command in the program. This processor core 3300 is realized by an MIPS (Microprocessor without Interlocked Pipeline Stages) processor, for example. The processor core 3300 executes, for example, based on the input values and start address of the function or loop supplied from the data cache 3220, a command in the function or loop section input from the command cache 3210, and outputs the execution result thereof as an execution result. When the input command is a reusing command for specifying for specifying a reused section, and in the event that no execution result has been supplied from the history managing unit 3400, this processor core 3300 outputs the execution result that is a result of this command being executed to the data cache 3220 and history managing unit 3400.

Also, when the input command is a reusing command for specifying a reused section, and in the event that an execution result has been supplied from the history managing unit 3400, the processor core 3300 discontinues the processing in the reused section, and returns to a routine that called up this reused section to continue the execution.

The history managing unit 3400 is for holding and managing the execution result of a reused section. This history managing unit 3400 holds the section identification information, input values, and execution result of the reused section supplied from the processor core 3300 as an execution history. The section identification information mentioned here is information for identifying a reused section, and examples of this include the start address of a function or loop. That is to say, this history managing unit 3400 holds the start address, input values, and execution result of a function or loop as the section identification information, input values, and execution result. Also, in the event that the start address and input values of a function or loop have been supplied from the processor core 3300, this history managing unit 3400 searches an execution history including this start address and input values thereof.

The history conversion unit 3500 is for converting an execution history managed by the history managing unit 3400. This history conversion unit 3500 converts the execution result in a repeated reused section where execution is repeated of the reused sections registered in the history managing unit 3400, into a saved history to be held in the main storage unit 3130. The saved history mentioned here is data for saving the execution result of the execution history of the repeated reused section in the main storage unit 3130. Also, this history conversion unit 3500 restores the execution history based on the saved history held in the main storage unit 3130. This history conversion unit 3500 holds the saved history thereof in the main storage unit 3130, eliminates the execution history serving as the basis for generating the saved history from the history managing unit 3400, and registers a representative history holding information specifying the saved history in the history managing unit 3400.

Also, in the event of reusing an execution result included in the saved history thereof, this history conversion unit 3500 restores the execution history from the saved history, and also eliminates the representative history, and registers the restored execution history in the history managing unit 3400.

The bus 3120 is a bus mutually connecting between the units of the data processing device 3100 and the main storage unit 3130.

The main storage unit 3130 is for holding data necessary for the data processing device 3100 operating. This main storage unit 3130 holds the saved history supplied from the history conversion unit 3500. Also, this main storage unit 3130 stores a program causing the data processing device 3100 to execute processing. RAM (Random Access Memory) is conceived as an example of this main storage unit 3130. This main storage unit 3130 outputs the stored data to the data processing device 3100 via the bus 3120. Note that the main storage unit 3130 is an example of the saved history holding unit laid forth in the Claims.

[Configuration Example of Processor Core 3300, History Managing Unit 3400, and History Conversion Unit 3500]

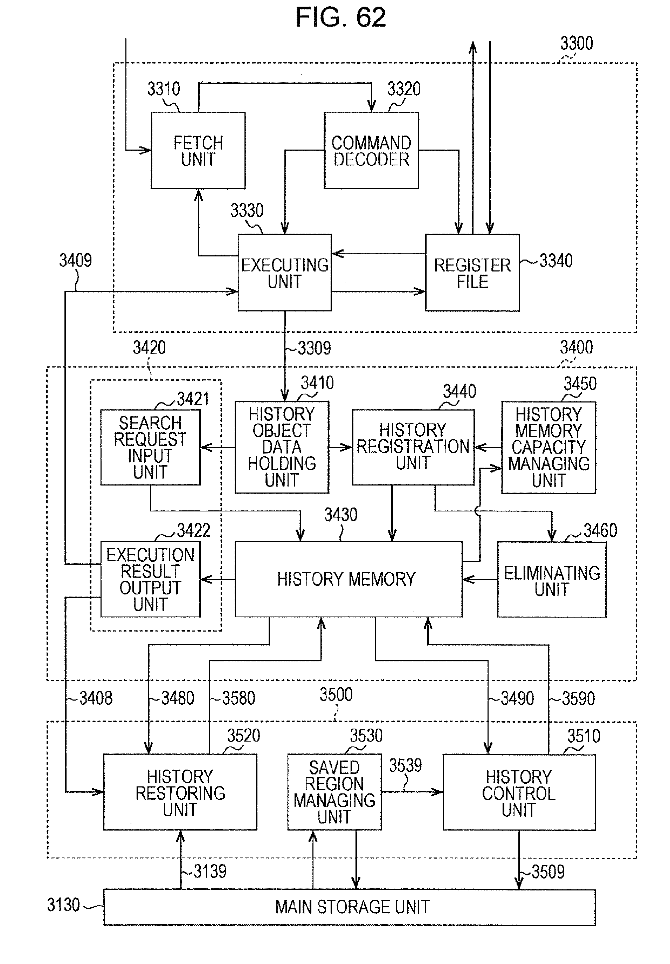

Fig. 62 is a block diagram illustrating a configuration example of the processor core 3300, history managing unit 3400, and history conversion unit 3500 according to an embodiment of the present invention. Here is also illustrated the main storage unit 3130 to be connected to the history conversion unit 3500 via the bus 3120 in addition to the processor core 3300, history managing unit 3400, and history conversion unit 3500. Here, the functions of the processor core 3300, history managing unit 3400, and history conversion unit 3500 are the same as with Fig. 61, denoted with the same reference numerals, and detailed description thereof will be omitted here.

Also, with the following description, let us assume for convenience that a repeated reused section that is a section to be repeatedly executed is a loop, and reused sections other than the repeated reused section are functions. Let us express reused sections other than this repeated reused section as function reused sections. Let us then express the execution of a loop as a loop individual history, and express the execution result of a function as a function history. Further, let us express a representative history specifying a saved history as a loop representative history.

The processor core 3300 includes a fetch unit 310, a command decoder 3320, an executing unit 3330, and a register file 3340.

The fetch unit 310 is for reading out a command from the command cache 3210 or main storage unit 3130. This fetch unit 310 temporarily holds the read command, and supplies, of the held commands, a command causing the executing unit 3330 to execute to the command decoder 3320. This fetch unit 310 supplies, for example, of the temporarily held commands, a reusing command to be executed at the executing unit 3330 to the command decoder 3320. This fetch unit supplies, for example, a reusing command stored in the main storage unit 3130 to the command decoder 3320.

The command decoder 3320 is for generating a control signal for controlling the components in the processor core 3300 by interpreting (decoding) the command supplied from the fetch unit 310. For example, this command decoder 3320 generates a control signal for controlling the executing unit 3330 and register file 3340 by decoding the command, and supplies the generated control signal to the executing unit 3330 and register file 3340.

In the event that a reusing command has been supplied from the fetch unit 310, this command decoder 3320 analyzes the reusing command thereof, thereby supplying a control signal for controlling each of the executing unit 3330 and register file 3340 to the executing unit 3330 and register file 3340.

The executing unit 3330 is for executing the command analyzed at the command decoder 3320 based on the control signal supplied from the command decoder 3320. In the event that the command decoder has decoded a reusing command, this executing unit 3330 starts processing of a reused section that the reusing command specifies. Also, the executing unit 3330 starts the processing of this reused section, and also outputs the section identification information of the reused section obtained from the register file 3340 to the history managing unit 3400 via a signal line 3309. The executing unit 3330 then executes processing in the reused section based on the input values of the reused section supplied from the register file 3340, and also outputs the input values of the reused section to the history managing unit 3400 via the signal line 3309.

Also, in the event that the execution result of the reused section has been supplied from the history managing unit 3400, the executing unit 3330 discontinues the processing of the reused section, and also supplies a signal to the effect that the execution result thereof has been supplied from the history managing unit 3400 to the fetch unit 310. At this time, the executing unit 3330 outputs the execution result to the register file 3340.

On the other hand, in the event that the execution result of the reused section has not been supplied from the history managing unit 3400, the executing unit 3330 executes the processing of the reused section to the end, and outputs the execution result thereof to the history managing unit 3400 and register file 3340. Further, in the event that the execution result of the repeated reused section has not been supplied, this executing unit 3330 outputs a loop counter value indicating how many times of execution the execution result is to the history managing unit 3400 along with the execution result. Note that the loop counter value is an example of the counter value laid forth in the Claims.

The register file 3340 is for temporarily holding the data supplied from the data cache 3220, and the execution result supplied from the executing unit 3330. For example, in the event that the control signal based on the reusing command from the command decoder 3320 has been supplied, this register file 3340 supplies the input values of the reused section to the executing unit 3330.

The history managing unit 3400 is for holding and managing the execution result of a reused section, and includes a history object data holding unit 3410, a history search unit 3420, history memory 3430, a history registration unit 3440, a history memory capacity managing unit 3450, and an eliminating unit 3460.

The history object data holding unit 3410 is for temporarily holding the data supplied from the executing unit 3330. In the event that section identification information and input values have been supplied from the executing unit 3330, this history object data holding unit 3410 supplies these to the history search unit 3420 as a search request. For example, in the event that a function reused section has been executed at the executing unit 3330, this history object data holding unit 3410 supplies the start address and input values of the function supplied from the executing unit 3330, to the history search unit 3420 as a search request. Also, in the vent that a repeated reused section has been executed at the executing unit 3330, the history object data holding unit 3410 supplies the start address, input values, and loop counter value of the loop supplied from the executing unit 3330 to the history search unit 3420 as a search request.

Also, in the event that the section identification information, input values, and execution result have been supplied from the executing unit 3330, a condition for registering an execution history is satisfied, and accordingly, this history object data holding unit 3410 supplies these to the history registration unit 3440 as an execution history. For example, in the event that a function reused section has been executed at the executing unit 3330, the history object holding unit 3410 supplies the start address, input values, and execution result of the function to the history registration unit 3440 as an execution history. Also, in the event that a repeated reused section has been executed at the executing unit 3330, the history object data holding unit 3410 supplies the start address, input value, execution result, and loop counter value of the loop to the history registration unit 3440 as an execution history.

The history search unit 3420 is for searching an execution history based on the search request supplied from the history object data holding unit 3410. This history search unit 3420 includes a search request input unit 3421 and an execution result output unit 3422.

The search request input unit 3421 is for searching an execution history from the history memory 3430 based on the search request supplied from the history object data holding unit 3410. For example, in the event that a command for specifying a repeated reused section has been analyzed at the command decoder 3320, this search request input unit 3421 supplies the start address, input value, and loop counter value of the loop specified by this command to the history memory 3430. Thus, search of an execution history is started.

The execution result output unit 3422 is for extracting, in the event that an execution history has been searched at the history memory 3430, the execution result from the history memory 3430, and outputting the extracted execution result to the executing unit 3330. This execution result output unit 3422 supplies the extracted execution result thereof to the executing unit 3330 via the signal line 3409.

Also, in the event that a loop representative history has been searched at the history memory 3430 as an execution history, this execution result output unit 3422 extracts saved history position information specifying a saved history from the history memory 3430 instead of an execution result. The execution result output unit 3422 then outputs information relating to the extracted saved history to the history conversion unit 3500, and starts restoration of an execution history.

The history memory 3430 is for holding the execution history supplied from the history registration unit 3440. For example, in the event that a search request has been supplied from the history search unit 3420, and when holding an execution history agreeing with this search request, this history memory 3430 supplies the execution result of this execution history to the execution result output unit 3422. Also, in the event that a search request has been supplied from the history search unit 3420, and when holding a loop representative history agreeing with this search request, this history memory 3430 supplies the saved history position information of this loop representative history to the execution result output unit 3422. Further, in the event that an execution history has been supplied from the history registration unit 3440, this history memory 3430 holds this execution history.

Also, this history memory 3430 supplies information relating to the status of use of the history memory 3430 to the history memory capacity managing unit 3450. Further, this history memory 3430 supplies the held execution history and loop representative history to the history conversion unit 3500. This history memory 3430 is realized by content addressable memory (CAM: Content Addressable Memory), for example.

The history registration unit 3440 is for converting the execution history supplied from the history object data holding unit 3410 into a data structure for being held in the history memory 3430, and registering the converted execution history thereof in the history memory 3430. For example, in the event that no function history has been searched by the history search unit 3420, this history registration unit 3440 registers the start address, input values, and execution result of the function in the history memory 3430 as an execution history. Also, for example, in the event that no loop individual history has been searched by the history search unit 3420, the history registration unit 3440 registers the start address, input values, execution result, and loop counter of the loop in the history memory 3430 as an execution history.

Also, in the event that the data amount of the execution history to be newly registered is greater than the free space of the history memory 3430 supplied from the history memory capacity managing unit 3450, this history registration unit 3440 temporarily discontinues the registration. This history registration unit 3440 then supplies, of the already registered execution histories, elimination start information for eliminating an execution history having the longest unused period since the last usage to the eliminating unit 3460.

The history memory capacity managing unit 3450 is for managing the free space of the history memory 3430. This history memory capacity managing unit 3450 measures the free space of the history memory 3430, for example, each time a new execution history has been registered in the history memory 3430. Further, this history memory capacity managing unit 3450 measures the free space of the history memory 3430 each time an execution history has been eliminated from the history memory 3430. This history memory capacity managing unit 3450 supplies information relating to the free space of the history memory 3430 to the history registration unit 3440.

The eliminating unit 3460 is for eliminating an execution history having the longest unused period since the last usage in the event that the elimination start information has been supplied from the history registration unit 3440.

The history conversion unit 3500 is for converting an execution history managed by the history managing unit 3400 into a saved history, and holding in the main storage unit 3130, and includes a history control unit 3510, a history restoring unit 3520, and a saved region managing unit 3530.

The history control unit 3510 is for generating a saved history from the loop individual execution history held in the history memory 3430, and saving in the main storage unit 3130. For example, this history control unit 3510 extracts the execution history of a repeated reused section from the history memory 3430 via a signal line 3490, and saves a saved history in the main storage unit 3130 based on the execution history thereof, and the address information of the main storage unit 3130 supplied from the saved region managing unit 3530. Also, for example, this history control unit 3510 starts saving of a saved history in the event that the data amount of the execution history to be newly held in the history memory 3430 is greater than the free space of the history memory 3430.

This history control unit 3510 then eliminates the loop individual history serving as the basis of the saved history from the history memory 3430, and registers the loop representative history including saved history position information in the history memory 3430 instead of the loop individual history. Note that the saved history position information mentioned here is, for example, the address of the main storage unit 3130 that specifies the storage location in the main storage unit 3130 of a saved history. In this way, the history control unit 3510 supplies the generated saved history in the main storage unit 3130 via a signal line 3509. Also, the history control unit 3510 supplies the generated loop representative history to the history memory 3430 via a signal line 3590. Note that the device made up of the history control unit 3510 and history memory 3430 is an example of the history saving device laid forth in the Claims.

The history restoring unit 3520 is for extracting a saved history from the main storage unit 3130 based on the saved history position information supplied from the execution result output unit 3422, and restoring the execution history based on the saved history thereof. For example, in the event that the execution result of the saved history saved in the main storage unit 3130 is reused, this history restoring unit 3520 extracts the saved history from the main storage unit 3130 via the signal line 3139 based on the information of the saved history supplied from the execution result output unit 3422. This history restoring unit 3520 then restores the execution history based on the loop representative history extracted from the history memory 3430, and the saved history extracted from the main storage unit 3130. This history restoring unit 3520 then eliminates the loop representative history held in the history memory 3430, and further secures capacity for holding the saved history in the history memory 3430, and then registers the restored execution history in the history memory 3430.

In this way, this history restoring unit 3520 supplies the restored execution history to the history memory 3430 via a signal line 3580.

The saved region managing unit 3530 is for managing a region where a saved history is held in the main storage unit 3130. For example, in the event that the region where a saved history is held has been secured in the main storage unit 3130, and the history control unit 3510 has generated a saved history, this saved region managing unit 3530 supplies the address of the saved destination of the saved history thereof in the main storage unit 3130 to the history control unit 3510 via a signal line 3539.

The main storage unit 3130 is for holding a saved history in this configuration drawing. Note that the main storage unit 3130 is an example of the saved history holding unit laid forth in the Claims.

As described above, with an embodiment of the present invention, the processor core 3300, history control unit 3400, and history conversion unit 3500 are provided, whereby the execution history of a repeated reused section can be saved in the main storage unit 3130.

Note that description has been made here regarding a case where the repeated reused section is a loop, but the present invention is not restricted to this. For example, a subroutine accompanied with a recursive call-up (recursive call) or the like can be conceived as a repeated reused section other than a loop.

[Configuration Example of History Control Unit 3510]

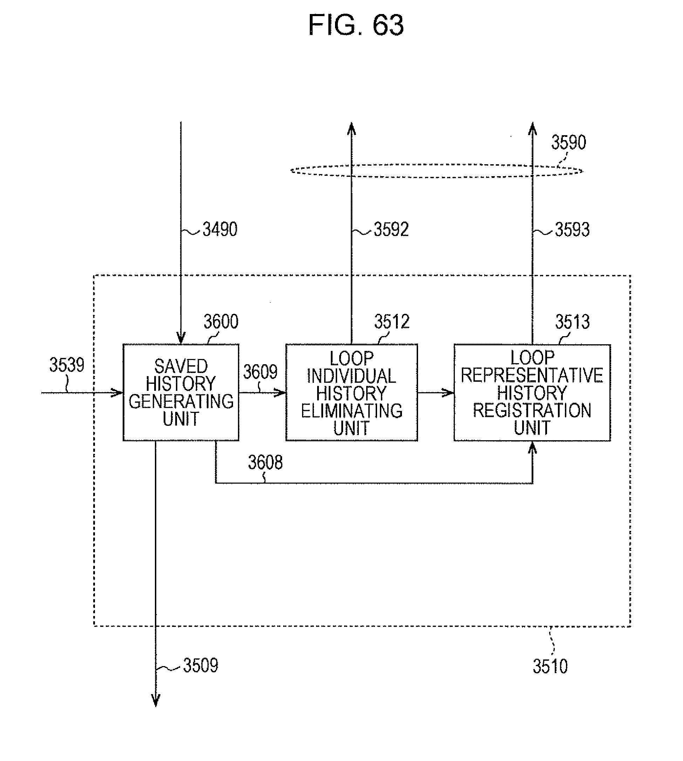

Fig. 63 is a block diagram illustrating a configuration example of the history control unit 3510 according to an embodiment of the present invention. The history control unit 3510 includes a saved history generating unit 3600, a loop individual history eliminating unit 3512, and a loop representative history registration unit 3513.

The saved history generating unit 3600 is for generating a saved history based on a loop individual history. For example, this saved history generating unit 3600 obtains a loop individual history including the execution result according to repeated execution of a loop from the history memory 3430 via the signal line 3490, and generates a saved history based on the obtained loop individual history thereof. At this time, this saved history generating unit 3600 receives the address of the saved destination of the saved history thereof in the main storage unit 3130 from the saved region managing unit 3530 via the signal line 3539. This saved history generating unit 3600 then saves the generated saved history in the main storage unit 3130 via the signal line 3509.

Also, this saved history generating unit 3600 generates a loop representative history including saved history position information, and supplies to the loop representative history registration unit 3513 via a signal line 3608. Further, this saved history generating unit 3600 supplies the loop individual history serving as the basis of the saved history to the loop individual history eliminating unit 3512 via a signal line 3609.

The loop individual history eliminating unit 3512 is for eliminating the execution history serving as the basis of the saved history. This loop individual history eliminating unit 3512 eliminates, based on the loop individual history serving as the basis of the saved history supplied from the saved history generating unit 3600, this loop individual history from the history memory 3430 via a signal line 3592. Also, this loop individual history eliminating unit 3512 supplies information for informing elimination of the loop individual history thereof to the loop representative history registration unit 3513.

The loop representative history registration unit 3513 is for registering a loop representative history in the history memory 3430. For example, in the event that a loop representative history has been supplied from the saved history generating unit 3600, and in the case that the information for informing elimination of a loop individual history has been supplied from the loop individual history eliminating unit, this loop representative history registration unit 3513 registers the loop representative history in the history memory 3430 via a signal line 3593.

[Configuration Example of Saved History Generating Unit 3600]

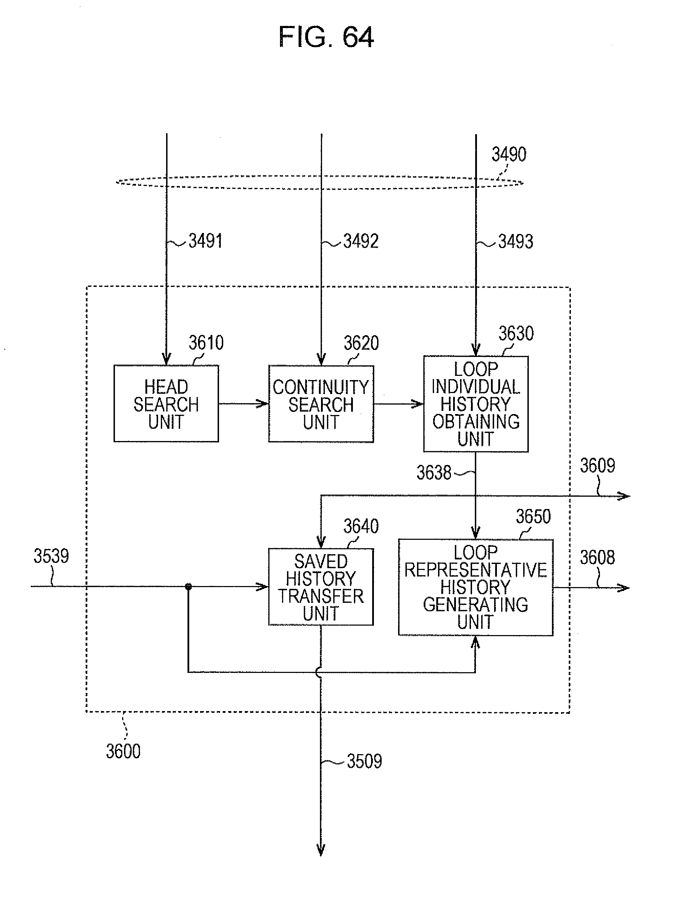

Fig. 64 is a block diagram illustrating a configuration example of the saved history generating unit 3600 according to an embodiment of the present invention. The saved history generating unit 3600 includes a head search unit 3610, a continuity search unit 3620, a loop individual history obtaining unit 3630, a saved history transfer unit 3640, and a loop representative history generating unit 3650.

The head search unit 3610 is for searching a loop individual history relating to the first execution of a repeated reused section form the history memory 3430 via a signal line 3491. In the event that a loop individual history has been searched, this head search unit 3610 temporarily stops its operation, and makes the continuity search unit 3620 process the subsequent search of the loop individual history. This head search unit 3610 supplies position information regarding the searched loop individual history to the continuity search unit 3620.

The continuity search unit 3620 is for searching a loop individual history regarding the second execution and thereafter via a signal line 3492 based on the position information of the loop individual history regarding the first execution of a repeated reused section supplied from the head search unit 3610. For example, in the event that, with a loop repeated 50 times, the position information of the first loop individual history has been supplied from the head search unit 3610, this continuity search unit 3620 searches the second through 50'th loop individual histories. In the event that the 51'st execution history has not been searched, this continuity search unit 3620 then supplies position information for obtaining the 50 loop individual histories to the loop individual history obtaining unit 3630.

Also, in the event that the second loop individual history and thereafter have not been searched, this continuity search unit 3620 determines that the repeated reused section has not repeatedly been executed, and discontinues generation of a saved history. This continuity search unit 3620 then temporarily stops its operation, and makes the head search unit 3610 resume search of a loop individual history regarding the first execution of the repeat reused section.

The loop individual history obtaining unit 3630 is for obtaining a loop individual history from the history memory 3430 via a signal line 3493 based on the position information for obtaining a loop individual history supplied from the continuity search unit 3620. For example, in the event that the position information regarding 50 loop individual histories in the repeated reused section repeated 50 times has been supplied from the continuity search unit 3620, this loop individual history obtaining unit 3630 obtains the 50 loop individual histories thereof from the history memory 3430. Also, this loop individual history obtaining unit 3630 supplies the obtained loop individual histories thereof to the saved history transfer unit 3640, loop representative history generating unit 3650, and loop individual history eliminating unit 3512 via a signal line 3638 and the signal line 3609.

The saved history transfer unit 3640 generates a saved history based on the loop individual history supplied from the loop individual history obtaining unit 3630, and transfers the generated saved history to the main storage unit 3130. For example, in the event that 50 loop individual histories of a repeated reused section repeated 50 times have been supplied, this saved history transfer unit 3640 generates 50 saved histories. This saved history transfer unit 3640 saves the saved histories in the main storage unit 3130 based on the addresses of the main storage unit 3130 supplied from the saved region managing unit 3530 via the signal line 3539. This saved history transfer unit 3640 transfers the generated saved histories to the main storage unit 3130 via the signal line 3509.

The loop representative history generating unit 3650 is for generating a loop representative history based on the loop individual history supplied from the loop individual history obtaining unit 3630. This loop representative history generating unit generates a loop representative history including saved history position information based on the address of the main storage unit 3130 supplied from the saved region managing unit 3530 via the signal 3539. This loop representative history generating unit 3650 supplies the generated loop representative history thereof to the loop representative history registration unit 3513 via the signal line 3608.

[Configuration Example of History Restoring Unit 3520]

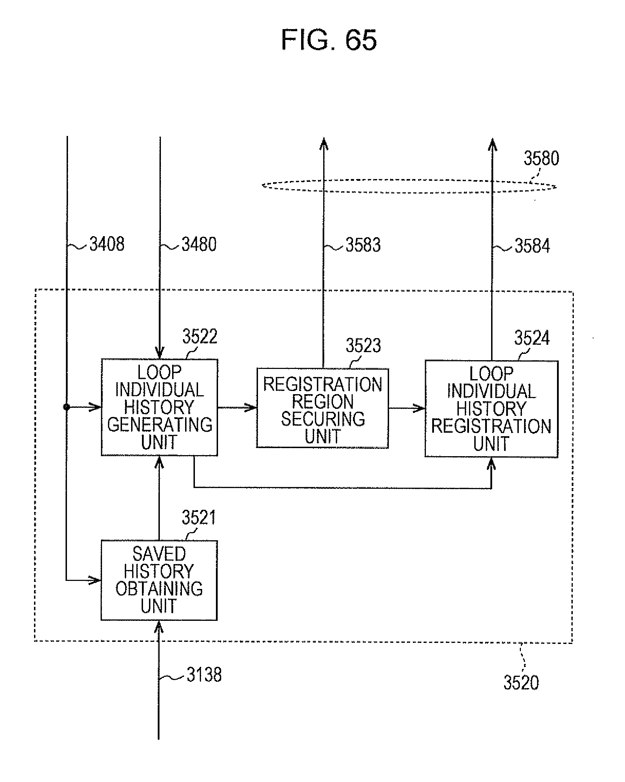

Fig. 65 is a block diagram illustrating a configuration example of the history restoring unit 3520 according to an embodiment of the present invention. The history restoring unit 3520 includes a saved history obtaining unit 3521, a loop individual history generating unit 3522, a registration region securing unit 3523, and a loop individual history registration unit 3524.

The saved history obtaining unit 3521 is for obtaining a saved history from the main storage unit 3130 based on the saved history position information supplied from the execution result output unit 3422. For example, in the event of obtaining the saved histories of a repeated reused section repeatedly executed 50 times, this saved history obtaining unit 3521 obtains the 50 saved histories from the main storage unit 3130 based on the saved history position information supplied from the execution result output unit 3422 via a signal line 3408. This saved history obtaining unit 3521 supplies the obtained saved histories thereof to the loop individual history generating unit 3522.

The loop individual history generating unit 3522 is for generating a loop individual history from a saved history. This loop individual history generating unit 3522 obtains, based on the saved history position information supplied via the signal line 3408, a loop representative history including the saved history position information from the history memory 3430 via a signal line 3480. This loop individual history generating unit 3522 then generates a loop individual history based on the obtained loop representative history thereof, and the saved history supplied from the saved history obtaining unit 3521.

This loop individual history generating unit 3522 supplies the generated loop individual history thereof to the loop individual history registration unit 3524. Also, this loop individual history generating unit 3522 supplies the loop representative history and the data amount of the loop individual history to the registration region securing unit 3523.

The registration region securing unit 3523 is for securing the spade region of the history memory 3430 for registering a loop individual history. This registration region securing unit 3523 eliminates the loop representative history supplied fro the loop individual history generating unit 3522 from the history memory 3430 via a signal 3583. This registration region securing unit 3523 then determines, based on the data amount of the loop individual history supplied from the loop individual history generating unit 3522, whether or not there is free space for registering all of the loop individual histories in the history memory 3430. In the event that the history memory 3430 lacks the free space thereof, this registration region securing unit 3523 secures free space via the signal line 3583. For example, this registration region securing unit 3523 eliminates an execution history having the longest unused period since the last usage to secure necessary free space in the history memory 3430.

This registration region securing unit 3523 supplies information relating to free space in the history memory 3430 to the loop individual history registration unit 3524.

The loop individual history registration unit 3524 is for registering the loop individual history supplied from the loop individual history generating unit 3522 in the history memory 3430 via a signal line 3584. This loop individual history registration unit 3524 registers the loop individual history supplied from the loop individual history generating unit 3522 in the free space of the history memory 3430 that the information supplied from the registration region securing unit 3523 specifies.

As described above, with an embodiment of the present invention, the history managing unit 3400 and history conversion unit 3500 are provided to the data processing device 3100, whereby the execution history of a repeated reused section to be repeatedly executed can be saved in the main storage unit 3130 as a saved history.

<2. Field Structure Example of History Information>

[Field Structure Example of Execution History, Loop Individual History, and Saved History]

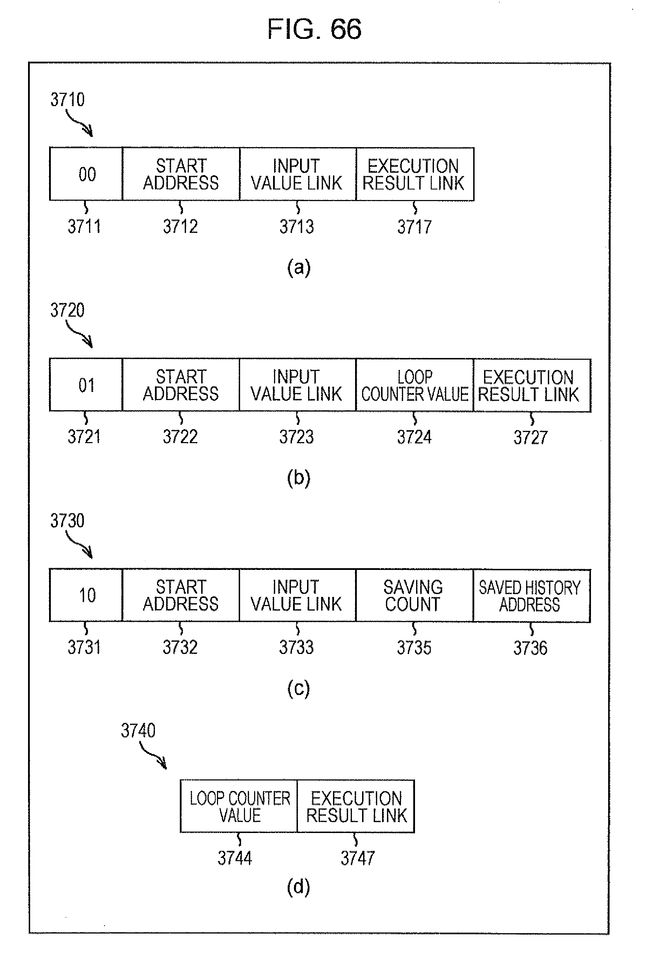

Fig. 66 is a schematic diagram illustrating a field structure example of a function history, a loop individual history, and a loop representative history to be held in the history memory 3430, and a saved history to be held in the main storage unit 3130, according to an embodiment of the present invention.

(a) in Fig. 66 indicates a field structure example of a function history 3710 that is the execution history of a function reused section. This function history 3710 is made up of an identifier field 3711, a start address field 3712, an input value link field 3713, and an execution result link field 3717.

The identifier field 3711 is a field for identifying a function history, a loop individual history, and a loop representative history. Two bits (00) indicating that this history is a function history are stored in this identifier field 3711. Also, this identifier field 3711 is the head field in the function history 3710, and is a field held in the start address of the function history 3710 thereof, for example.

The start address field 3712 is a field for storing the start address of a function. The start address of a function to be stored in this start address field 3712 is, in the event that an execution history is searched by the search request input unit 3421, compared with the start address of a search request.

The input value link field 3713 is a field for storing the address of an input value of a function stored by using a link structure. As for this input value link field 3713, when an execution history is searched by the search request input unit 3421, and then the start address of a search request, and the start address of the start address field 3712 match, an address where an input to be compared with the input value of a search request is held is stored in this input value link field 3713. For example, in the event of a function with three arguments as input values, an address where the first argument value that is the value of the first argument of the three functions is held is stored in the input value link field 3713.

The execution result field 3717 is a field for storing the address of the execution result of a function stored by using a link structure. As for this execution result link field 3717, when an execution history is searched by the search request input unit 3421, and then the start address and input values agree, an address where the execution result of a function to be output as an execution result is held is stored in this execution result link field 3717. For example, in the event of a function with three variables as output values, an address where the value of the first variable of the three variables is held is stored in the execution result field 3717.

(b) in Fig. 66 indicates a field structure example of a loop individual history 3720 that is the execution history of a repeated reused section. This loop individual history 3720 is made up of an identifier field 3721, a start address field 3722, an input value link field 3723, a loop counter value field 3724, and an execution result link field 3727.

The identifier 3721 is, in the same way as the identifier field shown in (a) in Fig. 66, a field for storing an identifier for identifying a function history, a loop individual history, and a loop representative history. Two bits (01) indicating that this history is a loop history are stored in this identifier field 3721. Also, this identifier field 3721 is the head field in the loop individual history 3720, and is a field held in the start address of the loop individual history 3720 thereof, for example.

The start address field 3722 is a field for storing the start address of a loop. The start address of a loop to be stored in this start address field 3722 is, in the event that an execution history is searched by the search request input unit 3421, compared with the start address of a search request.

The input value link field 3723 is a field for storing the address of an input value of a loop stored by using a link structure. The function of this input value link field 3723 is the same as with the input value link field 3713 shown in (a) in Fig. 66, and accordingly, detailed description thereof will be omitted here.

The loop counter value field 3724 is a field for storing a value indicating how many times of execution of a loop the execution result is. As for this counter value field 3724, when an execution history is searched by the search request input unit 3421, and then the start address and input values agree, a loop counter value to be compared with the loop counter value of a search request is stored in this counter value field 3724.

The execution result link field 3727 is a field for storing the address of the execution result of a loop stored by using a link structure. As for this execution result link field 3727, when an execution history is searched by the search request input unit 3421, and then the start address, input values, and loop counter value agree, an address where the execution result of the loop is held is stored in this execution result link field 3727 as an execution result.

(C) in Fig. 66 indicates a field structure example of a loop representative history 3730 that is the representative history of a repeated reused section. This loop representative history 3730 is made up of an identifier field 3731, a start address field 3732, an input value link field 3733, a saving count field 3735, and a saved history address field 3736.

The identifier 3731 is, in the same way as the identifier field shown in (a) in Fig. 66, a field for identifying a function history, a loop individual history, and a loop representative history. Two bits (10) indicating that this history is a loop representative history are stored in this identifier field 3731. Also, this identifier field 3731 is the head field in the loop representative history 3730, and is a field held in the start address of the loop representative history 3730 thereof, for example.

The start address field 3732 is, in the same way as the start address field 3722 shown in (b) in Fig. 66, a field for storing the start address of a loop. The function of this start address field 3732 is the same as with the start address field 3722 in (b) in Fig. 66, and accordingly, detailed description thereof will be omitted here.

The input value link field 3733 is, in the same way as the input value link field 3723 shown in (b) in Fig. 66, a field for storing the address of an input value of a loop stored by using a link structure. The function of this input value link field 3733 is the same as with the input value link field 3723 shown in (b) in Fig. 66, and accordingly, detailed description thereof will be omitted here.

The saving count field 3735 is a field for storing a value indicating the number of saved histories saved in the main storage unit 3130. As for this saving count field 3735, when an execution history is searched, and then the start address, and input values of the search request agree with the start address and input values of the loop representative history, the number of saved histories to be supplied to the history storing unit 3520 as saved history position information is stored in this saving count field 3735.

The saved history address field 3736 is a field for storing a saved history address. The saved history address mentioned here is an address where a saved history saved in the main storage unit 3130 is stored. As for this saved history address field 3736, when an execution history is searched, and then the start address, and input values of the search request agree with the start address and input values of the loop representative history, a saved history address to be supplied to the history restoring unit 3520 as saved history position information is stored in this saved history address field 3736. For example, in the event that multiple saved histories of a repeated reused section have been saved in continuous addresses, the start address of the first saved history is stored in this saved history address field 3736.

(d) in Fig. 66 indicates a field structure example of the saved history 3740 of the repeated reused section. This saved history 3740 is made up of a loop counter value field 3744 and an execution result link field 3747.

The loop counter value field 3744 is, in the same way as with the loop counter value field 3724 shown in (b) in Fig. 66, a field for storing a value indicating how many times of execution of a loop the execution result is. As for this loop counter value field 3744, when a loop individual history is restored by the history restoring unit 3520, a value serving as the loop counter value field 3724 is stored in this loop counter value field 3744.

The execution result link field 3747 is, in the same way as with the execution result link field 3727 shown in (b) in Fig. 66, a field for storing the address of the execution result of a loop stored by using a link structure. As for this execution result link field 3747, when a loop individual history is restored by the history restoring unit 3520, a value serving as the execution result link field 3727 is stored in this execution result like field 3747.

Note here that, in order to facilitate registration or elimination of an execution history and a loop representative history in the history memory 3430 by setting the data lengths of the execution history and loop representative history to fixed lengths, and also in order to reduce the data amount of execution histories, the input values and execution result are made up of a link structure. However, the data structures of a function history, loop individual history, loop representative history, and saved history are not restricted to these. For example, the input values and execution result may be held in a function history, loop individual history, loop representative history, and saved history without changing into a link structure.

[Data Structure Example of Input Value Link and Execution Result Link]

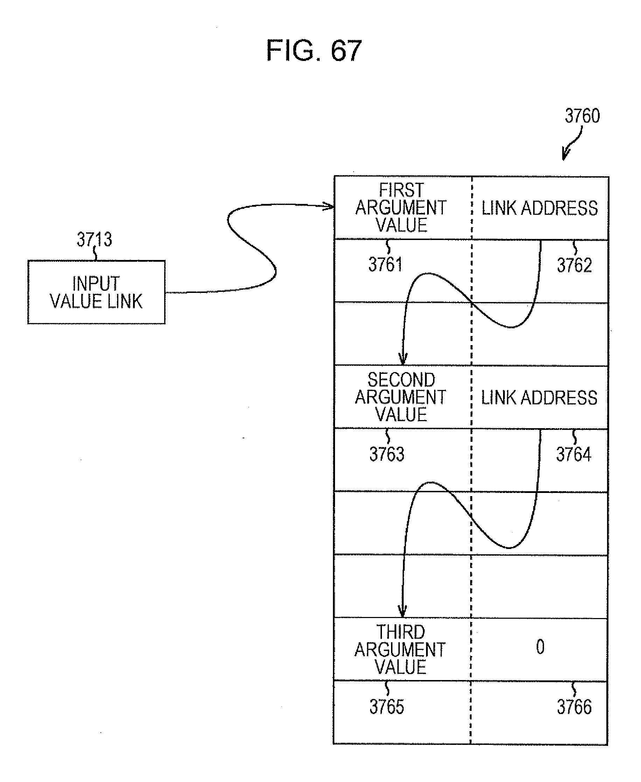

Fig. 67 is a conceptual diagram illustrating a data structure example of an input value link and an execution result link according to an embodiment of the present invention.

Here are data structures of the input value link field 3713 shown in (a) in Fig. 66, and an input value storage region 3760 for storing an input values. With this example, let us assume a function wherein three arguments are input values. Also, here, let us say that the input value storage region 3760 is a region in the history memory 3430 different from a region where a function history, loop individual history, and loop individual history are saved.

The input value storage region 3760 is a region where the input values of a function history and loop individual history are held. With this input value storage region 3760, as three arguments, the first argument value 3761, second argument value 3763, and third argument value 3765 are shown in the left-side column. With the column in the right side of this input value storage region 3760, link addresses 3762, 3764, and 3766 to be saved along with the three arguments thereof are then shown.

The first argument value 3761, second argument value 3763, and third argument value 3765 are regions where the argument values of three arguments that are input values that the input value link field 3713 specifies are held, respectively. Specifically, the argument value of an argument taken as the first is held in the first argument value 3761, the argument value of an argument taken as the second is held in the second argument value 3763, and the argument value of an argument taken as the third is held in the third argument value 3765. For example, an argument firstly used in a function reused section is held in the first argument value 3761, an argument secondly used is held in the second argument value 3763, and an argument thirdly used is held in the third argument value 3765. Also, the address of the first argument value 3761 is an address to be stored in the input value link field 3713.

The link address 3762, link address 3764, and link address 3766 are saved linking to the first argument value 3761, second argument value 3763, and third argument value 3765 respectively, which are regions for storing the next argument address. For example, the link address 3762 to be saved linking to the first argument value 3761 stores the address of the second argument value 3763. Also, with the link address 3762, link address 3764, and link address 3766, in the event that there is no next argument, "0" indicating that there is no link destination is stored therein. For example, the link address 3766 to be saved linking to the third argument value 3765 does not have the fourth argument, and accordingly, "0" is stored therein.

In this way, a link address where an input value of an execution history specifies the storage location of the next argument for each argument is held in the input value storage region 3760. At the time of search of an execution history, in the event that the start address of the search request, and the start address of the function history 3710 match, the input value link field 3713 is referenced, and from the first argument value 3761 is compared with the input value argument of the search request in order for each argument. Upon agreement continuing up to the third argument value 3765, search is then ended according to "0" in the link address 3766, and the processing proceeds to the output process of the execution result.

As described above, with an embodiment of the present invention, an input value of an execution history is saved by a link structure, whereby an input value can effectively be held by reducing an unnecessary region of the storage region. Note that, with regard to the input value link field 3723 and input value link field 3733, an input value is saved by using a link structure in the same way as with the input value link field 3713, and accordingly, description thereof will be omitted. Also, with regard to the execution result link field 3717, execution result link field 3727, and execution result link field 3747 as well, an execution result is saved by using a link structure in the same way as with the input vale link field 3713, and accordingly, description thereof will be omitted.

Note that here has been assumed a function where three arguments are input values, but the number of arguments is not restricted to the maximum three. Three or more arguments and variables can be handled by connecting links. Also, here has been assumed that the input value storage region 3760 is a region in the history memory 3430 to realize high-speed search, but the present invention is not restricted to this. For example, the input value storage region 3760 is secured in the main storage unit 3130, whereby many more execution histories and loop individual histories can be held in the history memory 3430.

<3. Example of History Information Held in History Memory and Saved History Held in Main Storage Unit> [Specific Example of Saving of Loop Individual History]

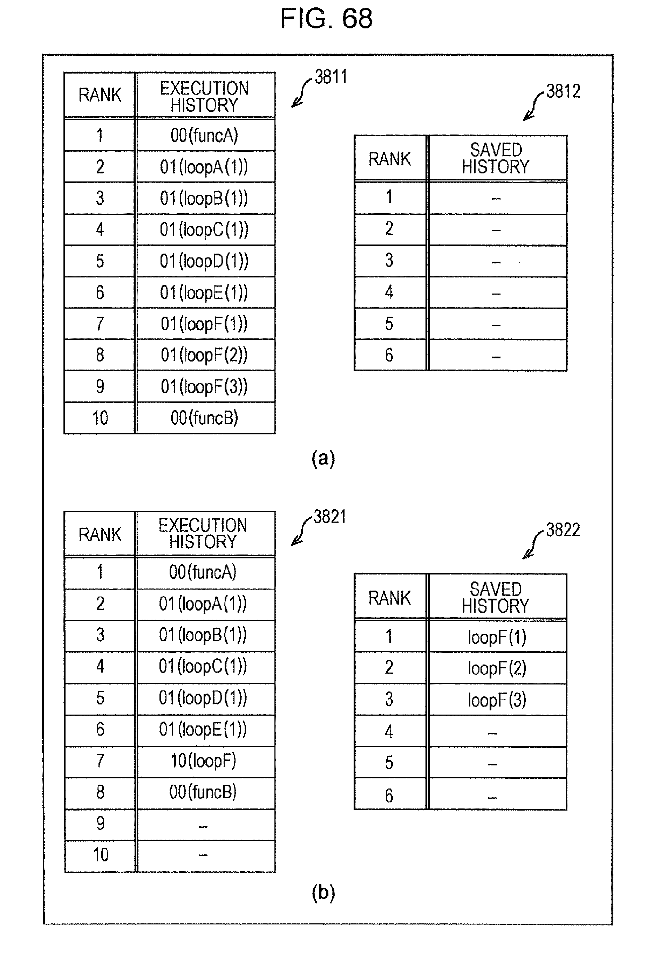

Fig. 68 is a diagram illustrating a specific example of execution histories, loop representative histories, and saved histories in the history memory 3430 and main storage unit 3130 at the time of saving of a loop individual history using the history control unit 3510 according to an embodiment of the present invention. Here, let us assume that a region for registering function histories, loop individual histories, and loop representative histories have capacity whereby 10 histories can be stored regardless of the data amount. Further, here, let us say that a region for holding saved histories in the main storage unit 3130 has capacity whereby 6 histories can be stored regardless of the data amount. Also, with the following description, for convenience, let us express three histories of a function history that is an execution history of a function reused section, a loop individual history that is an execution history of a repeated reused section, and a loop representative history that is a representative history of a repeated reused section, as history information.

(a) in Fig. 68 is an example of execution histories, loop representative histories, and saved histories in the history memory 3430 and main storage unit 3130 before the history control unit 3510 operates. Here are shown an execution history table 3811 and a saved history table 3812.

The execution history table 3811 is for expressing history information registered in the history memory 3430. With the left-side column in this execution history table 3811, ranks indicating orders registered in the history memory 3430 are exemplified from "1" to "10" in order. Let us say that this rank indicates that the smaller the numeric value, the earlier the history has been registered in the history memory 3430.

With the right-side column of the execution history table 3811, history information registered in the history memory 3430 is shown. Here are shown an identifier shown in (a) through (d) in Fig. 66, and a function or loop serving as the basis of the history information thereof. Also, in the case of a loop individual history, a value indicating how many times of execution the loop individual history thereof is in repeated execution is further shown.

For example, history information (00 (funcA)) of which the order is "1" indicates a function history (00) of a function A ((funcA). Also, history information (01 (loopF(1))) of which the order is "7" indicates a loop individual history (01) regarding the first execution (1) of a loop F (loopF). Also, history information (01 (1oopF(2))) of which the order is "8" indicates a loop individual history (01) regarding the second execution (2) of the repeated executed loop F (loopF).

The saved history table 3812 is for expressing saved histories saved in the main storage unit 3130. With the ranks in this saved history table 3812, ranks indicating orders registered in the main storage unit 3130 are shown, ranks from "1" to "6" are exemplified here. This rank means that the smaller the numeric value, the older and earlier this history has been registered.

With the saved histories in the saved history table 3812, saved histories saved in the main storage unit 3130 are shown. Here is shown that any saved histories have not been saved in the main storage unit 3130.

In such a case, upon detecting that the history memory 3430 does not have free space for registering a new execution history, the history control unit 3510 starts saving of a loop individual history of a repeated reused section repeatedly executed from the history memory 3430.

(b) in Fig. 68 is an example of history information and saved histories in the history memory 3430 and main storage unit 3130 after the history control unit 3510 operates. Here are shown an execution history table 3821 and a saved history table 3822.

The execution history table 3821 is for expressing history information in the history memory 3430 after the loop individual histories in the execution history table 3811 shown in (a) in Fig. 68 are saved.

With the execution history table 3821, the loop individual history (01 (loopF(1))) of which the order is "7", loop individual history (01 (loops(2))) of which the order is "8", and loop individual history (01 (loops(3))) of which the order is "9" in the execution history table 3811 are eliminated. A loop representative history (10 (loopF)) is then shown in the rank of "7" instead of the three loop individual histories thereof.

Also, the loop representative history (10 (loopF)) has been substituted for the three loop individual histories, and accordingly, the rank of the function history of the function B (00 (funcB)) shown in the rank of "10" in the execution history table 3811 in (a) in Fig. 68 is ranked up to "8". This then means that there is no execution history in the ranks "9" through "10" in the execution history table 3821.

The saved history table 3822 is for expressing saved histories saved in the main storage unit 3130 after the history control unit 3510 operate.

With the rank of "1" of this saved history table 3822, a saved history (loopF(1)) including the execution result of the first execution of the repeatedly executed loop F is shown, which has been generated based on the loop individual history (01 (loopF(1))) of the rank "7" of the execution history table 3811. With the rank of "2", a saved history (loopF(2)) including the execution result of the second execution of the repeatedly executed loop F is shown, which has been generated based on the loop individual history (01 (loopF(2))) of the rank "8" of the execution history table 3811.

With the rank of "3", a saved history (loopF(3)) including the execution result of the third execution of the repeatedly loop F is then shown, which has been generated based on the loop individual history (01 (loops(3))) of the rank "9" of the execution history table 3811.

As described above, with an embodiment of the present invention, the history control unit 3510 is provided, whereby the execution result of a loop individual history of a loop to be repeatedly executed can be saved in the main storage unit 3130.

[Specific Example of Restoration of Loop Individual History]

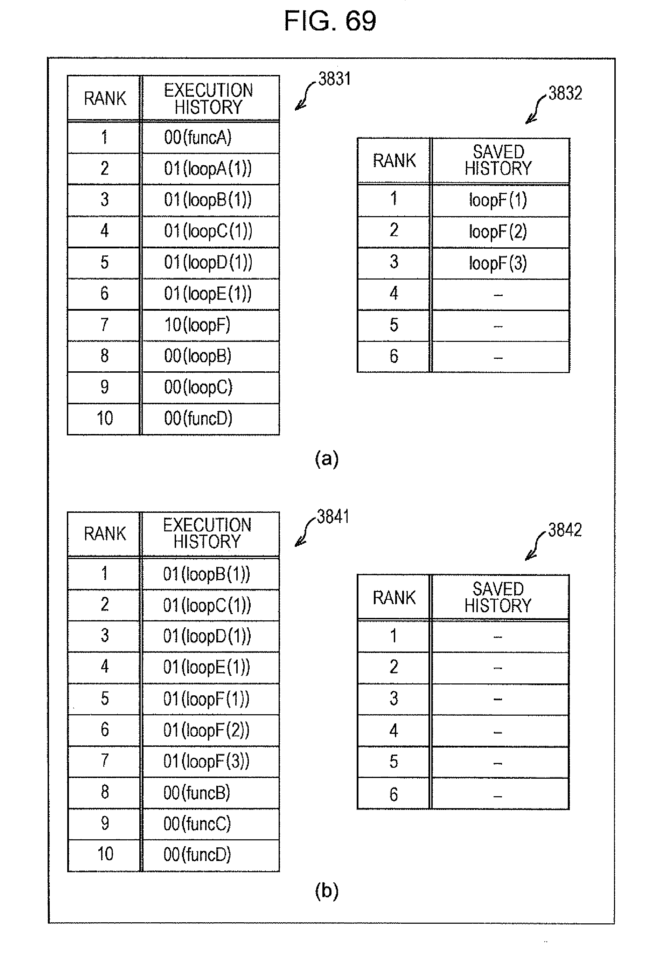

Fig. 69 is a diagram illustrating a specific example of execution histories, loop representative histories, and saved histories in the history memory 3430 and main storage unit 3130 at the time of restoration of a loop individual history using the history restoring unit 3520 according to an embodiment of the present invention. Here, let us assume that the history memory 3430 and main storage unit 3130 have the same function as the history memory 3430 and main storage unit 3130 shown in Fig. 68. Also, here, let us say that, in the event of registering a new execution history in the history memory 3430 having no free space, free space is secured by eliminating an execution history of which the unused period since the last usage is the longest (LRU: Least Recently Used). Further, here, let us assume that the execution histories have not ever been used after registration, and an execution history to be eliminated due to LRU is an execution history having the youngest order.

(a) in Fig. 69 is an example of history information and saved histories in the history memory 3430 and main storage unit 3130 before loop individual histories are restored based on the saved histories. Here are shown an execution history table 3831 and a saved history table 3832.

The execution history table 3831 is for expressing history information registered in the history memory 3430 before the history restoring unit 3520 restores loop individual histories. With this execution history table 3831, a state is shown wherein new execution histories have been stored in the free space of the execution history table 3821 shown in (b) in Fig. 68. As these new execution histories, a function history 00 of a function C (funcC) has been registered in the rank of "9", and a function history 00 of a function D (funcD) has been stored in the rank of "10".

The saved history table 3832 is, in the same way as the saved history table 3822 shown in (b) in Fig. 68, for expressing saved histories saved in the main storage unit 3130.

In such a case, upon a loop representative history relating to the loop F being searched from the history memory 3430 by the history search unit 3420, the history restoring unit 3520 starts restoration of loop individual histories from the saved histories.

(b) in Fig. 69 is an example of history information and saved histories in the history memory 3430 and main storage unit 3130 after loop individual histories are restored from the saved histories by the history restoring unit 3520. Here are shown an execution history table 3841 and a saved history table 3842.

The execution history table 3841 is for indicating history information registered in the history memory 3430 after the history restoring unit 3520 restores loop individual histories. With this execution history table 3841, a state is shown wherein loop individual histories have been restored from the saved histories in the saved history table 3821 shown in (a) in Fig. 69, and added to the execution histories in the execution history table 3831.

With this execution history table 3841, execution histories 00 (funcA) and 01 (loopA(1)) corresponding to the ranks "1" and "2" have been eliminated, and the orders of the execution histories of "3" through "6" have been ranked up to "1" through "4"

With the rank of "5", the execution history 01 (loopf(1)) serving as the basis of the saved history (loopF(1)) of the rank of "1" in the saved history table 3832 has then been restored and registered. With the ranks of "6" and "7" as well, in the same way as with "5", the execution histories 01 (loopF(2)) and 01 (loopF(3)) have been restored and registered.

The saved history table 3842 is for indicating saved histories saved in the main storage unit 3130 after the loop individual histories are restored. This saved history table 3842 indicates that the saved histories shown in the saved history table 3832 have all been restored and eliminated from the main storage unit 3130, and any saved histories are not saved.

As described above, with an embodiment of the present invention, the history restoring unit 3520 is provided, whereby loop individual histories saved in the main storage unit 3130 as saved histories can be restored to the history memory 3430.

[Registration Example of New Execution History According to Embodiment of Present Invention]

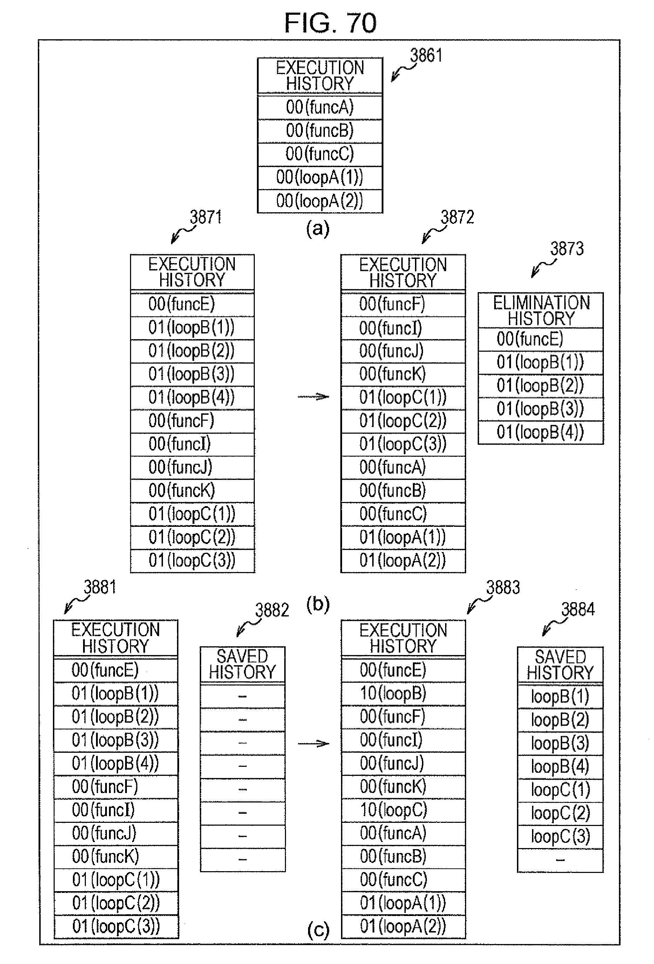

Fig. 70 is a diagram illustrating a specific example of history information in the history memory 3430, and saved histories in the main storage unit 3130 at the time of a new execution history according an embodiment of the present invention being registered. Here, let us assume that the history memory 3430 has capacity whereby 12 pieces of history information can be registered regardless of the data amount.

Also, here, let us say that, in the event of desiring to register a new execution history in the history memory 4340 having no free space, an execution history having the longest unused period since the last usage can be eliminated (LRU). Further, here, let us assume that the execution histories have not ever been used after registration, and an execution history to be eliminated due to LRU is an execution history that has been registered earliest in the history memory 3430.

(a) in Fig. 70 is a schematic diagram illustrating execution histories to be newly registered. Here are shown execution histories to be newly registered in a registration history table 3861. Note that let us assume that, of the execution histories described in the registration history table 3861, registration to the history memory 3430 is sequentially performed from execution histories described upward.

(b) in Fig. 70 indicates a specific example of history information in the history memory 3430, and saved histories in the main storage unit 3130 at the time of a new execution history being registered at the data processing device 3100 using a conventional technique. Here are shown an execution history table 3871, an execution history 3872, and an eliminated history table 3873.

The execution history table 3871 is for expressing execution histories in the history memory 3430 before the new execution histories shown in the registration table 3861 are registered. Also, with this execution history table 3871, let us assume that registration to the history memory has sequentially been performed from the execution histories described upward.

The execution history table 3872 is for indicating execution histories in the history memory 3430 after the new execution histories shown in the registration history table 3861 are registered. With this execution history table 3872, a state is shown wherein the new execution histories shown in the registration history table 3861 have been registered in the execution histories in the execution history table 3871.

With this execution history table 3872, the first through fifth execution histories (00 (funcE)), 01 (loopB(1) through 01 (loopB(4)) are eliminated from the top in the execution history table 3871. The sixth through twelfth execution histories from the top in the execution history table 3871 are then shown in the first through seventh of the execution history table 3872. Further, with the execution history table 3872, the new execution histories shown in the registration history table 3861 are shown in the eighth through twelfth.

The eliminated history table 3873 is for expressing execution histories eliminated from the history memory 3430 according to registration of the new execution histories shown in the registration history table 3861. With this eliminated history table 3873, the first through fifth execution histories from the top in the execution history table 3871 are shown.

In this way, with the data processing device 3100 using a conventional technique, the history control unit 3510 is not provided, and accordingly, the execution result of an execution history cannot be saved in the main storage unit 3130. Thus, in the event of registering a new execution history in the history memory 3430, an execution history having the longest unused period since the last usage is eliminated from the history memory 3430, a new execution history has to be registered instead thereof.

(c) in Fig. 7 is for indicating a specific example of history information in the history memory 3430, and saved histories in the main storage unit 3130 at the data processing device 3100 according to an embodiment of the present invention. Here are shown an execution history table 3881, a saved history table 3882, an execution history table 3883, and a saved history table 3884. Here, let us assume that a region where the saved histories in the main storage unit 3130 are saved has capacity whereby eight saved histories can be saved regardless of the data amount.

The execution history table 3881 is for expressing execution histories in the history memory 3430 before the new execution histories shown in the registration history table 3861 are registered. This execution history table 3881 indicates the same history information as with the execution history table in (b) in Fig. 70, and accordingly, detailed description thereof will be omitted.

The saved history table 3882 is for expressing saved histories in the main storage unit 3130 before the new execution histories shown in the registration history table 3861 are registered. This saved history table 3882 indicates that any saved histories are not saved in the main storage unit 3130.

The execution history table 3883 is for indicating history information in the history memory 3430 after the new execution histories shown in the registration history table 3861 are registered. With this execution history table 3883, a state is shown wherein the new execution histories shown in the registration history table 3861 are registered in the execution histories in the execution history table 3881.

With this execution history table 3883, the send through fifth loop individual histories of a loop B (01 (loopB(1)) through 01 (loop(4)) from the top in the execution history table 3881 have been eliminated. Instead of the eliminated loop individual histories of the loop B, the loop representative history (10 (loopB)) is then shown in the second from the top in the execution history table 3883. Also, the sixth through ninth execution histories from the top in the execution history table 3881 are shown in the third through sixth in this execution history table 3883.

Further, with this execution history table 3883, the tenth through twelfth loop individual histories of the loop C (01 (loopC(1)) through 01 (loopC(3)) from the top in the execution history table 3881 have been eliminated from the history memory 3430. Instead of the eliminated loop individual histories of the loop C, the loop representative history (10 (loopC)) is then shown in the seventh from the top. With this execution history table 3883, the new execution histories shown in the registration history table 3861 are then shown in the eighth through twelfth.

The save history table 3884 is for indicating saved histories in the main storage unit 3130 after the new execution histories shown in the registration history table 3861 are registered. With this saved history table 3884, the saved histories (loopB(1) through loopB(4)) regarding the loop B are shown in the first through fourth from the top. Further, here, the saved histories (loopC(1) through loopC(3)) regarding the loop C are shown in the fifth through seventh from the top.

As described above, with the data processing device 3100 according to an embodiment of the present invention, the history control unit 3510 is provided, whereby a loop representative history can be registered in the history memory 3430 instead of the loop individual histories serving as the basis of the saved histories by saving saved histories in the main storage unit 3130. Thus, in the event of registering a new execution history in the history memory 3430, saved histories are saved based on the loop individual histories, and then the loop individual histories are replaced with a loop representative history, whereby the free space of the history memory 3430 can be generated. That is to say, according to an embodiment of the present invention, the number of execution histories to be held in the history memory 3430 can be increased as compared to the data processing device 3100 using a conventional technique.

<4. Processing Procedure Example of Data Processing Device>

[Example of Operation of History Control Unit 3510 According to Embodiment of Present Invention]

Next, the processing of the history control unit 3510 according to an embodiment of the present invention will be described with reference to the drawing.

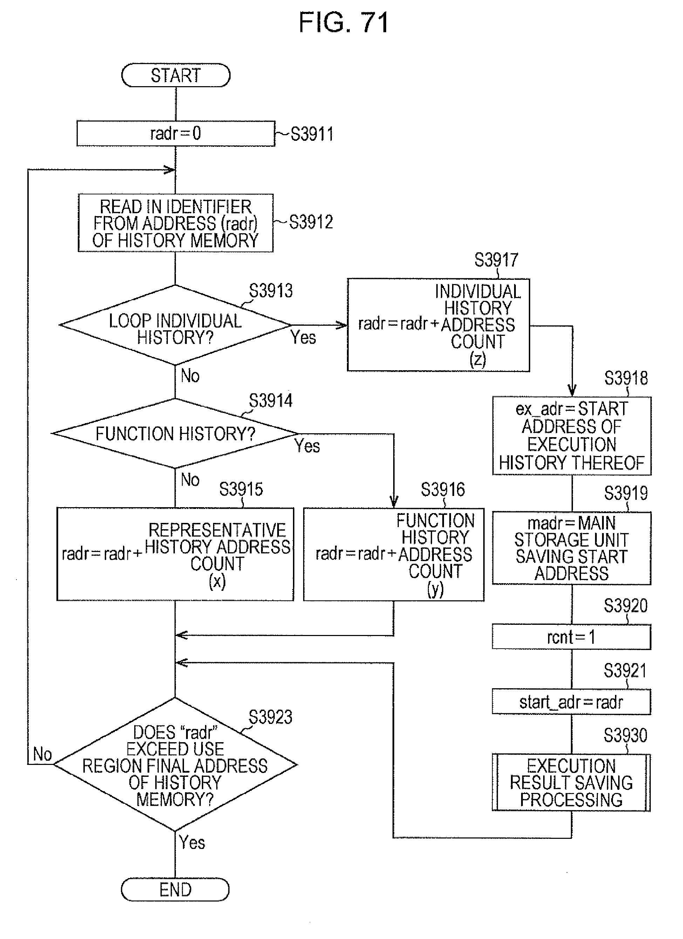

Fig. 71 is a flowchart illustrating a processing procedure example of saving processing of loop individual histories using the history control unit 3510 according to an embodiment of the present invention. Note here that let us assume that function histories, loop individual histories, loop representative histories, and saved histories are each fixed length data. Also, here, let us say that, with the history memory 3430, function histories, loop individual histories, and loop representative histories are stored in continuous addresses in the registered order. Further, let us say that, with the main storage unit 3130, saved histories are stored in continuous addresses in the saved order.

First, a search address (radr) is set to "0" at the head search unit 3610 (step S3911). Thus, search of a saved history is started from the head data of a region where the history information in the history memory 3430 is registered.

Next, an identifier is read out from the search address (radr) at the head search unit 3610 (step S3912). Determination is then made whether or not the read identifier is "01" indicating a loop individual history (step S3913). In the event that determination is made that the identifier is not "01", determination is then made whether or not the read identifier is "00" indicating a function history (step S3914).

In the event that determination is made that the identifier is not "00", determination is then made that the history information to be analyzed is a loop representative history of which the identifier is "10". Subsequently, the search address (radr) is updated by a representative history address count (x) that is the number of addresses where a loop representative history is held, calculated from the data length of a loop representative history, being added to the search address (radr) (step S3915). Thus, the search address becomes an address indicating an identifier in the history information to be analyzed next.

On the other hand, in the event that determination is made in the processing in step S3914 that the identifier is "00", determination is made that the history information indicating the identifier thereof is a function history. The search address (radr) is then updated by a function history address count (y) that is the number of addresses where a function history is held, calculated from the data length of a function history, being added to the search address (radr) (step S3916).

On the other hand, in the event that determination is made in the processing in step S3913 that the identifier is "01", determination is made that the history information indicating the identifier thereof is a loop individual history. The search address (radr) is then updated by a individual history address count (z) that is the number of addresses where a loop individual history is held, calculated from the data length of a loop individual history, being added to the search address (radr) (step S3917).

Next, at the continuity search unit 3620, a loop start address for continuous search (ex_adr) is set to the start address of a repeated reused section in the loop individual history detected in step S3913 (step S3918). Further, a saved history start address (madr) is set to a saving start address that is a start address for storing the first saved history supplied from the saved region managing unit 3530 (step S3919).

Further, a continuity counter (rcnt) for counting the number of times of loops is set to "1!' (step S3920). Also, a loop individual history start address (start_adr) is set to the start address of the loop individual history detected in step S3913 (step S3921). According to a series of processing in steps S3918 through S3921, preparation for processing in step S3930 is completed.

Determination is then made whether or not the loop individual history detected in step S3913 is the first execution result of a repeated reused section to be repeated, and in the event that the repeated reused section has been repeated, execution result saving processing for saving the execution results of loop individual histories in the main storage unit 3130 is performed (step S3930).

After steps S3915, S3916, and S3930, determination is made whether or not the search address (radr) exceeds a use region final address in the history memory 3430 (step S3923). The use region final address mentioned here is the final address where history information last registered of history information stored in the order registered in continuous addresses is recorded.

In the event that the search address (radr) does not exceed the final address of the use region, the flow then returns to step S3912, and the processing is repeated. On the other hand, in the event of exceeding the final address, the saving processing of loop individual histories is ended.

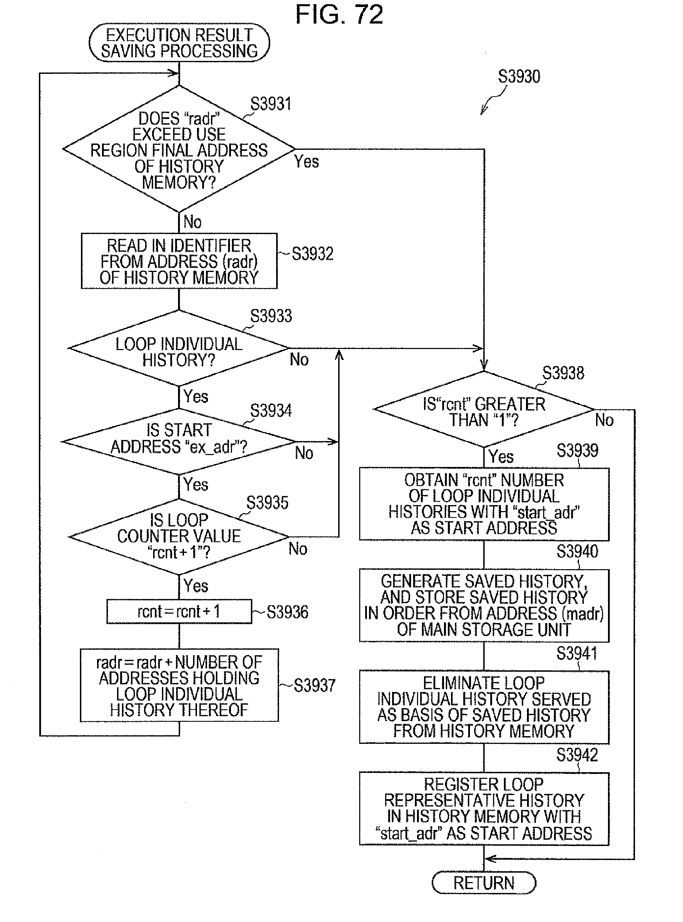

Fig. 72 is a flowchart illustrating a processing procedure example of the execution result saving processing of loop individual histories (step S3930) using the history control unit 3510 according to an embodiment of the present invention.

First, determination is made at the continuity search unit 3620 whether or not the search address (radr) exceeds the use region final address in the history memory 3430 (step S3931). In the event that the search address does not exceed the final address of the use region, an identifier is then read out from the search address (radr) (step S3932). Subsequently, determination is made whether or not the read identifier is "01" indicating a loop individual history (step S3933). In the event that determination is made that the identifier is not "01", the flow then proceeds to step S3938.

On the other hand, in the event that determination is made that the identifier is "01", determination is made whether or not the start address included in the loop individual history thereof, and the loop start address for continuous search (ex_adr) match (step S3934). In the event that determination is made that the start addresses do not match, the flow then proceeds to step S3938.

On the other hand, in the event that the start addresses match, determination is made whether or not the loop counter value of the loop individual history is the same value as a value (rcnt + 1) obtained by adding "1" to the continuity counter (rcnt) (step S3935). In the event that determination is made that the loop counter value and "rcnt + 1" do not match, the flow then proceeds to step S3938.

According to these steps S3934 and step S3935, determination is made whether or not the loop individual history detected in step S3933 is a loop individual history with the loop individual history detected in step S3912 in Fig. 71 as the first loop.

For example, in the event that the start address included in the loop individual history, and the loop start address for continuous search (ex_adr) differ in step S3934, determination is made that the loop individual histories of different repeated reused sections continue.

Also, in the event that the loop counter value included in the loop individual history differs from "rcnt + 1" in step S3935, determination is made that the same repeated reused sections have been executed not repeatedly but newly from the first time. As an example of this step S3935, description will be made regarding a case where the loop counter value is "1", and "rcnt + 1" is "5". In this case, determination is made that the repeated reused section that the start address of the loop individual history detected in step S3913 in Fig. 71 indicates has repeatedly been executed five times, and then started new repetition from execution serving as the basis of the loop individual history detected in step S3933.

On the other hand, in the event that determination is made in step S3935 that the loop counter value and "rcnt + 1" match, "1" is added to the continuity counter (rcnt) (step S3936). (The individual history address count (y) is then added to the search address (radr), and accordingly, the search address (radr) is updated (step S3937). Subsequently, upon the processing in step S3937 being completed, the flow returns to step S3931, and the processing is repeated.

On the other hand, in the event that determination is made in step S3931 that the search address (radr) is an address having a value greater than the use region final address, determination is made whether or not the value of the continuity counter (rcnt) is greater than "1" (step S3938). Thus, determination is made whether or not the loop individual history detected in step S3913 in Fig. 71 is the loop individual history of the first repeated execution or the loop individual history of single execution. In the event that determination is made that the continuity counter (rcnt) is equal to or smaller than "1", the loop individual history detected in step S3913 in Fig. 71 is then determined to be the loop individual history of single execution, and the execution result saving processing is ended.

On the other hand, in the event that determination is made that the value of the continuity counter (rcnt) is greater than "1", the loop individual histories are obtained from the history memory 3430 (step S3939). In this step S3939, the continuity counter (rcnt) number of loop individual histories are obtained from the history memory 3430 by the loop individual history obtaining unit 3630 with the loop individual history start address (start_adr) as the registration starting point of the first loop individual history.

Subsequently, according to the saved history transfer unit 3640, a saved history is generated based on a loop individual history, and the generated saved history is stored in the main storage unit 3130 with the saved history start address (madr) as the starting point (step S3940). Note that step S3940 is an example of the history control procedure laid forth in the Claims.

Next, the loop individual history serving as the basis of the saved history is eliminated from the history memory by the loop individual history eliminating unit 3512 (step S3941). Note that step S3941 is an example of the history control procedure laid forth in the Claims.

A loop representative history is then registered in the history memory 3430 by the loop representative history registration unit 3513 based on the loop individual history start address (start_adr) (step S3942). The execution result saving processing is then ended. Note that step S3942 is an example of the history control procedure laid forth in the Claims.

As described above, with an embodiment of the present invention, of loop individual histories of a repeated reused section, only a loop individual history relating to repeated execution can be saved in the main storage unit 3130.

[Example of Operation of History Restoring Unit 3520 According to Embodiment of Present Invention]

Next, the processing of the history restoring unit 3520 according to an embodiment of the present invention will be described with reference to the drawing.

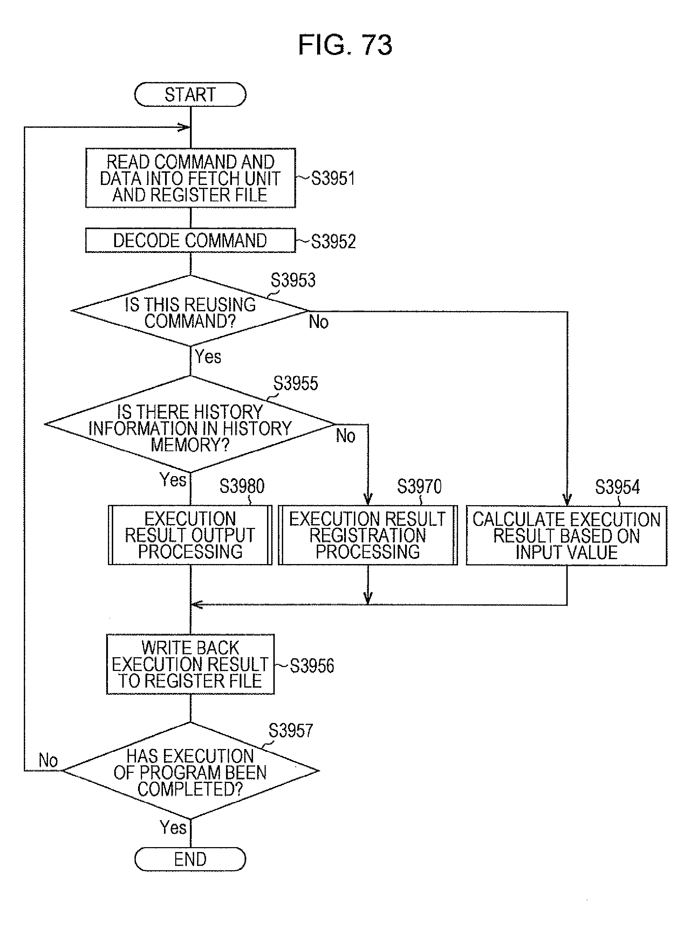

Fig. 73 is a flowchart illustrating a processing procedure example of the restoration processing of loop individual histories using the history restoring unit 3520 according to an embodiment of the present invention. Here, let us assume in the same way as with Fig. 71 and Fig. 72 that function histories, loop individual histories, loop representative histories, and saved histories are each fixed length data. Also, here, let us say in the same way as with Fig. 71 and Fig. 72 that, with the history memory 3430, function histories, loop individual histories, and loop representative histories are stored in continuous addresses in the registered order. Further, let us say that, with the main storage unit 3130, saved histories are stored in continuous addresses in the saved order. Also, here, let us say that the start of execution of the program is taken as the start of the flowchart, and the end of execution of the program is taken as the end of the flowchart.

First, a command referencing a function, and an input value of the function thereof are read into the fetch unit 310 and register file 3340 (step S3951). Next, the command referencing the function is decoded at the command decoder 3320 (step S3952). Subsequently, whether or not the interpreted (decoded) command is a reusing command is analyzed (step S3953). In the event that determination is made that the decoded command is not a reusing command, the reused section thereof is then executed by the executing unit 3330 based on the input value supplied from the register file 3340, and accordingly, the execution result is output (step S3954). Note that step S3954 is an example of the executing procedure laid forth in the Claims.

On the other hand, with the processing in step S3953, in the event that the command is interpreted to be a reusing command, determination is made by the search request input unit 3421 using the start address and input value of the reused section whether or not there is history information in the history memory 3430 (step S3955). At this time, in the event that the reused section is a repeated reused section, it is searched using the loop counter value in addition to the start address and input value whether or not there is history information in the history memory 3430.

In the event that determination is made that there is no history information in the history memory 3430, execution result registration processing is then performed by the history registration unit 3440 (step S3970). Thus, the execution result is registered in the history memory 3430.

On the other hand, in the event that determination is made that there is history information in the history memory 3430, execution result output processing is performed by the execution result output unit 3422 and history restoring unit 3520 (step S3980). Thus, the execution result of the reused section being executed is output from the history memory 3430.

After the processing in steps S3954, S3970, and S3980, the execution result is then written back to the register file 3340 (step S3956). Subsequently, determination is made whether or not execution of the program is completed (step S3957). In the event that determination is made that execution of the program is not completed, the flow then returns to step S3951, and the processing is repeated.

On the other hand, in the event that determination is made that execution of the program is completed, the restoration processing of loop individual histories using the history restoring unit 3520 is ended.

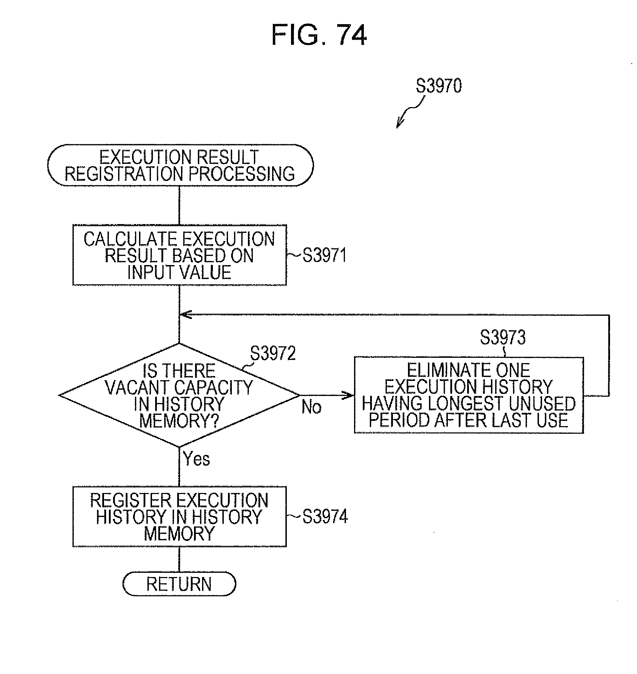

Fig. 74 is a flowchart illustrating a processing procedure example of the execution result registration processing (step S3970) according to an embodiment of the present invention.

First, based on the input value supplied from the register file 3340, the reused section is executed by the executing unit 3330, and accordingly, the execution result is output (step S3971). Next, determination is made by the history registration unit 3440 whether or not there is free space for registering the execution history including the output execution result in the history memory 3430 'step S3972). Note that step S3971 is an example of the executing procedure laid forth in the Claims.

In the event that determination is made that there is no free space for registering the execution history in the history memory 3430, one execution history having the longest unused period since the last usage is then eliminated from the history memory 3430 by the eliminating unit 3460 (step S3973). The flow then returns to step S3972, and the processing is repeated.

On the other hand, in the event that determination is made that there is free space for registering the execution history in the history memory 3430, the execution history is registered in the history memory 3430 by the history registration unit 3440 (step S3974), and the execution result registration processing is ended.

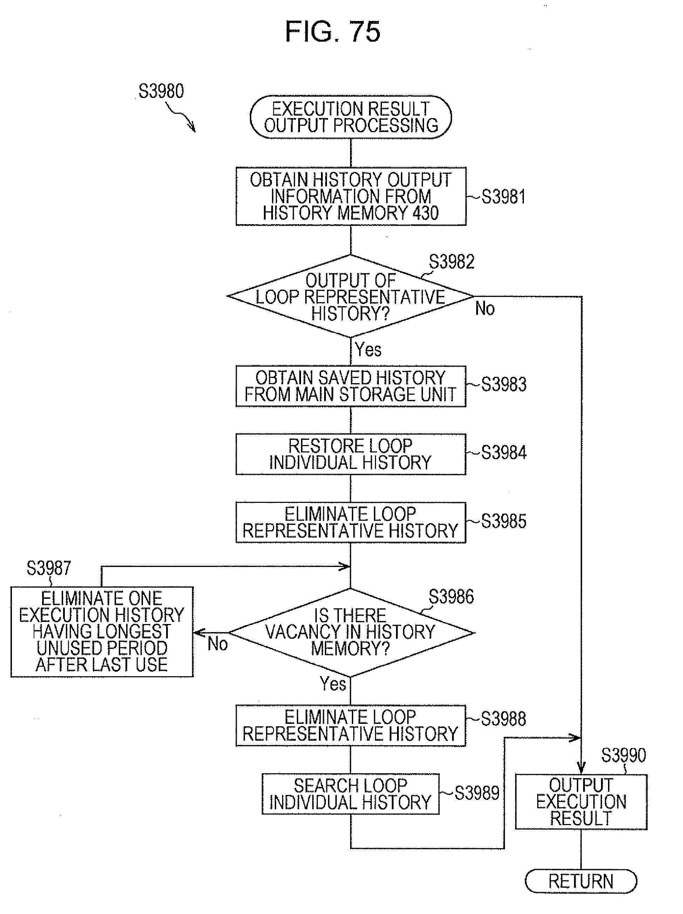

Fig. 75 is a flowchart illustrating a processing procedure example of the execution result output processing (step S3980) according to an embodiment of the present invention. Note that, here, let us express the execution result of a function history, the execution result of a loop individual history, and the saved history position information of a loop representative history as search output information.

First, the search output information of the history information searched in step S3955 in Fig. 73 from the history memory 3430 is obtained by the execution result output unit 3422 (step S3981). Next, determination is made whether or not the obtained search output information is the saved history position information of a loop representative history (step S3982). In the event that determination is made that the obtained search output information is not the saved history position information of a loop representative history, the flow then proceeds to step S3990.

On the other hand, in the event that determination is made that the obtained search output information is the saved history position information of a loop representative history, the saved history that the saved history position information indicates is obtained by the saved history obtaining unit 3521 (step S3983). Subsequently, loop individual histories are restored by the loop individual history generating unit 3522 based on saved histories and the loop representative history (step S3984). Next, the loop representative history is eliminated from the history memory 3430 by the registration region securing unit 3523 (step S3985). Determination is then made by the registration region securing unit 3523 whether or not there is free space for registering the loop individual histories in the history memory 3430 (step S3986). In the event that determination is made that there is no free space for registering the loop individual histories in the history memory 3430, one execution history having the longest unused period since the last usage is then eliminated from the history memory 3430 by the region registration securing unit 3523 (step S3987). The flow then returns to step S3986, and the processing is repeated.

On the other hand, in the event that determination is made in the processing in step S3986 that there is free space for registering the loop individual histories in the history memory 3430, the restored loop individual histories are registered in the history memory 3430 by the loop individual history registration unit 3524 (step S3988). Subsequently, the restored loop individual histories are searched by the execution result output unit 3422 (step S3989).

The execution results are then output based on the searched execution results (step S3990). The execution result output processing is then ended.

As described above, with an embodiment of the present invention, loop individual histories saved in the main storage unit 3130 as saved histories are restored to the history memory 3430, and the execution results of the restored loop individual histories thereof can be reused.

As shown so far, according to an embodiment of the present invention, the execution results of loop individual histories of a repeated reused section can be saved in the main storage unit 3130. Thus, the number of history information to be held in the history memory 3430 can be increased as compared to a conventional technical case where execution results are not saved. Also, the saved execution results can be taken as execution results to be searched, and accordingly, the saved execution results thereof can be reused as execution results.

Also, according to an embodiment of the present invention, as compared to the data processing device 3100 according to a conventional technique, deterioration in value reused efficiency due to valid execution results being eliminated from the history memory 3430 can be prevented. Further, according to an embodiment of the present invention, the same effects are obtained with smaller capacity of the history memory 3430 as compared to a conventional technique, whereby deterioration in value reused efficiency due to increase in execution history search time accompanied with increase in the capacity of the history memory 3430 can be prevented.

Also, with an embodiment of the present invention, the number of history information to be held in the history memory 3430 can be increased as compared to a conventional technique, and accordingly, it can be conceived that particularly marked effects are obtained in the case of speculation execution of a program, or the like.

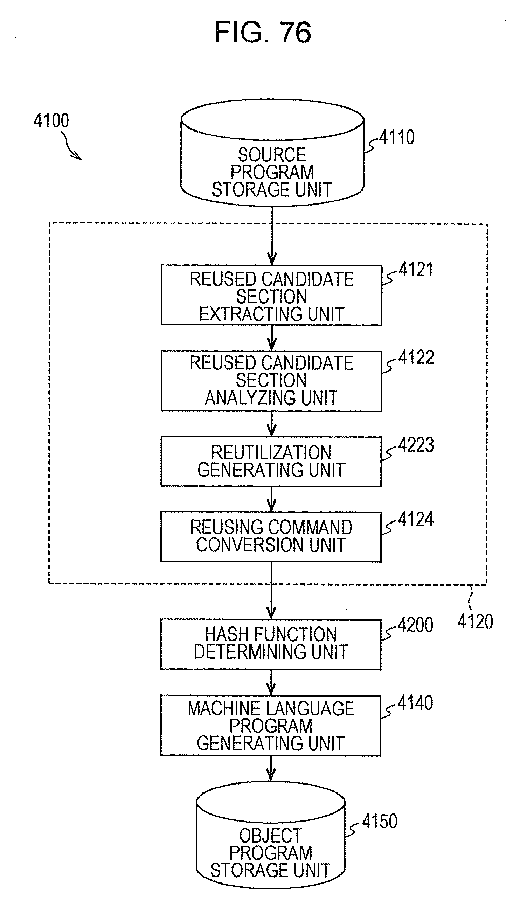

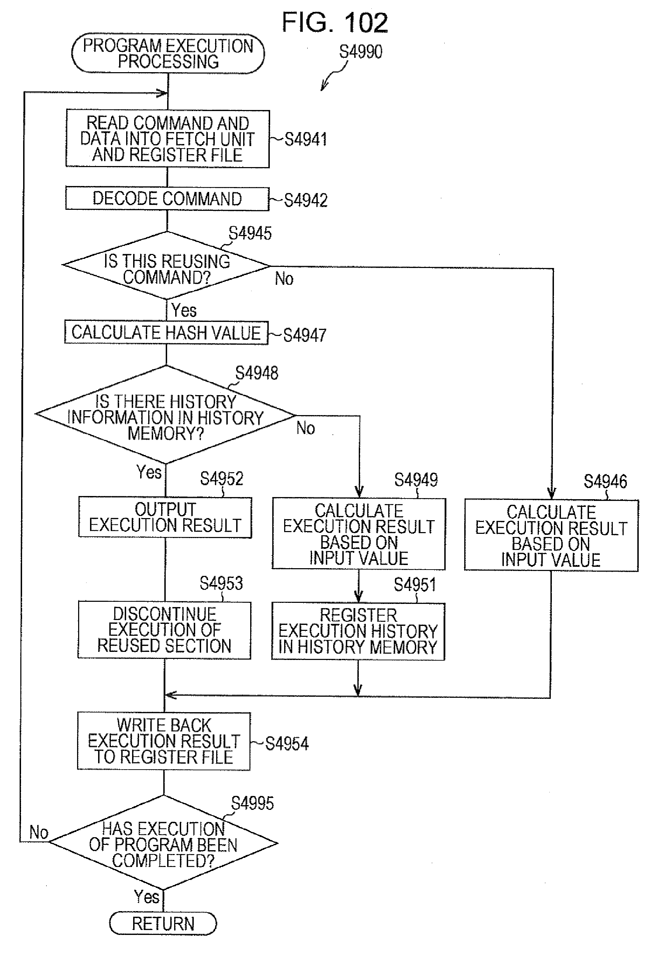

Next, description will be made regarding a compile processing device, a data processing device, a compile processing method, and a program, which are a fifth present invention, with reference to Fig. 76 through Fig. 102.

A mode for implementing the fifth present invention (hereafter, referred to as embodiment) will be described below.

Description will be made in accordance with the following sequence.

1. First Embodiment (compile processing control: an example for selecting a hash function and embedding in a program)

2. Second Embodiment (data processing control: an example for processing the program in which a hash function is embedded)

3. Third Embodiment (compile processing control: an example for selecting a hash value and generating a reusing command with a hash value)

4. Fourth Embodiment (data processing control: an example for processing a reusing command with a hash value)

5. Fifth Embodiment (data processing control: an example for generating a hash value from the start address of a reused section of an already generated object program)

<1. First Embodiment>

[Configuration Example of Compile Processing Device 4100 According to First Embodiment of Present Invention]

Fig. 76 is a block diagram illustrating a configuration example of a compile processing device 4100 according to the first embodiment of the present invention. This compile processing device 4100 includes a source program storage unit 4110, a reusing command distinction unit 4120, a hash function determining unit 4200, a machine language program generating unit 4140, and an object program storage unit 4150.

The source program storage unit 4110 is for storing a source program for performing compile. Examples of this source program include a source program including a reused section of which the execution result is used again. This source program storage unit 4110 supplies the stored source program to the reusing command distinction unit 4120.

The reusing command distinction unit 4210 is for analyzing the source program read out from the source program storage unit 4110, and generating a program including a reusing command. The reusing command mentioned here is a command causing the data processing device to perform processing for reusing the execution result at the time of a reused section being called up by distinguishing a reused section and a non-reused section based on a degree to be reused.

This reusing command distinction unit 4120 includes a reused candidate section extracting unit 4121, a reused candidate section analyzing unit 4122, a reutilization generating unit 4123, and a reusing command conversion unit 4124. This reusing command distinction unit 4120 supplies the generated program including a resign command thereof to the hash function determining unit 4200. Note that the reusing command distinction unit 4120 is an example of the analyzing unit laid forth in the Claims.

The reused candidate section extracting unit 4121 is for extracting, of multiple command sections, a reused candidate section serving as a candidate of a reused section of which the execution result will be reused from the program. Here, let us assume that a command section that the compile processing device 4100 processes is a function or loop. This reused candidate section extracting unit 4121 extracts a command section having a probability to be called up multiple times, such as a function, a loop, or the like, as a reused candidate section.

Also, this reused candidate section extracting unit 4121 excludes from reused candidate sections a function having no probability that the execution result can be reused such as a function where input values are the same, but a different execution result is obtained. Note that the input value mentioned here is a value necessary for executing a function or loop, a value made up of an argument, e.g., in the event of a function with three variables as arguments, the values of these three variables are input values. This reused candidate section extracting unit 4121 excludes, for example, a function including a system call or a random number generating function from reused candidate sections. This reused candidate section extracting unit 4121 supplies the identification information of the extracted reused candidate section to the reused candidate section analyzing unit 4122 along with the program.

The reused candidate section analyzing unit 4122 is for analyzing a usage pattern relating to the reused candidate section extracted by the reused candidate section extracting unit 4121. This reused candidate section analyzing unit 4122 analyzes the contents relating to an argument that is an input value of a function or loop, and the contents relating to the number of times of call-ups of a function and a loop as usage patterns. Also, the reused candidate sections are an example of the command sections laid forth in the Claims.

The reutilization generating unit 4123 is for generating reutilization indicating a degree where the execution result of a reused candidate section will be reused, based on the analysis results supplied from the reused candidate section analyzing unit 4122. This reutilization generating unit 4123 generates reutilization according to a combination of input values of a reused candidate section, for example. In this case, the fewer the number of combination of input values of a reused candidate section, the higher a degree to be reused is, and accordingly, reutilization with the number of combinations of input values as a denominator is generated. This reutilization generating unit 4123 supplies the generated reutilization thereof to the reusing command conversion unit 4124 along with the identification information of the reused candidate section, and the program.

The reusing command conversion unit 4124 is for converting a call-up command of a reused candidate section of which the execution result will be reused into a reusing command based on the utilization supplied from the reutilization generating unit 4123. For example, a reused candidate section of which the execution result will be reused is a function, the reusing command conversion unit 4124 converts a "call" command that is the assembly language that is a command for calling a function into a "memocall" command that is newly stipulated as a reusing command. This reusing command conversion unit 4124 supplies the program including the converted command thereof to the hash function generating unit 4200.

The hash function determining unit 4200 is for determining a hash function for generating a hash value from the start address for identifying a reused section. This hash function generating unit 4200 uses multiple hash functions with the start address of a reused section as a function input value to generate a hash value based on the start address of the reused section for each hash function. The function input value mentioned here is a value serving as input of a hash function. This hash function determining unit 4200 then determines and outputs, of the multiple hash functions, a hash function that has generated hash values that are all mutually different and have the narrowest bit width. That is to say, this hash function determining unit 4200 determines and outputs a hash function that generates a hash value for identifying a reused section using a value with the bit width narrower than the bit width of the start address of a reused section. This hash function determining unit 4200 supplies the determined hash function to the machine language program generating unit 4140 along with the program.

The machine language program generating unit 4140 is for generating an object program that is a machine language program based on the program supplied from the hash function determining unit 4200. This machine language program generating unit 4140 generates, for example, an object program in which the hash function determined by the hash function determining unit 4200 is embedded. Also, this machine language program generating unit 4140 adds a hash function specifying command, which causes the data processing device for executing the object program thereof to recognize the hash function embedded in the object program, to the object program. This machine language program generating unit 4140 supplies the generated object program thereof to the object program storage unit 4150.

The object program storage unit 4150 is for storing the object program supplied from the machine language program generating unit 4140.

In this way, the compile processing device 4100 first converts a function call-up command into a reusing command according to a degree where the execution result of the function will be reused, whereby a reused section and a non-reused section can be distinguished. The compile processing device 4100 then determines a hash function for generating a hash value for identifying a reused section, whereby a program in which the determined hash function thereof is embedded can be generated.

Note that description has been made here regarding an example wherein a function is to be reused, but a loop can also be to be reused in the same way.

Note that description has been made here for convenience regarding an example wherein the reused candidate section analyzing unit 4122 analyzes the usage pattern of a reused candidate section for each function, but in order to analyze the usage pattern in more detail, may analyze the usage pattern of a reused candidate section for each function call-up command. Also, with regard to the reutilization generating unit 4123 as well, description has been made regarding an example wherein reutilization is generated for each function, but may be generated for each function call-up command to analyze in more detail. In this case, the reusing command conversion unit 4124 converts a call-up command into a reusing command for each function call-up command based on reutilization that differs for each function call-up command though functions are the same.

Also, description has been made here regarding an example for converting into a reusing command by generating reutilization, but the present invention is not restricted to this. For example, all of the commands for calling up a function may be to be reused.

[Program Example That Reusing Command Distinction Unit 4120 According to First Embodiment of Present Invention]

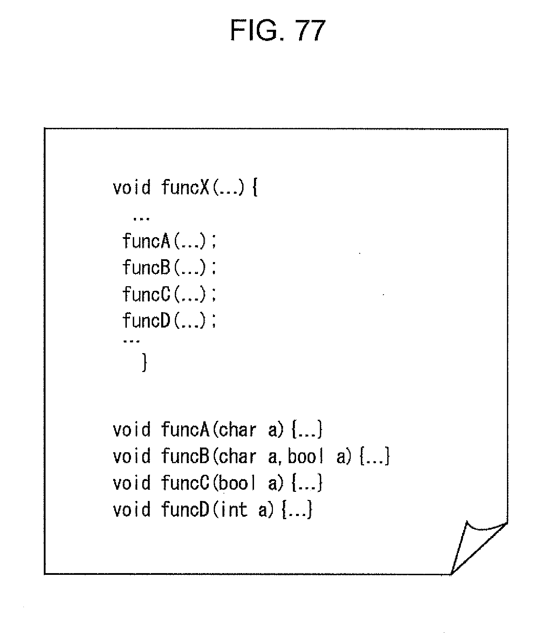

Fig. 77 is a conceptual diagram illustrating an example of a program that the reusing command distinction unit 4120 according to the first embodiment of the present invention.

An example will be describe here regarding a combination of input values of a reused candidate section, and reutilization that the reutilization generating unit 4123 generates based on the combination of input values thereof. Now, let us assume that the following C language program has been analyzed at the reused candidate section analyzing unit 4122.

First, the reused candidate section analyzing unit 4122 analyzes a combination of input values of four functions (funcA through D) in the program in Fig. 77. With regard to a function with one char-type variable as an argument (funcA), the char-type is 16-bit binary character data, and accordingly, a combination of input values are analyzed to be the maximum $2^{16}$. With regard to a function with one char-type variable and one bool (Boolean)-type variable as arguments (funcB), the bool-type is 1-bit binary numeric data, and accordingly, according to "$2^{16} \times 2 = 2^{17}$", a combination of input values are analyzed to be the maximum $2^{17}$.

Further, with regard to a function with one bool-type variable as an argument (funcC), a combination of input values are analyzed to be the maximum 2. With regard to a function with one int (integer)-type variable as an argument (funcD), the int-type is 32-bit binary numeric data, and accordingly, a combination of input values are analyzed to be the maximum $2^{32}$.

The reutilization generating unit 4123 then generates, based on the analyzed results of the four functions (funcA through D), reutilization with the number of combinations of input values as a denominator, thereby generating reutilization having the following relationship.

[Numeric Expression 1]

funcC (bool a) > funcA (char a) > funcB (char a, bool a) > funcD (int a)

In this way, the reutilization of the function with one bool-type variable as an argument (funcC) is the highest, and the reutilization of the function with one char-type variable as an argument (funcA) is the second highest. The reutilization of the function with one char-type variable and one bool-type variable as arguments (funcB) is the third highest, and the reutilization of the function with one int-type variable as an argument (funcD) is the lowest.

That is to say, the reused candidate section analyzing analyzes a reused candidate section, the reutilization generating unit 4123 uses reutilization generated based on the analysis result thereof to perform ranking at the time of being taken a reused section as to the reused candidate section. The reusing command conversion unit 4124 then determines the reused candidate sections to be reused sections in order from the reused candidate section having the highest reutilization.

Thus, the compile processing device 4100 can generate an object program with a reused candidate section having a high degree to be reused as a reused section.

[Configuration. Example of Hash Function Determining Unit 4200 According to First Embodiment of Present Invention]

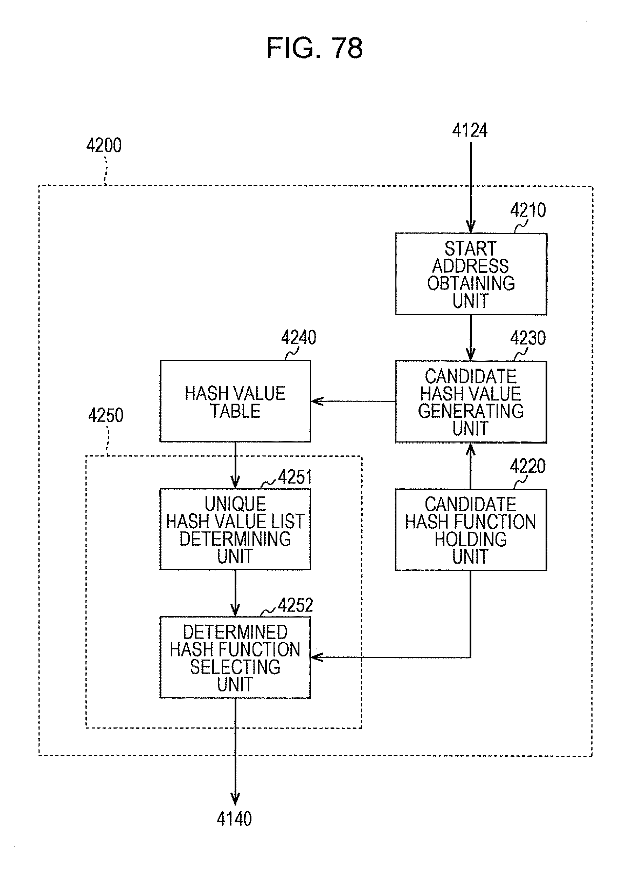

Fig. 78 is a block diagram illustrating a configuration example of the hash function determining unit 4200 according to the first embodiment of the present invention. This hash function determining unit 4200 includes a start address obtaining unit 4210, a candidate hash function holding unit 4220, a candidate hash value generating unit 4230, a hash value table 4240, and a hash function output unit 4250.

The start address obtaining unit 4210 is for obtaining the start address of a reused section from the program including a reusing command from the reusing command conversion unit 4124. This start address obtaining unit 4210 holds the obtained start address as a start address list. This start address obtaining unit 4210 supplies the obtained start address to the candidate hash value generating unit 4230.

The candidate hash function holding unit 4220 is for holding multiple hash functions for converting a start address into a hash value. That is to say, this candidate hash function holding unit 4220 holds a hash function serving as a candidate of a hash function that the hash function determining unit 4200 determines. This candidate hash function holding unit 4220 holds a predetermined hash function as a candidate of a hash function that the hash function determining unit 4200 determines.

For example, in the event that ten hash functions are held, this candidate hash function holding unit 4220 supplies the ten hash functions thereof to the candidate hash value generating unit 4230. Also, for example, in the event that one hash function has been determined at the hash function output unit 4250, this candidate hash function holding unit 4220 supplies the hash function thereof to the hash function output unit 4250. Note that the hash function supplied from the candidate hash function holding unit 4220 is an example of the candidate functions laid forth in the Claims.

The candidate hash value generating unit 4230 takes the start address supplied from the start address obtaining unit 4210 as a function input value, and generates a hash value with the function input value thereof as the input of the hash function supplied from the candidate hash function holding unit 4220. That is to say, this candidate hash value generating unit 4230 uses a hash function serving as a candidate of a hash function that the hash function determining unit 4200 determines, to generate a hash value serving as a candidate of a hash value for identifying a reused section from the start address. Also, at the time of generating a hash value, this candidate hash value generating unit 4230 correlates the hash function that has generated the hash value thereof with the hash value thereof so as to identify which hash function the hash value has been generated from.

For example, in the event that ten start addresses are held at the start address obtaining unit 4210, and also ten hash functions are held at the candidate hash function holding unit 4220, this candidate hash value generating unit 4230 generates "10 $\times$ 10 = 100" hash values of all of combinations.

This candidate hash value generating unit 4230 supplies the generated hash value to the hash value table 4240. Note that the candidate hash value generating unit 4230 is an example of the candidate value generating unit laid forth in the Claims. Also, the hash values that the candidate hash value generating unit 4230 generates are an example of the candidate value laid forth in the Claims.

The hash value table 4240 is for holding the hash value supplied from the candidate hash value generating unit 4230. This hash value table 4240 holds a hash value as a hash value list for each hash function that has generated the hash value thereof. Also, this hash value table 4240 supplies the held hash value list to the hash function output unit 4250. Note that the hash value table 4240 is an example of the candidate value table laid forth in the Claims. Also, the hash value list is an example of the candidate value list laid forth in the Claims.

The hash function output unit 4250 is for extracting a hash value list where all of the hash values mutually differ, and outputting, of the extracted hash value lists, a hash function correlated with a hash value list including hash values having the narrowest bit width. This hash function output unit 4250 includes a unique hash value list distinction unit 4251 and a determined hash function selecting unit 4252. Note that the hash function output unit 4250 is an example of the section identification value generating function output unit laid forth in the Claims. Note that the hash functions that the hash function output unit 4250 outputs are an example of the section identification value generating function laid forth in the Claims.

The unique hash value list distinction unit 4251 is for distinguishing, of hash value lists held in the hash value table 4240, a hash value list where all of the hash values mutually differ. For example, in the event that of ten hash value lists held in the hash value table 4240, there are three where all of the hash values mutually differ, this unique hash value list distinction unit 4251 distinguishes these three hash value lists thereof. This unique hash value list distinction unit 4251 supplies the distinguished hash value lists to the determined hash function selecting unit 4252.

The determined hash function selecting unit 4252 is for outputting a hash function correlated with a hash value list where the bit width of a hash value is the narrowest, of the hash value lists supplied from the unique hash value list distinction unit 4251. That is to say, this determined hash function selecting unit 4252 determines one hash function out of multiple hash functions that the candidate hash function holding unit 4220 holds, and outputs the determined hash function thereof. This determined hash function selecting unit 4252 detects of hash value lists where all of the hash values mutually differ supplied from the unique hash value list distinction unit 4251, one hash value list where the bit width of a hash value is the narrowest. This determined hash function selecting unit 4252 obtains a hash function correlated with the detected hash value list thereof, from the candidate hash function holding unit 4220, and supplies the obtained hash function thereof to the machine language program generating unit 4140.

As described above, with the first embodiment of the present invention, the hash function determining unit 4200 is provided, whereby of multiple hash functions, a hash function for generating hash values that all mutually differ, and have the narrowest bit width can be embedded in the program.

Note that description has been made here regarding an example wherein the candidate hash function holding unit 4220 supplies all of the held hash functions to the candidate hash value generating unit 4230, but the present invention is not restricted to this. For example, an arrangement may be made wherein the candidate hash function holding unit 4220 is allowed to be externally controlled, whereby a hash function to be supplied to the candidate hash value generating unit 4230 can externally be specified according to the program.

Also, description has been made here regarding an example wherein the determined hash function selecting unit 4252 supplies a hash function to the machine language program generating unit 4140, but the present invention is not restricted to this. For example, the determined hash function selecting unit 4252 may supply an identifier specifying a hash function instead of the function. With this example, the machine language program generating unit 4140 generates an object program in which the identifier supplied from the determined hash function selecting unit 4252 is embedded. Thus, the object program can be shortened as compared to a method for embedding a hash function in an object program, and accordingly, in the event that of executing a program for frequently exchanging a hash function, the execution processing of the program can be accelerated. Note that the identifier to be embedded in an object program instead of this hash function is an example of the identifier laid forth in the Claims.

[Example of Hash Value Generated by Candidate Hash Value Generating Unit 4230 According to First Embodiment of Present Invention]

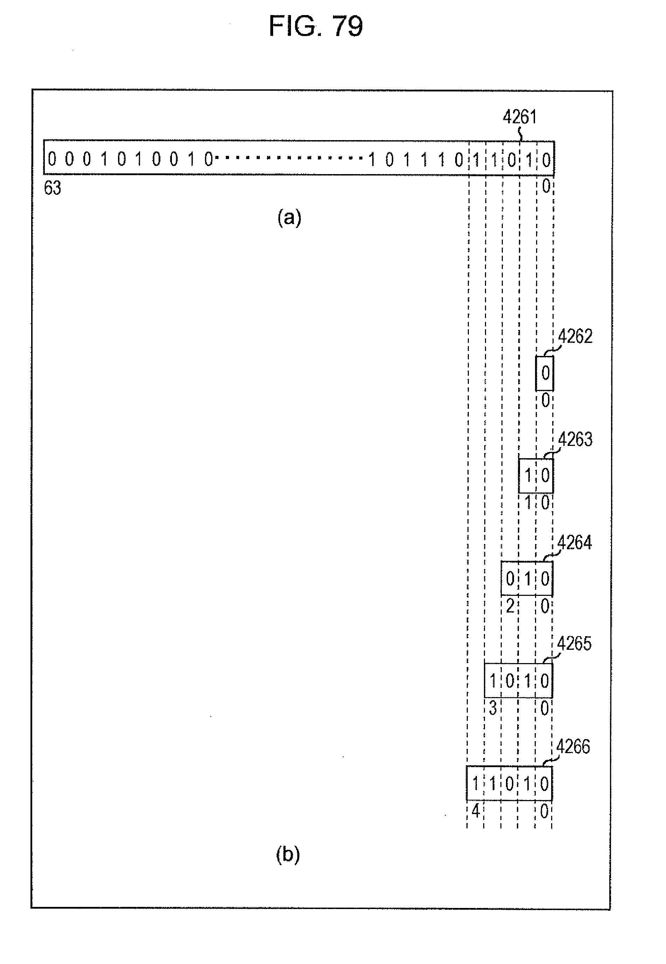

Fig. 79 is a conceptual diagram illustrating a hash value that the candidate hash value generating unit 4230 according to the first embodiment of the present invention generates. Here, let us say that the bit width of the start address is 64 bits. Also, here, let us say that the left end indicates the most significant bit (MSB: Most Significant Bit), and the right end indicates the least significant bit (LSB: Least Significant Bit).

Also, here, as an example, the multiple hash functions that the candidate hash function holding unit 4220 holds are assumed to be a function for calculating the values of a certain number of bits from the least significant bit of the start address of a reused section. An example of this hash function will be shown in the following Expression 1.

[Numeric Expression 2]

$$h = a \ \& \ m_b \quad \ldots \quad \text{Expression (1)}$$

$$m = 2^i - 1 \quad \ldots \quad \text{Expression (2)}$$

Here, h is a hash value that the candidate hash value generating unit 4230 generates. Also, a is a function input value of the hash function, and is here a start address to be supplied from the hash value table 4240 to the candidate hash value generating unit 4230. Also, & is AND operation in increments of bits. $m_b$ is a mask bit where a numeric value (m) is expressed by binary (b) . Also, Expression 2 shown under Expression 1 is an example of an expression for calculating m in Expression 1. i in Expression 2 is a value for specifying the bit width of h (hash value) that Expression 1 calculates.

(a) in Fig. 79 indicates a start address 261 that is an example of the start address supplied from the hash value table 4240. This start address 4261 is a bit string made up of 64 bits of the 0th through 63rd bits from the LSB side. This start address 4261 is used as a function input value of a hash function at the candidate hash value generating unit 4230.

(b) in Fig. 79 indicates hash values 4262 through 4266 that are an example of a hash value to be generated with the start address shown in (a) in Fig. 79 as a function input value.

The hash value 4262 is h (hash value) calculated from the start address 4261 using Expression 1 with i (bit width) in Expression 2 specified as "1". If i (bit width) in Expression 2 is "1", m becomes "1". That is to say, Expression 1 becomes a hash function shown in the following Expression 3.

[Numeric Expression 3]

$$h = a \ \& \ 1b \quad \ldots \quad \text{Expression (3)}$$

According to the hash function shown in this Expression 3, the 1-bit hash value 4262 of which the 0th value is "0" is calculated based on the value (0) of the 0th of the start address 4261.

The hash value 4263 is h (hash value) calculated from the start address 4261 using Expression 1 with i (bit width) in Expression 2 specified as "2". If i (bit width) in Expression 2 is "2", m becomes "3". That is to say, Expression 1 becomes a hash function shown in the following Expression 4.

[Numeric Expression 4]

$$h = a \ \& \ 11b \quad \ldots \quad \text{Expression (4)}$$

According to the hash function shown in this Expression 4, the hash value 4263 of a 2-bit bit string of which the 0th and 1st values are "0 and 1" is calculated based on the values (0 and 1) of the 0th and 1st of the start address 4261.

The hash value 4264 is h (hash value) calculated from the start address 4261 using Expression 1 with i (bit width) in Expression 2 specified as "3". If i (bit width) in Expression 2 is "3", m becomes "7". That is to say, Expression 1 becomes a hash function shown in the following Expression 5.

[Numeric Expression 5]

$$h = a \ \& \ 111b \quad \ldots \quad \text{Expression (5)}$$

According to the hash function shown in this Expression 5, the hash value 4264 of a 3-bit bit string of which the 0th through 2nd values are "0, 1, and 0" is calculated based on the values (0, 1, and 0) of the 0th through 2nd of the start address 4261.

The hash value 4265 is h (hash value) calculated from the start address 4261 using Expression 1 with i (bit width) in Expression 2 specified as "4". If i (bit width) in Expression 2 is "4", m becomes "15" . That is to say, Expression 1 becomes a hash function shown in the following Expression 6.

[Numeric Expression 6]

$$h = a \ \& \ 1111b \quad . . . \text{ Expression (6)}$$

According to the hash function shown in this Expression 6, the hash value 4265 of a 4-bit bit string of which the 0th through 3rd values are "0, 1, 0, and 1" is calculated based on the values (0, 1, 0, and 1) of the 0th through 3rd of the start address 4261.

The hash value 4265 is h (hash value) calculated from the start address 4261 using Expression 1 with i (bit width) in Expression 2 specified as "5". If i (bit width) in Expression 2 is "5", m becomes "31". That is to say, Expression 1 becomes a hash function shown in the following Expression 7.

[Numeric Expression 7]

$$h = a \ \& \ 11111b \quad . . . \text{ Expression (7)}$$

According to the hash function shown in this Expression 7, the hash value 4266 of a 5-bit bit string of which the 0th through 4th values are "0, 1, 0, 1, and 1" is calculated based on the values (0, 1, 0, 1, and 1) of the 0th through 4th of the start address 4261.

As described above, with the first embodiment of the present invention, the candidate hash value generating unit 4230 is provided, whereby multiple hash values can be generated using multiple hash functions.

Note that the hash functions shown in Expression 1 through Expression 7 have been described here as an example, but the present invention is not restricted to this. For example, there may be conceived a hash function for calculating exclusive OR (EOR: Exclusive OR) between a predetermined number of bits from the most significant bit and a predetermined number of bits from the least significant bit of the start address, or the like.

[Example of Hash Value Held in Hash Value Table 4240 According to First Embodiment of Present Invention]

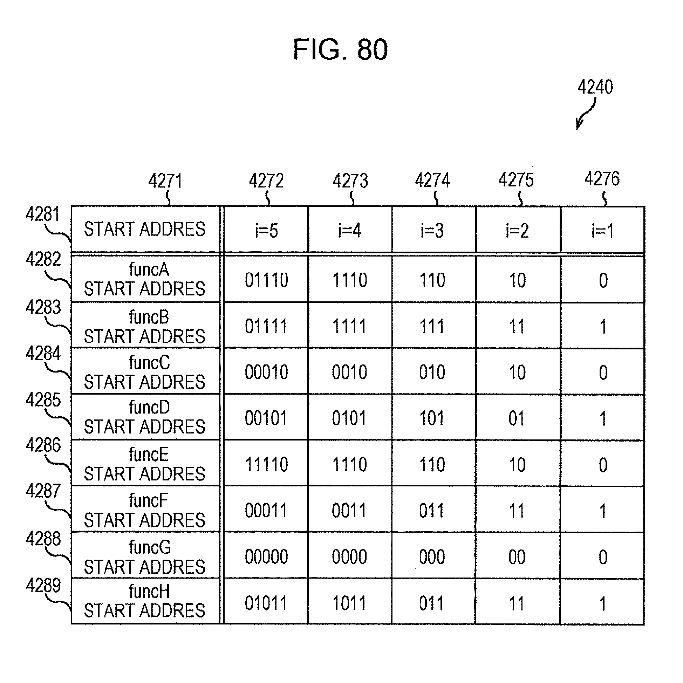

Fig. 80 is a conceptual diagram illustrating an example of hash values held in the hash value table 4240 according to the first embodiment of the present invention. Here, let us assume that hash values are generated using the hash functions in Expression 3 through Expression 7 described in Fig. 79. Also, here, let us say that the reused section s in the program are eight functions (funcA through funcH).

A start address list 4271 indicates the list names of start addresses serving as the bases of hash values registered in the hash value table 4240. With this start address list 4271, a row 4282 indicates values relating to the funcA, a row 4283 indicates values relating to the funcB, and a row 4284 indicates values relating to the funcC. Further, a row 4285 indicates values relating to the funcD, and a row 4286 indicates values relating to the funcE, a row 4287 indicates values relating to the funcF, a row 4288 indicates values relating to the funcG, and a row 4289 indicates values relating to the funcH.

A hash value list 4272 indicates a list of hash values calculated using Expression 7 that is a hash function with i (bit width) in Expression 1 being set to "5". A row 4281 of the hash value list 4272 indicates "i = 5" indicating that Expression 7 that is a hash function with i (bit width) in Expression 1 being set to "5" is used. The rows 4282 through 4289 of the hash value list 4272 indicate a hash value calculated with the start addresses of the eight functions (funcA through funcH) as the function input values of Expression 7. That is to say, the rows 4282 through 4289 of the hash value list 4272 indicate the values of five bits from the least significant bits of the start addresses of the eight functions (funcA through funcH), respectively. The hash values shown in the rows 4282 through 4289 of this hash value list 4272 are correlated with Expression 7, and held in the hash value table 4240 as a list.

A hash value list 4273 indicates a list of hash values calculated using Expression 6 that is a hash function with i (bit width) in Expression 1 being set to "4". The row 4281 of the hash value list 4273 indicates "i = 4" indicating that Expression 6 that is a hash function with i (bit width) in Expression 1 being set to "4" is used. The rows 4282 through 4289 of the hash value list 4273 indicate a hash value calculated with the start addresses of the eight functions (funcA through funcH) as the function input values of Expression 6. That is to say, the rows 4282 through 4289 of the hash value list 4273 indicate the values of four bits from the least significant bits of the start addresses of the eight functions (funcA through funcH), respectively. The hash values shown in the rows 4282 through 4289 of this hash value list 4273 are correlated with Expression 6, and held in the hash value table 4240 as a list.

A hash value list 4274 indicates a list of hash values calculated using Expression 5 that is a hash function with i (bit width) in Expression 1 being set to "3". The row 4281 of the hash value list 4274 indicates "i = 3" indicating that Expression 5 that is a hash function with i (bit width) in Expression 1 being set to "3" is used. The rows 4282 through 4289 of the hash value list 4274 indicate a hash value calculated with the start addresses of the eight functions (funcA through funcH) as the function input values of Expression 5. That is to say, the rows 4282 through 4289 of the hash value list 4274 indicate the values of three bits from the least significant bits of the start addresses of the eight functions (funcA through funcH), respectively. The hash values shown in the rows 4282 through 4289 of this hash value list 4274 are correlated with Expression 5, and held in the hash value table 4240 as a list.

A hash value list 4275 indicates a list of hash values calculated using Expression 4 that is a hash function with i (bit width) in Expression 1 being set to "2" . The row 4281 of the hash value list 4275 indicates "i = 2" indicating that Expression 4 that is a hash function with i (bit width) in Expression 1 being set to "2" is used. The rows 4282 through 4289 of the hash value list 4275 indicate a hash value calculated with the start addresses of the eight functions (funcA through funcH) as the function input values of Expression 4. That is to say, the rows 4282 through 4289 of the hash value list 4275 indicate the values of two bits from the least significant bits of the start addresses of the eight functions (funcA through funcH), respectively. The hash values shown in the rows 4282 through 4289 of this hash value list 4275 are correlated with Expression 4, and held in the hash value table 4240 as a list.

A hash value list 4276 indicates a list of hash values calculated using Expression 3 that is a hash function with i (bit width) in Expression 1 being set to "1". The row 4281 of the hash value list 4276 indicates "i = 1" indicating that Expression 3 that is a hash function with i (bit width) in Expression 1 being set to "1" is used. The rows 4282 through 4289 of the hash value list 4276 indicate a hash value calculated with the start addresses of the eight functions (funcA through funcH) as the function input values of Expression 3. That is to say, the rows 4282 through 4289 of the hash value list 4276 indicate the values of the least significant bits of the start addresses of the eight functions (funcA through funcH), respectively. The hash values shown in the rows 4282 through 4289 of this hash value list 4276 are correlated with Expression 3, and held in the hash value table 4240 as a list.

As described above, with the first embodiment of the present invention, the hash value table 4240 is used, whereby a hash value can be held as a list in a manner correlated with the hash function that has generated the hash value thereof.

Subsequently, description will be made regarding a hash value list to be distinguished by the unique hash value list distinction unit 4251, and a hash function that the determined hash function selecting unit 4252 selects, with reference to Fig. 80.

First, according to the unique hash value list distinction unit 4251, a hash value list where all of the hash values mutually differ is distinguished, and the distinguished hash value list where all of the hash values mutually differ is supplied to the determined hash function selecting unit 4252. At this time, with the hash value list 4276, the hash values of the funcA, funcC, funcE, and funcG are redundant with "0", and further the hash values of the other four functions are redundant with "1", and accordingly, this hash value list is not supplied to the determined hash function selecting unit 4252.

Also, with the hash value list 4275, the hash values of the funcA, funcC, and funcE are redundant with "10", and further, the hash values of the funcB, funcF, and funcH are redundant with "11", and accordingly, this hash value list is not supplied to the determined hash function selecting unit 4252. Further, with the hash value list 4274, the hash values of the funcA and funcE are redundant with "110", and further, the hash values of the funcF and funcH are redundant with "011", and accordingly, this hash value list is not supplied to the determined hash function selecting unit 4252.

As a result thereof, the hash value lists 4272 and 273 that have been distinguished to be hash value lists where all of the hash values mutually differ are supplied to the determined hash function selecting unit 4252 by the unique hash value list distinction unit 4251.

Upon a hash value list being supplied from the unique hash value list distinction unit 4251, the determined hash function selecting unit 4252 detects, of the hash value lists supplied form the unique hash value list distinction unit 4251, a hash value list of hash values having the narrowest bit width.

As a result thereof, of the hash value list 4272 of 4-bit hash values, and the hash value list 4272 of 5-bit hash values, the hash value list 4273 is detected as a hash value list of hash values having the narrowest bit width. The determined hash function selecting unit 4252 then obtains the Expression 6 of a hash function correlated with the hash value list 4273 from the hash function holding unit 4220, and outputs the obtained Expression 6 thereof as the hash function that the hash function determining unit 4200 has determined.

As described above, with the first embodiment of the present invention, the unique hash value list distinction unit 4251 is provided, whereby a hash value list where all of the hash values mutually differ can be distinguished from the hash value lists that the hash value table 4240 holds. Also, the determined hash function selecting unit 4252 is provided, whereby of the hash value lists distinguished by the unique hash value list distinction unit 4251, a hash function correlated with a hash value list of hash values having the narrowest bit width can be determined.

Note that description has been made here regarding a case where a hash value is generated using only a hash function with a value of a predetermined number of bits from the least significant bit of a start address as a hash value, but a hash value having narrower bit width can be generated by using various hash functions.

Also, description has been made here regarding a case where there is a hash value list where all of the hash values mutually differ. However, a case can also be conceived where the hash value table 4240 does not include a hash value list where all of the hash values mutually differ. In such a case, the determined hash function selecting unit 4252 outputs a function for outputting the value of a start address without change. Alternatively, the determined hash function selecting unit 4252 outputs information indicating that there is no hash function.

[Example of Hash Function Specifying Command According to First Embodiment of Present Invention]

Next, description will be made regarding a hash function specifying command that the compile processing device 4100 according to the first embodiment of the present invention, with reference to the drawing.

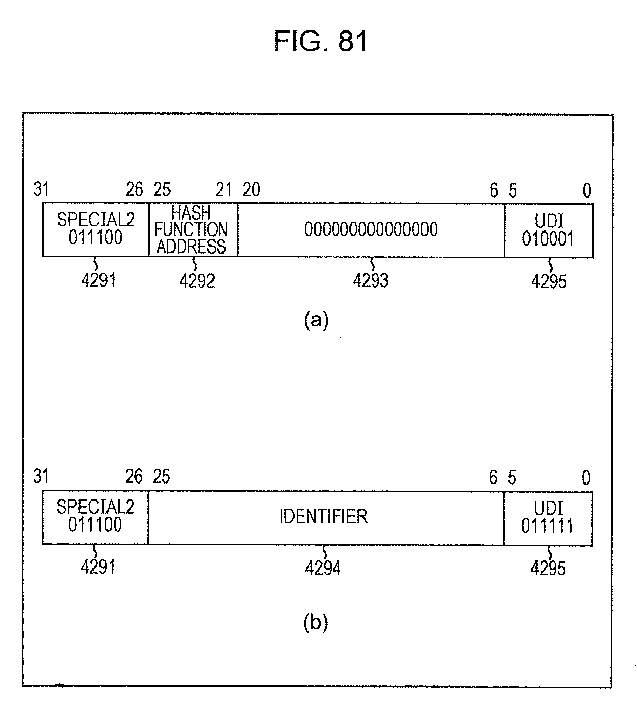

Fig. 81 is a conceptual diagram illustrating an example of a hash function specifying command according to the first embodiment of the present invention. Here, let us assume that the processor core of the data processing device is configured of an MIPS. Also, here, the left end indicates the most significant bit (MSB), and the right end indicates the least significant bit (LSB).

(a) in Fig. 81 indicates an example of a hash function specifying command for allowing the data processing device which executes the object program thereof to recognize a hash function embedded in an object program. This hash function specifying command is expressed by a bit string of 32 bits (numbers 0 through 31) . This hash function specifying command is made up of an operation code field 4291, a hash function address field 4292, an unused field 4293, and a user definable field (UDI: User Definable Instruction) 4295.

The operation code field 4291 is a field specifying the kind of a command. This operation code field 4291 is a bit string made up of the 26th through 31st bits. With the operation code field 4291 of this hash function specifying command, a bit string of "011100" is stored as a SPECIAL2 command. Here, the SPECIAL2 command is a command for specifying that this command is a command that the user has uniquely defined.

The hash function address field 4292 is a field specifying a register in which the address of a hash function is stored. This hash function address field 4292 is a bit string made up of the 21st through 25th bits.

The unused field 4293 is a filed not used for a hash function specifying command. The unused field 4293 is a 15-bit bit string made up of the 6th through 20th bits. With this unused field 4293, a bit string (000000000000000) is stored, for example.

The user definable command field (UDI) 4295 is a filed specifying one command of multiple commands that the user has defined with the SPECIAL2 command. This user definable command field (UDI) 4295 is a bit string made up of the 0th through 5th bits. With this user definable command field (UDI) 4295, a hash function specifying command is specified with a bit string (010001), for example.

As described above, with the first embodiment of the present invention, a hash function specifying command is used, whereby a hash function embedded in an object program can be used for the data processing device.

Subsequently, description will be made regarding an identifier supply command used for a case where the determined hash function selecting unit 4252 outputs an identifier, which has been described as another function regarding the determined hash function selecting unit 4252 in Fig. 78. Here, the identifier supply command is a command for supplying an identifier to the data processing device for executing an object program, and allowing the data processing device to use the identifier thereof.

(b) in Fig. 81 indicates an example of an identifier supply command for supplying an identifier indicating a hash function. This identifier supply command is expressed with a bit string of 32 bits (number 0 through 31).

This identifier supply command is made up of an operation code field 4291, an identifier field 4294, and a user definable command field (UDI) 4294. Note that the functions of the fields other than the identifier field 4294 are the same as the functions of the fields of the hash function specifying command shown in (a) in Fig. 81, and accordingly denoted with the same reference numerals as with (a) in Fig. 81, and detailed description thereof will be omitted here.

The identifier field 4294 is a field for storing an identifier for identifying the hash function determined by the hash function determining unit 4200. This identifier field 4294 is a bit string made up of 20 bits of the 6th through 25th bits, for example.

As described above, according to the first embodiment of the present invention, the hash function determined by the hash function determining unit 4200, or an identifier specifying the hash function thereof can be embedded in an object program.

Note that, in the event that the operation code filed 4291 is a SPECIAL2 command, 20 bits of the 6th through 25th bits are encoding space that the user can define. Therefore, the present invention is not restricted to the hash function specifying command and identifier supply command shown in (a) and (b) in Fig. 81, and various patterns can be conceived.

[Example of Operation of Compile Processing Device According to First Embodiment of Present Invention]

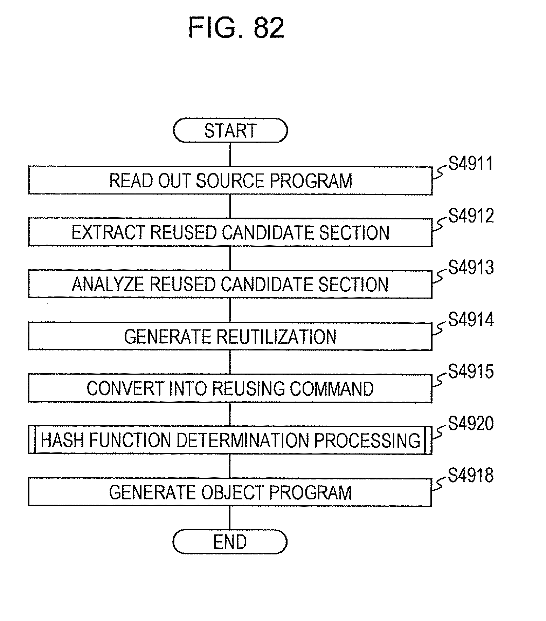

Next, the processing of the compile processing device 4100 according to the first embodiment of the present invention will be described with reference to the drawing. Fig. 82 is a flowchart illustrating the processing procedure of compile processing using the compile processing device 4100 according to the first embodiment of the present invention.

First, a source program is read out from the source program storage unit 4110 (step S4911). Next, a reused candidate section is extracted by the reused candidate section extracting unit 4121 (step S4912).

The usage pattern of the reused candidate section is then analyzed by the reused candidate section analyzing unit 4122 (step S4913). Subsequently, reutilization is generated by the reutilization generating unit 4123 based on the analysis results of the reused candidate section (step S4914).

Next, a call-up command of the reused candidate section is converted into a reusing command by the reusing command conversion unit 4124 (step S4915) . This means that, for example, in the event that the function is a reused candidate section, the call-up command (call) of the function is converted into a reusing command (memoCall). According to a series of processing in steps S4911 through S4915, the reused section is distinguished. Note that steps S4911 through S4915 are an example of the analyzing procedure laid forth in the Claims.

Hash function determination processing is then performed by the hash function determining unit 4200, which determines a hash function for generating a hash value for identifying a reused section using bit width narrower than the bit width of the start address (step S4920).

Finally, a machine language program in which a hash function is embedded is generated by the machine language program generating unit 4140 based on the analyzed program and hash function (step 54918) . The compile processing is then ended. Note that step S4918 is an example of the machine language program generating procedure laid forth in the Claims.

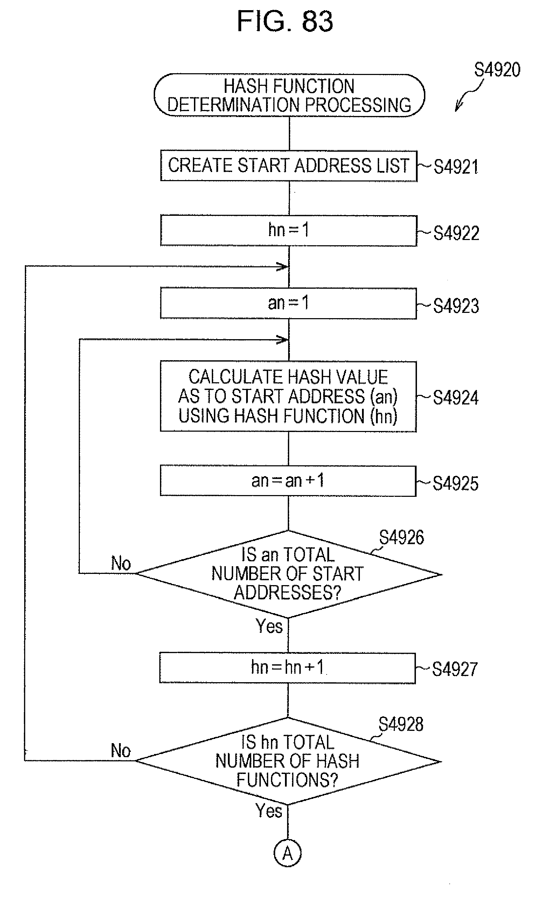

Fig. 83 is a flowchart illustrating the first half of a processing procedure example of hash function determination processing (step S4920) using the hash function determining unit 4200 according to the first embodiment of the present invention. Note that, here, let us assume that the total number of hash functions is "6" that is a number obtained by adding a hash function that outputs a start address without change, and the hash functions in Expression 3 through Expression 7 shown in Fig. 79.

First, according to the start address obtaining unit 4210, the start address of a reused section is obtained from the program, and held in the start address obtaining unit 4210 as a start address list (step S4921).

Next, a hash function counter (hn) is initialized to "1" (step S4922). Note that the hash function counter (hn) shown here is a value for identifying a hash function where a hash value is generated by the candidate hash value generating unit 4230. For example, this hash function counter (hn) is a value of "1 through 5" to be added for identifying Expression 7 through Expression 3 correlated with the hash value lists 4272 through 4276 shown in Fig. 80.

Note that let us say that a hash function that outputs a start address without change is assigned to "0" of the value of the hash function counter (hn). For example, "h (hash value) = a (start address)" or the like can be conceived as the hash function that outputs a start address without change thereof.

Subsequently, a start address counter (an) is initialized to "0" (step S4923). Note that the start address counter (an) shown here is a value for identifying a hash value held in the hash value table 4240 by using the hash function counter (hn) together.

For example, in the event that the hash function counter (hn) is "1", this start address counter (an) is a value of "0 through 7" for identifying the eight hash values of the hash value list 4272 correlated with Expression 7. Also, for example, in the event that the hash function counter (hn) is "5", this start address counter (an) is a value of "0 through 7" for identifying the eight hash values of the hash value list 4276 correlated with Expression 3.

According to the candidate hash value generating unit 4230, a hash value is then calculated with the start address that the start address counter (an) specifies as a function input value using the hash function that the hash function counter (hn) specifies (step S4924). Next, "1" is added to the start address counter (an) (step S4925).

Subsequently, determination is made whether or not the start address counter (an) is the total number of start addresses of the start address list (step S4926). In the event that determination is made that the start address counter (an) is not the total number of start addresses of the start address list, the flow then returns to step S4924. Thus, a hash value that has not been calculated yet using the hash function that the hash function counter (hn) specifies is calculated.

On the other hand, in the event that determination is made that the start address counter (an) is the total number of start addresses of the start address list, "1" is added to the hash function counter (hn) (step S4927).

Subsequently, determination is made whether or not the hash function counter (hn) is the total number of hash functions (step S4928). In the event that determination is made that the hash function counter (hn) is not the total number of hash functions, the flow then returns to step S4923. Thus, a hash function is calculated using a hash function of which the hash value has not been calculated yet. Note that steps s4922 through S4928 are an example of the candidate value generating procedure laid forth in the Claims.

On the other hand, in the event that determination is made that the hash function counter (hn) is the total number of hash functions, the flow proceeds to step S4929.

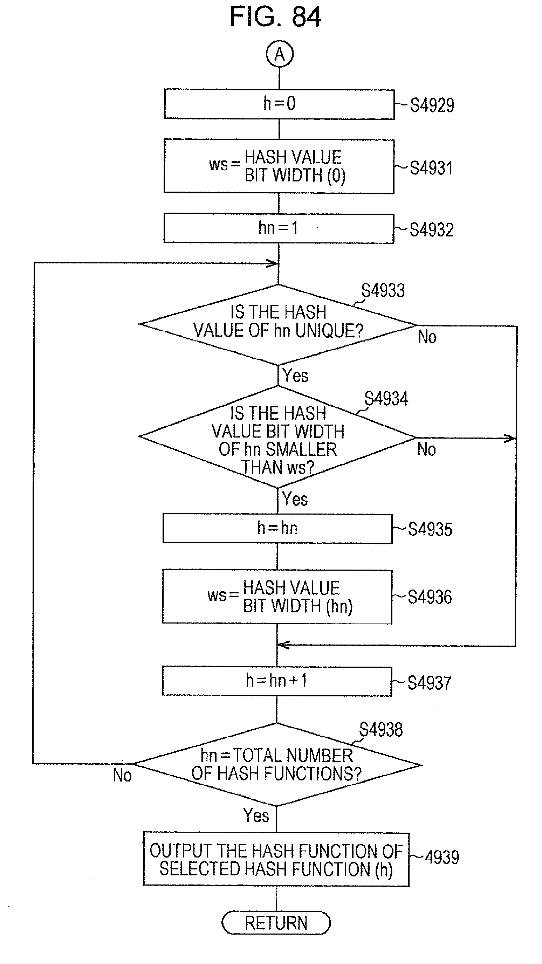

Fig. 84 is a flowchart illustrating the second half of the processing procedure example of the hash function determination processing (step S4920) using the hash function determining unit 4200 according to the first embodiment of the present invention.

First, in the event that determination is made in step S4928 in Fig. 83 that the hash function counter (hn) is the total number of hash functions, a selected hash function counter (h) is initialized to "0" (step S4929).

Subsequently, a hash value bit width size (ws) is changed to the bit width of a hash value to be generated by the hash function of the hash function counter (0) (step S4931). That is to say, 64 bits that is the bit width of the start address are set to the hash value bit width size (ws).

The hash function counter (hn) is then changed to "1" (step S4932). Subsequently, according to the unique hash value list distinction unit 4251, distinction is made whether or not all of the hash values of the hash value list corresponding to the hash function that the hash function counter (hn) specifies, mutually differ (step S4933). In the event that distinction is made that all of the hash values of the hash values list correlated with the hash function that the hash function (hn) specifies do not mutually differ, the flow then proceeds to step S4937.

On the other hand, in the event that distinction is made that all of the hash values of the hash values list correlated with the hash function that the hash function (hn) specifies, mutually differ, the flow proceeds to step S4934. In step S4934, determination is made by the determined hash function selecting unit 4252 whether or not the bit width of the hash values of the hash value list correlated with the hash function that the hash function counter (hn) specifies is a smaller value than the hash value bit width size (ws). In the event that determination is made that the bit width of the hash values of the hash value list correlated with the hash function that the hash function counter (hn) specifies is not a smaller value than the ws, the flow then proceeds to step S4937.

On the other hand, in the event that determination is made that the bit width of the hash values of the hash value list correlated with the hash function that the hash function counter (hn) specifies is a smaller value than the hash value bit width size (ws), the flow proceeds to step S4935. In step S4935, the selected hash function number (h) is changed to the value of the hash function counter (hn).

Subsequently, the hash value bit width size (ws) is changed to the bit width of the hash values of the hash value list correlated with the hash function that the hash function counter (hn) specifies (step S4936).

"1" is then added to the hash function counter (hn) (step S4937). Next, determination is made whether or not the hash function counter (hn) is the total number of hash functions (step S4938). In the event that determination is made that the hash function counter (hn) is not the total number of hash functions, the flow then returns to step S4933.

On the other hand, in the event that determination is made that the hash function counter (hn) is the total number of hash functions, the hash function that the selected hash function (h) specifies is output as the hash function determined by the hash function determining unit 4200 (step S4939). Note that steps S4929 through 4939 are an example of the section identification value generating function output procedure laid forth in the Claims.

As described above, with the first embodiment of the present invention, a hash function for generating hash values that all mutually differ and have the narrowest bit width can be selected from multiple hash functions, and embedded in the program.

Note that a has function has been selected here based on the bit width of the hash values of the hash value list correlated with the hash function that the hash function counter (hn) specifies, but the present invention is not restricted to this. For example, a case can also be conceived where a hash function is selected based on a value obtained by summing the bit width of a hash value of a hash value list.

<2. Second Embodiment>

[Configuration Example of Data Processing Device 4300 According to Second Embodiment]

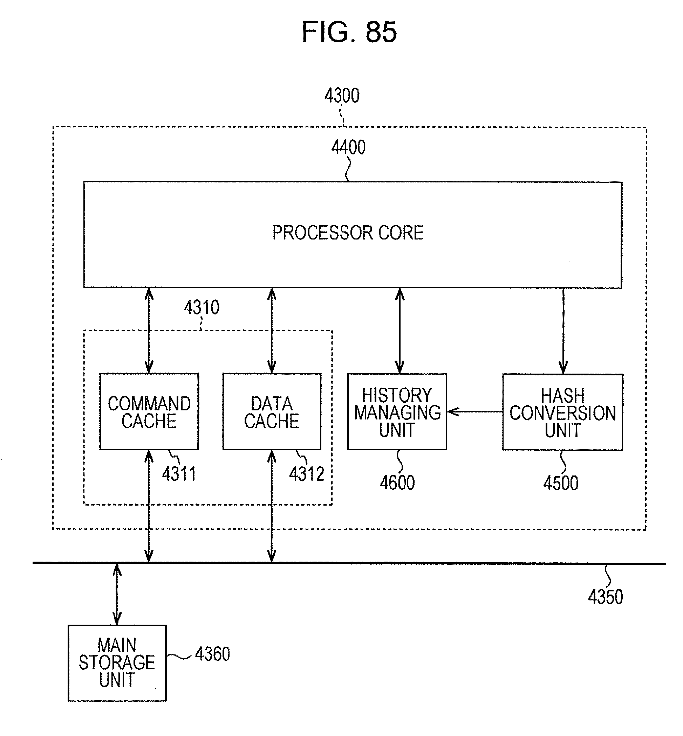

Fig. 85 is a block diagram illustrating a configuration example of a data processing device 4300 according to the second embodiment of the present invention. This data processing device 4300 is mutually connected to a main storage unit 4360 via a bus 4350. Also, here, let us assume that a command section that where the data processing device 4300 executes processing is a function or loop. Further, here, let us say that the data processing device 4300 executes the object program generated by the compile processing device 4100 according to the first embodiment of the present invention.

The data processing device 4300 executes various types of processing according to program data. This data processing device 4300 is realized by a CPU (Central Processing Unit) in a common computer, for example. This data processing device 4300 includes a primary cache 4310, a processor core 4400, a hash conversion unit 4500, and a history managing unit 4600.

The primary cache 4310 is for temporarily holding information that the processor core 4400 handles via the bus 4350. This primary cache 4310 includes a command cache 4311 and a data cache 4312.

The command cache 4311 is for temporarily holding a command that is executed at the processor core 4400. This command cache 4311 temporarily holds a command that the processor core 4400 frequently executes, thereby reducing access from the processor core 4400 to the main storage unit 4360, and reducing data input waiting time at the processor core 4400. This command cache 4311 supplies, for example, the reusing command and command specifying a hash function supplied from the main storage unit 4360 to the processor core 4400.

The data cache 4312 is for temporarily holding the input data and output data of the processor core 4400. This data cache 4312 temporarily holds the input data of the processor core 4400 that is high in frequency of use, thereby reducing access from the processor core 4400 to the main storage unit 4360, and reducing data input waiting time at the processor core 4400. This data cache 4312 outputs the input values and start address of a function supplied from the main storage unit 4360 to the processor core 4400. Also, this data cache 4312 outputs, for example, information relating to the hash function supplied from the main storage unit 4360 to the processor core 4400.

The processor core 4400 is for executing computation in accordance with a command of the program. This processor core 4400 is realized by an MIPS (Microprocessor with out Interlocked Pipeline Stages) processor, for example. Based on the input values, and start address of a function or loop supplied from the data cache 4312, this processor core 4400 executes the command in a function or loop section input from the command cache 4311, and outputs the result of the execution thereof as an execution result, for example.

When no execution result is supplied from the history managing unit 4600 in the event that a command to be input is a reusing command for specifying a reused section, this processor core 4400 outputs an execution result that is a result of this command being executed to the data cache 4312 and history managing unit 4600. Also, at the time of executing a reusing command, this processor core 4400 supplies the start address of a the reused section that the reusing command specifies to the hash conversion unit 4500.

Further, when a command to be input is a reusing command that specifies a reused section, and in the event that an execution result has been supplied from the history managing unit 4600, the processor core 4400 discontinues the processing in the reused section, returns to the routine that has called this reused section, and continues execution.

The hash conversion unit 4500 is for converting the start address into a hash value for identifying a reused section with narrower bit width than the bit width of the start address of a reused section. This hash conversion unit 4500 holds a hash function based on a command specifying a hash function of the commands of the program. This hash conversion unit 4500 uses the held hash function to generate a hash value from the start address of the function or loop supplied from the processor core 4400. This hash conversion unit 4500 supplies the generated hash value to the history managing unit 4600.

The history managing unit 4600 is for holding and managing the execution result in a reused section. This history managing unit 4600 holds the input values and execution result of the reused section supplied from the processor core 4400, and the hash value supplied from the hash conversion unit 4500 as an execution history. Also, in the event that a hash value and input values of a function or loop have been supplied, this history managing unit 4600 searches the execution history in which the hash value and input values thereof are included.

The bus 4350 is a bus for mutually connecting between the units of the data processing device 4300 and the main storage unit 4360.

The main storage unit 4360 is for holding data necessary for the data processing device 1100 operating. This main storage unit 4360 stores a program causing the data processing device 4300 to execute the processing. RAM (Random Access Memory) or the like can be conceived as an example of this main storage unit 4360. This main storage unit 4360 outputs the stored data to the data processing device 4300 via the bus 4350.

[Configuration Example of Processor Core 4400 and History Hash Conversion Unit 4500 and History Managing Unit 4600 According to Second Embodiment of Present Invention]

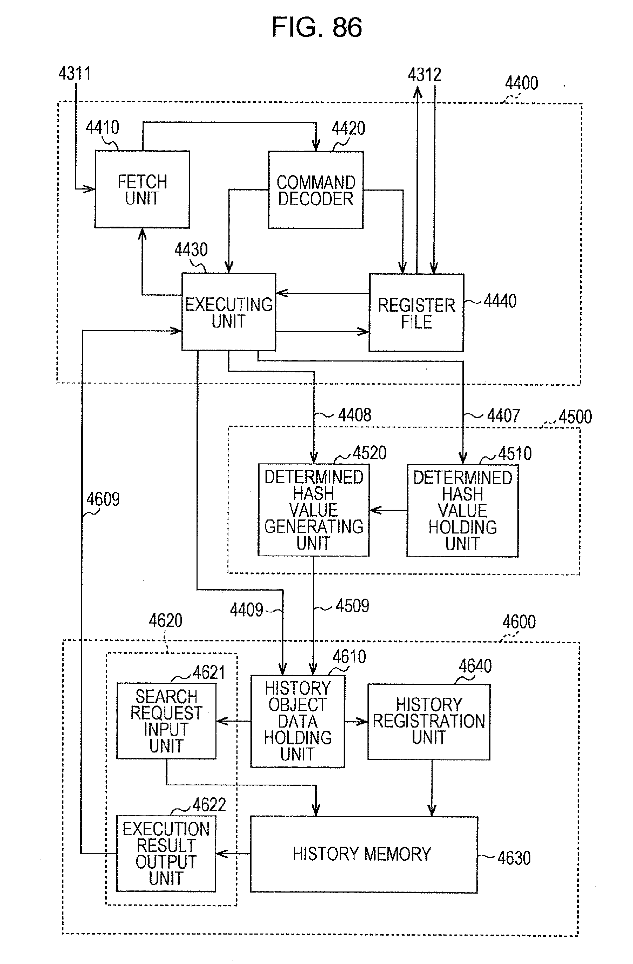

Fig. 86 is a block diagram illustrating a configuration example of the processor core 4400 and hash conversion unit 4500 and history managing unit 4600 according to the second embodiment of the present invention. Here are shown the processor core 4400, hash conversion unit 4500, and history managing unit 4600. Also, here, the functions of the processor core 4400, hash conversion unit 4500, and history managing unit 4600 are the same as with those in Fig. 85, and accordingly denoted with the same reference numerals, and detailed description thereof will be omitted here.

The processor core 4400 includes a fetch unit 4410, a command decoder 4420, an executing unit 4430, and a register file 4440.

The fetch unit 4410 is for reading out a command from the command cache 4311 or main storage unit 4360. This fetch unit 4410 temporarily holds the read command thereof, and of the held commands thereof, supplies a command causing the executing unit 4430 to execute to the command decoder 4420. This fetch unit 4410 supplies, of the temporarily held commands, a reusing command to be executed at the executing unit 4430 to the command decoder 4420, for example. This fetch unit 4410 supplies, for example, a reusing command stored in the main storage unit 4360 to the command decoder 4420.

The command decoder 4420 is for generating a control signal for controlling a component of the processor core 4400 by analyzing (decoding) the command supplied from the fetch unit 4410. This command decoder 4420 generates, for example, a control signal for controlling the executing unit 4430 and register file 4440 by an analyzing a command, and supplies the generated control signal thereof to the executing unit 4430 and register file 4440.

In the event that a reusing command has been supplied from the fetch unit 4410, this command decoder 4420 analyzes this reusing command, thereby supplying a control signal for controlling each of the executing unit 4430 and register file 4440 to the executing unit 4430 and register fie 4440.

The executing unit 4430 is for executing the command decoded at the command decoder 4420 based on the control signal supplied from the command decoder 4420. In the event of having decoded a command specifying a hash function at the command decoder 4420, this executing unit 4430 outputs the hash function obtained from the register file 4440 to the hash conversion unit 4500 via a signal line 4407.

Also, in the event of having decoded a reusing command at the command decoder 4420, this executing unit 4430 starts processing of the reused section that the reusing command specifies. The executing unit 4430 then outputs the start address of the reused section obtained from the register file 4440 to the hash conversion unit 4500 via a signal line 4408 along with start of the processing of this reused section. The executing unit 4430 then executes the processing in the reused section based on the input values of the reused section supplied from the register file 4440, and also outputs the input values of the reused section to the history managing unit 4600 via a signal line 4409.

Note that, in the event that the execution result of the reused section has been supplied form the history managing unit 4600, the executing unit 4430 discontinues the processing of the reused section, and also supplies a signal informing that the execution result thereof has been supplied from the history managing unit 4600 to the fetch unit 4410. At this time, the executing unit 4430 outputs the execution result to the register file 4440.

On the other hand, in the event that the execution result of the reused section has not been supplied from the history managing unit 4600, the executing unit 4430 executes the processing of the reused section up to the end, outputs the execution result thereof to the register file 4440, and also outputs to the history managing unit 4600 via the signal line 4409.

The register file 4440 is for temporarily holding the data supplied from the data cache 4312, and the execution result supplied from the executing unit 4430. For example, in the event that the control signal based on the reusing command has been supplied from the command decoder 4420, this register file 4440 supplies the input values of the reused section to the executing unit 4430.

The hash conversion unit 4500 is for converting the start address into a hash value for identifying the reused section with narrower bit width than the bit width of the start address of the reused section. This hash conversion unit 4500 includes a determined hash function holding unit 4510 and a determined hash value generating unit 4520.

The determined hash function holding unit 4510 is for holding the hash function supplied from the executing unit 4430. That is to say, this determined hash function holding unit 4510 holds the hash function determined by the determined hash function selecting unit 4252 shown in Fig. 78. This determined hash function holding unit 4510 holds the hash function supplied fro the executing unit 4430 via the signal line 4407, and supplies the held hash function to the determined hash value generating unit 4520.

The determined hash value generating unit 4520 is for generating a hash value from the start address supplied from the executing unit 4430 using the hash function supplied from the determined hash function holding unit 4510. That is to say, this determined hash value generating unit 4520 generates a hash value from the start address supplied from the executing unit 4430 using the hash function determined at the determined hash function selecting unit 4252 shown in Fig. 78. In the event that the start address of a function or loop has been supplied via the signal line 4408, this determined hash value generating unit 4520 generates a hash value using the hash function held at the determined hash function holding unit 4510. This determined hash value generating unit 4520 supplies the generated hash value thereof to a history object data holding unit 4610 via the signal line 4509. Note that the determined hash value generating unit 4520 is an example of the section identification value generating unit laid forth in the Claims. Note that the hash values that the determined hash value generating unit 4520 generates are an example of the section identification value laid forth in the Claims. Also, the hash functions that the determined hash value generating unit 4520 uses are an example of the section identification value generating function laid forth in the Claims.

The history managing unit 4600 is for holding and managing the execution result of a reused section, and includes a history object data holding unit 4610, a history search unit 4620, history memory 4630, and a history registration unit 4640.

The history object data holding unit 4610 is for temporally holding the data supplied from the executing unit 4430 and determined hash value generating unit 4520. In the event that an input value has been supplied from the executing unit 4430, and also in the case that a hash value has been supplied from the determined hash value generating unit 4520, this history object data holding unit 4610 supplies these to the history search unit 4620. For example, in the event that the reused section of a function has been executed at the executing unit 4430, this history object data holding unit 4610 supplies the input value of the function supplied from the executing unit 4430, and the hash value supplied from the determined hash value generating unit 4520 to the history search unit 4620 as a search request. Also, in the event that the reused section of a loop has been executed at the executing unit 4430, the history object data holding unit 4610 supplies the input value and loop counter value from the executing unit 4430, and the hash value from the determined hash value generating unit 4520 to the history search unit 4620 as a search request. Here, the loop counter value is a value indicating how many times of execution of the loop section thereof the execution result is.

Also, in the event that input values and an execution result have been supplied from the executing unit 4430, and also a hash value has been supplied from the determined hash value generating unit, this satisfies a condition for registering the execution history, and accordingly, this history object data holding unit 4610 supplies these to the history registration unit 4640 as an execution history. For example, in the event that the reused section of a function has been executed at the executing unit 4430, the history object data holding unit 4610 supplies the input values and execution result from the executing unit 4430, and the hash value from the determined hash value generating unit 4520 to the history registration unit 4640 as an execution history. Also, in the event that the reused section of a loop has been executed at the executing unit 4430, the history object data holding unit 4610 supplies the input values, execution result, and loop counter value from the executing unit 4430, and the hash value from the determined hash value generating unit 4520 to the history registration unit 4640 as an execution history.

The history search unit 4620 is for searching an execution history based on the search request supplied from the history object data holding unit 4610. This history search unit 4620 includes a search request input unit 4621 and an execution result output unit 4622.

The search request input unit 4621 is for searching an execution history from the history memory 4630 based on the search request supplied from the history object data holding unit 4610. For example, in the event that a command specifying the reused section of a function has been decoded at the command decoder 4420, this search request input unit 4621 supplies the hash value generated from the start address of the function specified by the command, and the input values of this function to the history memory 4630. Also, in the event that a command specifying the reused section of a loop has been decoded at the command decoder 4420, the search request input unit 4621 supplies the hash value generated from the start address of this specified loop, input values, and loop counter value to the history memory 4630.

In the event that an execution history has been searched in the history memory 4630, the execution result output unit 4622 extracts an execution result from the history memory 4630, and outputs the extracted execution result thereof to the executing unit 4430. This execution result output unit 4622 supplies the extracted execution result thereof to the executing unit 4430 via a signal line 4609.

The history memory 4630 is for holding the execution history supplied from the history registration unit 4640. For example, in the event that a search request has been supplied from the history search unit 4620, and when the execution history agreeing with this search request is held, this history memory 4630 supplies the execution result of this execution history to the execution result output unit 4622. Further, in the event that an execution history has been supplied from the history registration unit 4640, this history memory 4630 holds this execution history. This history memory 4630 is realized by content addressable memory (CAM: Content Addressable Memory), for example.

The history registration unit 4640 is for converting the execution history supplied from the history object data holding unit 4610 into a data structure for holding in the history memory 4630, and registering the converted execution history thereof in the history memory 4630. For example, in the event that the execution history of a function has not been searched by the history search unit 4620, this history registration unit 4640 registers the hash value generated from the start address of the function thereof, input values, and execution result in the history memory 4630. Also, for example, in the event that the execution history of a loop has not been searched by the history search unit 4620, this history memory 4640 registers the hash value generated from the start address of the loop, input values, execution result, and loop counter value in the history memory 4630 as an execution history.

As described above, with the second embodiment of the present invention, the hash conversion unit 4500 is provided to the data processing device 4300, whereby the start address can be converted into a hash value by executing the program in which a hash function has been embedded by the device according to the first embodiment of the present invention. Thus, a hash value for identifying the reused section with narrower bit width than the bit width of the start address can be held in the history memory 4630 instead of the start address.

That is to say, with a conventional technique, the start address, input values, and execution result are held in history memory as the execution result of a function, but with the second embodiment of the present invention, a hash value of narrower bit width than the bit width of the start address, input values, and execution result are held in the history memory 4630. In this way, a hash value of narrower bit width than the bit width of the start address is held in the history memory 4630 instead of the start address, whereby the amount of execution histories held in the history memory 4630 can be increased.

Note that description has been made here regarding an example wherein the hash function supplied from the executing unit 4430 is held in the determined hash function holding unit 4510, but the present invention is not restricted to this. For example, the same multiple hash functions as with the candidate hash function holding unit 4220 according to the first embodiment of the present invention shown in Fig. 78 may be held in the determined hash function holding unit 4510 beforehand. With this example, according to the compile processing device 4100 according to the first embodiment of the present invention, the identifier specifying the hash function described in Fig. 78 is embedded in the program instead of a hash function. A hash function is determined based on the identifier thereof by the data processing device 4300 according to the second embodiment of the present invention.

In this case, in the event that the command decoder 4420 has decoded a command specifying an identifier, the executing unit 4430 outputs the identifier to the hash conversion unit 4500. The determined hash function holding unit 4510 then selects the hash function corresponding to the identifier supplied from the executing unit 4430 from the held multiple hash functions, and supplies the selected hash function thereof to the determined hash value generating unit 4520.

Thus, the start address can be converted into a hash value based on the program in which an identifier identifying the hash function is embedded.

[Data Structure Example of History Memory 4630]

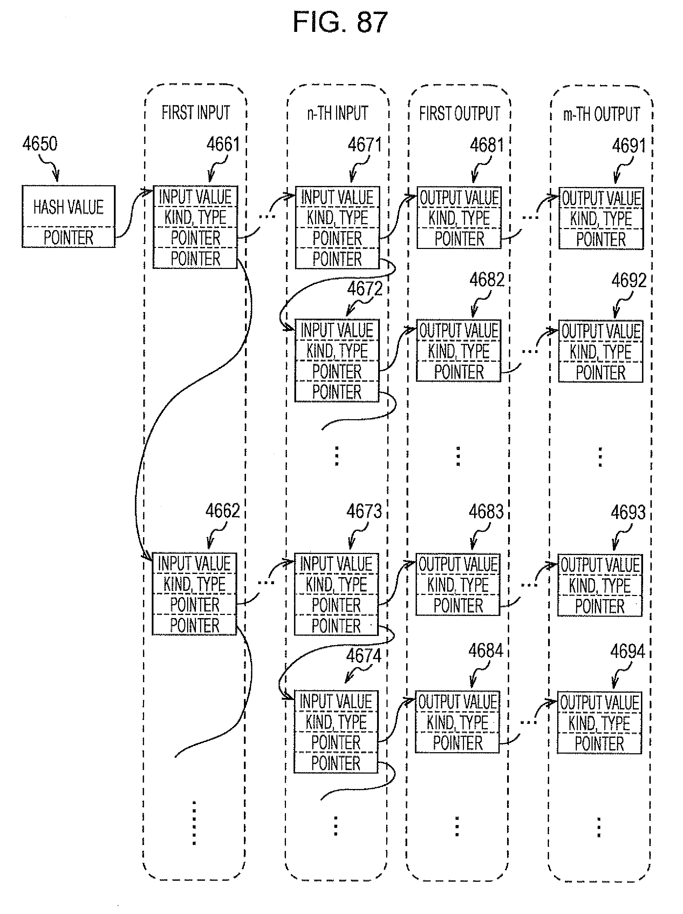

Fig. 87 is a conceptual diagram illustrating an example of the data structure of the history memory 4630 according to the second embodiment of the present invention. Here is shown a structure wherein of the execution histories held for each hash value by the history memory 4630, the execution history in one hash value is held in a tree structure. With this example, a function having n arguments, which returns output that is an execution result to m storage destinations is assumed.

This example illustrates a function route 4650 in a tree structure, first argument nodes 4611 and 4662, n'th argument nodes 4671 through 4674, first output nodes 4681 through 4684, and m'th output nodes 4691 through 4694.

The function route 4650 indicates a hash value, and a pointer pointing to the first argument node 4661.

The first and n'th argument nodes 4661, 4662, and 4671 through 4674 indicate, as the input values of an argument in an execution history held in the history memory 4630, an input value indicating a value of an argument, the type of the argument thereof, and the kind indicating the storage location of the argument thereof. The storage location mentioned here means a register number or a memory address in the main storage unit 4360.

Further, the first and n'th argument nodes 4661, 4662, and 4671 through 4674 indicate a right pointer pointing to the argument node in the next argument in the event that input values to be compared mutually match, and a lower pointer pointing to another argument node in the same argument in the event that input values to be compared do not match. Also, the n'th argument nodes 4671 through 4674 are connected to the first and m'th output nodes 4681 through 4684 and 4691 through 4694, respectively.

The first and m'th output nodes 4681 through 4684 and 4691 through 4694 indicate, as an execution result in an execution history held in the history memory 4630, an output value indicating the value of an execution result, the type indicating the storage location of the execution result thereof, and the type of the execution result thereof. Further, the first output nodes 4681 through 4684 indicate a right pointer pointing to the next output node. That is to say, the first and m'th output nodes 4681 through 4684 and 4691 through 4694 make up a connection list. Also, null representing the terminal end of an output node is indicated in the m'th output nodes 4691 through 4694.

With such a tree structure, upon a hash value agreeing with the hash value shown in the function route 4650 being input, input value comparison processing is executed at the first argument node 4661 pointed to by the pointer of the function route 4650. The input value comparison processing mentioned here is to compare input values that are an input value, kind and type shown in the first argument node 4661, and the input values from the history search unit 4620.

At this time, for example, in the event that the input values shown in the first argument node 4661, and the input values from the history search unit 4620 match, the input value comparison processing is executed at the next argument node pointed to by the right pointer of the first argument node 4661. On the other hand, in the event that the input values shown in the first argument node 4661, and the input values from the history search unit 4620 do not match, the input value comparison processing is executed at the first argument node 4662 pointed to by the lower pointer of the first argument node 4661.

In this way, the argument node pointed to by the right pointer or lower pointer is selected based on the result of the comparison processing at each argument node, and the input value comparison processing is sequentially executed at the selected argument node thereof. For example, in the event that the input values shown in the n'th argument node 4671, and the input values from the history search unit 4620 mutually match, the execution result of the first output node 4681 pointed to by the right pointer of the n'th argument node 4671 is output to the history search unit 4620. Finally then, the execution result of the m'th output node 4691 is output to eh history search unit 4620.

In this way, the history memory 4630 is structured using a tree structure for each hash value, and accordingly, the input values of the same argument do not have to be held in a redundant manner, whereby the storage region can be conserved. Also, the data structure is divided for each hash value, whereby deterioration in search speed can be suppressed.

[Example of Operation, of Data Processing Device 4300 According to Second Embodiment of Present Invention]

Next, the processing of the data processing device 4300 according to the second embodiment of the present invention will be described with reference to the drawing.

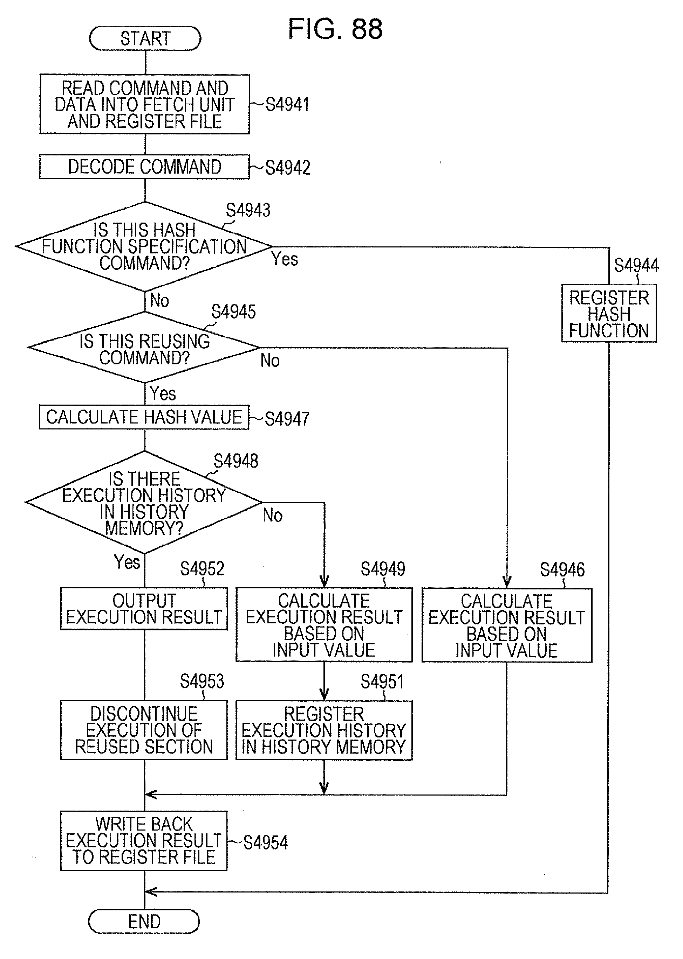

Fig. 88 is a flowchart illustrating a processing procedure example of a command processing method using the data processing device 4300 according to the second embodiment of the present invention. This flowchart describes a processing example for each command to be decoded by the command decoder 4420, and end of execution of a command decoded by the command decoder 4420 is taken as end of the flowchart.

First, a command to be interpreted (decoded) by the command decoder 4420, and a value to be executed by the executing unit 4430 in accordance with the command thereof are read into the fetch unit 4410 and register file 4440 (step S4941). Next, the command supplied from the fetch unit 4410 is decoded by the command decoder 4420 (step S4942).

Subsequently, determination is made by the executing unit 4430 whether or not the decoded command is a hash function specifying command (step S4943). In the event that determination is made that the decoded command is a hash function specifying command, the hash function supplied from the register file 4440 is then registered in the determined hash function holding unit 4510 via a signal line 44407 (step S4944). Thus, execution of the hash function specifying command is ended.

On the other hand, in the event that determination is made that the decoded command is not a hash function specifying command, determination is made whether or not the decoded command is a reusing command (step S4945). In the event that determination is made that the decoded command is not a reusing command, according to the executing unit 44430, the reused section thereof is executed based on the input values supplied from the register file 4440, and accordingly, the execution result is output (step S4946), and the flow proceeds to step S4954.

On the other hand, with the processing in step S4945, in the event that determination is made that the command is a reusing command, a hash value is calculated from the start address of the reused section by the determined hash value generating unit 4520 (step S4947). Subsequently, determination is made by the search request input unit 4621 using the hash value and input values whether or not there is an execution history in the history memory 4630 (step S4948). At this time, in the event that a loop is the reused section, search is performed using the loop counter value in addition to the hash value and input values whether or not there is an execution history in the history memory.

In the event that determination is made that there is no execution history in the history memory 4630, according to the executing unit 4430, the reused section thereof is executed based on the input values supplied from the register file 4440, and accordingly, the execution result is output (step S4949). The execution history is then registered in the history memory 4630 by the history registration unit 4640 (step S4951). Thus, the execution history is registered in the history memory 4630. The flow then proceeds to step S4954.

On the other hand, in the event that determination is made that there is an execution history in the history memory 4630, the execution result is output by the execution result output unit 4622 (step S4952). Thus, the execution result of the reused section being executed is output from the history memory 4630. Subsequently, the executing unit 4430 discontinues execution of the reused section of which the execution has been output (step S4953) . The flow then proceeds to step S4954.

After the processing in steps S4946, S4951, and S4953, the execution result is written back to the register file 4440 (step S4954). Thus, execution of the decoded command is ended.

As described above, with the second embodiment of the present invention, the hash conversion unit 4500 is provided, whereby a hash value, input values, and an execution result can be held in the history memory 4630 as an execution history.

<3. Third Embodiment>>

[Configuration Example of Compile Processing Device 4100 According to Third Embodiment of Present Invention]

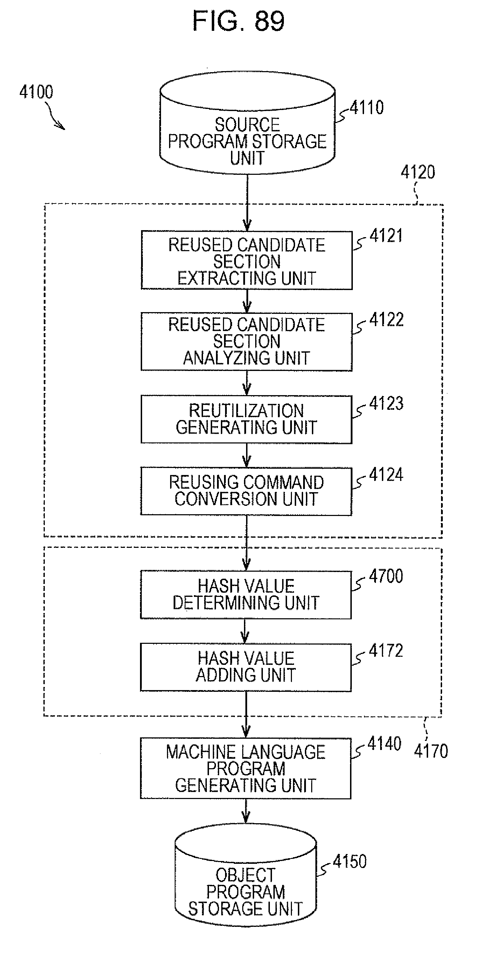

Fig. 89 is a block diagram illustrating a configuration example of the compile processing device 4100 according to the third embodiment of the present invention. This compile processing device 4100 includes a hash value appended reusing command generating unit 4170 instead of the hash function determining unit 4200 of the compile processing device 4100 shown in Fig. 76. Here, the configurations other than the hash value appended reusing command generating unit 4170 are the same as that in Fig. 76, and accordingly denoted with the same reference numerals as with Fig. 76, and the detailed description of the configurations of the units will be omitted here.

The hash value appended reusing command generating unit 4170 is for generating a hash value appended reusing command that is a reusing command including a hash value for identifying a reused section with narrower bit width than the bit width of start address of the reused section. This hash value appended reusing command generating unit 4170 includes a hash value determining unit 700 and a hash value adding unit 4172. Note that the hash value appended reusing command is an example of the section identification value appended command laid forth in the Claims.

The hash value determining unit 700 is for determining a hash value for identifying a reused section with narrower bit width than the bit width of start address of the reused section. This hash value determining unit 4700 generates, for example, a hash value for each hash function using multiple hash functions by taking a number appended in accordance with a predetermined order of the start address of a reused section as a function input value. This hash value determining unit 4700 then determines and outputs, of the multiple hash functions, hash values that all mutually differ and have the narrowest bit width. This hash value determining unit 4700 supplies the determined hash values thereof to the hash value adding unit 4172 along with the program.

The hash value adding unit 4172 is for generating a hash value appended reusing command by appending the hash value determined by the hash value determining unit 4700 to a reusing command for calling up the reused section that the hash value thereof specifies. This hash value adding unit 4172 supplies the program including the generated hash value appended reusing command thereof to the machine language program generating unit 4140. Note that the hash value adding unit 4172 is an example of the command conversion unit laid forth in the Claims.

The machine language program generating unit 4140 is for generating an object program that is a machine language program based on the program including the hash value appended reusing command supplied from the hash value adding unit 4172. Also, at the time of generating an object program, this machine language program generating unit 4140 embeds a command for specifying a value specifying the bit width of a hash value in the object program.

As described above, with the compile processing device 4100 according to the third embodiment of the present invention, first, a function call-up command is converted into a reusing command according to a degree where the execution result of a function will be reused, whereby a function to be reused and a function not to be reused can be distinguished. With the compile processing device 4100 according to the third embodiment of the present invention, a hash value for identifying a reused section is determined, and a hash value appended reusing command is generated, whereby a program including the hash value appended reusing command thereof can be generated.

[Configuration Example of Hash Value Determining Unit 4700 According to Third Embodiment of Present Invention]

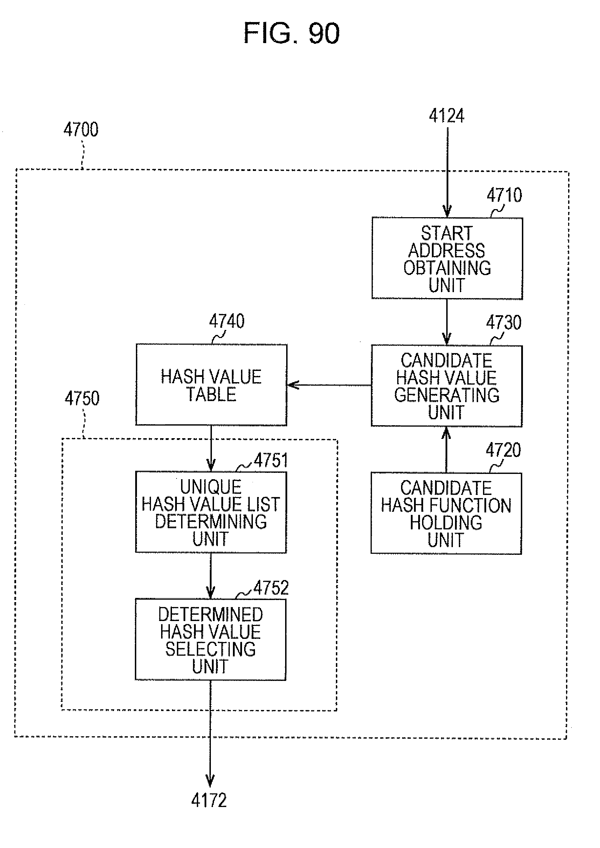

Fig. 90 is a block diagram illustrating a configuration example of the hash value determining unit 4700 according to the third embodiment of the present invention. This hash value determining unit 4700 includes a start address obtaining unit 4710, a candidate hash function holding unit 4720, a candidate hash value generating unit 4730, a hash value table 4740, and a hash value output unit 4750.

The start address obtaining unit 4710 is for obtaining the start address of a reused section from the program including the reusing command from the reusing command conversion unit 4124 in the same way as with the start address obtaining unit 4210 shown in Fig. 78. This start address obtaining unit 4710 holds the obtained start address thereof as a start address list. Also, this start address obtaining unit 4710 holds a number appended in accordance with the obtaining order of the obtained start address thereof as a number list. This start address obtaining unit 4710 supplies the obtained start address or appended number to the candidate hash value generating unit 4730.

The candidate hash function holding unit 4720 is for holding multiple hash functions for converting a start address or number into a hash value. That is to say, this candidate hash function holding unit 4720 holds a hash function serving as a candidate of a hash function for generating a hash value serving as a candidate of the hash value that the hash value determining unit 4700 determines. This candidate hash function holding unit 4720 holds a predetermined hash function.

This candidate hash function holding unit 4720 supplies held multiple hash functions to the candidate hash value generating unit 4730. Note that the hash function supplied from the candidate hash function holding unit 4720 is an example of the candidate function laid forth in the Claims.

The candidate hash value generating unit 4730 is for generating a hash value by taking the start address or number supplied from the start address obtaining unit 4710 as a function input value, and taking the function input value thereof as the input of the hash function supplied from the candidate hash function holding unit 4720. That is to say, this candidate hash value generating unit 4730 generates a hash value serving as a candidate of the hash value that the hash value determining unit 4700 determines.

For example, in the event that a number has been supplied from the start address obtaining unit 4710, this candidate hash value generating unit 4730 generates a hash value from the number thereof using the hash function supplied from the candidate hash function holding unit 4720. Also, for example, in the event that a start address has been supplied from the start address obtaining unit 4710, this candidate hash value generating unit 4730 generates a hash value from the start address thereof using the hash function supplied from the candidate hash function holding unit 4720.

This candidate hash value generating unit 4730 supplies the generated hash value to the hash value table 4740. Note that the candidate hash value generating unit 4730 is an example of the candidate value generating unit laid forth in the Claims. Note that the hash value supplied from the candidate hash value generating unit 4730 is an example of the candidate value laid forth in the Claims.

The hash value table 4740 is for holding the hash value supplied from the candidate hash value generating unit 4730. This hash value table 4740 holds a hash value as a hash value list for each hash function that has generated the hash value thereof. Also, this hash value table 4740 supplies the held hash value list to the hash value output unit 4750. Note that the hash value table 4740 is an example of the candidate value table laid forth in the Claims. Note that the hash value list is an example of the candidate value list laid forth in the Claims.

The hash value output unit 4750 is for extracting hash value lists where all of the hash values mutually differ, and outputting, of the extracted hash value lists, the hash values of a hash value list including hash values having the narrowest bit width. This hash value output unit 4750 includes a unique hash value list distinction unit 4751 and a determined hash value selecting unit 4752. Note that the hash value output unit 4750 is an example of the section identification value output unit laid forth in the Claims. Note that the hash values that the hash value output unit 4750 outputs is an example of the section identification value laid forth in the Claims.

The unique hash value list distinction unit 4751 is for distinguishing a hash value list where all of the hash values mutual differ of the hash value lists held in the hash value table 4740 in the same way as with the unique hash value list distinction unit 4251 shown in Fig. 78. This unique hash value list distinction unit 4751 supplies the distinguished hash value list to the determined hash value selecting unit 4752.

The determined hash value selecting unit 4752 is for selecting a hash value list of which the hash values have the narrowest bit width of the hash value lists supplied from the unique hash value list distinction unit 4751, and outputting the selected hash value list thereof. That is to say, this determined hash value selecting unit 4752 determines a hash value from candidate hash values of the hash value that the hash value determining unit 4700 determines, and outputs the determined hash value as the hash value determined by the hash value determining unit 4700.

This determined hash value selecting unit 4752 detects of hash value lists where all of the hash values mutually differ supplied from the unique hash value list distinction unit 4751, one hash value list of which the hash values have the narrowest bit width. This determined hash value selecting unit 4752 then supplies the hash values of the detected hash value list thereof to the hash value adding unit 4172.

As described above, with the third embodiment of the present invention, the hash value determining unit 4700 is provided, whereby a program including a hash value appended reusing command having hash values that all mutually differ and have the narrowest bit width can be generated.

Note that description has been made here regarding an example wherein the candidate hash function holding unit 4720 supplies all of the held hash functions to the candidate hash value generating unit 4730, but the present invention is not restricted to this. For example, an arrangement may be made wherein the candidate hash function holding unit 4720 is allowed to be externally controlled, whereby a hash function to be supplied to the candidate hash value generating unit 4730 can be controlled. Also, for example, a hash function that the candidate hash value generating unit 4730 uses may be determined based on the greatest number of numbers supplied from the hash value table 4740.

[Example of Hash Values to Be Held in Hash Value Table 4740 According to Third Embodiment of Present Invention]

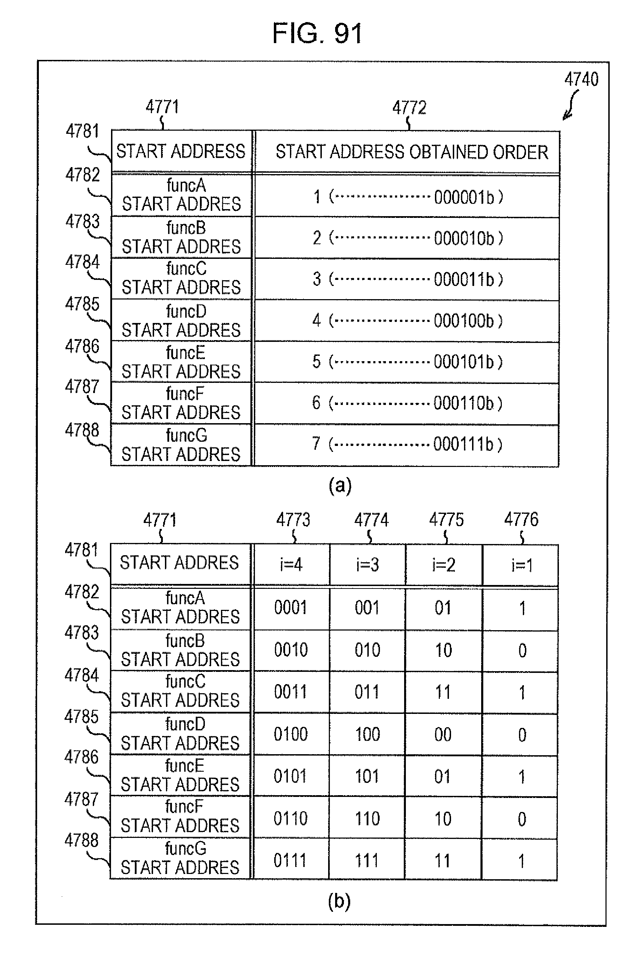

Fig. 91 is a conceptual diagram illustrating an example of hash values to be held in the hash value table 4740 according to the third embodiment of the present invention. Here, let us assume for convenience that numbers appended in accordance with the order of start addresses being obtained are held in the start address obtaining unit 4710 as a number list. Also, let us say that the numbers mentioned here are numbers to be appended in order from "1" as to start addresses registered in the hash value table 4740. Further, here, let us say that the candidate hash function holding unit 4720 has held hash functions of Expression 3 through Expression 6 described in Fig. 79.

Also, here, let us say that the reused sections in the program are seven functions (funcA through funcG). Note that, here, let us assume that the start address obtaining unit 4710 has obtained the seven functions (funcA through funcG) in order from the funcA, and supplied to the hash value table.

Also, let us say that in the event of calculating a hash value with only a hash function that shortens the bit width, the candidate hash value generating unit 4730 can supply a function input value to the hash value table 4740 without change to reduce the data amount of the hash value table 4740. That is to say, let us say that at the time of a number being supplied from the start address obtaining unit 4710 as a function input value, the candidate hash value generating unit 4730 can hold the same number list as the number list in the start address obtaining unit 4710 in the hash value table 4740.

Further, let us assume that in the event of supplying a function input value to the hash value table 4740 without change, this candidate hash value generating unit 4730 holds data relating to the bit width of a hash value that a hash function generates in the hash value table 4740 instead of a hash value list.

(a) in Fig. 91 indicates an example of a number list 4772 held in the hash value table 4740.

With a start address list 4771, the list names of start addresses serving as the bases of hash values registered in the hash value table 4740 are shown. With this start address list 4771, values relating to the funcA are shown in a row 4782, values relating to the funcB are shown in a row 4783, and values relating to the funcC are shown in a row 4784. Further, values relating to the funcD are shown in a row 4785, values relating to the funcE are shown in a row 4786, values relating to the funcF are shown in a row 4787, and values relating to the funcG are shown in a row 4788.

A number list 4772 is a list of numbers registered in the hash value table 4740, in the event that the candidate hash value generating unit 4730 has supplied a function input value to the hash value table 4740 without change. This number list 4772 represents numbers (1 through 7), which are indicated with decimal numbers, appended to start addresses (funcA through funcG) outside of parentheses, and also represents the numbers thereof, which are represented with 4-bit binary, within parentheses.

In the event of holding such a number list 4772 in the hash value table 4740, the candidate hash value generating unit 4730 holds data relating the bit width of a hash value that a hash function generates in the hash value table 4740 instead of a hash value list.

(b) in Fig. 91 indicates hash value lists 4773 through 4776 assumed from the number list 4772 shown in (a) in Fig. 91, and data specifying the bit width of a number list.

With the hash value list 4773, a list of hash values to be calculated in the event of using Expression 6 that is a hash function with i (bit width) of Expression 1 as "4" is shown. With rows 4782 through 4788 of this hash value list 4773, hash values calculated by taking numbers (rows 4782 through 4788 of the number list 4772) appended in accordance with the obtained order of the start addresses of the seven functions (funcA through funcG) as function input values of Expression 6 are shown. That is to say, with the rows 4782 through 4788 of the hash value list 4773, the values of four bits from the least significant bit of a bit string expressing the numbers (rows 4782 through 4788 of the number list 4772) appended in accordance with the obtained order of the start addresses of the seven functions in binary are shown, respectively.

With the hash value list 4774, a list of hash values to be calculated in the event of using Expression 5 that is a hash function with i (bit width) of Expression 1 as "3" is shown. With rows 4782 through 4788 of this hash value list 4774, hash values calculated by taking numbers (rows 4782 through 4788 of the number list 4772) appended in accordance with the obtained order of the start addresses of the seven functions (funcA through funcG) as function input values of Expression 5 are shown. That is to say, with the rows 4782 through 4788 of the hash value list 4774, the values of three bits from the least significant bit of a bit string expressing the numbers (rows 4782 through 4788 of the number list 4772) appended in accordance with the obtained order of the start addresses of the seven functions in binary are shown, respectively.

With the hash value list 4775, a list of hash values to be calculated in the event of using Expression 4 that is a hash function with i (bit width) of Expression 1 as "2" is shown. With rows 4782 through 4788 of this hash value list 4775, hash values calculated by taking numbers (rows 4782 through 4788 of the number list 4772) appended in accordance with the obtained order of the start addresses of the seven functions (funcA through funcG) as function input values of Expression 4 are shown. That is to say, with the rows 4782 through 4788 of the hash value list 4775, the values of two bits from the least significant bit of a bit string expressing the numbers (rows 4782 through 4788 of the number list 4772) appended in accordance with the obtained order of the start addresses of the seven functions in binary are shown, respectively.

With the hash value list 4776, a list of hash values to be calculated in the event of using Expression 3 that is a hash function with i (bit width) of Expression 1 as "1" is shown. With rows 4782 through 4788 of this hash value list 4776, hash values calculated by taking numbers (rows 4782 through 4788 of the number list 4772) appended in accordance with the obtained order of the start addresses of the seven functions (funcA through funcG) as function input values of Expression 3 are shown. That is to say, with the rows 4782 through 4788 of the hash value list 4776, the value of the least significant bit of a bit string expressing the numbers (rows 4782 through 4788 of the number list 4772) appended in accordance with the obtained order of the start addresses of the seven functions in binary are shown, respectively.

Subsequently, description will be made regarding a hash value list distinguished by the unique hash value list distinction unit 4751, and a hash value that the determined hash value selecting unit 4752 selects, with reference to Fig. 91.

First, the unique hash value list distinction unit 4751 assumes the hash value lists 4773 through 4776 shown in (b) in Fig. 91 from the number list 4772 in (a) in Fig. 91, and the data relating to the bit width of a hash value that a hash function generates. The unique hash value list distinction unit 4751 then detects a hash value list where all of the hash values mutually differ from the hash value lists 4773 through 4776, and supplies the detected hash value list to the determined hash value selecting unit 4752.

At this time, with the hash value list 4776, the hash values of the funcA, funcC, funcE, and funcG are redundant with "1", and further the hash values of the other three functions are redundant with "0", and accordingly, this hash value list is not supplied to the determined hash value selecting unit 4752. Also, with the hash value list 4775, the hash values of the funcA and funcE are redundant with "01", the hash values of the funcB and funcF are redundant with "10", and the hash values of the funcC and funcG are redundant with "10", and accordingly, this hash value list is not supplied. As a result thereof, the hash value lists 4773 and 774 distinguished as hash value lists where all of the hash values mutually differ are supplied to the determined hash value selecting unit 4752.

Subsequently, the determined hash value selecting unit 4752 detects a hash value list of which the hash values have the narrowest bit width from the supplied hash value lists, and supplies the hash values of the detected hash value list to the hash value adding unit 4172. As a result thereof, of the hash value list 4773 of 4-bit hash values, and the hash value list 4774 of 3-bit hash values, the hash value list 4774 is detected as a hash value list of hash values having the narrowest bit width. The determined hash value selecting unit 4752 then outputs the hash values of the detected hash value list 4774 thereof.

As described above, with the third embodiment of the present invention, in the event that only hash values having different bit width are generated by the candidate hash value generating unit 4730, a hash value can be determined even when a function input value is held in the hash value table 4740. Thus, the data amount of hash value lists in the hash value table 4740 can be reduced, and accordingly, processing such as search of a hash value list where all of the hash values mutually differ can be reduced. Also, though description has been made regarding a case where the numbers are taken as function input values, the same processing can be performed even in the case of start addresses. That is to say, the method shown in Fig. 91 can also be performed at the hash function determining unit 4200 according to the first embodiment.

Note that a hash value has been calculated here with numbers appended in accordance with the obtaining order of start addresses as function input values, but the present invention is not restricted to this. For example, in the same way as with the first embodiment shown in Fig. 80, a case can also be conceived where start addresses are taken as function input values. Also, a case can also be conceived where the order as to the value of reutilization generated by the reutilization generating unit 4123 is taken as a function input value instead of the obtaining order of start addresses being taken as a function input value.

Also, description has been made here regarding a case where the unique hash value list distinction unit 4751 assumes the hash value lists 4773 through 4776 from the number list 4772, and data relating to the bit width of a hash value that a hash function generates, but the present invention is not restricted to this. For example, an arrangement may be made wherein the hash value output unit 4750 can directly select values that all mutually differ and have the narrowest bit width from the number lists held in the start address obtaining unit 4710. Thus, hash values that all mutually differ and have the narrowest bit width can be determined by the hash value determining unit 4700 which does not include the candidate hash function holding unit 4720, candidate hash value generating unit 4730, and hash value table 4740.

[Example of Reusing Command According to Third Embodiment of Present Invention]

Next, description will be made regarding a reusing command that the compile processing device 4100 according to the third embodiment of the present invention generates, with reference to the drawing.

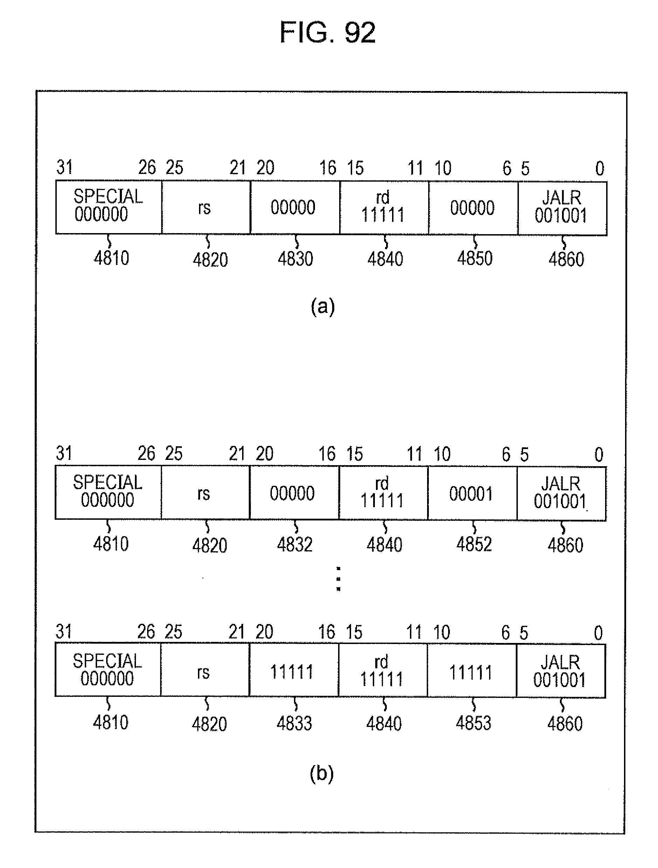

Fig. 92 is a conceptual diagram illustrating an example of a function call-up command and a function reusing command according to the third embodiment of the present invention. Here, let us assume that the processor core of the data processing device is configured of an MIPS. Also, here, the left end indicates the most significant bit (MSB), and the right end indicates the least significant bit (LSB).

(a) in Fig. 92 indicates a JALR (Jump And Link Register) command that is a function call-up command (call) in the MIPS command set. The MIPS command set is a 32-bit fixed length command set, and this JALR command is expressed by a bit string of 32 bits (number 0 through 31).

This JALR command is made up of an operation code field 4810, a function address field (rs) 4820, a first unused field 4830, a return address field (rd) 4840, a second unused field 4850, and a function specification field 4860.

The operation code field 4810 is a field specifying the kind of a command. This operation code field 4810 is a bit string made up of the 26th through 31st bits. With this operation code field 4810, a bit string (000000) is stored as a SPECIAL command.

The function address field (rs) 4820 is a field specifying a register to store the address of a function. This function address field (rs) 4820 is a bit string made up of the 21st through 25th bits.

The first unused field 4830 is a field not used for a JALR command. This first unused field 4830 is a bit string of the 16th through 20th bits. With this first unused field 4830, a bit string (00000) is stored in the case of a JALR command.

The return address field (rd) 4840 is a field specifying a return address from a function. This return address field (rd) 4840 is a bit string made up of the 11th through 15th bits. With this return address field (rd) 4840, a bit string (11111) specifying the 31st register is stored in the case of a JALR command.

The second unused field 4850 is a field not used for a JALR command. This second unused field 4850 is a bit string made up of the 6th through 10th bits. With this second unused field 4850, a bit string (00000) is stored in the case of a JALR command.

The function specification field 4860 is, in the event that a command specified by the operation code field 4810 includes multiple functions, a field specifying one function of the multiple functions thereof. This function specification field 4860 is a bit string made up of the 0th through 5th bits. With this function specification field 4860, a bit string (001001) is stored in the case of a JALR command.

(b) in Fig. 92 indicates an example of a function hash appended reusing command according to the third embodiment of the present invention. This hash value appended reusing command is expressed by a bit string of 32 bits (number 0 through 31). This hash appended reusing command is made up of an operation code field 4810, a function address field (rs) 4820, first hash value fields 4832 and 4833, a return address field (rd) 4840, second hash value fields 4852 and 4853, and a function specification field 4860. Note that the structures other than the first hash value fields 4832 and 4833, and second hash value fields 4852 and 4853 are the same as with (a) in Fig. 92, and accordingly denoted with the same reference numerals, and description thereof will be omitted here.

The first hash value fields 4832 and 4833 are fields indicating a reusing command to which a hash value is appended along with the second hash value fields 4852 and 4853. The first hash value fields 4832 and 4833 are connected to the bit strings of the second hash value fields 4852 and 4853, thereby making up a field indicating a 10-bit numeric value indicating a hash value. The first hash value fields 4832 and 4833, and second hash value fields 4852 and 4853 are obtained by changing the bit strings of the first unused field 4830 and second unused field 4850 to a bit string other than "00000". However, with the first hash value fields 4832 and 4833, and second hash value fields 4852 and 4853, if one of the bit strings is other than "00000", this specifies a hash value appended reusing command, and accordingly, the other bit string may be "00000".

For example, with the first hash value field 4832, the value of a bit string in a hash value appended reusing command where the value of the hash value is the lowest is stored along with the second hash value field 4852. The first hash value field 4832 is connected to the second hash value field 4852, thereby making up a 10-bit bit string (0000000001). That is to say, with the data processing device which processes this command, this bit string (0000000001) is determined to specify the hash value of which the value is "1".

Further, with the first hash value field 4833, the value of a bit string in a hash value appended reusing command where the value of the hash value is the highest is stored along with the second hash value field 4853. The first hash value field 4833 is connected to the second hash value field 4853, thereby making up a 10-bit bit string (1111111111). That is to say, with the data processing device which processes this command, this bit string (1111111111) is determined to specify the hash value of which the value is "1024".

Note that, in (b) in Fig. 92, a hash value appended reusing command that the hash value adding unit 4172 generates has been described. With regard to a reusing command before the hash value that the reusing command conversion unit 4124 generates is added, as long as one of the bit strings of the first unused field 4830 and second unused field 4850 has been changed to a bit string other than "00000", the other bit string may have any value.

As described above, with the third embodiment, the hash value adding unit 4172 is provided, whereby a reusing command to which a hash value is added can be generated.

Note that description has been made here regarding a hash value appended reusing command where a hash value is embedded in the first unused field 4830 and second unused field 4850 of a JALR, but the present invention is not restricted to this. For example, in the same way as with the hash function specifying command and identifier supply command shown in Fig. 81, the user may uniquely define a new hash value appended reusing command.

For example, a SPECIAL2 command is stored in the operation code field 4810, and a value specifying one command of multiple commands that the user has defined is stored in the function specification field 4860 in the same way as with the user definable field (UDI) 4265 in Fig. 81. With the user definable encoding space of the 6th through 25th bits, a value specifying a register in which the address of a function is stored, a value specifying a return address from a function, and a value specifying an address where a hash value is stored are stored. With the address where this hash value is stored, a hash value having bit width equal to or greater than 10 bits can be stored, and accordingly, a hash value appended reusing command to which a hash value having bit width equal to or greater than 10 bits is added can be generated.

A field specifying a register that stores an address where this hash value is stored is stored, whereby a hash value appended reusing command to which a hash value having bit width greater than 10 bits is added can be generated.

[Example of Operation of Compile Processing Device 4100 According to Third Embodiment of Present Invention]

Next, the processing of the compile processing device 4100 according to the third embodiment of the present invention will be described with reference to the drawing.

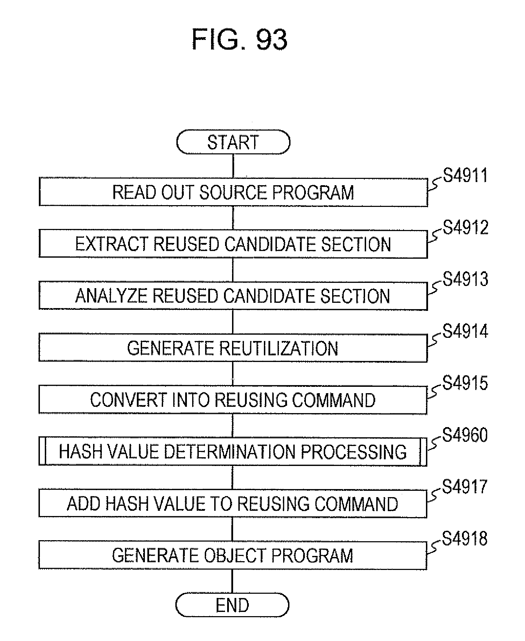

Fig. 93 is a flowchart illustrating the processing procedure of the compile processing using the compile processing device 4100 according to the third embodiment of the present invention.

First, a source program is read out from the source program storage unit 4110 (step S4911). Next, a reused candidate section is extracted by the reused candidate section extracting unit 4121 (step S4912).

The usage pattern of the reused candidate section is then analyzed by the reused candidate section analyzing unit 4122 (step S4913). Subsequently, reutilization is generated by the reutilization generating unit 4123 based on the analysis results of the reused candidate section (step S4914).

Next, the call-up command of the reused candidate section is converted into a reusing command by the reusing command conversion unit 4124 (step S4915). This means that, for example, in the event that a function is the reused candidate section, the call-up command (call) of the function is converted into a reusing command (memoCall). The reused section is distinguished by a series of processing in steps S4911 through S4915.

Hash value determination processing for determining a hash value for identifying a reused section with narrower bit width than the bit width of the start address is performed by the hash value determining unit 4700 (step S4960).

Subsequently, a hash value appended reusing command is generated by the hash value adding unit 4172 (step S4917).

Finally, a machine language program including a command specifying the bit width of a hash value, and a hash value appended reusing command is generated by the machine language program generating unit 4140 (step S4918). The compile processing is then ended.

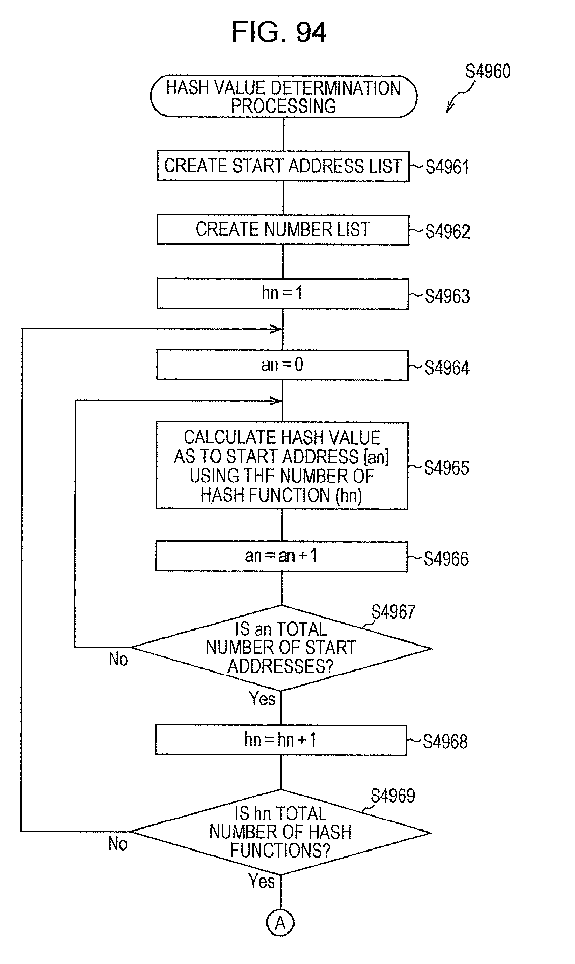

Fig. 94 is a flowchart illustrating the first half of a processing procedure example of hash value determination processing (step S4960) using the hash value determining unit 4700 according to the third embodiment of the present invention. Note that, here, for convenience, let us assume that the hash value list shown in (b) in Fig. 91 is held in the hash value table 4740. Note that, here, let us say that the total number of hash functions is "6" that is a value obtained by adding a hash function that outputs the start address without change, and hash functions of Expression 3 through Expression 7 shown in Fig. 79.

First, the start address of a reused section is obtained from the program by the start address obtaining unit 4710, and held in the start address obtaining unit 4710 as a start address list (step S4961). Subsequently, a number is added in accordance with the holding order of start addresses held in the start address obtaining unit 4710, and the number thereof is held as a number list (step S4962).

Next, Next, a hash function counter (hn) is initialized to "1" (step S4963). Note that the hash function counter (hn) shown here is the same as the hash function counter (hn) shown in Fig. 83, and accordingly, detailed description thereof will be omitted here. Note that let us say that a hash function that outputs a start address without change is to be assigned to "0" of the value of the hash function counter (hn), in the same way as with the hash function counter (hn) shown in Fig. 83.

Subsequently, a start address counter (an) is initialized to "0" (step S4964). Note that the start address counter shown here is the same as the start address counter (an) shown in Fig. 83, and accordingly, detailed description thereof will be omitted here.

A hash value is then calculated by the candidate hash value generating unit 4730 using the hash function to which the hash function counter (hn) points with the number appended to the start address to which the start address counter (an) points being taken as a function input value (step S4965). Next, "1" is added to the start address counter (an) (step S4966).

Subsequently, determination is made whether or not the start address counter (an) is the total number of the start addresses in the start address list (step S4967). In the event that determination is made that the start address counter (an) is not the total number of the start addresses in the start address list, the flow then returns to step S4965. Thus, a hash value that has not been calculated yet with the number appended to the start address to which the start address counter (an) points being taken as a function input value is calculated.

On the other hand, in the event that determination is made that the start address counter (an) is the total number of the start addresses in the start address list, "1" is added to the hash function counter (hn) (step S4998) .

Subsequently, determination is made whether or not the hash function counter (hn) is the total number of hash functions (step S4969). In the event that determination is made that the hash function counter (hn) is not the total number of hash functions, the flow then returns to step S4964. Thus, a hash function is calculated using a hash function of which the hash value has not been calculated yet.

On the other hand, in the event that determination is made that the hash function counter (hn) is the total number of hash functions, the flow proceeds to step S4970.

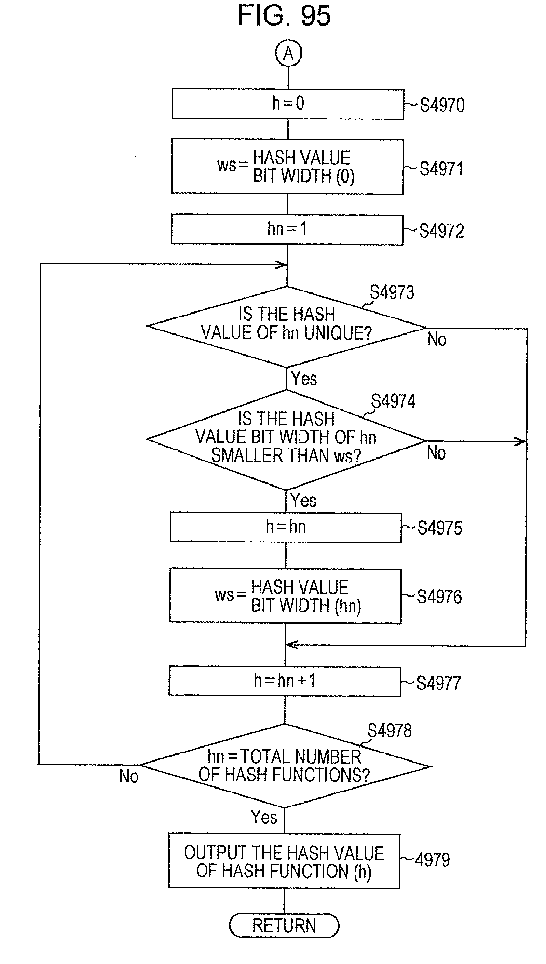

Fig. 95 is a flowchart illustrating the second half of the processing procedure example of the hash value determination processing (step S4960) using the hash value determining unit 4700 according to the third embodiment of the present invention.

First, in the event that determination is made in step S4969 in Fig. 94 that the hash function counter (hn) is the total number of hash functions, the selected hash function counter (h) is initialized to "0" (step S4970).

Subsequently, the hash value bit width size (ws) is changed to the bit width of a hash value generated by the hash function of the hash function counter (0) (step S4971). Thus, 64 bits that is the bit width of the start address is set as the hash value bit width size (ws) .

The hash function counter (hn) is then changed to "1" (step S4972). Subsequently, distinction is made by the unique hash value list distinction unit 4751 whether or not all of the hash values of the hash value list corresponding to the hash function to which the hash function counter (hn) points mutually differ (step S4973). In the event that distinction is made that all of the hash values of the hash value list correlated with the hash function to which the hash function counter (hn) points do not mutually differ, the flow then proceeds to step S4977.

On the other hand, distinction is made that all of the hash values of the hash value list correlated with the hash function to which the hash function counter (hn) points mutually differ, the flow proceeds to step S4974. In step S4974, determination is made by the determined hash value selecting unit 4752 whether or not the bit width of the hash value of the hash value list correlated with the hash function to which the hash function counter (hn) points is a value smaller than the hash value bit width size (ws). In the event that determination is made that the bit width of the hash value of the hash value list correlated with the hash function to which the hash function counter (hn) points is not a value smaller than the ws, the flow then proceeds to step 54977.

On the other hand, in the event that determination is made that the bit width of the hash value of the hash value list correlated with the hash function to which the hash function counter (hn) points is a value smaller than the hash value bit width size (ws), the flow proceeds to step S4975. In step S4975, the selected hash function number (h) is changed to the value of the hash function counter (hn).

Subsequently, the hash value bit width size (w) is changed to the bit width of the hash value of the hash value list correlated with the hash function to which the hash function counter (hn) points (step S4976).

"1" is then added to the hash function counter (hn) (step S4977). Next, determination is made whether or not the hash function counter (hn) is the total number of hash functions (step S4978). In the event that determination is made that the hash function counter (hn) is not the total number of hash functions, the flow then returns to step S4973.

On the other hand, in the event that determination is made that the hash function counter (hn) is the total number of hash functions, the flow proceeds to step S4979. In step S4979, the hash value of the hash value list correlated with the hash function to which the hash function counter (hn) points is output as the hash value determined by the hash value determining unit 4700 (step S4979).

As described above, with the third embodiment of the present invention, the hash value determining unit 4700 is provided, whereby the hash values of a hash function for generating hash values that all mutually differ and have the narrowest bit width of multiple hash functions can be output.

As described above, according to the third embodiment of the present invention, a program including a hash value appended reusing command can be generated.

<4. Fourth Embodiment>

[Configuration Example of Data Processing Device 4300 According to Fourth Embodiment of Present Invention]

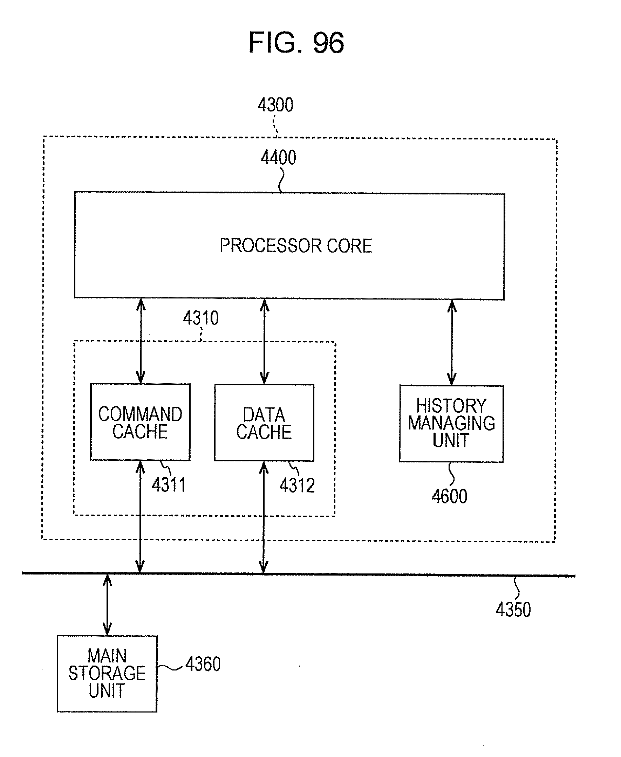

Fig. 96 is a block diagram illustrating a configuration example of the data processing device 4300 according to the fourth embodiment of the present invention. This data processing device 4300 is the data processing device 4300 shown in Fig. 85 from which the hash conversion unit 4500 has been eliminated. The command cache 4311 and data cache 4312 of this data processing device 4300 have the same functions as the configurations shown in Fig. 85, and accordingly denoted with the same reference numerals as with Fig. 85, and description thereof will be omitted here. Also, the main storage unit 4360 to which this data processing device 4300 is connected, and a bus 4350 mediating the connection thereof has the same function as that shown in Fig. 85, and accordingly denoted with the same reference numeral as with Fig. 85, and description thereof will be omitted here.

The processor core 4400 is, in the same way as the processor core 4400 in Fig. 85, for executing computation in accordance with a command of the program. In the event that the hash value appended reusing command shown in Fig. 92 has been input, this processor core 4400 supplies the hash value included in the hash value appended command, and the input values of the reused section to the history managing unit 4600. Also, in the event that a hash value appended reusing command has been executed, and then, no execution result has been supplied from the history managing unit 4600, this processor core 4400 outputs the execution result that is a result of execution of this command to the data cache 4312 and history managing unit 4600.

Further, when a command to be input is a hash value appended reusing command, and in the event that an execution result has been supplied from the history managing unit 4600, the processor core 4400 discontinues the processing in the reused section, and returns to the routine that has called up this reused section, and continues the execution.

The history managing unit 4600 is for holding and managing the execution result of a reused section. This history managing unit 4600 holds the hash value, input values, and execution result supplied from the processor core 4400 as an execution history. Also, in the event that a hash value and input values have been supplied from the processor core 4400, this history managing unit 4600 searches the execution history including these hash value and input values.

[Configuration Example of Processor Core 4400 and History Managing Unit 4600 According to Fourth Embodiment of Present Invention]

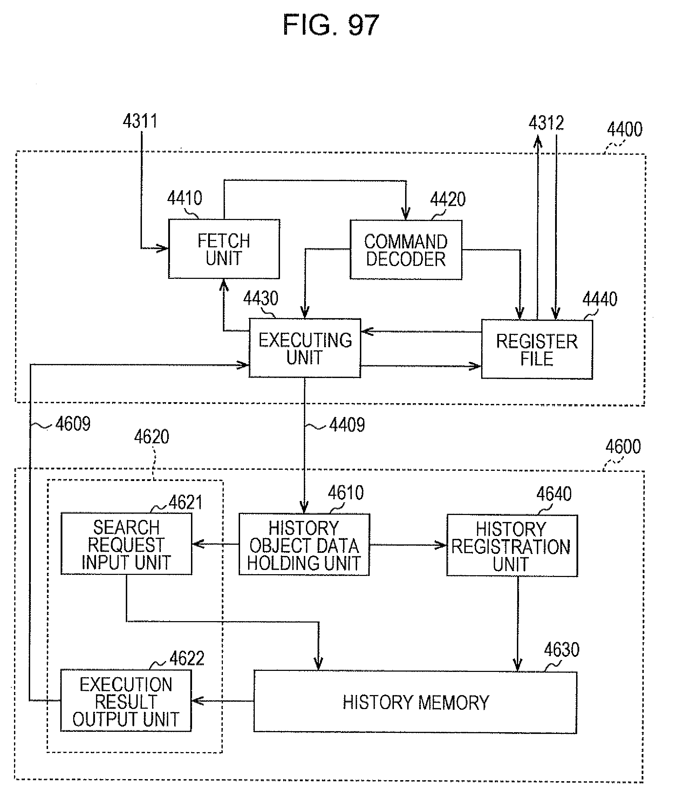

Fig. 97 is a block diagram illustrating a configuration example of the processor core 4400 and history managing unit 4600 according to the fourth embodiment of the present invention. Here are shown the processor core 4400 and history managing unit 4600. Also, here, the functions of the processor core 4400 and history managing unit 4600 are the same as with Fig. 85 and Fig. 96, and accordingly denoted with the same reference numerals, and detailed description thereof will be omitted here.

The processor core 4400 includes a fetch unit 4410, a command decoder 4410, an executing unit 4430, and a register file 4440. Note that the functions of the fetch unit 4410, command decoder 4420, and register file 4440 are the same functions as with the configurations shown in Fig. 86, and accordingly denoted with the same reference numerals as with Fig. 86, and detailed description thereof will be omitted here.

The executing unit 4430 is for executing the command analyzed at the command decoder 4420 based on the control signal supplied from the command decoder 4420. In the event that a command for specifying the bit width of a hash value has been decoded at the command decoder 4420, this executing unit 4430 sets the bit width that the command thereof specifies as the bit width of a hash value.

Also, in the event that the command decoder 4420 has decoded a hash value appended reusing command, this executing unit 4430 starts the processing of the reused section that the hash value appended reusing command specifies. The executing unit 4430 then outputs the hash value obtained from the hash value appended reusing command to the history managing unit 4600 via a signal line 4409 along with start of the processing of this reused section. For example, in the event that "5" has been set as the bit width of a hash value, this executing unit 4430 outputs the value of five bits from the least significant bit of the second hash value fields 4852 and 4853 shown in Fig. 92 to the history managing unit 4600 via the signal line 4409 as a hash value.

The executing unit 4430 then executes the processing in the reused section based on the input values of the reused section supplied from the register file 4440, and also outputs the input values of the reused section to the history managing unit 4600 via the signal line 4409.

Note that, in the event that the execution result of the reused section has been supplied from the history managing unit 4600, the executing unit 4430 discontinues the processing of the reused section, and also supplies a signal informing that the execution result thereof has been supplied from the history managing unit 4600 to the fetch unit 4410. At this time, the executing unit 4430 outputs the execution result to the register file 4440.

On the other hand, in the event that the execution result of the reused section has not been supplied from the history managing unit 4600, the executing unit 4430 executes the processing of the reused section up to the end, and outputs the execution result thereof to the register file 4440, and also outputs to the history managing unit 4600 via the signal line 4409.

The history managing unit 4600 is holding and managing the execution result of a reused section, and includes a history object data holding unit 4610, a history search unit 4620, history memory 4630, and a history registration unit 4640. Note that the configurations of the history managing unit 4600 according to the fourth embodiment of the present invention have the same functions as the configurations shown in Fig. 86 except that a hash value is supplied from the executing unit 4430, and accordingly denoted with the same reference numerals, and detailed description thereof will be omitted here. That is to say, the history managing unit 4600 shown in Fig. 86 has used the hash value supplied from the hash conversion unit 4500, but the history managing unit 4600 according to the fourth embodiment of the present invention differs in that the hash value supplied from the executing unit 4430 is used.

As described above, with the fourth embodiment of the present invention, based on the program in which a hash value appended reusing command is included generated by the device according to the third embodiment of the present invention, a hash value, input values, and an execution result can be held in the history memory 4630 as an execution history.

[Example of Operation of Data Processing Device 4300 According to Fourth Embodiment of Present Invention]

Next, the processing of the data processing device 4300 according to the fourth embodiment of the present invention will be described with reference to the drawing.

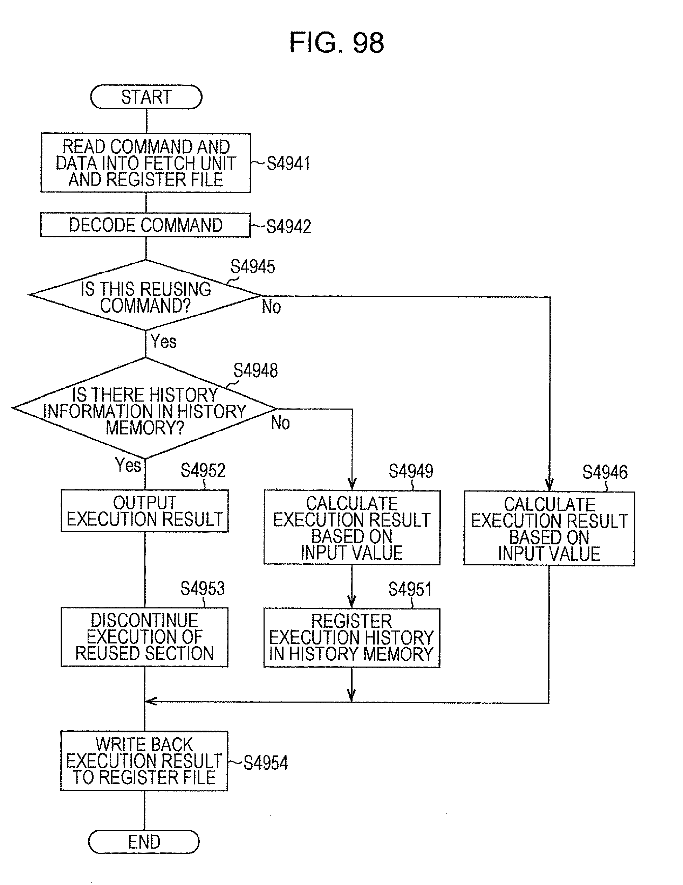

Fig. 98 is a flowchart illustrating a processing procedure example of a command processing method using the data processing device 4300 according to the fourth embodiment of the present invention. This flowchart describes a processing example for each command to be decoded by the command decoder 4420 after a command specifying the bit width of a hash value is executed, and end of execution of a command to be decoded by the command decoder 4420 is taken as the end of the flowchart.

First, a command to be interpreted (decoded) by the command decoder 4420, and a value to be executed by the executing unit 4430 are read into the fetch unit 4410 and register file 4440 (step S4941). Next, the command supplied from the fetch unit 4410 is decoded by the command decoder 4420 (step S4942).

Subsequently, determination is made by the executing unit 4430 whether or not the decoded command is a hash value appended reusing command specifying a reused section (step S4945). In the event that determination is made that the decoded command is not a hash value appended reusing command, the reused section thereof is then executed based on the input values supplied from the register file 4440, and accordingly, the execution result is output (step S4946). The flow then proceeds to step S4954.

On the other hand, with the processing in step S4945, in the event that determination is made that the command is a hash value appended reusing command, determination is made by the search request input unit 4621 using the hash value and input values whether or not there is an execution history in the history memory 4630 (step S4948). In the event that determination is made that there is no execution history in the history memory 4630, the reused section thereof is executed based on the input values supplied from the register file 4440, and the execution result is output (step S4949). Subsequently, the execution history is registered in the history memory 4630 by the history registration unit 4640 (step S4951) . Thus, the execution history is registered in the history memory 4630. The flow then proceeds to step S4954.

On the other hand, in the event that determination is made that there is an execution history in the history memory 4630, the execution result is output by the execution result output unit 4622 (step S4952). Thus, the execution result of the reused section being executed is output from the history memory 4630. Subsequently, the executing unit 4430 discontinues execution of the reused section of which the execution result has been output (step S4953). The flow then proceeds to step S4954.

After the processing in steps S4946, S4951, and S4953, the execution result is written back to the register file 4440 (step S4954). Thus, execution of the decoded command is ended.

As described above, with the fourth embodiment of the present invention, a hash value, input values, and an execution result can be held in the history memory 4630 as an execution history.


<5. Fifth Embodiment>


[Configuration Example of Data Processing Device 4300 According to Fifth Embodiment of Present Invention]


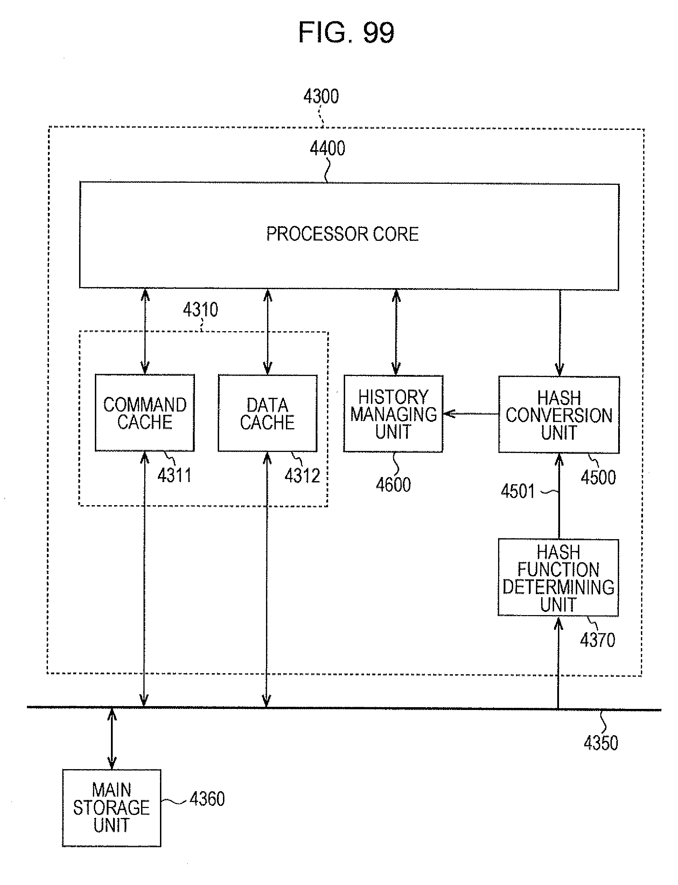

Fig. 99 is a block diagram illustrating a configuration example of the data processing device 4300 according to the fifth embodiment of the present invention. This data processing device 4300 includes, in addition to the configurations of the data processing device 4300 shown in Fig. 85, a hash function determining unit 4370. Here, the functions of the configurations other than the hash function determining unit 4370 and hash conversion unit 4500 are the same functions as with Fig. 85, and accordingly, description thereof will be omitted here.

The hash function determining unit 4370 is for determining a hash function before the processor core 4400 executes the program. This hash function determining unit 4370 obtains the start address of a reused section from the object program supplied from the main storage unit 4360, and determines a hash function for generating a hash value for identifying a reused section using bit width narrower than the bit width of the start address thereof.

Note that this hash function determining unit 4370 is the hash function determining unit 4200 according to the first embodiment of the present invention shown in Fig. 78 provided to the data processing device 4300. That is to say, with the hash function determining unit 4370 according to the fifth embodiment of the present invention, the start address obtaining unit 4210 analyzes the object program to obtain the start address of a reused section. Also, with the fifth embodiment of the present invention, the determined hash function selecting unit 4252 supplies the selected hash function to the hash conversion unit 4500. The functions of the configurations other than the start address obtaining unit 4210 and determined hash function selecting unit 4252 in this hash function determining unit 4370 are the same as with Fig. 78, and accordingly, detailed description thereof in the fifth embodiment of the present invention will be omitted.

This hash function determining unit 4370 supplies the determined hash function to the hash conversion unit 4500.

The hash conversion unit 4500 is for converting a start address into a hash value for identifying a reused section using bit width narrower than the bit width of the start address of a reused section. This hash conversion unit 4500 holds the hash function supplied from the hash function determining unit 4370. This hash conversion unit 4500 uses the held hash function thereof to generate a hash value from the start address of the function or loop supplied from the processor core 4400. This hash conversion unit 4500 supplies the generated hash value to the history managing unit 4600.

As described above, with the fifth embodiment of the present invention, the hash function determining unit 4370 is provided to the data processing device 4300, whereby a hash function can be determined using the already generated object program.


[Configuration Example of Processor Core 4400, Hash Conversion Unit 4500, and History Managing Unit 4600 According to Fifth Embodiment of Present Invention]


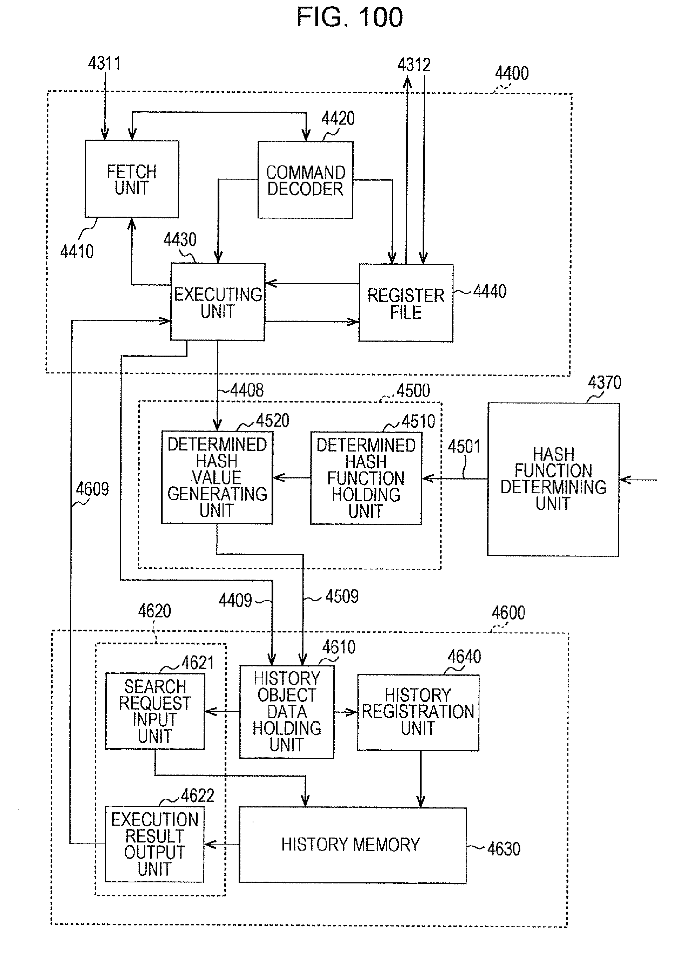

Fig. 100 is a block diagram illustrating a configuration example of the processor core 4400, hash conversion unit 4500, and history managing unit 4600 according to the fifth embodiment of the present invention. Here are shown the processor core 4400, hash conversion unit 4500, and history managing unit 4600. Also, here are shown, in addition to the processor core 4400, hash conversion unit 4500, and history managing unit 4600, a hash function determining unit 4370 for supplying a hash function to the hash conversion unit 4500.

The processor core 4400 includes a fetch unit 4410, a command decoder 4420, an executing unit 4430, and a register file 4440. Note that the functions of the fetch unit 4410, command decoder 4420, and register file 4440 according to the fifth embodiment of the present invention are the same functions as with the configurations shown in Fig. 86, and accordingly, detailed description thereof will be omitted here.

The executing unit 4430 is for executing the command analyzed at the command decoder 4420 based on the control signal supplied from the command decoder 4420. The executing unit 4430 according to the fifth embodiment of the present invention is the executing unit 4430 shown in Fig. 86 from which the function for executing a hash function specification command has been omitted. The functions of the executing unit 4430 other than the function for executing a hash function specification command are the same as the functions of the executing unit 4430 according to the first embodiment of the present invention shown in Fig. 86, and accordingly, description thereof will be omitted here.

The hash conversion unit 4500 is for converting a start address into a hash value for identifying a reused section using bit width narrower than the bit width of the start address of a reused section, and includes a determined hash function holding unit 4510 and a determined hash value generating unit 4520. Note that the function of the determined hash value generating unit 4520 according to the fifth embodiment of the present invention are the same function as that shown in Fig. 86, and accordingly, detailed description thereof will be omitted here.

The determined hash function holding unit 4510 is for holding the hash function supplied from the hash function determining unit 4370. In the event that a hash function has been supplied from the hash function determining unit 4370 via a signal line 4501, this determined hash function holding unit 4510 holds this hash function, and supplies the held hash function to the determined hash value generating unit 4520.

The history managing unit 4600 is for holding and managing the execution result of a reused section, and includes a history object data holding unit 4610, a history search unit 4620, history memory 4630, and a history registration unit 4640. Note that the functions of the configurations of the history managing unit 4600 according to the fifth embodiment of the present invention are the same as the functions of the configurations shown in Fig. 86, and accordingly, detailed description thereof will be omitted here.

[Example of Operation of Data Processing Device 4300 According to Fifth Embodiment of Present Invention]

Next, the processing of the data processing device 4300 according to the fifth embodiment of the present invention will be described with reference to the drawing.

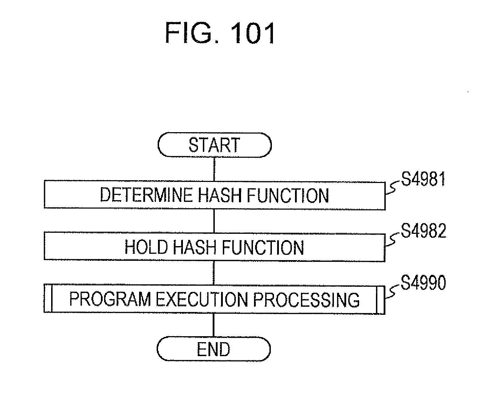

Fig. 101 is a flowchart illustrating a processing procedure example of a command processing method using the data processing device 4300 according to the fifth embodiment of the present invention.

First, a hash function is determined by the hash function determining unit 4370 (step S4981). Note that this processing procedure example for determining a hash function of the hash function determining unit 4370 is the same as the processing procedure example of the hash function determining unit 4200 shown in Fig. 83 and 9, and accordingly, description thereof will be omitted here.

Subsequently, at the determined hash function holding unit 4510 in the hash conversion unit 4500, the hash function determined by the hash function determining unit 4200 is held (step S4982) . Program execution processing for executing a command of the program is then performed (step S4990).

Fig. 103 is a flowchart illustrating a processing procedure example of the program execution processing (step S4990) according to the fifth embodiment of the present invention. With this flowchart, start of execution of the program is taken as start of the flowchart, and end of execution of the program is taken as end of the flowchart.

First, a command to be interpreted (decoded) by the command decoder 4420, and a value to be executed by the executing unit 4430 in accordance with the command thereof are read into the fetch unit 4410 and register file 4440 (step S4941). Next, the command supplied from the fetch unit 4410 thereof is decoded by the command decoder 4420 (step S4942).

Subsequently, determination is made by the executing unit 4430 whether or not the interpreted (decoded) command is a reusing command (step S4945). In the event that determination is made that the decoded command is not a reusing command, the reused section thereof is then executed based on the input values supplied from the register file 4440, and accordingly, the execution result is output (step S4946). The flow then proceeds to step S4954.

On the other hand, with the processing in step S4945, in the event that determination is made that the command is a reusing command, a hash value is calculated from the start address of the reused section by the determined hash value generating unit 4520 (step S4947). Subsequently, determination is made by the search request input unit 4621 using a hash value and input values whether or not there is execution information in the history memory 4630 (step S4948).

In the event that determination is made that there is no execution history in the history memory 4630, according to the executing unit 4430, based on the input values supplied from the register file 4440, the reused section thereof is then executed, and the execution result is output (step S4949). The execution history is then registered in the history memory 4630 by the history registration unit 4640 (step S4951). Thus, the execution history is registered in the history memory 4630. The flow then proceeds to step S4954.

On the other hand, in the event that determination is made that there is execution history in the history memory 4630, the execution result is output by the execution result output unit 4622 (step S4952). Thus, the execution result of the reused section being executed is output from the history memory 4630. Subsequently, the executing unit 4430 discontinues execution of the reused section where the execution result has been output (step S4953). The flow then proceeds to step S4954.

After the processing in steps S4946, S4951, and S4953, the execution result is written back to the register file 4440 (step S4954). Thus, execution of the decoded command is ended.

Subsequently, determination is made whether or not execution of the program is ended (step S4995). In the event that determination is made that execution of the program is not ended, the flow then returns to step S4941, and the processing is repeated.

As described above, with the fifth embodiment of the present invention, a hash function is supplied from the hash function determining unit 4370 to the determined hash function holding unit 4510, whereby a hash value can be generated from the start address of the reused section of the already generated object program.

As described above, according to an embodiment of the present invention, efficiency in value reuse can be improved. Specifically, a hash value is generated from the start address using a hash function selected from multiple hash functions, whereby the hash value, input values, and execution result can be held in the history memory 4630 as an execution history. This hash value is a value for identifying a reused section using shorter bit width than the start address.

That is to say, according to an embodiment of the present invention, as compared to a device according to a conventional technique which holds a function address, input values, and an execution result in the history memory 4630 as an execution history, the data amount held in the history memory 4630 can be reduced. Thus, the number of execution histories to be held in the history memory 4630 can be increased, whereby the hit rate in search can be increased.

Also, a start address becomes a hash value, and accordingly, the number of bits to be compared at the time of search of an execution history is decreased. Thus, the search circuit can be reduced, whereby time necessary for search can be reduced.

Note that the embodiments of the present invention have been shown as an example for realizing the present invention, as cleanly shown in the embodiments of the present invention, the matters in the embodiments of the present invention, and the invention specification matters in the Claims have a correspondence relation, respectively. Similarly, the invention specification matters in the Claims, and the matters denoted with the same names as these in the embodiments of the present invention have a correspondence relation, respectively. However, the present invention is not restricted to the embodiments, and can be realized by subjecting the embodiments to various modifications without departing from the essence of the present invention.

For example, with the embodiments of the present invention, description has been made regarding an example wherein at the time of reusing an execution result saved in the main storage unit 3130, loop individual histories are restored from saved histories and registered in the history memory 3430, and an execution result is output from the registered loop individual histories thereof. However, the present invention is not restricted to this, and a case may be conceived where at the time of reusing an execution result saved in the main storage unit 3130, the execution result is reused without restoring loop histories.

Also, the processing procedures described in the embodiments of the present invention may be taken as a method including these series of procedures, and alternatively may be taken as a program causing a computer to execute these series of procedures through a recording medium which stores the program thereof. Examples of this recording medium include CD (Compact Disc), MD (MiniDisc), DVD (Digital Versatile Disk), memory cards, and Blu-ray Disc (registered trademark).

Reference Signs List

| | |
|---|---|
| 100 | data processing device |
| 120 | bus |
| 130 | main storage unit |
| 200 | primary cache |
| 210 | command cache |
| 220 | data cache |
| 300 | data processing unit |
| 310 | fetch unit |
| 320 | command decoder |
| 331 | loading unit |
| 332 | input selecting unit |

| | |
|---|---|
| 333 | computing circuit |
| 334 | storing unit |
| 340 | register file |
| 400 | execution result reuse processing unit |
| 410 | execution history search unit |
| 420 | execution result output unit |
| 430 | history memory |
| 500 | program conversion processing device |
| 510 | source program storage unit |
| 520 | object program storage unit |
| 600 | previous notice command insertion code generating unit |
| 610 | program analyzing unit |
| 611 | reused candidate section extracting unit |
| 612 | reused candidate section analyzing unit |
| 620 | program optimization processing unit |
| 621 | reutilization generating unit |
| 622 | reused section selecting unit |
| 623 | previous notice command generation processing unit |
| 630 | code generating unit |
| 1100 | data processing device |
| 1120 | bus |
| 1130 | main storage unit |
| 1200 | primary cache |
| 1210 | command cache |
| 1220 | data cache |
| 1300 | processor code |
| 1309, 1409 | signal line |
| 1310 | fetch unit |
| 1320 | command decoder |
| 1330 | executing unit |
| 1340 | register file |
| 1400 | history managing unit |
| 1410 | history object data holding unit |
| 1420 | history search unit |
| 1421 | search request input unit |
| 1422 | execution result output unit |
| 1430 | history memory |
| 1440 | history registration unit |
| 1450 | priority table |
| 1460 | history memory capacity managing unit |
| 1470 | low priority history eliminating unit |
| 1471 | minimum value priority history search unit |
| 1472 | priority comparing unit |
| 1473 | eliminating unit |
| 1500 | compile processing device |
| 1510 | source program storage unit |
| 1520 | reuse assist compile processing unit |
| 1522 | code generating unit |
| 1530 | object program storage unit |
| 1600 | program conversion processing unit |
| 1610 | source program analyzing unit |
| 1611 | reused candidate section extracting unit |
| 1612 | reused candidate section analyzing unit |
| 1620 | optimizing unit |
| 1621 | reutilization generating unit |
| 1622 | priority generating unit |
| 1623 | reusing command conversion unit |
| 2100 | data processing device |

| | |
|---|---|
| 2120 | bus |
| 2130 | main storage unit |
| 2200 | primary cache |
| 2210 | command cache |
| 2220 | data cache |
| 2300 | data processing unit |
| 2310 | fetch unit |
| 2320 | command decoder |
| 2330 | executing unit |
| 2331 | loading unit |
| 2332 | input selecting unit |
| 2333 | computing circuit |
| 2334 | storing unit |
| 2340 | register file |
| 2350 | program counter |
| 2400, 2700 | execution result reuse processing unit |
| 2410, 2710 | execution history search unit |
| 2420, 2720 | execution result output unit |
| 2430, 2730 | history memory |
| 2440, 2740 | execution data holding unit |
| 2500, 2800 | search start command address managing unit |
| 2510, 2810 | address determining unit |
| 2520, 2820 | input value setting command address table |
| 2600 | program analysis processing device |
| 2610 | source program storage unit |
| 2620 | compile processing unit |
| 2630 | program analyzing unit |
| 2631 | reused candidate section extracting unit |
| 2632 | reused candidate section analyzing unit |
| 2640 | program optimization processing unit |
| 2641 | reutilization generating unit |
| 2642 | reused section extracting unit |
| 2643 | reused section information generating unit |
| 2650 | code generating unit |
| 2660 | object program storage unit |
| 2670 | reused section information storage unit |
| 2840 | set input value holding unit |
| 2850 | search start command determining unit |
| 3100 | data processing device |
| 3120 | bus |
| 3130 | main storage unit |
| 3200 | primary cache |
| 3210 | command cache |
| 3220 | data cache |
| 3300 | processor core |
| 3310 | fetch unit |
| 3320 | command decoder |
| 3330 | executing unit |
| 3340 | register file |
| 3400 | history managing unit |
| 3410 | history object data holding unit |
| 3420 | history search unit |
| 3421 | search request input unit |
| 3422 | execution result output unit |
| 3430 | history memory |
| 3440 | history registration unit |
| 3450 | history memory capacity managing unit |
| 3460 | eliminating unit |

| | |
|---|---|
| 3500 | history conversion unit |
| 3510 | history control unit |
| 3512 | loop individual history eliminating unit |
| 3513 | loop representative history registration unit |
| 3520 | history restoring unit |
| 3521 | saved history obtaining unit |
| 3522 | loop individual history generating unit |
| 3523 | registration region securing unit |
| 3524 | loop individual history registration unit |
| 3530 | saved region managing unit |
| 3600 | saved history generating unit |
| 3610 | head search unit |
| 3620 | continuity search unit |
| 3630 | loop individual history obtaining unit |
| 3640 | saved history transfer unit |
| 3650 | loop representative history generating unit |
| 4100 | compile processing device |
| 4110 | source program storage unit |
| 4120 | reusing command distinction unit |
| 4121 | reused candidate section extracting unit |
| 4122 | reused candidate section analyzing unit |
| 4123 | reutilization generating unit |
| 4124 | reusing command conversion unit |
| 4140 | machine language program generating unit |
| 4150 | object program storage unit |
| 4170 | hash value appended reusing command generating unit |
| 4172 | hash value adding unit |
| 4200 | hash function determining unit |
| 4210, 4710 | start address obtaining unit |
| 4220, 4720 | candidate hash function holding unit |
| 4230, 4730 | candidate hash value generating unit |
| 4240, 4740 | hash value table |
| 4250 | hash function output unit |
| 4251, 4751 | unique hash value list distinction unit |
| 4252 | determined hash function selecting unit |
| 4300 | data processing device |
| 4310 | primary cache |
| 4311 | command cache |
| 4312 | data cache |
| 4350 | bus |
| 4360 | main storage unit |
| 4370 | hash function determining unit |
| 4400 | processor core |
| 4410 | fetch unit |
| 4420 | command decoder |
| 4430 | executing unit |
| 4440 | register file |
| 4500 | hash conversion unit |
| 4510 | determined hash function holding unit |
| 4520 | determined hash value generating unit |
| 4600 | history managing unit |
| 4610 | history object data holding unit |
| 4620 | history search unit |
| 4621 | search request input unit |
| 4622 | execution result output unit |
| 4630 | history memory |
| 4640 | history registration unit |
| 4700 | hash value determining unit |

4750             hash value output unit
4752             determined hash value selecting unit

**Claims**

1. A data processing device comprising:

   an executing unit configured to execute processing based on a command string where a reused section that is a command section to be executed multiple times is included;
   history memory configured to correlate an input value and an execution result in said reused section for each piece of identification information for identifying said reused section, and to hold as an execution history;
   an execution history search unit configured to obtain an input value in said reused section based on a previous notice command for predicting execution of processing in said reused section, and to search said execution result in said execution history based on said obtained input value, and said identification information determined by said previous notice command; and
   an execution result output unit configured to output, in the event that said execution result has been extracted by said execution history search unit when processing in said reused section identified by said previous notice command is executed, said extracted execution result to said executing unit.

2. The data processing device according to Claim 1, wherein said execution history search unit obtains an input value based on an input value setting command for setting an input value in said reused section of a command group from said previous notice command up to a command immediately before a call-up command for calling up the head address of said reused section.

3. The data processing device according to Claim I, wherein said execution history search unit searches said execution result in said execution history based on said obtained input value and said identification information included in said previous notice command.

4. The data processing device according to Claim 1, wherein said history memory correlates an input value and an execution result in said reused section for each head address of said reused section that is said identification information, and holds as said execution history;
   and wherein said executing unit outputs said head address to said execution history search unit based on said previous notice command including reference information for referencing said head address;
   and wherein said execution history search unit searches said execution result in said execution history based on said head address output from said executing unit as said identification information, and an input value in said reused section.

5. The data processing device according to Claim 1, wherein said previous notice command is a previous notice setting command for setting the head address in said reused section that is said identification information;
   and wherein said history memory correlates an input value and an execution result in said reused section for each head address of said reused section, and holds as said execution history;
   and wherein said executing unit sets, based on said previous notice setting command including setting information indicating the setting destination of said head address, said head address as said setting destination;
   and wherein said execution history search unit obtains an input value in said reused section based on said previous notice setting command, and searches said execution result in said execution history based on said obtained input value, and said head address set by said executing unit.

6. The data processing device according to Claim 1, wherein said history memory correlates priority at the time of eliminating said execution history, and an input value and an execution result in said reused section corresponding to said priority, and holds for each piece of said identification information as said execution history;
   and wherein said execution history search unit eliminates said execution history in said history memory based on said priority included in said previous notice command.

7. The data processing device according to Claim 1, wherein said executing unit executes processing in said reused section identified by said previous notice command in the event that said execution result in said execution history has not been extracted from said history memory by said execution history search unit;
   and wherein said execution history search unit holds said input value obtained based on said previous notice command, an execution result executed by said executing unit, and said identification information in said history memory.

8. The data processing device according to Claim 1, wherein said history memory correlates, for each piece of said identification information for identifying a function that is said reused section, an input value and an execution result in said function, and holds as said execution history;

and wherein said execution history search unit obtains an input value of said function based on a previous notice command for predicting execution of said function, and searches said execution result in said execution history based on said obtained input value and said identification information determined by said previous notice command;

and wherein said execution result output unit outputs, in the event that said execution result has been extracted by said execution history search unit when said function identified by said previous notice command is executed, said extracted execution result to said executing unit.

9. A program conversion processing device comprising:

a reutilization generating unit configured to generate reutilization indicating a degree where the execution results in a command section to be executed multiple times of a program mutually match, for each of said command sections based on the usage patterns of said command sections; and

a previous notice command generating unit configured to generate a previous notice command for predicting the setting of an input value in said reused section immediately before an input value setting command for setting an input value in a reused section selected based on said reutilization of said plurality of command sections.

10. The program conversion processing device according to Claim 9, wherein said previous notice command generating unit generates said previous notice command including identification information for identifying a plurality of said reused sections selected based on said reutilization.

11. The program conversion processing device according to Claim 9, wherein said previous notice command generating unit generates said previous notice command including reference information for referencing said head address after an address setting command for setting the head address of said reused section.

12. The program conversion processing device according to Claim 9, wherein said previous notice command generating unit generates said previous notice command as an address setting command including setting information indicating the setting destination of said head address for setting the head address of said reused section.

13. The program conversion processing device according to Claim 9, wherein said previous notice command generating unit generates said previous notice command including priority appended according to said reutilization generated by said reutilization generating unit.

14. A data processing method in a data processing device including an executing unit configured to execute processing based on a command string including a reused section that is a command section to be executed multiple times, and history memory configured to correlate an input value and an execution result in said reused section for each piece of identification information for identifying said reused section, and to hold as an execution history, said data processing method comprising:

an obtaining procedure for obtaining said identification information determined by a previous notice command for predicting execution of processing in said reused section, and an input value in said reused section determined by said previous notice command;

an execution history search procedure for searching said execution result in said execution history based on said identification information and said input value obtained in said obtaining procedure; and

an execution result output procedure for outputting, in the event that said execution result has been extracted by said execution history search unit when processing in said reused section identified by said previous notice command is executed, said extracted execution result to said executing unit.

15. A previous notice command generating method comprising:

a reutilization generating procedure for generating reutilization indicating a degree where the execution results in a plurality of command sections to be executed multiple times of a program mutually match, for each of said command sections based on the usage patterns of said command sections; and
a previous notice command generating procedure for generating a previous notice command for predicting the setting of an input value in said reused section immediately before an input value setting command for setting an input value in a reused section selected based on said reutilization of said plurality of command sections.

16. A program conversion processing device comprising:

an analyzing unit configured to analyze the usage pattern of a command section in a program;
a reutilization generating unit configured to generate reutilization indicating a degree where the execution result in said command section will be used again, based on said analysis result; and
a command conversion unit configured to convert a call-up command in said command section into a reusing command based on said reutilization.

17. The program conversion processing device according to Claim 16, wherein said analyzing unit analyzes the number of input values in said command section as said usage pattern;
and wherein said reutilization generating unit generates said reutilization based on said analysis result.

18. The program conversion processing device according to Claim 16, wherein said analyzing unit analyzes a combination of values that an input value in said command section can take as said usage pattern;
and wherein said reutilization generating unit generates said reutilization based on said analysis result.

19. The program conversion processing device according to Claim 16, wherein said analyzing unit analyzes the number of times of call-ups of said command section as said usage pattern;
and wherein said reutilization generating unit generates said reutilization based on said analysis result.

20. The program conversion processing device according to Claim 16, wherein said command section is a function, said analyzing unit analyzes the input value and number of times of call-ups of said function as said usage pattern;
and wherein said reutilization generating unit generates said reutilization based on said analysis results.

21. The program conversion processing device according to Claim 16, wherein said command section is a loop, said analyzing unit analyzes an input value and the number of times of call-ups of said loop as said usage pattern;
and wherein said reutilization generating unit generates said reutilization based on said analysis results.

22. The program conversion processing device according to Claim 16, wherein said analyzing unit analyzes whether or not said input value in said command section is accompanied with memory access as said usage pattern;
and wherein said reutilization generating unit generates, in the event that said input value in said command section is accompanied with memory access, said reutilization indicating said degree lower than the degree in a case where said input value not accompanied with this memory access is used.

23. The program conversion processing device according to Claim 16, wherein said command conversion unit converts said call-up command into said reusing command in order from said command section of which said reutilization is the highest, based on said reutilization, the data amount of an execution history that is data for holding said execution result in said command section, and the capacity of history memory where said execution history is held, so that the summation of said data amount in said command section is equal to or smaller than the capacity of said history memory.

24. The program conversion processing device according to Claim 16, further comprising:

a priority generating unit configured to generate priority at the time of said execution history being held in said history memory based on said reutilization;
wherein said command conversion unit converts a call-up command in said command section into said reusing command including said priority.

25. A data processing device comprising:

an executing unit configured to execute processing in said reused section called up by a reusing command for specifying a reused section where an execution result will be used again of a plurality of command sections, and to output section identification information in said reused section, an input value in said reused section, and an execution result in said reused section as an execution history; and
history memory configured to hold said execution history.

**26.** The data processing device according to Claim 25, wherein said executing unit executes processing in said reused section called up by said reusing command for specifying a command section extracted based on a degree to be reused of said plurality of command sections, and outputs said execution history.

**27.** The data processing device according to Claim 26, wherein said reused section is a function, and said executing unit outputs the start address of said function, and the input value of said function, and the execution result of said function as said section information, the input value in said reused section, and the execution result in said reused section.

**28.** The data processing device according to Claim 26, wherein said reused section is a loop, and said executing unit outputs the start address of said loop, and the input value of said loop, and the execution result of said loop as said section information, the input value in said reused section, and the execution result in said reused section.

**29.** The data processing device according to Claim 25, further comprising:

a history search unit configured to output said execution result in the event that said execution result has been detected from said history memory using said section identification information and the input value in said reused section.

**30.** The data processing device according to Claim 25, further comprising:

a priority table configured to hold priority indicating the rank of a degree where said execution result is reused, and the address of said execution history in said history memory as priority information;
a lowest-priority history search unit configured to search said priority information of which said priority is the lowest from said priority table as elimination candidate information;
a priority comparing unit configured to compare, in the event that said executing unit attempts to hold a new execution history in said history memory, said priority of said elimination candidate information, and said priority of said new execution history; and
an eliminating unit configured to eliminate said execution history from said history memory based on said address of said elimination candidate information in the event that said priority of said elimination candidate information is lower than said priority of said new execution history.

**31.** The data processing device according to Claim 30, further comprising:

a history memory managing unit configured to manage the free space of said history memory;
wherein said priority comparing unit compares said priority of said elimination candidate information, and said priority of said new execution history in the event that the data amount of said new execution history is greater than the free space of said history memory.

**32.** A program conversion processing method comprising:

an analyzing procedure for analyzing the usage pattern of a command section in a program;
a reutilization generating procedure for generating reutilization indicating a degree where the execution result of said command section will be used again, based on said analysis result; and
a command conversion procedure for converting a call-up command in said command section into a reusing command based on said reutilization.

**33.** A data processing method in a computer including history memory configured to hold said execution history, comprising:

an executing procedure for executing processing in said reused section called up by a reusing command for specifying a reused section where an execution result will be used again of a plurality of command sections, and outputting section identification information in said reused section, an input value in said reused section, and an execution result in said reused section as an execution history.

**34.** A data processing device comprising:

an executing unit configured to execute processing based on a command string including a plurality of command sections;

an input value setting command address table configured to hold an input value setting command address that is the address of an input value setting command for setting an input value in said command section before execution of a call-up command for calling up said command section, for each piece of section identification information in said command section;

history memory configured to correlate an input value and an execution result in said command section for each piece of said section identification information, and to hold as an execution history;

an execution history search unit configured to search said execution result in said execution history using an input value output from said executing unit based on said input setting command of a command group from said input value setting command up to said call-up command determined by said input value setting command address, and said section identification information corresponding to said input value setting command address; and

an execution result output unit configured to output, in the event that said execution result has been extracted by said execution history search unit when said call-up command determined by said input value setting command address is executed, said extracted execution result to said executing unit.

**35.** The data processing device according to Claim 34, wherein said input value setting command address table holds said input value setting command address of said input vale setting command for setting an input value in a reused section that is a command section to be executed multiple times of said plurality of command sections, for each piece of said section identification information in said reused section;

and wherein an execution history search unit searches said execution result in said reused section using said input value output from said executing unit based on said input value setting command of said command group in said reused section, and said section identification information corresponding to said input value setting command address;

and wherein an execution result output unit outputs, in the event that said execution result in said reused section has been extracted in said execution history by said execution history search unit when said call-up command in said reused section determined by said input value setting command address is executed, said extracted execution result to said executing unit.

**36.** The data processing device according to Claim 34, further comprising:

an input value setting command address output unit configured to output said input value setting command address corresponding to an input value referenced in said command section called up by said call-up command of input values set based on said input value setting command, and said section identification information to said input value setting command address table.

**37.** The data processing device according to Claim 36, wherein said input value setting command address output unit outputs said input value setting command address of said input value setting command that is the earliest of said input value setting commands corresponding to a plurality of input values referenced in said command section, and the head address in said command section that is said section identification information.

**38.** The data processing device according to Claim 34, wherein said input value setting command address table holds said input value setting command address of said input value setting command that is the earliest of input value setting commands for setting a plurality of input values in said command section, for each piece of said section identification information.

**39.** The data processing device according to Claim 34, wherein said executing unit executes processing in said command section determined by said input value setting command address in the event that said execution result in said execution history has not been extracted from said history memory by said execution history search unit;

and wherein said execution history search unit holds the input value output from said executing unit based on said input value setting command, the execution result executed by said executing unit, said section identification information corresponding to said input value setting command address in said history memory.

**40.** The data processing device according to Claim 34, wherein said input value setting command address table holds said input value setting command address of said input value setting command of a function that is said command section for each head address of said function that is said section identification information;

and wherein said history memory correlates an input value and an execution result in said function for each head address of said function, and holds as said execution history;

and wherein said execution history search unit searches said execution result using said input value of said function output from said executing unit based on said input value setting command of said command group, and the head address of said function corresponding to said input value setting command address;

and wherein said execution result output unit outputs, in the event that said execution result of said function has been extracted by said execution history search unit when said call-up command of said function determined by said input value setting command address is executed, said extracted execution result to said executing unit.

41. A program analysis processing device comprising:

a reutilization generating unit configured to generate reutilization indicating a degree where input values for each execution of processing in a command section to be executed multiple times of a program mutually match, for each of said command sections based on the usage pattern in said command section; and

a reused section information generating unit configured to generate reused section information where the input value setting command address of an input value setting command for setting an input value in the reused section extracted based on said reutilization of said plurality of command sections, and section identification information for identifying said reused section are correlated.

42. A data processing method in a data processing device including

an executing unit configured to execute processing based on a command string including a plurality of command sections,

an input value setting command address table configured to hold the input value setting command address of an input value setting command for setting an input value in said command section before execution of a call-up command for calling up said command section, for each piece of section identification information in said command section, and

history memory configured to correlate an input value and an execution result in said command section for each of said section identification information, and to hold as an execution history,

said method comprising:

an execution history search procedure for searching said execution result in said execution history using an input value output from said executing unit based on said input value setting command of a command group from said input value setting command determined by said input value setting command address to said call-up command, and said section identification information corresponding to said input value setting command address; and

an execution result output procedure for outputting, in the event that said execution result has been extracted by said execution history search procedure when said call-up command determined by said input value setting command address is executed, said extracted execution result to said executing unit.

43. A program analysis processing method comprising:

a reutilization generating procedure for generating reutilization indicating a degree where the execution results in the command sections to be executed multiple times of a program mutually match, for each of said command sections based on the usage pattern of said command section; and

a reused section information generating procedure for generating reused section information where the input value setting command address of an input value setting command for setting an input value in the reuse second extracted based on said reutilization of said plurality of command sections, and section identification information for identifying said reused section are correlated.

44. A data processing device comprising:

an executing unit configured to execute a command section to output the execution result;

history memory configured to hold section identification information, an input value, and an execution result in a reused section where an execution result will be used again of said command section, as an execution history, and from which said execution history is searched based on said section identification information and said input value in the event that said held execution result will be used again;

a saved history holding unit configured to hold saved history for saving said execution result of each time of a repeated reused section where execution is repeated of said reused section, from said history memory; and a history control unit configured to supply said saved history to said saved history holding unit based on said execution history of said repeated reused section, to eliminate said execution history serving as basis of said saved history at the time of supply of said saved history from said history memory, and to hold a representative history including information specifying said saved history in said history memory.

45. The data processing device according to Claim 44, wherein said history control unit supplies said saved history to said saved history holding unit in the event that the data amount of said execution history newly held in said history memory is greater than the free space of said history memory.

46. The data processing device according to Claim 44, further comprising:

a history restoring unit configured to restore said execution history to said history memory based on said saved history and said representative history; and
a history search unit configured to output said execution result based on said restored execution history in the event that said restored execution history has been searched from said history memory based on said section identification information and said input value.

47. The data processing device according to Claim 46, wherein said history search unit causes said restoring unit to start restoration of said execution history in the event that said execution history searched based on said section identification information and said input value is said representative history.

48. The data processing device according to Claim 46, wherein said history control unit generates said representative history further including a saving count indicating the number of said saved histories;
and wherein said history restoring unit extracts said saved history from said saved history holding unit based on information specifying said saved history in said representative history, and said saving count, and restores said execution history.

49. The data processing device according to Claim 44, wherein said executing unit further outputs an identifier for identifying said execution history in said repeated reused section, said execution history other than said repeated reused section, and said representative history in the event of supplying said execution result in said reused section;
and wherein said history memory further holds said identifier as said execution history;
and wherein said history control unit supplies said saved history based on said execution history identified using said identifier, and generates said representative history further including said identifier.

50. The data processing device according to Claim 44, wherein said repeated reused section is a subroutine, and said executing unit outputs the start address of said subroutine as said section identification information.

51. The data processing device according to Claim 44, wherein said repeated reused section is a loop, and said executing unit outputs the start address of said loop as said section identification information.

52. The data processing device according to Claim 8, wherein said executing unit further outputs, in the event of outputting said execution result in said repeated reused section, a counter value indicating said execution result according to how many times of executions;
and wherein said history memory further holds said counter value as said execution history;
and wherein said history control unit outputs said saved history including said counter value.

53. A history saving device comprising:

history memory configured to hold, as execution history, section identification information, an input value, and an execution result in a reused section where an execution result will be used again, and from which said execution result is searched based on said section identification information and said input value in the event that said held execution result will be used again; and
a history control unit configured to save said execution result of each time in a repeated reused section where execution is repeated of said reused section from said history memory to an external storage unit as a saved history, to eliminate said execution history serving as basis of said saved history at the time of said saving from said history memory, and to hold a representative history including information specifying said saved history in said history memory.

**54.** A data processing method in a computer including
history memory configured to hold, as execution history, section identification information, an input value, and an execution result in a reused section where an execution result will be used again of a command section, and from which said execution result is searched based on said section identification information and said input value in the event that said held execution result will be used again, and
a saved history holding unit configured to hold a saved history for saving said execution result of each time in a repeated reused section where execution is repeated of said reused section from said history memory, comprising:

an executing procedure for executing said command section to output the execution result; and
a history control procedure for supplying said saved history to said saved history holding unit based on said execution result in said repeated reused section, and eliminating said execution history serving as basis of said saved history at the time of supply of said saved history from said history memory, and holding a representative history including information specifying said saved history in said history memory.

**55.** A program in a computer including
history memory configured to hold section identification information, an input value, and an execution result in a reused section where an execution result will be used again of command sections, and from which said execution history is searched based on said section identification information and said input value in the event that said held execution result will be used again, and
a saved history holding unit configured to hold a saved history for saving said execution result of each time in a repeated reused section where execution is repeated of said reused section from said history memory,
said program comprising:

an executing procedure for executing said command section to output the execution result; and
a history control procedure for supplying said saved history to said saved history holding unit based on said execution result in said repeated reused section, and eliminating said execution history serving as basis of said saved history at the time of supply of said saved history from said history memory, and holding a representative history including information specifying said saved history in said history memory.

**56.** A compile processing device comprising:

an analyzing unit configured to analyze the usage patterns of a plurality of command sections in a program, and to distinguish a reused section where an execution result will be used again of said command sections;
a candidate value generating unit configured to generate a candidate value that is a candidate of said section identification value from said start address in a manner correlated with said candidate function by using a candidate function that is a candidate of a section identification value generating function for generating a section identification value for identifying said reused section by the value of bit width narrower than the bit width of the start address of said reused section;
a candidate value table configured to hold said candidate value generated by said candidate value generating unit for each of said correlated candidate functions as a candidate value list;
a section identification value generating function output unit configured to extract said candidate value list where all of said candidate values mutually differ, and to output said correlated candidate function of a candidate value list selected based on the bit widths of said candidate values of the extracted candidate value lists, as said section identification value generating function; and
a machine language program generating unit configured to generate a machine language program in which said section identification value generating function is embedded, based on said analyzed program and said section identification value generating function.

**57.** The compile processing device according to Claim 56, wherein said candidate function is a hash function;
and wherein said section identification value generating function output unit outputs said correlated hash function of a candidate value list selected based on the bit widths of said candidate values of said extracted candidate value list as said section identification value generating function.

**58.** The compile processing device according to Claim 57, wherein said hash function is a hash function with a value in a predetermined number of bits from the least significant bit of said start address as said candidate value;
and wherein said section identification value generating function output unit outputs said correlated hash function of a candidate value list selected based on the bit widths of said candidate values of said extracted candidate value list as said section identification value generating function.

**59.** The compile processing device according to Claim 56, wherein said section identification value generating function output unit outputs said correlated candidate function of a candidate value list of said candidate value of which the bit width is the narrowest of said extracted candidate value list as said section identification value generating function.

**60.** The compile processing device according to Claim 56, wherein said section identification value generating function output unit outputs an identifier for identifying said section identification value generating function as said section identification value generating function;
and wherein said machine language program generating unit generates a machine language program in which said identifier is embedded.

**61.** A data processing device comprising:

an executing unit configured to execute a plurality of command sections and to output the execution results;
history memory configured to hold a section identification value for identifying said reused section by the value of a bit width narrower than the bit width of the start address of a reused section where an execution result will be used again of said command sections, an input value in said reused section, and an execution result in said reused section as an execution history; and
a history search unit configured to search said execution history from said history memory based on said section identification value and said input value, and to output said execution result in the event that said execution history has been searched.

**62.** The data processing device according to Claim 61, further comprising:

a section identification value generating unit configured to generate said section identification value from said start address using a section identification value generating function for generating said section identification value in the event of having output said start address at the time of said executing unit executing said reused section;
wherein said executing unit supplies said section identification value generating function to said section identification value generating unit;
and wherein said history memory holds said section identification value, said input value, and said execution result generated by said section identification value generating unit as said execution history;
and wherein said history search unit searches said execution history from said history memory based on said section identification value and said input value, and in the event that said execution history has been searched, outputs said execution result.

**63.** The data processing device according to Claim 62, wherein said executing unit supplies said section identification value generating function to said section identification value generating unit;
and wherein said section identification value generating unit generates, in the event that said start address has been output at the time said executing unit executing said reused section, said section identification value from said start address using said section identification value generating function supplied from said executing unit.

**64.** The data processing device according to Claim 62, wherein said executing unit supplies an identifier for identifying said section identification value generating function to said section identification value generating unit;
and wherein said section identification value generating unit selects said section identification value generating function from candidate functions that are candidates of said section identification value generating function based on said identifier, and generates, in the event that said start address has been output at the time of said executing unit executing said reused section, said section identification value from said start address using said selected section identification value generating function.

**65.** The data processing device according to Claim 61, wherein said executing unit supplies, in the event of having executed said reused section using a command including said section identification value, said section identification value to said history memory;
and wherein said history memory holds said section identification value, said input value, and said execution result as said execution history;
and wherein said history search unit searches said execution history from said history memory based on said section identification value and said input value, and in the event that said execution history has been searched, outputs said execution result.

**66.** A compile processing device comprising:

an analyzing unit configured to analyze the usage patterns of a plurality of command sections in a program, and to distinguish a reused section where an execution result will be used again of said command sections;

a candidate value generating unit configured to generate a candidate value that is a candidate of said section identification value in a manner correlated with said candidate function by using a candidate function that is a candidate of a section identification value generating function for generating a section identification value for identifying said reused section by the value of bit width narrower than the bit width of the start address of said reused section;

a candidate value table configured to hold said candidate value generated by said candidate value generating unit for each of said correlated candidate functions as a candidate value list;

a section identification value output unit configured to extract said candidate value list where all of said candidate values mutually differ, and to output said candidate value of a candidate value list selected based on the bit widths of said candidate values of this extracted candidate value list, as said section identification value;

a command conversion unit configured to covert a command for calling up said reused section into a section identification value appended command including said section identification value; and

a machine language program generating unit configured to generate a machine language program where said reused section is called up by said section identification value appended command based on a source program including said section identification value appended command.

**67.** The compile processing device according to Claim 66, wherein said candidate value generating unit generates said candidate value by using said candidate function with a number appended in accordance with a predetermined sequence of said start address as an input value.

**68.** The compile processing device according to Claim 66, wherein said candidate value generating unit generates said candidate value by using said candidate function with said start address as an input value.

**69.** A data processing device comprising:

an executing unit configured to execute a plurality of command sections and to output the execution results;

a candidate value generating unit configured to generate a candidate value that is a candidate of said section identification value from said start address in a manner correlated with said candidate function by using a candidate function that is a candidate of a section identification value generating function for generating a section identification value for identifying said reused section by the value of bit width narrower than the bit width of the start address of said reused section;

a candidate value table configured to hold said candidate value generated by said candidate value generating unit for each of said correlated candidate functions as a candidate value list;

a section identification value generating function output unit configured to extract said candidate value list where all of said candidate values mutually differ, and to output said correlated candidate function of a candidate value list selected based on the bit widths of said candidate values of the extracted candidate value lists, as a section identification value generating function;

a section identification value generating unit configured to generate said section identification value from said start address using said section identification value generating function in the event that said start address has been output at the time of said executing unit executing said reused section;

history memory configured to hold said section identification value, an input value, and an execution result in said reused section as an execution history; and

a history search unit configured to search said execution history from said history memory based on said section identification value and said input value, and to output said execution result in the event that said execution history has been searched.

**70.** A compile processing method that is a data processing method in a computer including

a candidate value table configured to hold a candidate value that is a candidate of a section identification value for each candidate function that generated said candidate value as a candidate value list, said method comprising:

an analyzing procedure for analyzing the usage patterns of a plurality of command sections in a program, and distinguishing a reused section where an execution result will be used again of said command sections;

a candidate value generating procedure for generating said candidate value that is a candidate of said section identification value from said start address in a manner correlated with said candidate function by using said candidate function that is a candidate of a section identification value generating function for generating said section identification value for identifying said reused section by the value of bit width narrower than the bit width of the start address of said reused section;

a section identification value generating function output procedure for extracting said candidate value list where all of said candidate values mutually differ, and outputting said correlated candidate function of a candidate value list selected based on the bit widths of said candidate values of the extracted candidate value lists, as said section identification value generating function; and

a machine language program generating procedure for generating a machine language program in which said section identification value generating function is embedded, based on said analyzed program and said section identification value generating function.

71. A program in a computer including

a candidate value table configured to hold a candidate value that is a candidate of a section identification value for each candidate function that generated said candidate value as a candidate value list, said program causing said computer to execute:

an analyzing procedure for analyzing the usage patterns of a plurality of command sections in a program, and distinguishing a reused section where an execution result will be used again of said command sections;

a candidate value generating procedure for generating said candidate value that is a candidate of said section identification value from said start address in a manner correlated with said candidate function by using said candidate function that is a candidate of a section identification value generating function for generating said section identification value for identifying said reused section by the value of bit width narrower than the bit width of the start address of said reused section;

a section identification value generating function output procedure for extracting said candidate value list where all of said candidate values mutually differ, and outputting said correlated candidate function of a candidate value list selected based on the bit widths of said candidate values of the extracted candidate value lists, as said section identification value generating function; and

a machine language program generating procedure for generating a machine language program in which said section identification value generating function is embedded, based on said analyzed program and said section identification value generating function.

# FIG. 1

# FIG. 2

# FIG. 3

# FIG. 4

noticeCall ⟨index⟩ //PREVIOUS NOTICE
COMMAND FOR SPECIFYING
IDENTIFICATION
INFORMATION OF FUNCTION
func THAT IS A SEARCH KEY,
USING INDEX

EXECUTION
HISTORY
SEARCH
SECTION

call func //CALL-UP OF FUNCTION func

(a)

REFERENCE OF
SEARCH RESULT

INPUT OF SEARCH KEY

430

431

432

| INDEX 0 | EXECUTION HISTORY SEARCHED DATA 0 |
| INDEX 1 | EXECUTION HISTORY SEARCHED DATA 1 |
| ⋮ | ⋮ |
| INDEX k | EXECUTION HISTORY SEARCHED DATA k |

(b)

# FIG. 5

```
      )
        (

   func (a, b, c, d, e) ;

      )
        (

   int func (int a, int b, int c, int d, int e) {
   ...
   }
```

(a)

```
         )
           (

   noticeCall index        //PREVIOUS NOTICE COMMAND INDICATING IDENTIFICATION INFORMATION
   lw      R4, 1000 (R28)   //SETTING OF FIRST ARGUMENT a ACCORDING TO LW (Load Word) COMMAND
   lw      R5, 1004 (R28)   //SETTING OF SECOND ARGUMENT b ACCORDING TO LW (Load Word) COMMAND
   move    R6, R10          //SET THIRD ARGUMENT c ACCORDING TO MOVE COMMAND
   move    R7, R11          //SET FOURTH ARGUMENT d ACCORDING TO MOVE COMMAND
   sw      R12, 16 (R29)    //SETTING OF FIFTH ARGUMENT e ACCORDING TO SW (Store Word) COMMAND
   lw      R25, 2000 (R28)  //SET HEAD ADDRESS OF FUNCTION func
   jalr    R25              //CALL-UP OF FUNCTION func

         )
           (
```

(b)

# FIG. 6

REDUCED
PERIOD t1

call

321    322

323    324    return

(a)

EXECUTION HISTORY
SEARCH PERIOD t

REDUCED
PERIOD t2

call

421    321    322

323    324    return

(b)

## FIG. 7

START

DECODE PREVIOUS NOTICE COMMAND —S911

OBTAIN SEARCH KEY OF HISTORY MEMORY —S912

FETCH —S913

S914
IS THIS INPUT VALUE SETTING COMMAND? — Yes →

S921
OBTAIN SET INPUT VALUE

No

S915
IS THIS FUNCTION CALL-UP COMMAND? — No →

S922
AGREEMENT WITH INPUT VALUE OF HISTORY MEMORY? — No →

Yes

Yes S919
ADVANCE POINTER OF HISTORY MEMORY

S916
AGREEMENT WITH ALL INPUT VALUES IN HISTORY MEMORY?

Yes

No

S924
EXECUTION RESULT REUSE PROCESSING

EXECUTE FUNCTION —S917

OBTAIN EXECUTION RESULT —S918

REGISTER EXECUTION HISTORY IN HISTORY MEMORY —S919

END

144

# FIG. 8

lw R25, ⋯ //SET FUNCTION ADDRESS

noticeCall (R25) //PREVIOUS NOTICE
COMMAND INDICATING
REGISTER IN WHICH
FUNCTION ADDRESS IS
STORED

EXECUTION
HISTORY
SEARCH
SECTION

call R25 //CALL-UP OF FUNCTION

(a)

INPUT OF SEARCH KEY
(FUNCTION ADDRESS)

REFERENCE OF
SEARCH RESULT

430

433 434

| FUNCTION ADDRESS 0 | EXECUTION HISTORY SEARCHED DATA 0 |
|---|---|
| FUNCTION ADDRESS 1 | EXECUTION HISTORY SEARCHED DATA 1 |
| ⋮ | ⋮ |
| FUNCTION ADDRESS k | EXECUTION HISTORY SEARCHED DATA k |

(b)

# FIG. 9

```
        )
        (
  func (a, b, c, d, e) ;

        )
        (

  int func(int a, int b, int c, int d, int e) {
  ...
  }
```

(a)

```
                )
                (

  lw      R25, 2000 (R28)   //SET HEAD ADDRESS OF FUNCTION func
  noticeCall  R25           //PREVIOUS NOTICE COMMAND INDICATING REFERENCE INFORMATION
  lw      R4, 1000 (R28)    //SETTING OF FIRST ARGUMENT a ACCORDING TO LW (Load Word) COMMAND
  lw      R5, 1004 (R28)    //SETTING OF SECOND ARGUMENT b ACCORDING TO LW (Load Word) COMMAND
  move    R6, R10           //SET THIRD ARGUMENT c ACCORDING TO MOVE COMMAND
  move    R7, R11           //SET FOURTH ARGUMENT d ACCORDING TO MOVE COMMAND
  sw      R12, 16 (R29)     //SETTING OF FIFTH ARGUMENT e ACCORDING TO SW (Store Word) COMMAND
  jalr    R25               //CALL-UP OF FUNCTION func

                )
                (
```

(b)

# FIG. 10

memolw  (R25), ⋯ //PREVIOUS NOTICE
SETTING COMMAND
FOR SETTING
FUNCTION ADDRESS

EXECUTION
HISTORY
SEARCH
SECTION

call R25  //CALL-UP OF FUNCTION

(a)

INPUT OF SEARCH KEY
(FUNCTION ADDRESS)

REFERENCE OF
SEARCH RESULTS

435  436  430

| FUNCTION ADDRESS 0 | EXECUTION HISTORY SEARCHED DATA 0 |
|---|---|
| FUNCTION ADDRESS 1 | EXECUTION HISTORY SEARCHED DATA 1 |
| ⋮ | ⋮ |
| FUNCTION ADDRESS k | EXECUTION HISTORY SEARCHED DATA k |

(b)

# FIG. 11

```
      )
  func (a, b, c, d, e) ;

      )

  int func(int a, int b, int c, int d, int e) {
  ...
  }
```

(a)

```
      )

memo lw   R25, 2000 (R28)   //PREVIOUS NOTICE SETTING COMMAND FOR SETTING HEAD ADDRESS OF FUNCTION func
lw        R4, 1000 (R28)    //SETTING OF FIRST ARGUMENT a ACCORDING TO LW (Load Word) COMMAND
lw        R5, 1004 (R28)    //SETTING OF SECOND ARGUMENT b ACCORDING TO LW (Load Word) COMMAND
move      R6, R10           //SET THIRD ARGUMENT c ACCORDING TO MOVE COMMAND
move      R7, R11           //SET FOURTH ARGUMENT d ACCORDING TO MOVE COMMAND
sw        R12, 16 (R29)     //SETTING OF FIFTH ARGUMENT e ACCORDING TO SW (Store Word) COMMAND
jalr      R25               //CALL-UP OF FUNCTION func

      )
```

(b)

# FIG. 12

500

**SOURCE PROGRAM STORAGE UNIT** ~510

600

**PREVIOUS NOTICE COMMAND INSERTION CODE GENERATING UNIT**

610 — **PROGRAM ANALYZING UNIT**

**REUSED CANDIDATE SECTION EXTRACTING UNIT** ~611

**REUSED CANDIDATE SECTION ANALYZING UNIT** ~612

620 — **PROGRAM OPTIMIZATION PROCESSING UNIT**

**REUTILIZATION GENERATING UNIT** ~621

**REUSED SECTION SELECTING UNIT** ~622

**PREVIOUS NOTICE COMMAND GENERATION PROCESSING UNIT** ~623

**CODE GENERATING UNIT** ~630

**OBJECT PROGRAM STORAGE UNIT** ~520

# FIG. 13

```
31           26 25                                    11 10    6 5          0
 ┌───────────┬─────────────────────────────────┬─────────┬──────────────┐
 │  SPECIAL  │                                 │         │  noticeCall  │
 │ (000000)  │             INDEX               │ PRIORITY│  (000101)    │
 └───────────┴─────────────────────────────────┴─────────┴──────────────┘
      711                  712                      713        714
```

(a)

```
31           26 25                                11 10    6 5          0
 ┌───────────┬─────────────────────────────┬──────────┬──────────────┐
 │  SPECIAL  │                             │ TRANSFER │  noticeCall  │
 │ (000000)  │          PRIORITY           │DESTINATION│ (000101)    │
 │           │                             │ REGISTER │              │
 └───────────┴─────────────────────────────┴──────────┴──────────────┘
      721                722                    723        724
```

(b)

```
31           26 25      21 20      16 15                        0
 ┌───────────┬──────────┬──────────┬───────────────────────────┐
 │  memolw   │REFERENCE │ TRANSFER │                           │
 │ (011111)  │REGISTER  │DESTINATION│         OFFSET            │
 │           │          │ REGISTER │                           │
 └───────────┴──────────┴──────────┴───────────────────────────┘
      731        732        733              734
```

(c)

# FIG. 14

START

READ OUT SOURCE PROGRAM — S931

EXTRACT REUSED CANDIDATE SECTION — S932

ANALYZE REUSED CANDIDATE SECTION — S933

GENERATE REUTILIZATION — S934

SELECT REUSED SECTION — S935

PREVIOUS NOTICE COMMAND GENERATION PROCESSING — S940

GENERATE OBJECT PROGRAM — S936

END

# FIG. 15

S940

```
PREVIOUS NOTICE COMMAND
GENERATION PROCESSING
```

GENERATE PREVIOUS
NOTICE COMMAND BEFORE
CALL-UP COMMAND
OF REUSED SECTION — S942

GENERATE INPUT VALUE
SETTING COMMAND FOR
SETTING INPUT VALUE
OF REUSED SECTION — S943

GENERATE ADDRESS SETTING
COMMAND FOR SETTING
FUNCTION ADDRESS OF
CALL-UP COMMAND — S944

GENERATE CALL-UP COMMAND
OF REUSED SECTION — S945

S946

HAVE PREVIOUS
NOTICE COMMAND BEEN
GENERATED AS TO ALL OF REUSED
SECTIONS?

No

Yes

RETURN

# FIG. 16

S950

PREVIOUS NOTICE COMMAND
GENERATION PROCESSING

GENERATE ADDRESS
SETTING COMMAND FOR
SETTING HEAD ADDRESS
OF REUSED SECTION — S951

GENERATE PREVIOUS
NOTICE COMMAND INDICATING
REFERENCE DESTINATION
OF HEAD ADDRESS — S952

GENERATE INPUT VALUE
SETTING COMMAND FOR
SETTING INPUT VALUE
OF REUSED SECTION — S943

GENERATE CALL-UP COMMAND
OF REUSED SECTION — S945

S946

HAVE PREVIOUS
NOTICE COMMAND BEEN GENERATED
AS TO ALL OF REUSED
SECTIONS?

No

Yes

RETURN

# FIG. 17

S960

```
┌──────────────────────────────┐
│  PREVIOUS NOTICE COMMAND     │
│  GENERATION PROCESSING       │
└──────────────────────────────┘
```

GENERATE PREVIOUS
NOTICE SETTING COMMAND
FOR SETTING HEAD ADDRESS
OF REUSED SECTION — S961

GENERATE INPUT VALUE
SETTING COMMAND FOR
SETTING INPUT VALUE
OF REUSED SECTION — S943

GENERATE CALL-UP COMMAND
OF REUSED SECTION — S945

S946

HAVE PREVIOUS
NOTICE COMMAND BEEN GENERATED
AS TO ALL OF REUSED
SECTIONS?

No

Yes

RETURN

# FIG. 18

1500

1510

SOURCE
PROGRAM STORAGE
UNIT

1610

1611
REUSED CANDIDATE
SECTION
EXTRACTING UNIT

1612
REUSED CANDIDATE
SECTION
ANALYZING UNIT

1620

1621
REUTILIZATION
GENERATING UNIT

1623
REUSING COMMAND
CONVERSION UNIT

1522
CODE GENERATING UNIT

1600

1520

1530

OBJECT
PROGRAM
STORAGE UNIT

## FIG. 19

```
int funcA(··· ) {

    ...
    syscall
    ...
}
```

(a)

```
int rand( ) {

...
}
```

(b)

# FIG. 20

```
int funcA(int A){
...
}


int funcB(int A, int B){
...
}


int funcC(int A, int B, intC){
...
}
```

(a)

REUTILIZATION

funcA(int A)>funcB(int A, int B)>funcC(int A, int B, intC)

(b)

# FIG. 21

```
int funcA(bool a) {
...
}



int funcB(char a) {
...
}



int funcC(int a) {
...
}
```

(a)

REUTILIZATION

funcA(bool a)>funcB(char a)>funcC(int a)

(b)

# FIG. 22

```
int main(···) {
int a;
···
func(0, ···);
···
func(a, ···);
···
}
```

(a)

REUTILIZATION

func(0, ···); > func(a, ···);

(b)

## FIG. 23

```
int main(…) {
int a;
…
funcA(2);
…
funcA(3);
…
funcB(2);
…
funcB(3);
…
funcB(4);
…
funcB(5);
…


}

int funcA(int a) {
        …
}
int funcB(int a) {
        …
}
```

(a)

REUTILIZATION

funcA(int a) > funcB(int a)

(b)

## FIG. 24

```
int main(…) {
…
funcA(…);
…
funcB(…);
…
funcB(…);
…
funcB(…);
…
}
```

(a)

REUTILIZATION

funcB(…);>funcA(…);

(b)

# FIG. 25

```
int funcA(int*a, ···) {
...
}


int funcB(int a, ···) {
...
}
```

(a)

REUTILIZATION
    funcB(int a, ···) > funcA(int*a, ···)

(b)

# FIG. 26

```
void funcX(...) {
   ...
  funcA(...) ;
  funcB(...) ;
  funcC(...) ;
    ...
    }

void funcA(bool a) {...}
void funcB(char a) {...}
void funcC(int a) {...}
```

$\rightarrow$

```
   ...
memoCall funcA
   ...
call funcB
   ...
call funcC
   ...
```

(a)

```
void funcX(...) {
   ...
  funcA(...) ;
  funcB(...) ;
  funcC(...) ;
    ...
    }

void funcA(bool a) {...}
void funcB(char a) {...}
void funcC(int a) {...}
```

$\rightarrow$

```
   ...
memoCall funcA
   ...
memoCall funcB
   ...
call funcC
   ...
```

(b)

# FIG. 27

| 31 | 26 | 25 | 21 | 20 | 16 | 15 | 11 | 10 | 6 | 5 | 0 |
|---|---|---|---|---|---|---|---|---|---|---|---|
| SPECIAL 000000 | | rs | | 00000 | | rd 11111 | | 00000 | | JALR 001001 | |
| 1710 | | 1720 | | 1730 | | 1740 | | 1750 | | 1760 | |

(a)

| 31 | 26 | 25 | 21 | 20 | 16 | 15 | 11 | 10 | 6 | 5 | 0 |
|---|---|---|---|---|---|---|---|---|---|---|---|
| SPECIAL 000000 | | rs | | 11111 | | rd 11111 | | 11111 | | JALR 001001 | |
| 1710 | | 1720 | | 1731 | | 1740 | | 1751 | | 1760 | |

(b)

# FIG. 28

```
                    ┌────────────┐
                    (   START    )
                    └─────┬──────┘
          ┌───────────────────────────────┐ ┐ S1911
          │    READ OUT SOURCE PROGRAM     │ ┘
          └───────────────┬───────────────┘
          ┌───────────────────────────────┐ ┐ S1912
          │ EXTRACT REUSED CANDIDATE SECTION│ ┘
          └───────────────┬───────────────┘
          ┌───────────────────────────────┐ ┐ S1913
          │ ANALYZE REUSED CANDIDATE SECTION│ ┘
          └───────────────┬───────────────┘
          ┌───────────────────────────────┐ ┐ S1914
          │    GENERATE REUTILIZATION      │ ┘
          └───────────────┬───────────────┘
          ┌───────────────────────────────┐ ┐ S1916
          │  CONVERT INTO REUSING COMMAND  │ ┘
          └───────────────┬───────────────┘
          ┌───────────────────────────────┐ ┐ S1917
          │   GENERATE OBJECT PROGRAM      │ ┘
          └───────────────┬───────────────┘
                    ┌────────────┐
                    (    END     )
                    └────────────┘
```

# FIG. 29

# FIG. 30

# FIG. 31

# FIG. 32

```
void funcX(...) [
  ...
  funcA(...);
  funcB(...);
  funcC(...);
  funcD(...);
  funcE(...);
  funcF(...);
  ...
  }


void funcA(char a, char b) [...]
void funcB(char a, int b) [...]
void funcC(char a) [...]
void funcD(bool a) [...]
void funcE(int a, int b) [...]
void funcF(int a) [...]
```

→

```
...
call funcA
...
call funcB
...
call funcC
...
call funcD
...
call funcE
...
call funcF
...
```

| EXECUTION HISTORY |
| --- |
| funcE |
| funcF |

(a)                                (b)

```
void funcX(...) [
  ...
  funcA(...);
  funcB(...);
  funcC(...);
  funcD(...);
  funcE(...);
  funcF(...);
  ...
  }


void funcA(char a, char b) [...]
void funcB(char a, int b) [...]
void funcC(char a) [...]
void funcD(bool a) [...]
void funcE(int a, int b) [...]
void funcF(int a) [...]
```

→

```
...
call funcA
...
call funcB
...
memoCall funcC
...
memoCall funcD
...
call funcE
...
call funcF
...
```

| EXECUTION HISTORY |
| --- |
| funcC |
| funcD |

(c)                                (d)

# FIG. 33

START

READ COMMAND AND
DATA INTO FETCH UNIT
AND REGISTER FILE — S1931

DECODE COMMAND — S1932

IS THIS REUSING
COMMAND? — S1933
No / Yes

SEARCH EXECUTION
HISTORY BASED ON FUNCTION
ADDRESS AND INPUT VALUE — S1934

IS THERE
EXECUTION
HISTORY? — S1935
Yes / No

CALCULATE
EXECUTION RESULT
OF FUNCTION BASED
ON INPUT VALUE — S1940

OUTPUT EXECUTION
RESULT FROM
HISTORY MEMORY TO
EXECUTING UNIT — S1938

CALCULATE
EXECUTION RESULT
OF FUNCTION BASED
ON INPUT VALUE — S1936

DISCONTINUE
EXECUTION
OF FUNCTION — S1939

REGISTER
EXECUTION
HISTORY IN
HISTORY MEMORY — S1937

END

# FIG. 34

1500

```
                    ┌──────────────────┐
                    │      SOURCE      │────1510
                    │ PROGRAM STORAGE  │
                    │       UNIT       │
                    └──────────────────┘
                             │
                             ▼
  ┌─────────────────────────────────────────────┐
  │  ┌────────────────────────────────────────┐ │
  │  │   ┌─────────────────────────────────┐  │ │
1610│  │   ┌─────────────────────────────┐ │  │ │
  │  │   │    REUSED CANDIDATE         │─1611│ │
  │  │   │    SECTION                  │ │  │ │
  │  │   │    EXTRACTING UNIT          │ │  │ │
  │  │   └─────────────────────────────┘ │  │ │
  │  │              │                    │  │ │
  │  │              ▼                    │  │ │
  │  │   ┌─────────────────────────────┐ │  │ │
  │  │   │    REUSED CANDIDATE         │─1612│ │
  │  │   │    SECTION                  │ │  │ │
  │  │   │    ANALYZING UNIT           │ │  │ │
  │  │   └─────────────────────────────┘ │  │ │
  │  │                                   │  │ │
1620│  │   ┌─────────────────────────────┐ │  │ │
  │  │   │    REUTILIZATION            │─1621│ │
  │  │   │    GENERATING UNIT          │ │  │ │
  │  │   └─────────────────────────────┘ │  │ │
  │  │              │                    │  │ │
  │  │              ▼                    │  │ │
  │  │   ┌─────────────────────────────┐ │  │ │
  │  │   │    PRIORITY                 │─1622│ │
  │  │   │    GENERATING UNIT          │ │  │ │
  │  │   └─────────────────────────────┘ │  │ │
  │  │              │                    │  │ │
  │  │              ▼                    │  │ │
  │  │   ┌─────────────────────────────┐ │  │ │
  │  │   │    REUSING COMMAND          │─1623│ │
  │  │   │    CONVERSION UNIT          │ │  │ │
  │  │   └─────────────────────────────┘ │  │ │
  │  └────────────────────────────────────────┘ │ 1600
  │     ┌──────────────────────────┐─1522       │
  │     │   CODE GENERATING UNIT   │            │
  │     └──────────────────────────┘            │
  └─────────────────────────────────────────────┘ 1520
                             │
                             ▼
                    ┌──────────────────┐
                    │      OBJECT      │────1530
                    │     PROGRAM      │
                    │   STORAGE UNIT   │
                    └──────────────────┘
```

# FIG. 35

```
void funcX(...) {
  ...
  funcA(...);
  funcB(...);
  funcC(...);
  ...
    }

void funcA(int a) [...]
void funcB(int a, int b) [...]
void funcC(int a, int b, int c) [...]
```

```
...
memoCall funcA   3
...
memoCall funcB   2
...
memoCall funcC   1
...
```

(a)

```
void funcX(...) {
  ...
  funcA(...);
  funcB(...);
  funcC(...);
  funcD(...);
  ...
    }

void funcA(int a) [...]
void funcB(int a, int b) [...]
void funcC(bool a, bool b) [...]
void funcD(bool a, bool b, bool c) [...]
```

```
...
memoCall funcA   2
...
memoCall funcB   1
...
memoCall funcC   4
...
memoCall funcD   3
...
```

(b)

# FIG. 36

```
void funcX(...) {
int a;
  ...
  funcA(0);
  funcA(1);
  funcB(a);
  ...
  }

void funcA(int n) {...}
void funcB(int n) {...}
```

→

```
  ...
memoCall  funcA    9
  ...
memoCall  funcB    1
  ...
```

(a)

```
void funcX(...) {
  ...
funcA(...);
  ...
funcA(...);
  ...
funcA(...);
  ...
funcB(...);
  ...
  }

void funcA(int n) {...}
void funcB(int n) {...}
```

→

```
  ...
memoCall  funcA    5
  ...
memoCall  funcB    1
  ...
```

(b)

# FIG. 37

| 31          26 | 25          21 | 20          16 | 15          11 | 10          6 | 5          0 |
|---|---|---|---|---|---|
| SPECIAL 000000 | rs | 00000 | rd 11111 | 00000 | JALR 001001 |
| 1710 | 1720 | 1730 | 1740 | 1750 | 1760 |

(a)

| 31          26 | 25          21 | 20          16 | 15          11 | 10          6 | 5          0 |
|---|---|---|---|---|---|
| SPECIAL 000000 | rs | 00000 | rd 11111 | 00001 | JALR 001001 |
| 1710 | 1720 | 1732 | 1740 | 1752 | 1760 |

⋮

| 31          26 | 25          21 | 20          16 | 15          11 | 10          6 | 5          0 |
|---|---|---|---|---|---|
| SPECIAL 000000 | rs | 11111 | rd 11111 | 11111 | JALR 001001 |
| 1710 | 1720 | 1733 | 1740 | 1753 | 1760 |

(b)

# FIG. 38

```
            ┌─────────────┐
            │    START    │
            └──────┬──────┘
                   │
   ┌───────────────┴────────────────┐  S1911
   │      READ OUT SOURCE PROGRAM    │
   └───────────────┬────────────────┘
                   │
   ┌───────────────┴────────────────┐  S1912
   │  EXTRACT REUSED CANDIDATE SECTION│
   └───────────────┬────────────────┘
                   │
   ┌───────────────┴────────────────┐  S1913
   │  ANALYZE REUSED CANDIDATE SECTION│
   └───────────────┬────────────────┘
                   │
   ┌───────────────┴────────────────┐  S1914
   │     GENERATE REUTILIZATION      │
   └───────────────┬────────────────┘
                   │
   ┌───────────────┴────────────────┐  S1915
   │      CALCULATE PRIORITY         │
   └───────────────┬────────────────┘
                   │
   ┌───────────────┴────────────────┐  S1916
   │   CONVERT INTO REUSING COMMAND  │
   └───────────────┬────────────────┘
                   │
   ┌───────────────┴────────────────┐  S1917
   │    GENERATE OBJECT PROGRAM      │
   └───────────────┬────────────────┘
                   │
            ┌──────┴──────┐
            │     END     │
            └─────────────┘
```

# FIG. 39

# FIG. 40

# FIG. 41

| 1861 | 1862 | | |
|---|---|---|---|
| PRIORITY | EXECUTION HISTORY FINAL OUTPUT ADDRESS | | |
| 1 | ADDRESS | ... | ADDRESS |
| 2 | ADDRESS | ... | ADDRESS |
| 3 | ADDRESS | ... | ADDRESS |
| 4 | ADDRESS | ... | ADDRESS |
| 5 | ADDRESS | ... | ADDRESS |
| 6 | ADDRESS | ... | ADDRESS |

# FIG. 42

```
void funcX(...) {
  ...
  funcA(...);
  funcB(...);
  funcC(...);
  funcD(...);
  funcE(...);
  funcF(...);
  funcG(...);
  ...
}

void funcA(int a) {...}
void funcB(bool a) {...}
void funcC(int a, bool b) {...}
void funcD(bool a, bool b, bool c) {...}
void funcE(char a) {...}
void funcF(bool a, bool b) {...}
void funcG(int a, int b) {...}
```

(a)

```
...
call funcA
call funcB
call funcC
call funcD
call funcE
call funcF
call funcG
...
```

| EXECUTION HISTORY |
|---|
| funcE |
| funcF |
| funcG |

(b)

```
void funcX(...) {
  ...
  funcA(...);
  funcB(...);
  funcC(...);
  funcD(...);
  funcE(...);
  funcF(...);
  funcG(...);
  ...
}

void funcA(int a) {...}
void funcB(bool a) {...}
void funcC(int a, bool b) {...}
void funcD(bool a, bool b, bool c) {...}
void funcE(char a) {...}
void funcF(bool a, bool b) {...}
void funcG(int a, int b) {...}
```

(c)

```
...
memoCall funcA  2
...
memoCall funcB  7
...
memoCall funcC  3
...
memoCall funcD  5
...
memoCall funcE  4
...
memoCall funcF  6
...
memoCall funcG  1
...
```

| EXECUTION HISTORY |
|---|
| funcB |
| funcD |
| funcF |

(d)

# FIG. 43

```
              START

                                    S1931
         READ COMMAND AND
       DATA INTO FETCH UNIT
         AND REGISTER FILE

                                    S1932
         DECODE COMMAND

                                    S1933
   No    IS THIS REUSING
         COMMAND?

                Yes               S1934
         SEARCH EXECUTION
       HISTORY BASED ON FUNCTION
       ADDRESS AND INPUT VALUE

                                    S1935
              Yes    IS THERE
                     EXECUTION
                     HISTORY?

  S1940           S1938       No        S1936
 CALCULATE      OUTPUT EXECUTION    CALCULATE
 EXECUTION RESULT   RESULT FROM     EXECUTION RESULT
 OF FUNCTION BASED  HISTORY MEMORY  OF FUNCTION BASED
 ON INPUT VALUE   TO REGISTER FILE  ON INPUT VALUE

                          S1939            S1950
                  DISCONTINUE        EXECUTION
                  EXECUTION          HISTORY
                  OF FUNCTION        REGISTRATION
                                     PROCESSING


                        END
```

# FIG. 44

S1950

EXECUTION HISTORY
REGISTRATION PROCESSING

S1951

IS THERE
VACANCY IN HISTORY
MEMORY?

No

Yes

S1952

REGISTER EXECUTION
HISTORY IN HISTORY
MEMORY

S1953

REGISTER PRIORITY AND
ADDRESS OF OUTPUT
VALUE IN PRIORITY TABLE

S1954

IS PRIORITY OF
REGISTRATION OBJECT
HIGHER THAN PRIORITY
OF MINIMUM
VALUE?

Yes

No

S1956

ELIMINATE EXECUTION
HISTORY HAVING PRIORITY
OF MINIMUM VALUE

S1955

DISCONTINUE
REGISTRATION OF
EXECUTION HISTORY

RETURN

# FIG. 45

2100

2300

DATA PROCESSING UNIT

2219     2200     2229

| COMMAND CACHE | DATA CACHE | EXECUTION RESULT REUSE PROCESSING UNIT | SEARCH START COMMAND ADDRESS MANAGING UNIT |

2210     2220     2400     2500

2120

MAIN STORAGE UNIT    2130

EP 2 466 453 A1

# FIG. 46

# FIG. 47

# FIG. 48

2520

| INPUT VALUE SETTING COMMAND ADDRESS | FUNCTION ADDRESS |
|---|---|
| INPUT VALUE A SETTING COMMAND ADDRESS | FUNCTION ADDRESS 1 |
| INPUT VALUE X SETTING COMMAND ADDRESS | FUNCTION ADDRESS 2 |
| ⋮ | ⋮ |

2521　　2522

(a)

DETERMINE FIRST INPUT VALUE SETTING

call　　　　　　　　　return

2321　2322　　　2323　2324　2325

(b)

REGISTRATION OF EXECUTION RESULT

REGISTRATION OF INPUT VALUES

2430

| FUNCTION ADDRESS | EXECUTION HISTORY SEARCHED DATA |
|---|---|
| FUNCTION ADDRESS 1 | EXECUTION HISTORY SEARCHED DATA 1 |
| — | — |
| ⋮ | ⋮ |

2431　　　　　　　2432

REGISTRATION OF FUNCTION ADDRESSES

(c)

# FIG. 49

2520

|  | |
|---|---|
| 2521 | 2522 |
| INPUT VALUE SETTING COMMAND ADDRESS | FUNCTION ADDRESS |
| INPUT VALUE A SETTING COMMAND ADDRESS | FUNCTION ADDRESS 1 |
| INPUT VALUE X SETTING COMMAND ADDRESS | FUNCTION ADDRESS 2 |
| ⋮ | ⋮ |

START OF SEARCH          (a)

(b)

2430

|  | |
|---|---|
| 2431 | 2432 |
| FUNCTION ADDRESS | EXECUTION HISTORY SEARCHED DATA |
| FUNCTION ADDRESS 1 | EXECUTION HISTORY SEARCHED DATA 1 |
| FUNCTION ADDRESS 2 | EXECUTION HISTORY SEARCHED DATA 2 |
| ⋮ | ⋮ |

(c)

# FIG. 50

REDUCED
PERIOD T2

call

2321    2322

2323    2324

return

(a)

EXECUTION HISTORY
SEARCH PERIOD Ts

REDUCED
PERIOD T1

call

2321    2322

2323    2324

return

(b)

# FIG. 51

2520

2521                    2522

| INPUT VALUE SETTING COMMAND ADDRESS | FUNCTION ADDRESS |
|---|---|
| INPUT VALUE A SETTING COMMAND ADDRESS | FUNCTION ADDRESS 1 |
| INPUT VALUE X SETTING COMMAND ADDRESS | FUNCTION ADDRESS 2 |
| ⋮ | ⋮ |

START OF SEARCH                    (a)

EXECUTION HISTORY SEARCH PERIOD Ts

call                    return

2321    2322

2323    2324    2325

(b)

REGISTRATION OF EXECUTION RESULT

DISAGREEMENT IN INPUT VALUES

REGISTRATION OF INPUT VALUES

2430

2431                    2432

AGREEMENT IN FUNCTION ADDRESSES

| FUNCTION ADDRESS | EXECUTION HISTORY SEARCHED DATA |
|---|---|
| FUNCTION ADDRESS 1 | EXECUTION HISTORY SEARCHED DATA 1 |
| FUNCTION ADDRESS 2 | EXECUTION HISTORY SEARCHED DATA 2 |
| ⋮ | ⋮ |

(c)

# FIG. 52

START

FETCH ~S2911

S2912
AGREEMENT WITH INPUT VALUE SETTING COMMAND ADDRESS?

No

Yes

OUTPUT SECTION IDENTIFICATION INFORMATION FROM ADDRESS DETERMINING UNIT TO EXECUTION DATA HOLDING UNIT ~S2913

INPUT SECTION IDENTIFICATION INFORMATION TO HISTORY MEMORY ~S2914

S2915
INPUT VALUE SETTING COMMAND?

Yes

INPUT VALUE HELD IN EXECUTION DATA HOLDING UNIT TO HISTORY MEMORY ~S2921

S2922
AGREEMENT WITH INPUT VALUE OF HISTORY MEMORY?

No

Yes S2923

ADVANCE POINTER OF HISTORY MEMORY

S2924

FETCH

No

S2916
FUNCTION CALL-UP COMMAND?

No

Yes

S2917
DO SECTION IDENTIFICATION INFORMATION AND ALL INPUT VALUES AGREE?

Yes S2925

EXECUTION RESULT REUSE PROCESSING

No

OUTPUT EXECUTION RESULT TO EXECUTION DATA HOLDING UNIT BY FUNCTION EXECUTION ~S2918

REGISTER DATA HELD IN EXECUTION DATA HOLDING UNIT IN HISTORY MEMORY ~S2919

END

# FIG. 53

2600

2610 SOURCE PROGRAM STORAGE UNIT

2620

2630

2631 REUSED CANDIDATE SECTION EXTRACTING UNIT

2632 REUSED CANDIDATE SECTION ANALYZING UNIT

2640

2641 REUTILIZATION GENERATING UNIT

2642 REUSED SECTION SELECTING UNIT

2643 REUSED SECTION INFORMATION GENERATING UNIT

2650 CODE GENERATING UNIT

2660 OBJECT PROGRAM STORAGE UNIT

2670 REUSED SECTION INFORMATION STORAGE UNIT

# FIG. 54

```
                    ┌─────────────┐
                    │   START     │
                    └──────┬──────┘
                           │
        ┌──────────────────────────────────────┐  S2931
        │      READ OUT SOURCE PROGRAM          │
        └──────────────────┬───────────────────┘
                           │
        ┌──────────────────────────────────────┐  S2932
        │   EXTRACT REUSED CANDIDATE SECTION    │
        └──────────────────┬───────────────────┘
                           │
        ┌──────────────────────────────────────┐  S2933
        │   ANALYZE REUSED CANDIDATE SECTION    │
        └──────────────────┬───────────────────┘
                           │
        ┌──────────────────────────────────────┐  S2934
        │       GENERATE REUTILIZATION          │
        └──────────────────┬───────────────────┘
                           │
        ┌──────────────────────────────────────┐  S2935
        │        EXTRACT REUSED SECTION         │
        └──────────────────┬───────────────────┘
                           │
        ┌──────────────────────────────────────┐  S2936
        │  GENERATE REUSED SECTION INFORMATION  │
        └──────────────────┬───────────────────┘
                           │
        ┌──────────────────────────────────────┐  S2937
        │       GENERATE OBJECT PROGRAM         │
        └──────────────────┬───────────────────┘
                           │
                    ┌──────────────┐
                    │     END      │
                    └──────────────┘
```

# FIG. 55

# FIG. 56

# FIG. 57

```
                          ( START )
                              │
                              ▼
                    ┌──────────────┐
                    │    FETCH     │──S2941
                    └──────────────┘
                              │
                              ▼           S2942
                         ╱─────────╲
                    Yes ╱ AGREEMENT  ╲
              ◄──────── ╱  WITH INPUT  ╲
              │         ╲ VALUE SETTING╱
              │          ╲ COMMAND    ╱
              │           ╲ ADDRESS? ╱
              │              │ No
              │              ▼           S2943
    ┌──────────────┐    ╱─────────╲
    │  EXECUTION   │   ╱ INPUT VALUE╲  Yes       S2954
    │   HISTORY    │  ╱   SETTING    ╲─────►┌──────────────────┐
    │   SEARCH     │  ╲  COMMAND?    ╱      │ OUTPUT COMMAND   │
    │ PROCESSING   │   ╲────────────╱       │ ADDRESS TO INPUT │
    └──────────────┘        │ No            │ VALUE SETTING    │
   S2960                     ▼    S2944      │ COMMAND ADDRESS  │
              │         ╱─────────╲         │ OUTPUT UNIT      │
              │        ╱ FUNCTION  ╲        └──────────────────┘
              │       ╱  CALL-UP    ╲  No             │  S2955
              │       ╲  COMMAND?   ╱────►            ▼
              │        ╲───────────╱         ┌──────────────────┐
              │            │ Yes   S2945     │ OUTPUT INPUT     │
              │            ▼                 │ VALUE HELD IN    │
              │   ┌──────────────────┐       │ EXECUTION DATA   │
              │   │ HOLD SECTION     │       │ HOLDING UNIT TO  │
              │   │ IDENTIFICATION   │       │ SET INPUT VALUE  │
              │   │ INFORMATION IN   │       │ HOLDING UNIT     │
              │   │ EXECUTION DATA   │       └──────────────────┘
              │   │ HOLDING UNIT     │                │
              │   └──────────────────┘                │
              │            │                          │
              │            ▼                          │
              │   ┌──────────────┐                    │
              │   │    FETCH     │──S2946             │
              │   └──────────────┘                    │
              │            │                          │
              │            ▼           S2947          │
              │       ╱─────────╲                     │
          S2956│  Yes ╱ INPUT VALUE╲                  │
       ┌───────┤◄──── ╱  REFERENCE   ╲                │
       │ HOLD  │      ╲  COMMAND?   ╱                 │
       │ INPUT │       ╲───────────╱                  │
       │ VALUE │           │ No                       │
       │ IN    │           ▼           S2948          │
       │ EXEC. │      ╱─────────╲                     │
       │ DATA  │ Yes ╱ EXECUTION  ╲                   │
   ◄───┤ HOLD. │◄─── ╱  RESULT     ╲                  │
   │   └───────┘     ╲  SETTING    ╱                  │
   │  S2957          ╲  COMMAND?  ╱                   │
   │  ┌─────────┐     ╲──────────╱                    │
   │  │ HOLD    │         │ No                        │
   │  │ EXEC.   │         ▼           S2949           │
   │  │ RESULT  │    ╱─────────╲                      │
   │  │ IN EXEC.│   ╱ FUNCTION  ╲                     │
   │  │ DATA    │   ╲  RETURN    ╱                    │
   │  │ HOLDING │   ╲ COMMAND?  ╱                     │
   │  │ UNIT    │    ╲─────────╱                      │
   │  └─────────┘   No │  │ Yes                       │
   │       │  ◄────────┘  ▼                           │
   │       │    ┌──────────────────────┐             │
   │       │    │ REGISTER EARLIEST    │──S2951      │
   │       │    │ INPUT VALUE SETTING  │             │
   │       │    │ COMMAND ADDRESS      │             │
   │       │    └──────────────────────┘             │
   │       │              │                          │
   │       │              ▼                          │
   │       │    ┌──────────────────────┐             │
   │       │    │ REGISTER EXECUTION   │──S2952      │
   │       │    │ HISTORY IN HISTORY   │             │
   │       │    │ MEMORY               │             │
   │       │    └──────────────────────┘             │
   │       │              │                          │
   └───────┴──────────────┤                          │
                          ▼                          │
                ┌──────────────────────┐             │
                │ ELIMINATE DATA HELD   │──S2593     │
                │ IN EACH UNIT          │            │
                └──────────────────────┘             │
                          │                          │
                          ▼                          │
                      (  END  )
```

# FIG. 58

EXECUTION HISTORY
SEARCH PROCESSING — S2960

OUTPUT SECTION
IDENTIFICATION INFORMATION
FROM ADDRESS DETERMINING UNIT — S2963
TO EXECUTION DATA HOLDING UNIT

INPUT SECTION IDENTIFICATION
INFORMATION TO HISTORY MEMORY — S2964

INPUT
VALUE SETTING
COMMAND? S2965

Yes

REGISTER INPUT VALUE
HELD IN EXECUTION — S2971
DATA HOLDING UNIT
IN HISTORY MEMORY

No

FUNCTION
CALL-UP COMMAND? S2966

No

Yes

AGREEMENT
WITH INPUT VALUE
OF HISTORY
MEMORY? S2972

No

DO SECTION
IDENTIFICATION
INFORMATION AND ALL
INPUT VALUES
AGREE? S2967

Yes S2975

EXECUTION
RESULT REUSE
PROCESSING

Yes S2973

ADVANCE
POINTER OF
HISTORY MEMORY

No

OUTPUT EXECUTION
RESULT TO EXECUTION
DATA HOLDING UNIT BY — S2968
FUNCTION EXECUTION

S2974

FETCH

REGISTER DATA
HELD IN EXECUTION — S2969
DATA HOLDING UNIT IN
HISTORY MEMORY

END

195

# FIG. 59

2100

2300

DATA PROCESSING UNIT

2219 2200 2229

COMMAND CACHE

DATA CACHE

2210 2220

EXECUTION RESULT REUSE PROCESSING UNIT

2400

SEARCH START COMMAND ADDRESS MANAGING UNIT

2500

2120

MAIN STORAGE UNIT ~ 2130

HISTORY DATA STORAGE UNIT ~ 2140

# FIG. 60

START

ACTIVATE APPLICATION —— S2991

IS THERE
DATA IN HISTORY DATA
STORAGE UNIT? —— S2992

No

Yes

TRANSFER DATA FROM
HISTORY DATA STORAGE
UNIT TO HISTORY MEMORY —— S2993

EXECUTE APPLICATION —— S2994

REBUILD DATA OF HISTORY
MEMORY AND HISTORY
DATA STORAGE UNIT —— S2995

STORE REBUILT DATA
IN HISTORY
DATA STORAGE UNIT —— S2996

END

# FIG. 61

3100

3300

PROCESSOR CORE

3200

COMMAND CACHE

3210

DATA CACHE

3220

HISTORY MANAGING UNIT

3400

CONVERSION MANAGING UNIT

3500

3120

MAIN STORAGE UNIT

3130

# FIG. 62

# FIG. 63

# FIG. 64

3490

~3491          ~3492          ~3493

```
        3610              3620              3630
   ┌─────────┐      ┌─────────┐      ┌─────────┐
   │  HEAD   │      │CONTINUITY│     │  LOOP   │
   │ SEARCH  │ ───▶ │ SEARCH  │ ──▶ │INDIVIDUAL│
   │  UNIT   │      │  UNIT   │      │ HISTORY │
   └─────────┘      └─────────┘      │OBTAINING │
                                     │  UNIT   │
                                     └─────────┘
```

3638 ─                                   3609

```
                        3640              3650
   3539              ┌─────────┐      ┌─────────┐
                     │  SAVED  │      │  LOOP   │
                     │ HISTORY │      │REPRESENTATIVE│   3608
              ●────▶ │TRANSFER │      │ HISTORY │ ───▶
                     │  UNIT   │      │GENERATING│
                     └─────────┘      │  UNIT   │
                                      └─────────┘
```

3600

~3509

# FIG. 65

# FIG. 66

3710

| 00 | START ADDRESS | INPUT VALUE LINK | EXECUTION RESULT LINK |
|---|---|---|---|
| 3711 | 3712 | 3713 | 3717 |

(a)

3720

| 01 | START ADDRESS | INPUT VALUE LINK | LOOP COUNTER VALUE | EXECUTION RESULT LINK |
|---|---|---|---|---|
| 3721 | 3722 | 3723 | 3724 | 3727 |

(b)

3730

| 10 | START ADDRESS | INPUT VALUE LINK | SAVING COUNT | SAVED HISTORY ADDRESS |
|---|---|---|---|---|
| 3731 | 3732 | 3733 | 3735 | 3736 |

(c)

3740

| LOOP COUNTER VALUE | EXECUTION RESULT LINK |
|---|---|
| 3744 | 3747 |

(d)

# FIG. 67

3760

| FIRST ARGUMENT VALUE | LINK ADDRESS |
|---|---|
| 3761 | 3762 |
| | |
| SECOND ARGUMENT VALUE | LINK ADDRESS |
| 3763 | 3764 |
| | |
| | |
| THIRD ARGUMENT VALUE | 0 |
| 3765 | 3766 |

3713

| INPUT VALUE LINK |
|---|

# FIG. 68

| RANK | EXECUTION HISTORY |
|------|-------------------|
| 1 | 00(funcA) |
| 2 | 01(loopA(1)) |
| 3 | 01(loopB(1)) |
| 4 | 01(loopC(1)) |
| 5 | 01(loopD(1)) |
| 6 | 01(loopE(1)) |
| 7 | 01(loopF(1)) |
| 8 | 01(loopF(2)) |
| 9 | 01(loopF(3)) |
| 10 | 00(funcB) |

3811

| RANK | SAVED HISTORY |
|------|---------------|
| 1 | – |
| 2 | – |
| 3 | – |
| 4 | – |
| 5 | – |
| 6 | – |

3812

(a)

| RANK | EXECUTION HISTORY |
|------|-------------------|
| 1 | 00(funcA) |
| 2 | 01(loopA(1)) |
| 3 | 01(loopB(1)) |
| 4 | 01(loopC(1)) |
| 5 | 01(loopD(1)) |
| 6 | 01(loopE(1)) |
| 7 | 10(loopF) |
| 8 | 00(funcB) |
| 9 | – |
| 10 | – |

3821

| RANK | SAVED HISTORY |
|------|---------------|
| 1 | loopF(1) |
| 2 | loopF(2) |
| 3 | loopF(3) |
| 4 | – |
| 5 | – |
| 6 | – |

3822

(b)

# FIG. 69

| RANK | EXECUTION HISTORY |
|------|-------------------|
| 1 | 00(funcA) |
| 2 | 01(loopA(1)) |
| 3 | 01(loopB(1)) |
| 4 | 01(loopC(1)) |
| 5 | 01(loopD(1)) |
| 6 | 01(loopE(1)) |
| 7 | 10(loopF) |
| 8 | 00(loopB) |
| 9 | 00(loopC) |
| 10 | 00(funcD) |

3831

| RANK | SAVED HISTORY |
|------|---------------|
| 1 | loopF(1) |
| 2 | loopF(2) |
| 3 | loopF(3) |
| 4 | — |
| 5 | — |
| 6 | — |

3832

(a)

| RANK | EXECUTION HISTORY |
|------|-------------------|
| 1 | 01(loopB(1)) |
| 2 | 01(loopC(1)) |
| 3 | 01(loopD(1)) |
| 4 | 01(loopE(1)) |
| 5 | 01(loopF(1)) |
| 6 | 01(loopF(2)) |
| 7 | 01(loopF(3)) |
| 8 | 00(funcB) |
| 9 | 00(funcC) |
| 10 | 00(funcD) |

3841

| RANK | SAVED HISTORY |
|------|---------------|
| 1 | — |
| 2 | — |
| 3 | — |
| 4 | — |
| 5 | — |
| 6 | — |

3842

(b)

# FIG. 70

EXECUTION HISTORY — 3861

(a)

| EXECUTION HISTORY |
| --- |
| 00(funcA) |
| 00(funcB) |
| 00(funcC) |
| 00(loopA(1)) |
| 00(loopA(2)) |

3871

| EXECUTION HISTORY |
| --- |
| 00(funcE) |
| 01(loopB(1)) |
| 01(loopB(2)) |
| 01(loopB(3)) |
| 01(loopB(4)) |
| 00(funcF) |
| 00(funcI) |
| 00(funcJ) |
| 00(funcK) |
| 01(loopC(1)) |
| 01(loopC(2)) |
| 01(loopC(3)) |

3872

| EXECUTION HISTORY |
| --- |
| 00(funcF) |
| 00(funcI) |
| 00(funcJ) |
| 00(funcK) |
| 01(loopC(1)) |
| 01(loopC(2)) |
| 01(loopC(3)) |
| 00(funcA) |
| 00(funcB) |
| 00(funcC) |
| 01(loopA(1)) |
| 01(loopA(2)) |

3873

| ELIMINATION HISTORY |
| --- |
| 00(funcE) |
| 01(loopB(1)) |
| 01(loopB(2)) |
| 01(loopB(3)) |
| 01(loopB(4)) |

(b)

3881

| EXECUTION HISTORY |
| --- |
| 00(funcE) |
| 01(loopB(1)) |
| 01(loopB(2)) |
| 01(loopB(3)) |
| 01(loopB(4)) |
| 00(funcF) |
| 00(funcI) |
| 00(funcJ) |
| 00(funcK) |
| 01(loopC(1)) |
| 01(loopC(2)) |
| 01(loopC(3)) |

3882

| SAVED HISTORY |
| --- |
| - |
| - |
| - |
| - |
| - |
| - |
| - |
| - |

3883

| EXECUTION HISTORY |
| --- |
| 00(funcE) |
| 10(loopB) |
| 00(funcF) |
| 00(funcI) |
| 00(funcJ) |
| 00(funcK) |
| 10(loopC) |
| 00(funcA) |
| 00(funcB) |
| 00(funcC) |
| 01(loopA(1)) |
| 01(loopA(2)) |

3884

| SAVED HISTORY |
| --- |
| loopB(1) |
| loopB(2) |
| loopB(3) |
| loopB(4) |
| loopC(1) |
| loopC(2) |
| loopC(3) |
| - |

(c)

# FIG. 71

```
                    ( START )
                        │
                        ▼
        ┌───────────────────────────┐
        │         radr = 0          │──── S3911
        └───────────────────────────┘
                        │
        ┌──────────────▶│
        │               ▼
        │   ┌───────────────────────┐
        │   │   READ IN IDENTIFIER  │
        │   │  FROM ADDRESS (radr)  │──── S3912
        │   │   OF HISTORY MEMORY   │
        │   └───────────────────────┘                          S3917
        │               │                          ┌────────────────────────┐
        │             S3913                         │       INDIVIDUAL       │
        │             ◇ ─────────────── Yes ───────▶│        HISTORY         │
        │        LOOP INDIVIDUAL                     │  radr = radr + ADDRESS │
        │           HISTORY?                         │        COUNT           │
        │             ◇                              │         (z)            │
        │            No                              └────────────────────────┘
        │               │                                        │
        │             S3914                                      ▼             S3918
        │             ◇                                ┌────────────────────────┐
        │     FUNCTION HISTORY? ──────── Yes           │   ex_adr = START       │
        │             ◇               │                │    ADDRESS OF          │
        │            No               │                │    EXECUTION           │
        │      S3915                  │                │  HISTORY THEREOF       │
        │               │             │                └────────────────────────┘
        │               │             │                            │
        │   ┌───────────────────┐  S3916                           ▼            S3919
        │   │  REPRESENTATIVE   │   ┌──────────────┐   ┌────────────────────────┐
        │   │ radr = radr +     │   │   FUNCTION   │   │    madr = MAIN         │
        │   │ HISTORY ADDRESS   │   │   HISTORY    │   │   STORAGE UNIT         │
        │   │     COUNT         │   │ radr = radr +│   │  SAVING START          │
        │   │      (x)          │   │   ADDRESS    │   │    ADDRESS             │
        │   └───────────────────┘   │   COUNT      │   └────────────────────────┘
        │               │           │    (y)       │                │
        │               │           └──────────────┘                ▼          S3920
        │               │◀──────────────┘           ┌────────────────────────┐
        │               │◀───────────────────────── │        rcnt = 1        │
        │               │                            └────────────────────────┘
        │               ▼                                        │
        │             S3923                                      ▼            S3921
        │             ◇                              ┌────────────────────────┐
        │        DOES "radr"                         │     start_adr = radr   │
        │  No   EXCEED USE                           └────────────────────────┘
        └────── REGION FINAL ADDRESS                             │
                OF HISTORY                                       ▼            S3930
                MEMORY?                             ┌────────────────────────┐
                  ◇                                 │     EXECUTION          │
                 Yes                                │  RESULT SAVING         │
                  │                                 │   PROCESSING           │
                  ▼                                 └────────────────────────┘
              ( END )                                            │
                                                                 │
```

# FIG. 72

```
EXECUTION RESULT
SAVING PROCESSING
```

S3930

S3931
DOES "radr"
EXCEED USE
REGION FINAL ADDRESS
OF HISTORY
MEMORY?

Yes →

No ↓

READ IN IDENTIFIER
FROM ADDRESS (radr)
OF HISTORY MEMORY          ~S3932

S3933
LOOP INDIVIDUAL
HISTORY?         No →

Yes ↓

S3934
IS START
ADDRESS "ex_adr"?      No →

Yes ↓

S3935
IS LOOP
COUNTER VALUE
"rcnt + 1"?       No →

Yes ↓

rcnt = rcnt + 1      ~S3936

radr = radr + NUMBER OF
ADDRESSES HOLDING
LOOP INDIVIDUAL
HISTORY THEREOF        ~S3937

S3938
IS "rcnt" GREATER
THAN "1"?        No →

Yes ↓        S3939

OBTAIN "rcnt" NUMBER
OF LOOP INDIVIDUAL
HISTORIES WITH "start_adr"
AS START ADDRESS

S3940
GENERATE SAVED HISTORY,
AND STORE SAVED HISTORY
IN ORDER FROM ADDRESS (madr)
OF MAIN STORAGE UNIT

S3941
ELIMINATE LOOP
INDIVIDUAL HISTORY SERVED
AS BASIS OF SAVED HISTORY
FROM HISTORY MEMORY

S3942
REGISTER LOOP
REPRESENTATIVE HISTORY
IN HISTORY MEMORY WITH
"start_adr" AS START ADDRESS

```
RETURN
```

# FIG. 73

START

READ COMMAND AND DATA INTO FETCH UNIT AND REGISTER FILE ~S3951

DECODE COMMAND ~S3952

IS THIS REUSING COMMAND? S3953 — No

Yes

IS THERE HISTORY INFORMATION IN HISTORY MEMORY? S3955 — No

Yes

S3980
EXECUTION RESULT OUTPUT PROCESSING

S3970
EXECUTION RESULT REGISTRATION PROCESSING

S3954
CALCULATE EXECUTION RESULT BASED ON INPUT VALUE

WRITE BACK EXECUTION RESULT TO REGISTER FILE ~S3956

HAS EXECUTION OF PROGRAM BEEN COMPLETED? S3957

No

Yes

END

# FIG. 74

S3970

EXECUTION RESULT
REGISTRATION PROCESSING

CALCULATE EXECUTION
RESULT BASED ON
INPUT VALUE ~S3971

IS THERE
VACANT CAPACITY
IN HISTORY
MEMORY? S3972

No → ELIMINATE ONE
EXECUTION HISTORY
HAVING LONGEST UNUSED
PERIOD AFTER LAST USE S3973

Yes

REGISTER EXECUTION
HISTORY IN HISTORY
MEMORY ~S3974

RETURN

# FIG. 75

S3980

( EXECUTION RESULT
OUTPUT PROCESSING )

OBTAIN HISTORY OUTPUT
INFORMATION FROM
HISTORY MEMORY 430 — S3981

OUTPUT OF
LOOP REPRESENTATIVE
HISTORY? — S3982
No

Yes

OBTAIN SAVED HISTORY
FROM MAIN STORAGE UNIT — S3983

RESTORE LOOP
INDIVIDUAL HISTORY — S3984

ELIMINATE LOOP
REPRESENTATIVE HISTORY — S3985

S3987

ELIMINATE ONE
EXECUTION HISTORY
HAVING LONGEST
UNUSED PERIOD
AFTER LAST USE

No

IS THERE
VACANCY IN HISTORY
MEMORY? — S3986

Yes

ELIMINATE LOOP
REPRESENTATIVE HISTORY — S3988

SEARCH LOOP
INDIVIDUAL HISTORY — S3989

S3990

OUTPUT
EXECUTION
RESULT

( RETURN )

# FIG. 76

4100

**4110** SOURCE PROGRAM STORAGE UNIT

**4121** REUSED CANDIDATE SECTION EXTRACTING UNIT

**4122** REUSED CANDIDATE SECTION ANALYZING UNIT

**4223** REUTILIZATION GENERATING UNIT

**4124** REUSING COMMAND CONVERSION UNIT

4120

**4200** HASH FUNCTION DETERMINING UNIT

**4140** MACHINE LANGUAGE PROGRAM GENERATING UNIT

**4150** OBJECT PROGRAM STORAGE UNIT

# FIG. 77

```
void funcX(...) {
    ...
  funcA(...);
  funcB(...);
  funcC(...);
  funcD(...);
    ...
    }


void funcA(char a) {...}
void funcB(char a, bool a) {...}
void funcC(bool a) {...}
void funcD(int a) {...}
```

# FIG. 78

# FIG. 79

(a)

(b)

# FIG. 80

4240

| START ADDRES | i=5 | i=4 | i=3 | i=2 | i=1 |
|---|---|---|---|---|---|
| funcA START ADDRES | 01110 | 1110 | 110 | 10 | 0 |
| funcB START ADDRES | 01111 | 1111 | 111 | 11 | 1 |
| funcC START ADDRES | 00010 | 0010 | 010 | 10 | 0 |
| funcD START ADDRES | 00101 | 0101 | 101 | 01 | 1 |
| funcE START ADDRES | 11110 | 1110 | 110 | 10 | 0 |
| funcF START ADDRES | 00011 | 0011 | 011 | 11 | 1 |
| funcG START ADDRES | 00000 | 0000 | 000 | 00 | 0 |
| funcH START ADDRES | 01011 | 1011 | 011 | 11 | 1 |

4271 4272 4273 4274 4275 4276

4281 4282 4283 4284 4285 4286 4287 4288 4289

# FIG. 81

(a)

(b)

# FIG. 82

START

| READ OUT SOURCE PROGRAM | S4911 |

| EXTRACT REUSED CANDIDATE SECTION | S4912 |

| ANALYZE REUSED CANDIDATE SECTION | S4913 |

| GENERATE REUTILIZATION | S4914 |

| CONVERT INTO REUSING COMMAND | S4915 |

| HASH FUNCTION DETERMINATION PROCESSING | S4920 |

| GENERATE OBJECT PROGRAM | S4918 |

END

# FIG. 83

S4920

HASH FUNCTION
DETERMINATION PROCESSING

CREATE START ADDRESS LIST ⊢S4921

$hn = 1$ ⊢S4922

$an = 1$ ⊢S4923

CALCULATE HASH VALUE
AS TO START ADDRESS (an)
USING HASH FUNCTION (hn) ⊢S4924

$an = an + 1$ ⊢S4925

S4926
IS an TOTAL
NUMBER OF START
ADDRESSES?

No

Yes

$hn = hn + 1$ ⊢S4927

S4928
IS hn TOTAL
NUMBER OF HASH
FUNCTIONS?

No

Yes

A

# FIG. 84

Ⓐ

| h = 0 |
|---|

~S4929

| ws = HASH VALUE BIT WIDTH (0) |
|---|

~S4931

| hn = 1 |
|---|

~S4932

S4933

IS THE HASH VALUE OF hn UNIQUE?

No

Yes

S4934

IS THE HASH VALUE BIT WIDTH OF hn SMALLER THAN ws?

No

Yes

| h = hn |
|---|

~S4935

| ws = HASH VALUE BIT WIDTH (hn) |
|---|

~S4936

| h = hn + 1 |
|---|

~S4937

S4938

hn = TOTAL NUMBER OF HASH FUNCTIONS?

No

Yes

| OUTPUT THE HASH FUNCTION OF SELECTED HASH FUNCTION (h) |
|---|

~4939

( RETURN )

# FIG. 85

4300

4400

PROCESSOR CORE

4310

COMMAND CACHE

4311

DATA CACHE

4312

HISTORY MANAGING UNIT

4600

HASH CONVERSION UNIT

4500

4350

MAIN STORAGE UNIT

4360

# FIG. 86

# FIG. 87

# FIG. 88

START

READ COMMAND AND
DATA INTO FETCH UNIT
AND REGISTER FILE ~S4941

DECODE COMMAND ~S4942

S4943
IS THIS HASH
FUNCTION SPECIFICATION
COMMAND?
Yes → S4944

REGISTER
HASH
FUNCTION

No

S4945
IS THIS REUSING
COMMAND?
No

Yes

CALCULATE HASH VALUE ~S4947

S4948
IS THERE
EXECUTION HISTORY
IN HISTORY
MEMORY?
No

Yes

S4952
OUTPUT
EXECUTION RESULT

S4949
CALCULATE
EXECUTION RESULT
BASED ON
INPUT VALUE

S4946
CALCULATE
EXECUTION RESULT
BASED ON
INPUT VALUE

S4953
DISCONTINUE
EXECUTION OF
REUSED SECTION

S4951
REGISTER
EXECUTION HISTORY
IN HISTORY MEMORY

WRITE BACK
EXECUTION RESULT
TO REGISTER FILE ~S4954

END

# FIG. 89

4100

SOURCE
PROGRAM STORAGE
UNIT — 4110

4120

REUSED CANDIDATE
SECTION
EXTRACTING UNIT — 4121

REUSED CANDIDATE
SECTION
ANALYZING UNIT — 4122

REUTILIZATION
GENERATING UNIT — 4123

REUSING COMMAND
CONVERSION UNIT — 4124

HASH VALUE
DETERMINING UNIT — 4700

HASH VALUE
ADDING UNIT — 4172

MACHINE LANGUAGE
PROGRAM
GENERATING UNIT — 4140    4170

OBJECT
PROGRAM
STORAGE UNIT — 4150

# FIG. 90

# FIG. 91

4740

| START ADDRESS (4771) | START ADDRESS OBTAINED ORDER (4772) |
|---|---|
| funcA START ADDRES | 1 (·················· 000001b ) |
| funcB START ADDRES | 2 (·················· 000010b ) |
| funcC START ADDRES | 3 (·················· 000011b ) |
| funcD START ADDRES | 4 (·················· 000100b ) |
| funcE START ADDRES | 5 (·················· 000101b ) |
| funcF START ADDRES | 6 (·················· 000110b ) |
| funcG START ADDRES | 7 (·················· 000111b ) |

(a)

| START ADDRES (4771) | i=4 (4773) | i=3 (4774) | i=2 (4775) | i=1 (4776) |
|---|---|---|---|---|
| funcA START ADDRES | 0001 | 001 | 01 | 1 |
| funcB START ADDRES | 0010 | 010 | 10 | 0 |
| funcC START ADDRES | 0011 | 011 | 11 | 1 |
| funcD START ADDRES | 0100 | 100 | 00 | 0 |
| funcE START ADDRES | 0101 | 101 | 01 | 1 |
| funcF START ADDRES | 0110 | 110 | 10 | 0 |
| funcG START ADDRES | 0111 | 111 | 11 | 1 |

(b)

# FIG. 92

| 31 | 26 | 25 | 21 | 20 | 16 | 15 | 11 | 10 | 6 | 5 | 0 |
|---|---|---|---|---|---|---|---|---|---|---|---|
| SPECIAL 000000 | | rs | | 00000 | | rd 11111 | | 00000 | | JALR 001001 | |
| 4810 | | 4820 | | 4830 | | 4840 | | 4850 | | 4860 | |

(a)

| 31 | 26 | 25 | 21 | 20 | 16 | 15 | 11 | 10 | 6 | 5 | 0 |
|---|---|---|---|---|---|---|---|---|---|---|---|
| SPECIAL 000000 | | rs | | 00000 | | rd 11111 | | 00001 | | JALR 001001 | |
| 4810 | | 4820 | | 4832 | | 4840 | | 4852 | | 4860 | |

⋮

| 31 | 26 | 25 | 21 | 20 | 16 | 15 | 11 | 10 | 6 | 5 | 0 |
|---|---|---|---|---|---|---|---|---|---|---|---|
| SPECIAL 000000 | | rs | | 11111 | | rd 11111 | | 11111 | | JALR 001001 | |
| 4810 | | 4820 | | 4833 | | 4840 | | 4853 | | 4860 | |

(b)

# FIG. 93

```
            ( START )

    READ OUT SOURCE PROGRAM              S4911

    EXTRACT REUSED CANDIDATE SECTION     S4912

    ANALYZE REUSED CANDIDATE SECTION     S4913

    GENERATE REUTILIZATION               S4914

    CONVERT INTO REUSING COMMAND         S4915

    HASH VALUE DETERMINATION PROCESSING  S4960

    ADD HASH VALUE TO REUSING COMMAND    S4917

    GENERATE OBJECT PROGRAM              S4918

            ( END )
```

# FIG. 94

S4960

$$\boxed{\text{HASH VALUE DETERMINATION PROCESSING}}$$

CREATE START ADDRESS LIST ── S4961

CREATE NUMBER LIST ── S4962

$hn = 1$ ── S4963

$an = 0$ ── S4964

CALCULATE HASH VALUE AS TO START ADDRESS [an] USING THE NUMBER OF HASH FUNCTION (hn) ── S4965

$an = an + 1$ ── S4966

IS an TOTAL NUMBER OF START ADDRESSES? ── S4967

No

Yes

$hn = hn + 1$ ── S4968

IS hn TOTAL NUMBER OF HASH FUNCTIONS? ── S4969

No

Yes

(A)

# FIG. 95

(A)

h = 0 — S4970

ws = HASH VALUE BIT WIDTH (0) — S4971

hn = 1 — S4972

IS THE HASH VALUE OF hn UNIQUE? — S4973 — No

Yes

IS THE HASH VALUE BIT WIDTH OF hn SMALLER THAN ws? — S4974 — No

Yes

h = hn — S4975

ws = HASH VALUE BIT WIDTH (hn) — S4976

h = hn + 1 — S4977

hn = TOTAL NUMBER OF HASH FUNCTIONS? — S4978 — No

Yes

OUTPUT THE HASH VALUE OF HASH FUNCTION (h) — 4979

RETURN

# FIG. 96

4300

4400

PROCESSOR CORE

4310

| COMMAND CACHE | DATA CACHE | | HISTORY MANAGING UNIT |

4311

4312

4600

4350

MAIN STORAGE UNIT — 4360

# FIG. 97

# FIG. 98

START

READ COMMAND AND
DATA INTO FETCH UNIT
AND REGISTER FILE    ~S4941

DECODE COMMAND    ~S4942

S4945

IS THIS REUSING
COMMAND?    No

Yes

S4948

IS THERE HISTORY
INFORMATION IN HISTORY
MEMORY?    No

Yes    S4952

OUTPUT
EXECUTION RESULT

CALCULATE
EXECUTION RESULT
BASED ON
INPUT VALUE    S4949

CALCULATE
EXECUTION RESULT
BASED ON
INPUT VALUE    S4946

S4953

DISCONTINUE
EXECUTION OF
REUSED SECTION

REGISTER
EXECUTION HISTORY
IN HISTORY MEMORY    S4951

WRITE BACK
EXECUTION RESULT
TO REGISTER FILE    ~S4954

END

# FIG. 99

# FIG. 100

# FIG. 101

```
              ( START )
                  |
 ┌────────────────────────────────────┐  S4981
 │      DETERMINE HASH FUNCTION       │⌇
 └────────────────────────────────────┘
                  |
 ┌────────────────────────────────────┐  S4982
 │        HOLD HASH FUNCTION          │⌇
 └────────────────────────────────────┘
                  |
 ┌────────────────────────────────────┐  S4990
 │    PROGRAM EXECUTION PROCESSING    │⌇
 └────────────────────────────────────┘
                  |
              (  END  )
```

# FIG. 102

```
        ( PROGRAM EXECUTION )          S4990
        (    PROCESSING     )
                │
                ▼
        ┌──────────────────────┐
        │  READ COMMAND AND    │
        │ DATA INTO FETCH UNIT │─ S4941
        │  AND REGISTER FILE   │
        └──────────────────────┘
                │
                ▼
        ┌──────────────────────┐
        │   DECODE COMMAND     │─ S4942
        └──────────────────────┘
                │            S4945
                ▼
           ╱  IS THIS   ╲          No
          ╱   REUSING    ╲─────────────────────────────────────┐
          ╲  COMMAND?   ╱                                       │
           ╲          ╱                                         │
             │ Yes                                              │
             ▼                                                  │
    ┌────────────────────┐                                     │
    │ CALCULATE HASH VALUE│─ S4947                             │
    └────────────────────┘                                     │
             │          S4948                                  │
             ▼                                                  │
        ╱ IS THERE HISTORY ╲         No                         │
       ╱ INFORMATION IN HISTORY╲──────────────┐                │
       ╲      MEMORY?        ╱                 │                │
        ╲                  ╱                   │                │
          │ Yes    S4952                       │ S4949          │ S4946
          ▼                                    ▼                ▼
  ┌──────────────┐              ┌──────────────────┐  ┌──────────────────┐
  │   OUTPUT     │              │    CALCULATE     │  │    CALCULATE     │
  │  EXECUTION   │              │ EXECUTION RESULT │  │ EXECUTION RESULT │
  │   RESULT     │              │    BASED ON      │  │    BASED ON      │
  └──────────────┘              │   INPUT VALUE    │  │   INPUT VALUE    │
          │ S4953              └──────────────────┘  └──────────────────┘
          ▼                            │ S4951               │
  ┌──────────────┐              ┌──────────────────┐         │
  │  DISCONTINUE │              │    REGISTER      │         │
  │ EXECUTION OF │              │ EXECUTION HISTORY│         │
  │REUSED SECTION│              │ IN HISTORY MEMORY│         │
  └──────────────┘              └──────────────────┘         │
          │                            │                     │
          ▼◄───────────────────────────┴─────────────────────┘
  ┌──────────────┐
  │  WRITE BACK  │
  │EXECUTION RESULT│─ S4954
  │TO REGISTER FILE│
  └──────────────┘
          │          S4995
          ▼
    No  ╱ HAS EXECUTION ╲
  ┌────╲ OF PROGRAM BEEN╱
  │     ╲ COMPLETED?   ╱
  │      ╲           ╱
  │         │ Yes
  │         ▼
  │     ( RETURN )
```

## INTERNATIONAL SEARCH REPORT

| | International application No. |
| --- | --- |
| | PCT/JP2010/063246 |

**A. CLASSIFICATION OF SUBJECT MATTER**
*G06F9/38*(2006.01)i, *G06F9/40*(2006.01)i

According to International Patent Classification (IPC) or to both national classification and IPC

**B. FIELDS SEARCHED**

Minimum documentation searched (classification system followed by classification symbols)
G06F9/38, G06F9/40

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | Yasuhiko NAKAJIMA et al., "A Speedup Technique with Function Level Value Reuse and Parallel Precomputation", Joint Symposium on Parallel Processing, 29 May 2002 (29.05.2002), vol.2002, no.8, pages 269 to 276, ISSN:1344-0640 | 1-15 |
| A | JP 2005-92354 A (Japan Science and Technology Agency), 07 April 2005 (07.04.2005), paragraphs [0063] to [0096]; fig. 1 to 3 (Family: none) | 1-15 |
| A | Takeru YOSHIKAWA et al., "Improvement of the buffer replacement algorithm in value reuse mechanism", IPSJ SIG Notes, 16 October 2003 (16.10.2003), vol.2003, no.102, pages 37 to 42, ISSN:0919-6072 | 1-15 |

☒ Further documents are listed in the continuation of Box C. ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 20 October, 2010 (20.10.10) | 02 November, 2010 (02.11.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

| | INTERNATIONAL SEARCH REPORT | International application No. |
|---|---|---|
| | | PCT/JP2010/063246 |

C (Continuation).   DOCUMENTS CONSIDERED TO BE RELEVANT

| Category* | Citation of document, with indication, where appropriate, of the relevant passages | Relevant to claim No. |
|---|---|---|
| A | US 2003/0204666 A1  (Youfeng Wu),<br>30 October 2003 (30.10.2003),<br>paragraphs [0031] to [0048]; fig. 1 to 3 | 1-15 |

Form PCT/ISA/210 (continuation of second sheet) (July 2009)

**EP 2 466 453 A1**

<table>
<tr><td colspan="2">**INTERNATIONAL SEARCH REPORT**</td><td>International application No.<br>PCT/JP2010/063246</td></tr>
</table>

| **Box No. II** | **Observations where certain claims were found unsearchable (Continuation of item 2 of first sheet)** |
|---|---|

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| **Box No. III** | **Observations where unity of invention is lacking (Continuation of item 3 of first sheet)** |
|---|---|

This International Searching Authority found multiple inventions in this international application, as follows:
```
   The inventions of claims 1-71 have a technical feature that "the results
of the execution of instruction sections are reused, respectively."
   However, the technical feature cannot be a special technical feature since
it does not make a contribution over the prior art in the light of the disclosure
of document 1.  In addition, there exist no other same or corresponding special
technical features among those inventions.
   And, the claims include the following five invention groups.
                     (hereinafter, see extra sheet)
```

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
   ```
   Claims 1-15
   ```

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2010/063246

Continuation of Box No.III of continuation of first sheet(2)

(Invention 1) the inventions of claims 1-15
The inventions that acquire input values for instruction sections to detect the results of the execution according to an advance notice instruction.

(Invention 2) the inventions of claims 16-33
The inventions that convert the calls of instruction sections into a reuse instruction.

(Invention 3) the inventions of claims 34-43
The inventions that hold the instruction addresses of an input value setting instruction for setting the input values to instruction sections as an "address table."

(Invention 4) the inventions of claims 44-55
The inventions that save history memories.

(Invention 5) the inventions of claims 56-71
The inventions that select a function which is the function for generating the identifiers of a plurality of instruction sections, wherein identifiers which are narrower than the number of bits of the start address of the function, and are all different from one another are generated, and the number of bits of the identifiers is the smallest.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3855076 B

- JP 2004258905 A

**Non-patent literature cited in the description**

- **Stephen E. Richardson.** Caching Function Results Faster or Arithmetic by Avoiding Unnecessary Computation. Sun Microsystems Laboratories, Inc, 1992